# EUROPÄISCHE PATENTANMELDUNG

(11) **EP 4 272 962 A2**
(43) Veröffentlichungstag der Anmeldung: **08.11.2023**
(21) Anmeldenummer: 23177480.3
(22) Anmeldetag: 06.05.2019
(51) Int. Cl.: B33Y 80/00

(54) **HÄRTBARE ZUSAMMENSETZUNG ZUR VERWENDUNG IN EINEM HOCHTEMPERATUR-PHOTOPOLYMERISATIONSVERFAHREN AUF LITHOGRAPHIEBASIS UND VERFAHREN ZUR HERSTELLUNG VON VERNETZTEN POLYMEREN DARAUS**

(30) Priorität: 04.05.2018 US 201862667354 P; 05.12.2018 US 201862775756 P; 03.05.2019 WO PCT/US2019/030683
(62) Teilanmeldung aus: 19172856.7
(71) Anmelder: Align Technology, Inc., San Jose, CA 95134 (US)
(72) Erfinder: LISKA, Robert, 2123 Schleinbach (AT); GORSCHE, Christian, 1140 Wien (AT); HARAKALY, György, 1090 Wien (AT); KURY, Markus, 1060 Wien (AT); STAMPFL, Jürgen, 1050 Wien (AT); DORFINGER, Peter, San Jose, 95134 (US); CHEN, Yan, San Jose, 95134 (US); LI, Chunhua, San Jose, 95134 (US); KAZA, Srinivas, San Jose, 95134 (US)
(74) Vertreter: Grünecker Patent- und Rechtsanwälte PartG mbB

(57) **Zusammenfassung**

Die vorliegende Erfindung betrifft eine härtbare Zusammensetzung zur Verwendung in einem Hochtemperatur-Photopolymerisationsverfahren auf Lithographiebasis, die zumindest die definierten polymerisierbaren Komponenten A bis C umfasst, wovon: Komponente A zumindest ein oligomeres Dimethacrylat der chemischen Formel (I) ist und als Glasübergangstemperaturmodifikator dient;
Komponente B zumindest ein, gegebenenfalls Polyether-modifiziertes, (Poly-)Carbonat-(Poly-)Urethan-Dimethacrylat einer der chemischen Formeln (II), (III), (IV) oder (V) ist und als Zähigkeitsmodifikator dient; und
Komponente C Komponente C zumindest ein mono- oder multifunktioneller Methacrylat-basierter Reaktivverdünner ist.

## Beschreibung

### HINTERGRUND DER ERFINDUNG

**Zu** additiven Fertigungsverfahren (z.B. additive Fertigung auf Lithographiebasis (L-AM)) zählen verschiedene Verfahren zur Herstellung von Gegenständen, wie z. B. dreidimensionalen Gegenständen, aus photopolymerisierbaren Materialien. Aufgrund der Kosten, einfacher Handhabung und verschiedener anderer Faktoren wurden additive Fertigungsverfahren seit Langem eingesetzt, um Prototypen und funktionelle Gegenstände (z.B. durch "Rapid Prototyping") herzustellen und Gegenstände in großen Mengen zu produzieren. Viele additive Fertigungsverfahren umfassen das sukzessive Hinzufügen von Schichten aus polymerisierbarem Material und das Härten dieser Schichten durch gesteuerte Belichtung. Die photopolymerisierbaren Materialien umfassen oft reaktive Komponenten, die mit Licht gehärtet werden. Zu Beispielen für photopolymerisierbare Materialien, die mit additiver Fertigung kompatibel sind, zählen Acrylate, die z. B. mit radikalischer Polymerisation kompatibel sind, und Epoxide, die z. B. mit kationischer Polymerisation kompatibel sind. Beispielhafte Viskositäten von bestehenden Materialien, die für additive Fertigung verwendet werden, umfassen Viskositäten zwischen 20 und 40 Millipascalsekunden (mPa.s) (siehe I. Gibson, D.W. Rosen, B. Stucker et al., "Additive Manufacturing Technologies", Band 238, Springer Verlag (2010)).

Es hat sich bei zahlreichen medizinischen Vorrichtungen herkömmlicherweise als schwierig erwiesen, diese durch additive Fertigungsverfahren zu formen. Ein Problem besteht darin, dass bestehende Materialien, die für die additive Fertigung verwendet werden, nicht biokompatibel sind und noch weniger zur Verwendung im intraoralen Bereich oder einem anderen Teil des menschlichen Körpers geeignet sind. Ein weiteres Problem besteht darin, dass bestehende für additive Fertigung verwendete Materialien oft nicht ausreichend viskos sind, um die präzisen und/oder individualisierbaren Merkmale zu bilden, die für viele Vorrichtungen erforderlich sind. Außerdem weisen viele der aktuellen additive Fertigungsverfahren aus Sicherheits- und Kostenüberlegungen relative niedrige Härtungs- oder Reaktionstemperaturen auf, was bei medizinischen Vorrichtungen (einschließlich zahnärztlichen Vorrichtungen) verhindert, dass ein Produkt erzeugt werden kann, das bei der Temperatur des menschlichen Körpers und/oder darüber stabil ist.

Ein weiteres Problem besteht darin, dass bestehende Materialien, die für additive Fertigung verwendet werden, nicht die physikalischen, chemischen und/oder thermomechanischen Eigenschaften (Dehnung, Entspannung im Verlauf der Zeit, Modul, Beständigkeit, Zähigkeit etc.) aufweisen, die für Aligner, andere zahnärztlichen Vorrichtungen, Hörgeräte und/oder zahlreiche andere medizinische Vorrichtungen wünschenswert sind (siehe z.B. T. Swetly, J. Stampfl, G. Kempf und R.-M. Hucke, "Capabilities of Additive Manufacturing Technologies (AMT) in the validation of the automotive cockpit", RTejournal - Forum for Rapid Technology 2014 (1)). Bestehende Materialien, die für additive Fertigung verwendet werden, weisen zahlreiche Eigenschaften, die in medizinischen Vorrichtungen wünschenswert sind, nicht auf, wie z.B. Kräfte, Drehmomente, Momente und/oder andere Bewegungen auszuüben, die präzise sind und einem Behandlungsplan entsprechen.

Eine Erhöhung der Viskosität der Materialien kann bessere thermomechanische Eigenschaften für zahlreiche Anwendungen bereitstellen, indem die Vernetzung verringert wird, die physikalischen Wechselwirkungen zwischen Ketten erhöht wird, das Durchschnittsgewicht der Monomere erhöht wird usw. In der Folge kann es möglich sein, Materialien mit wünschenswerten thermomechanischen Eigenschaften und/ oder Viskositäten durch additive Fertigung zu zahnärztlichen und/oder medizinischen Vorrichtungen zu verarbeiten, indem die Verfahren durch Erhitzungsvorgänge erweitert werden. Beispielsweise offenbaren WO 2015/075094, WO 2016/078838 und WO 2018/032022 jeweils Stereolithographiesysteme, bei denen zu härtende Schichten aus photopolymerisierbarem Material erhitzt werden, um die Viskosität der Materialien zu verringern. Diese Verfahren können es ermöglichen, Materialien mit Harzen mit höheren Viskositäten zu verarbeiten, als es sonst möglich wäre. Viele dieser Verfahren können auch die Bandbreite von Monomeren und/oder Oligomeren, die für additive Fertigung verwendet werden, erweitern und die Verwendung einer größeren Vielfalt an Harzformulierungen ermöglichen. Diese Verfahren können auch die Bandbreite an Produkten erweitern, die durch Härtung der darin angeführten Formulierungen erhalten werden.

Additive Fertigung ist auch ein Bereich von regem Interesse für die Fertigung intraoraler Vorrichtungen, da sie eine kostenwirksame Herstellung von präzisen intraoralen Vorrichtungen, einschließlich Alignern, Gaumenexpandern und ähnlichen Vorrichtungen bereitstellen können. Zusätzlich dazu kann die Präzision und Anpassbarkeit von additiver Fertigung eine verstärkte Personalisierung der Behandlung ermöglichen, bei der einzigartige Vorrichtungen rasch und ohne Weiteres durch additive Fertigung erzeugt werden können. Allerdings bereiten manche additive Fertigungsverfahren bei der Anwendung für interorale Vorrichtungen eine Vielzahl von Problemen. Erstens sollte für eine sichere Verwendung als intraorale Vorrichtung die Nichttoxizität und Biokompatibilität bei der Konzeption additiver Fertigungsverfahren und Chemien berücksichtigt werden. Zweitens sollte die Fertigung intraoraler Vorrichtungen größenpräzise sein. Demgemäß spielt die Viskosität eine wichtige Rolle bei der Fähigkeit, die Abmessungen intraoraler Vorrichtungen genau zu fertigen. Drittens weisen viele aktuelle additive Fertigungsverfahren sowohl aus Sicherheits- als auch Kostenüberlegungen relativ niedrige relative niedrige Härtungs- oder Reaktionstemperaturen auf. Allerdings ist es bei intraoralen Vorrichtungen wichtig, bei der Temperatur des menschlichen Körpers und/oder höheren Temperaturen ein stabiles Produkt zu haben. Schließlich sollte das Endprodukt präzise physikalische, mechanische und chemische Eigenschaften aufweisen, um Patienten eine adäquate Behandlung zu bieten. Diese Eigenschaften umfassen Festigkeit, Dehnung oder Flexibilität, Modul und andere für orale Anwendungen wichtige Eigenschaften.

### ZUSAMMENFASSUNG DER ERFINDUNG

**Vor** diesem Hintergrund war ein Ziel der vorliegenden Erfindung die Bereitstellung von in einem Hochtemperatur-Photopolymerisationsverfahren gut verarbeitbaren härtbaren Zusammensetzungen auf Lithographiebasis, die bei Verwendung in einem solchen Verfahren vorzugsweise vernetzte Polymere mit wünschenswerten Eigenschaften, vor allem guten thermomechanischen sowie Bioverträglichkeitseigenschaften zur Verwendung der Polymere für kieferorthopädische Vorrichtungen ergeben.

Dieses Ziel erreicht die vorliegende Erfindung in einem ersten Aspekt durch Bereitstellung Härtbare Zusammensetzung zur Verwendung in einem Hochtemperatur-Photopolymerisationsverfahren auf Lithographiebasis, wobei die Zusammensetzung die folgenden polymerisierbaren Komponenten A bis C umfasst,
wobei Komponente A zumindest ein oligomeres Dimethacrylat gemäß der folgenden chemischen Formel (I) ist und als Glasübergangstemperaturmodifikator dient: 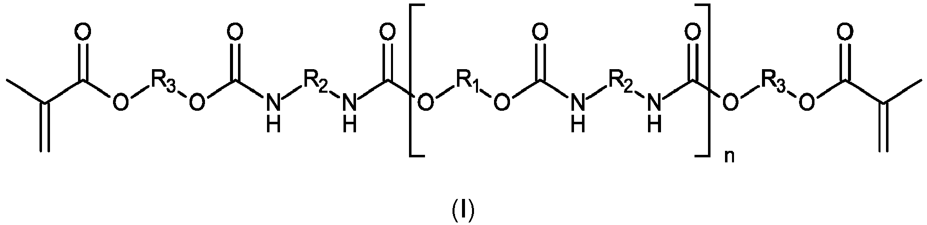 worin
   R₁ und die R₂ jeweils unabhängig für einen zweiwertigen, unverzweigten oder verzweigten zyklischen aliphatischen C₅-C₁₅-Rest stehen, mit der Maßgabe, dass zumindest einer von R₁ und R₂ eine cycloaliphatische C₅-C₆-Struktur ist oder umfasst,
   die R₃ jeweils für einen zweiwertigen, unverzweigten oder verzweigten C₂-C₄-Alkylrest stehen und
   n eine ganze Zahl von 1 bis 5 ist,
mit der Maßgabe, dass R₁, R₂, R₃ und n so gewählt sind, dass dass das oligomere Dimethacrylat ein zahlenmittleres Molekulargewicht von 0,4 bis 5 kDa aufweist;
Komponente B zumindest ein, gegebenenfalls Polyether-modifiziertes, (Poly-)Carbonat-(Poly-)Urethan-Dimethacrylat einer der folgenden chemischen Formeln (II), (III), (IV) oder (V) ist, das als Zähigkeitsmodifikator dient: 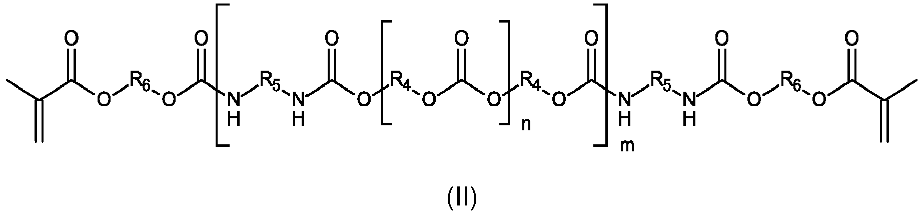 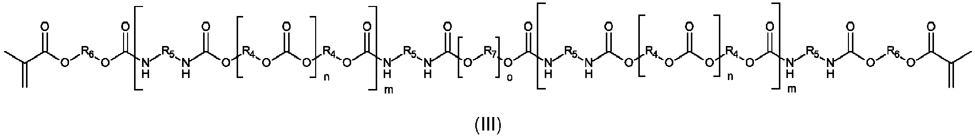 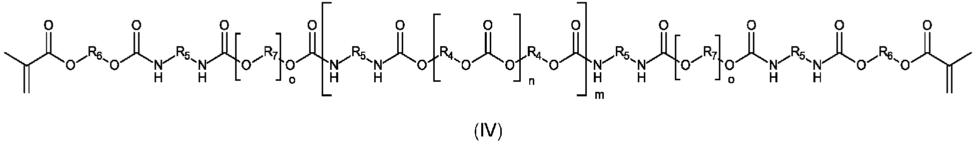 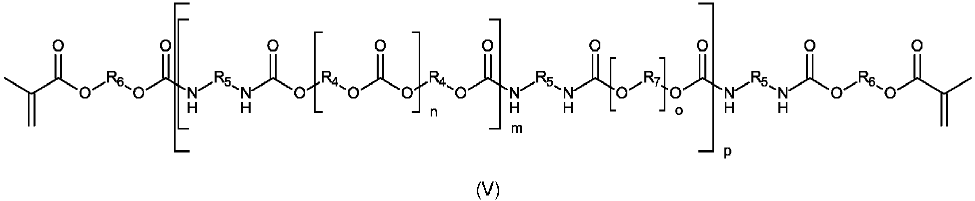 worin:
   die R₄ und die R₅ jeweils unabhängig für einen zweiwertigen, unverzweigten oder verzweigten oder zyklischen aliphatischen C₅-C₁₅-Rest stehen,
   die R₆ jeweils unabhängig für einen zweiwertigen, unverzweigten oder verzweigten C₂-C₄-Alkylrest stehen,
   die R₇ jeweils unabhängig für einen zweiwertigen, unverzweigten oder verzweigten C₂-C₆-Alkylrest stehen,
   die n jeweils unabhängig eine ganze Zahl von 1 bis 10 sind,
   die m jeweils unabhängig eine ganze Zahl von 1 bis 20 sind,
   die o jeweils unabhängig eine ganze Zahl von 5 bis 50 sind, und
   p eine ganze Zahl von 1 bis 40 ist,
mit der Maßgabe, dass R₄, R₅, R₆, R₇, n, m, o und p so gewählt sind, dass das (Poly-)Carbonat-(Poly-)Urethan-Dimethacrylat ein zahlenmittleres Molekulargewicht von mehr als 5 kDa aufweist; und
Komponente C zumindest ein mono- oder multifunktioneller Methacrylat-basierter Reaktivverdünner ist. Durch eine solche Kombination der Komponenten A bis C ist die härtbare Zusammensetzung bei Verwendung in einem Hochtemperatur-Photopolymerisationsverfahren auf Lithographiebasis gut verarbeitbar und ergibt, insbesondere vernetzte, Polymere, die speziell im Hinblick auf ihre thermomechanischen Eigenschaften und Biokompatibilität ausgezeichnete Ergebnisse liefern.

In bevorzugten Ausführungsformen liegt die Menge an Komponente A in der Zusammensetzung im Bereich von 20 bis 50 Gew.-%, die Menge an Komponente B im Bereich von 25 bis 50 Gew.-% und die Menge an Komponente C im Bereich von 10 bis 40 Gew.-%, jeweils bezogen auf das Gesamtgewicht der härtbaren Zusammensetzung.

In weiteren bevorzugten Ausführungsformen ist R₁ ein zweiwertiger Rest, der von einem Diol herrührt, das aus der aus 1 ,4-Cyclohexandimethanol (CHDM), 4,4'-Isopropylidendicyclohexanol (HBPA), 4,8-Bis(hydroxymethyl)tricyclo[5.2.1.0^{2,6}]decan (HTCD), 3,9-Bis(1,1 -dimethyl-2-hydroxyethyl)-2,4,8,10-tetraoxaspiro[5.5]undecan, 1,3-Bis(hydroxymethyl)adamantan, 1,4-, 1,3- oder 1,2-Dihydroxycyclohexan, 1,3-Adamantandiol, 4-Hydroxy-α,α,4-trimethylcyclohexanmethanol, 2,3-Pinandiol, 1,6-Hexandiol und Gemischen davon bestehenden Gruppe ausgewählt ist, noch bevorzugter ein zweiwertiger Rest, der von 1,4-Cyclohexandimethanol (CHDM) herrührt.

In weiteren bevorzugten Ausführungsformen sind R₂ und R₅ zweiwertige Reste, die von einem Diisocyanat herrühren, das jeweils unabhängig aus der aus Isophorondiisocyanat (IPDI), Hexamethylendiisocyanat (HDI), Trimethylhexamethylendiisocyanat (2,2,4- und 2,4,4-Gemisch, TMDI), Dicyclohexylmethan-4,4'-diisocyanat (HMDI), 1,3-Bis(isocyanatomethyl)cyclohexan und Gemischen davon bestehenden Gruppe ausgewählt ist, wobei R₂ noch bevorzugter ein zweiwertiger Rest ist, der von Isophorondiisocyanat (IPDI) oder Hexamethylendiisocyanat (HDI) herrührt.

In anderen bevorzugten Ausführungsformen sind R₃ und R₆ zweiwertige Reste, die von einem Diol herrühren, das jeweils unabhängig aus der aus 1,2-Ethandiol, 1,3-Propandiol, 1,2-Propandiol, 1,4-Butandiol und Gemischen davon bestehenden Gruppe ausgewählt ist, wobei R₃ und R₆ besonders bevorzugt zweiwertige Reste sind, die von 1,2-Ethandiol herrühren.

Weiters ist in bevorzugten Ausführungsform R₄ ein zweiwertiger Rest, der von einem Diol herrührt, das aus der aus 2,2-Dimethyl-1,3-propandiol (DMP), 1,6-Hexandiol, 1,4-Cyclohexandimethanol (CHDM) und Gemischen davon bestehenden Gruppe ausgewählt ist und/oder die Alkoholgruppierung eines Polycarbonats ist.

Vorzugsweise ist weiters R₇ ein zweiwertiger Rest, der von einem Diol herrührt, das aus der aus C₂-C₆-Alkandiolen und Gemischen davon bestehenden Gruppe ausgewählt ist, insbesondere ein zweiwertiger Rest, der von 1,4-Butandiol herrührt.

In weiteren bevorzugten Ausführungsformen ist die erfindungsgemäße härtbare Zusammensetzung dadurch gekennzeichnet, dass:
n in Formel (I) 1 oder 2 ist; und/oder
n in den Formeln (II) bis (V) im Bereich von 5 bis 8 liegt; und/oder
m in den Formeln (II) bis (V) im Bereich von 5 bis 10 liegt; und/oder
o in den Formeln (II) bis (V) im Bereich von 35 bis 45 liegt; und/oder
p in den Formeln (II) bis (V) im Bereich von 2 bis 5 liegt.

Der Methacrylat-basierende Reaktivverdünner von Komponente C ist dabei vorzugsweise aus der aus Dimethacrylaten von Polyglykolen, Hydroxybenzoesäureester(meth)acrylaten und Gemischen davon bestehenden Gruppe ausgewählt, wobei der Reaktivverdünner besonders bevorzugt ein (Meth)acryloyloxy-substituierter Benzoesäureester ist.

Besonders bevorzugt ist der Reaktivverdünner aus (Meth)acryloyloxy-substituierten Benzoesäureestern der allgemeinen Formel (VII) ausgewählt: 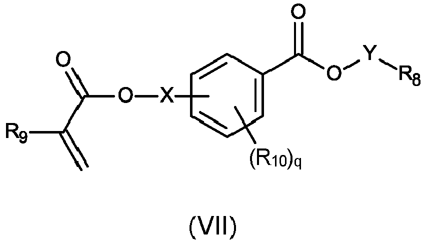 worin
R₈ für C₃-C₁₀-Cycloalkyl oder C₆-C₁₀-Aryl steht, wobei das C₃-C₁₀-Cycloalkyl und C₆-C₁₀-Aryl unsubstituiert oder mit einem oder mehreren Substituenten, ausgewählt aus C₁-C₆-Alkyl und C₁-C₆-Alkoxy substituiert sind;
R₉ für H oder CH₃ steht;
die R₁₀ jeweils unabhängig für C₁-C₆-Alkyl oder C₁-C₆-Alkoxy stehen;
q eine ganze Zahl von 0 bis 4 ist; und
X und Y jeweils unabhängig fehlen oder C₁-C₃-Alkylen sind, mit der Maßgabe, dass, wenn R₈ für C₆-C₁₀-Aryl steht, Y C₁-C₃-Alkylen ist

Vorzugsweise ist der als Reaktivverdünner eingesetzte (Meth)acryloyloxy-substituierte Benzoesäureester dadurch gekennzeichnet, dass in Formel (VII):
R₈ für gegebenenfalls substituiertes C₅-C₁₀-Cycloalkyl oder gegebenenfalls substituiertes Phenyl steht; und/oder
X und Y jeweils unabhängig fehlen oder C₁-C₂-Alkylen sind.

In besonders bevorzugten Ausführungsformen ist der (Meth)acryloyloxy-substituierte Benzoesäureester dadurch gekennzeichnet, dass in Formel (VII):
X fehlt; und/oder
das C₃-C₁₀-Cycloalkyl und C₆-C₁₀-Aryl von R₁ jeweils unsubstituiert oder mit einem oder mehreren Substituenten, ausgewählt aus C₁-C₃-Alkyl und C₁-C₃-Alkoxy substituiert sind; und/oder
die R₁₀ jeweils unabhängig für C₁-C₃-Alkyl oder C₁-C₃-Alkoxy stehen; und/oder q = 0 oder 1 ist.

In weiteren bevorzugten Ausführungsformen ist in Formel (VII) Ra aus der aus 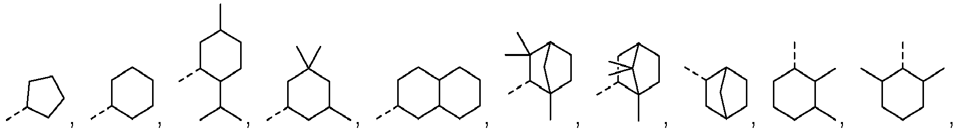 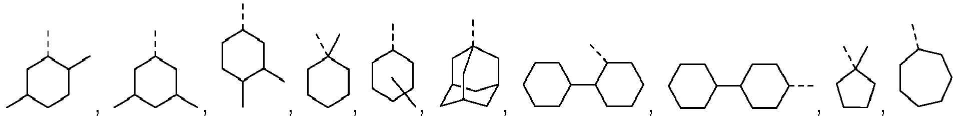 und 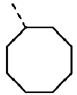 bestehenden Gruppe ausgewählt; oder aus der aus 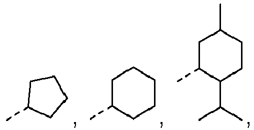 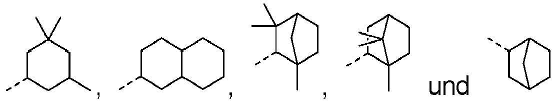 bestehenden Gruppe ausgewählt; wobei die gestrichelten Linien jeweils für die Stelle der Bindung an Y bzw. die Benzoat-Carboxylgruppe stehen.

Weiters kann -Y-R₈ vorzugsweise aus den folgenden Strukturen ausgewählt sein: 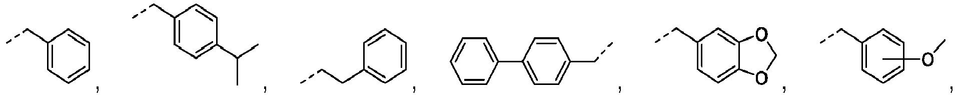 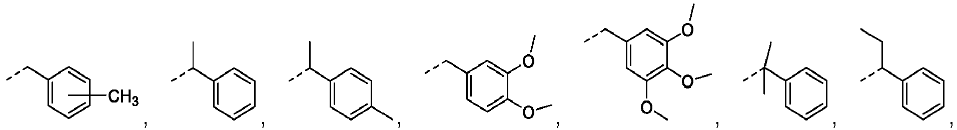 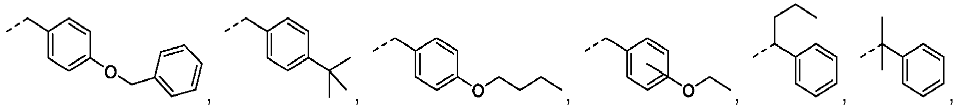 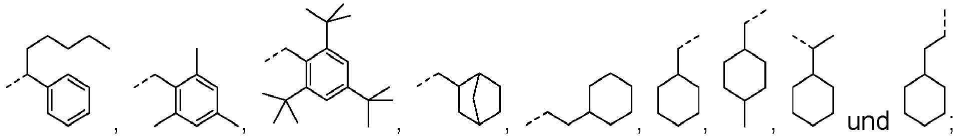 wobei die gestrichelten Linien jeweils für die Stelle der Bindung an die Benzoat-Carboxylgruppe stehen.

In besonders bevorzugten Ausführungsformen ist der (Meth)acryloyloxy-substituierte Benzoesäureester der allgemeinen Formel (VII) aus den folgenden chemischen Verbindungen ausgewählt:
2-(Methacryloyloxy)benzoesäurecyclopentylester (1);
2-(Methacryloyloxy)benzoesäurecyclohexylester (2);
2-(Methacryloyloxy)benzoesäure-2-isopropyl-5-methylcyclohexylester (3);
3-(Methacryloyloxy)benzoesäure-2-isopropyl-5-methylcyclohexylester (4);
4-(Methacryloyloxy)benzoesäure-2-isopropyl-5-methylcyclohexylester (5);
2-(Methacryloyloxy)benzoesäure-3,3,5-trimethylcyclohexylester (6);
2-(Acryloyloxy)benzoesäure-3,3,5-trimethylcyclohexylester (7);
2-(Methacryloyloxy)benzoesäuredecahydronaphthalin-2-ylester (8);
2-(Methacryloyloxy)benzoesäure-1,3,3-trimethyl-2-bicyclo[2.2.1]heptanylester (9);
2-(Methacryloyloxy)benzoesäure-1,7,7-trimethyl-2-bicyclo[2.2.1]heptanylester (10);
2-(Methacryloyloxy)benzoesäurebicyclo[2.2.1]heptan-2-ylmethylester (11);
2-(Methacryloyloxy)benzoesäure-2-cyclohexylethylester (12);
2-(Methacryloyloxy)benzoesäurebenzylester (13);
4-(Methacryloyloxy)benzoesäurebenzester (14);
3-(Methacryloyloxy)benzoesäure-4-isopropylbenzylester (15);
2-(Acryloyloxy)benzoesäurebenzylester (16);
2-(Methacryloyloxy)benzoesäurephenethylester (17);
4-(Methacryloyloxy)-3-methoxybenzoesäure-3-methoxybenzylester (18); 2-(Methacryloyloxy)benzoesäure-1-phenylethylester (19);
4-((Methacryloyloxy)methyl)benzoesäurecycloheptylester (20);
2-(Methacryloyloxy)benzoesäurecyclohexylmethylester (21);
da mit diesen Verbindungen als Reaktivverdünner bereits ausgezeichnete Ergebnisse erzielt wurden, wie die späteren Ausführungsbeispiele belegen.

Allerdings ist dem einschlägigen Fachmann klar, dass der (Meth)acryloyloxy-substituierte Benzoesäureester der allgemeinen Formel (VII) zusätzlich auch einen oder mehrere weitere Substituenten, der vorzugweise aus der aus C₁-C₆-Alkyl, C₁-C₆-Alkoxy, C₃-C₇-Cycloalkyl, C₆-C₁₀-Aryl, C₁-C₆-Alkoxy-C₆-C₁₀-aryl, -O(CO)-(C₁-C₆)-Alkyl, -COO-(C₁-C₆)-Alkyl, =O, -F, -Cl und -Br bestehenden Gruppe ausgewählt ist, aufweisen kann, solange die vorteilhaften Eigenschaften der Zusammensetzung, des Polymerisationsverfahrens zur Härtung derselben und der dadurch erhaltenen Polymere nicht nennenswert beeinträchtigt werden.

In weiteren bevorzugten Ausführungsformen der erfindungsgemäßen härtbaren Zusammensetzung weist Komponente A ein zahlenmittleres Molekulargewicht von 1 bis 2 kDa auf; und/oder weist Komponente B ein zahlenmittleres Molekulargewicht von 5 bis 20 kDa auf, was in allen möglichen Fällen besonders gute Egebnisse liefert.

Weiters kann die erfindungsgemäße härtbare Zusammensetzung im Gemisch mit den Komponenten A, B und C zusätzlich eine oder mehrere weitere Komponenten umfassen, die vorzugsweise aus der aus Polymerisationsinitiatoren, Polymerisationsinhibitoren, Lösungsmitteln, Füllstoffen, Antioxidantien, Pigmenten, Färbemitteln, Oberflächenmodifikatoren, Core-Shell-Partikeln und Gemischen davon bestehenden Gruppe ausgewählt sind, insbesondere einen oder mehrere Photoinitiatoren.

In einem zweiten Aspekt stellt die vorliegende Erfindung ein Verfahren zur Herstellung von, insbesondere vernetzten, Polymeren bereit, das dadurch gekennzeichnet ist, dass es die folgenden Schritte umfasst: i) Bereitstellen einer härtbaren Zusammensetzung wie oben beschrieben; und ii) Polymerisieren der härtbaren Zusammensetzung; wodurch die, insbesondere vernetzten, Polymere gebildet werden.

Vorzugsweise wird Schritt ii) des Polymerisierens der härtbaren Zusammensetzung unter Anwendung eines Hochtemperatur-Photopolymerisationsverfahrens auf Lithographiebasis durchgeführt, wie bereits oben erwähnt wurde.

In bevorzugten Ausführungsformen umfasst das erfindungsgemäße Verfahren die Schritte a) Erhitzen einer härtbaren Zusammensetzung nach Anspruch 24, die zumindest einen Photoinitiator umfasst, auf eine vorbestimmte erhöhte Verarbeitungstemperatur und anschließend b) Bestrahlen der Zusammensetzung mit Licht mit einer geeigneten Wellenlänge, um von dem Photoinitiator absorbiert zu werden, wodurch die härtbare Zusammensetzung polymerisiert und vernetzt wird, um ein vernetztes Polymer zu erhalten.

Die erhöhte Verarbeitungstemperatur liegt dabei vorzugsweise im Bereich von 50 °C bis 120 °C oder, noch bevorzugter, im Bereich von 90 °C bis 120 °C.

Das Photopolymerisationsverfahren ist dabei vorzugsweise ein direktes oder additives Fertigungsverfahren, insbesondere ein 3D-Druckverfahren.

In einem weiteren Aspekt umfasst die vorliegende Erfindung ein vernetztes Polymer, das aus einer härtbaren Zusammensetzung gemäß dem ersten Aspekt der Erfindung durch ein Polymerisationsverfahren gemäß dem zweiten Aspekt erhalten wurde.

Das vernetzte Polymer der Erfindung ist dabei vorzugsweise dadurch gekennzeichnet, dass es eine oder mehrere oder alle der folgenden Eigenschaften aufweist:
i) einen Zugmodul von 100 MPa oder mehr; eine Bruchdehnung von 5 % oder mehr; eine Spannungsrelaxation von 5 % oder mehr der Anfangslast; eine Glasübergangstemperatur von 90 °C oder mehr; oder
ii) einen Zugmodul von 800 MPa oder mehr; eine Bruchdehnung von 20 % oder mehr; eine Spannungsrelaxation von 20 % oder mehr der Anfangslast; eine Glasübergangstemperatur von 90 °C oder mehr; oder
iii) einen Zugmodul von 1.000 MPa oder mehr; eine Bruchdehnung von 30 % oder mehr; eine Spannungsrelaxation von 35 % oder mehr der Anfangslast; eine Glasübergangstemperatur von 100 °C oder mehr;
da diese besonders wünschenswerte thermomechanische Eigenschaften darstellen.

Darüber hinaus ist das vernetzte Polymer der vorliegenden Erfindung vorzugsweise dadurch gekennzeichnet, dass es biokompatibel ist, was eine problemlose Verwendung für beispielsweise medizinische Anwendungen ermöglicht.

Ein solches vernetztes Polymer wird daher besonders bevorzugt für medizinische Anwendungen eingesetzt und ist insbesondere Teil einer kieferorthopädischen Vorrichtung, die beispielsweise ein Aligner, ein Expander oder ein Spacer sein kann.

### AUFNAHME DURCH VERWEIS

Alle Publikationen, Patente und Patentanmeldungen, die in der vorliegenden Beschreibung angeführt sind, sind durch Verweis auf dieselbe Weise hierin aufgenommen, als ob für jede einzelne Publikation, jedes einzelne Patent oder jede einzelne Patentanmeldung konkret und einzeln angeführt wäre, dass diese/s durch Verweis hierin aufgenommen ist.

### KURZBESCHREIBUNG DER ZEICHNUNGEN

Die neuen Merkmale der Erfindung sind insbesondere in den nachstehenden Patentansprüchen dargelegt. Ein besseres Verständnis der Merkmale und Vorzüge der vorliegenden Offenbarung wird durch Bezugnahme auf die nachfolgende detaillierte Beschreibung, die veranschaulichende Ausführungsformen darlegt, in denen die Grundlagen der Erfindung in der Praxis eingesetzt werden, und die beiliegenden Zeichnungen erlangt, in denen:
Fig. 1A eine Zahnrepositionierungsvorrichtung in Übereinstimmung mit Ausführungsformen veranschaulicht.
Fig. 1B eine Zahnrepositionierungsvorrichtung in Übereinstimmung mit Ausführungsvorrichtungen veranschaulicht.
Fig. 1C ein Verfahren zur kieferorthopädischen Behandlung unter Verwendung verschiedener Vorrichtungen in Übereinstimmung mit Ausführungsformen veranschaulicht.
Fig. 2 ein Verfahren für die Konzeption einer kieferorthopädischen Vorrichtung in Übereinstimmung mit Ausführungsformen veranschaulicht.
Fig. 3 ein Verfahren für die digitale Planung einer kieferorthopädischen Behandlung in Übereinstimmung mit Ausführungsformen veranschaulicht.
Fig. 4 eine schematische Konfiguration einer additiven Hochtemperatur-Fertigungsvorrichtung, die mittels eines 3D-Druckverfahrens zum Härten von härtbaren Zusammensetzungen der vorliegenden Offenbarung eingesetzt wird, zeigt.
die Fig. 5a, Fig. 5b, Fig. 5c, Fig. 5d, Fig. 5e und Fig. 5f die bei der Messung der Viskositäten (Pa s) härtbarer Zusammensetzungen (1) bis (10) bei verschiedenen Temperaturen (°C) erhaltenen Ergebnisse zeigt.
die Fig. 6a, Fig. 6b, Fig. 6c, Fig. 6d, Fig. 6e und Fig. 6f die bei der Messung der Speichermodule (GPa) von vernetzten Polymeren, die das Resultat von Photopolymerisation der härtbaren Zusammensetzungen (1) bis (10) waren, bei verschiedenen Temperaturen erhaltenen Ergebnisse zeigen.
die Fig. 7a, Fig. 7b, Fig. 7c, Fig. 7d, Fig. 7e und Fig. 7f die bei der Messung der Zugfestigkeiten (N/mm²) von vernetzten Polymeren, die das Resultat von Photopolymerisation der härtbaren Zusammensetzungen (1) bis (10) waren, bei verschiedenen Belastungen (%) erhaltenen Ergebnisse zeigen.

### DETAILLIERTE BESCHREIBUNG DER ERFINDUNG

**Alle** Begriffe, chemischen Bezeichnungen, Ausdrücke und Benennungen behalten ihre übliche Bedeutung, die Fachleuten auf dem Gebiet der Erfindung wohlbekannt ist. Wie hierin verwendet, sind die Begriffe "umfassen" und "umfassend" als nicht einschränkend zu verstehen, d.h. andere Komponenten als die ausdrücklich angeführten können umfasst sein. Zahlenbereiche sind als inklusiv zu verstehen, d.h. die Ober- und Untergrenze einschließend.

Wie hierin verwendet, bezeichnet der Begriff "Polymer" ein Molekül, das aus sich wiederholenden und durch kovalente chemische Bindungen verbundenen Grundeinheiten besteht und das durch eine erhebliche Anzahl an Grundeinheiten (z.B. gleich oder größer als 10 Grundeinheiten und häufig gleich oder größer als 50 Grundeinheiten und häufig gleich oder größer als 100 Grundeinheiten) und ein hohes Molekulargewicht (z.B. größer als 5.000 Da, 10.000 Da oder 20.000 Da) gekennzeichnet ist. Polymere sind für gewöhnlich das Polymerisationsprodukt eines oder mehrerer Monomervorläufer. Der Begriff Polymer umfasst Homopolymere oder Polymere, die im Wesentlichen aus einer sich wiederholenden Monomeruntereinheit bestehen. Der Begriff Polymer umfasst auch Copolymere, die gebildet werden, wenn zwei oder mehrere unterschiedliche Arten von Monomeren im selben Polymer verbunden sind. Copolymere können zwei oder mehrere Monomeruntereinheiten umfassen und umfassen statistische Copolymere, Blockcopolymere, alternierende Copolymere, Segmentcopolymere, Pfropfcopolymere, Gradienten-Copolymere und andere Copolymere. "Vernetzte Polymere" bezeichnet Polymere mit einer oder mehreren Verbindungen zwischen zumindest zwei Polymerketten, die vorzugsweise dadurch entstehen, dass mehrwertige Monomere bei der Polymerisation Vernetzungsstellen bilden.

Hierin bezeichnet ein "Oligomer" ein Molekül, das aus sich wiederholenden und durch kovalente chemische Bindungen verbundenen Grundeinheiten besteht und durch eine geringere Anzahl von Grundeinheiten als die eines Polymers (z.B. gleich oder weniger als 10 Grundeinheiten) und einem geringerem Molekulargewicht als das eines Polymers (z.B. weniger als 5.000 Da oder 2.000 Da) gekennzeichnet ist. Oligomere können das Polymerisationsprodukt eines oder mehrerer Monomervorläufer sein. In einer Ausführungsform können ein Oligomer oder ein Monomer nicht als eigenständiges Polymer betrachtet werden.

Ein "Präpolymer" bezeichnet ein Polymer oder Oligomer, dessen Moleküle in der Lage sind durch reaktive Gruppen weitere Polymerisation zu erfahren.

Oligomer- und Polymergemische können durch Messungen des Molekulargewichts und der Molekulargewichtsverteilung charakterisiert und von anderen Oligomer- und Polymergemischen unterschieden werden.

Das mittlere Molekulargewicht (M) ist die mittlere Anzahl der Grundeinheiten n multipliziert mit dem Molekulargewicht oder der Molmasse (Mi) der Grundeinheit. Das zahlenmittlere Molekulargewicht (Mn) ist das arithmetische Mittel, das das Gesamtgewicht der vorliegenden Moleküle, dividiert durch die Gesamtanzahl an Molekülen darstellt. Zahlenmittlere Molekulargewichte werden typischerweise mittels Gelpermeationschromatographie gemessen.

Photoinitiatoren, die gemäß der Offenbarung zweckmäßig sind, umfassen jene, die mit Licht aktiviert werden können und die Polymerisation der polymerisierbaren Komponenten initiieren können.

Photopolymerisation tritt auf, wenn geeignete Formulierungen Strahlung (z.B. UV- oder sichtbarem Licht) ausgesetzt werden, die eine ausreichende Energie und eine Wellenlänge aufweist, die zum Initiieren von Polymerisation in der Lage ist. Die Wellenlänge und die Energie von Strahlung, die zum Initiieren der Polymerisation geeignet ist, hängen von dem eingesetzten Photoinitiator ab. "Licht", wie hierin verwendet, umfasst eine beliebige Wellenlänge und Energie, die zum Initiieren von Polymerisation in der Lage ist. Manche Wellenlängen von Licht umfassen ultraviolettes (UV) oder sichtbares Licht. UV-Lichtquellen umfassen UVA (Wellenlänge von etwa 400 nm bis etwa 320 nm), UVB (etwa 320 nm bis etwa 290 nm) oder UVC (etwa 290 nm bis etwa 100 nm). Jede geeignete Quelle kann verwendet werden, einschließlich Laserquellen. Die Quelle kann breitbandig oder schmalbandig oder eine Kombination davon sein. Die Lichtquelle kann während des Verfahrens durchgehendes oder gepulstes Licht bereitstellen. Sowohl die Zeitdauer, die das System dem UV-Licht ausgesetzt ist, als auch die Intensität des UV-Lichts können variiert werden, um die idealen Reaktionsbedingungen zu bestimmen.

Additive Fertigung umfasst verschiedene Technologien, mit denen durch ein additives Verfahren dreidimensionale Gegenstände direkt von digitalen Modellen gefertigt werden. In manchen Aspekten werden sukzessive Materialschichten abgelagert und "örtlich ausgehärtet". Verschiedene Verfahren sind auf dem Gebiet der additiven Fertigung bekannt, einschließlich des selektiven Lasersinterns (SLS), Fused Deposition Modeling (FDM) sowie Aufspritzen oder Extrusion. In vielen Ausführungsformen umfasst das selektive Lasersintern die Verwendung eines Laserstrahls, um eine Schicht aus pulverförmigem Material in Übereinstimmung mit einer gewünschten Querschnittsform selektiv zu schmelzen und zu verschmelzen, um die Geometrie des Gegenstands aufzubauen. In zahlreichen Ausführungsformen umfasst Fused Deposition Modeling das Schmelzen und das schichtweise selektive Ablagern eines dünnen Filaments eines thermoplastischen Polymers, um einen Gegenstand zu formen. In einem weiteren Beispiel kann 3D-Druck verwendet werden, um die hierin beschriebenen Vorrichtungen zu erzeugen. In zahlreichen Ausführungsformen umfasst 3D-Druck das Aufspritzen oder Extrudieren von einem oder mehreren Materialien auf eine Aufbauplattform, um sukzessive Schichten der Geometrie des Gegenstands zu formen.

Photopolymere können durch "Wannen"-Verfahren erzeugt werden, bei denen Licht eingesetzt wird, um eine Wanne oder einen Behälter voller Photopolymer selektiv zu härten. Jede Schicht des Photopolymers kann selektiv belichtet werden - durch Einzelbelichtung oder indem ein Lichtstrahl über die Schicht geführt wird. Konkrete Verfahren umfassen Stereolithographie (SLA), Digital Light Processing (DLP) und durch zwei Photonen induzierte Photopolymerisation (TPIP).

Es wurde auch von kontinuierlichen Direktfertigungsverfahren für Photopolymere berichtet. Ein Direktfertigungsverfahren kann beispielsweise den kontinuierlichen Aufbau der Geometrie eines Gegenstands durch kontinuierliche Bewegung der Aufbauplattform (z.B. in vertikaler oder Z-Richtung) während der Bestrahlungsphase erreichen, so dass die Härtungstiefe des bestrahlten Photopolymers durch die Bewegungsgeschwindigkeit gesteuert wird. Dementsprechend kann eine kontinuierliche Polymerisation des Materials auf der Aufbauoberfläche erzielt werden. Solche Verfahren sind in US-Patent Nr. 7.892.474 beschrieben, dessen Offenbarung durch Verweis vollständig hierin aufgenommen ist. In einem weiteren Beispiel wird in einem kontinuierlichen direkten Fertigungsverfahren ein "Heliolithographie"-Ansatz angewandt, bei dem das flüssige Photopolymer mittels fokussierter Strahlung gehärtet wird, während die Aufbauplattform kontinuierlich rotiert und angehoben wird. Dementsprechend kann die Geometrie des Gegenstands entlang eines spiralförmigen Aufbauwegs kontinuierlich aufgebaut werden. Solche Verfahren sind in US-Patentveröffentlichung Nr. 2014/ 0265034 beschrieben, deren Offenbarung durch Verweis vollständig hierin aufgenommen ist. Es wurde auch von kontinuierlicher flüssiger Grenzflächenproduktion von 3D-Gegenständen berichtet (J. Tumbleston et al., Science, 347 (6228), S. 1349-1352 (2015)), das zur Beschreibung des Verfahrens vollständig durch Verweis hierin aufgenommen ist. Ein weiteres Beispiel für ein kontinuierliches Direktfertigungsverfahren kann das Extrudieren eines Verbundmaterials umfassen, das aus einem härtbaren flüssigen Material besteht, das einen festen Strang umgibt. Das Verbundmaterial kann entlang eines kontinuierlichen dreidimensionalen Pfads zur Ausbildung des Gegenstands extrudiert werden. Solche Verfahren sind in US-Patentveröffentlichung Nr. 2014/0061974 offenbart, deren Offenbarung durch Verweis hierin vollständig aufgenommen ist.

"Biokompatibel" bezieht sich auf ein Material, das keine immunologische Abstoßung oder schädliche Wirkung hervorruft, die hierin als ungünstige Immunantwort bezeichnet wird, wenn es in ein biologisches In-vivo-Umfeld gebracht wird. Beispielsweise verändert sich in Ausführungsformen ein biologischer Marker, der eine Immunantwort anzeigt, um weniger als 10 % oder weniger als 20 % oder weniger als 25 % oder weniger als 40 % oder weniger als 50 % in Bezug auf einen Grundlinienwert, wenn ein Mensch oder ein Tier dem biokompatiblen Material ausgesetzt wird oder mit diesem in Kontakt gebracht wird. Alternativ dazu kann die Immunantwort histologisch bestimmt werden, wobei eine lokale Immunantwort durch Sichtprüfung von Markern, einschließlich Immunzellen, oder Markern, die an dem Immunantwortsignalweg beteiligt sind, in dem und angrenzend an das Material bewertet wird. In einem Aspekt ruft ein biokompatibles Material oder eine biokompatible Vorrichtung keine erkennbare Immunantwort hervor, wie histologisch festgestellt wird. In manchen Ausführungsformen stellt die Offenbarung biokompatible Vorrichtungen bereit, die zur Langzeitverwendung, wie z.B. in der Größenordnung von Wochen bis Monaten, ausgebildet sind, ohne dass sie negative Immunantworten hervorrufen. Eine biologische Wirkung kann anfänglich durch Messung von Zytotoxizität, Sensibilisierung, Reizung und intrakutaner Reaktivität, akuter systemische Toxizität, Pyrogenität, subakuter/subchronischer Toxizität und/oder Implantation bewertet werden. Biologische Test für eine ergänzende Bewertung umfassen Tests in Bezug auf chronische Toxizität.

"Bioinert" bezieht sich auf ein Material, das keine Immunantwort bei Mensch oder Tier hervorruft, wenn es in einem biologischen In-vivo-Umfeld vorliegt. Beispielsweise bleibt ein biologischer Marker, der eine Immunantwort anzeigt, im Wesentlichen konstant (plus oder minus 5 % in Bezug auf den Grundlinienwert), wenn ein Mensch oder Tier dem bioinerten Material ausgesetzt oder mit diesem in Kontakt gebracht wird. In manchen Ausführungsformen stellt die Offenbarung bioinerte Vorrichtungen bereit.

In manchen Ausführungsformen sind die vernetzten Polymere durch ein Zugspannungs-Dehnungsdiagramm gekennzeichnet, das eine Streckgrenze anzeigt, nach der die Länge des Prüflings weiterhin zunimmt, aber keine weitere Zunahme der Spannung vorliegt. Ein solches Streckgrenzenverhalten tritt typischerweise "nahe" der Glasübergangstemperatur auf, wo sich das Material zwischen einem glasartigen und gummiartigen Zustand befindet und als viskoelastisches Verhalten aufweisend charakterisiert werden kann. In manchen Ausführungsformen wird viskoelastisches Verhalten im Temperaturbereich von 20 °C bis 40 °C beobachtet. Die Streckspannung wird an der Streckgrenze bestimmt. In manchen Ausführungsformen wird der Modul aus der Anfangskurve des Spannungs-Dehnungs-Diagramms oder als Sekantenmodul bei 1 % Dehnung bestimmt (z.B. wenn es keinen linearen Abschnitt des Spannungs-Dehnungs-Diagramms gibt). Die Streckgrenzendehnung wird aus der Dehnung an der Streckgrenze bestimmt. Tritt die Streckgrenze bei einem Spannungshöchstmaß auf, ist die endgültige Zugfestigkeit geringer als die Streckspannung. Für einen Zugprüfling ist die Verformung durch In (I/I₀) definiert, was bei geringen Verformungen durch (I-I₀)/I₀ approximiert werden kann (z.B. weniger als etwa 10 %), und die Verlängerung ist I/I₀, wobei I die Messlänge nach dem Auftreten einer gewissen Verformung ist und I₀ die Anfangsmesslänge ist. Die Testtemperatur kann unterhalb der erwarteten Verwendungstemperatur für eine zahnärztliche Vorrichtung, wie z. B. 35 °C bis 40 °C, liegen. In manchen Ausführungsformen beträgt die Testtemperatur 23 ± 2 °C.

In manchen Ausführungsformen kann die Spannungsrelaxation durch Überwachen der zeitabhängigen Spannung infolge einer stetigen Verformung/Belastung gemessen werden. Das Ausmaß der Spannungsrelaxation kann auch von der Temperatur, der relativen Feuchtigkeit und anderen herrschenden Bedingungen (z.B. Gegenwart von Wasser) abhängen. In manchen Ausführungsformen sind die Testbedingungen für die Spannungsrelaxation eine Temperatur von 37 ± 2 °C bei 100 % relativer Feuchtigkeit oder eine Temperatur von 37 ± 2 °C in Wasser.

Die dynamische Viskosität eines Fluids gibt dessen Widerstand gegenüber Scherflüssen an. Die SI-Einheit für die dynamische Viskosität ist das Poiseuille (Pa·s). Die dynamische Viskosität wird üblicherweise in Centipoise-Einheiten angegeben, wobei 1 Centipoise (cP) 1 mPa·s entspricht. Die kinematische Viskosität ist das Verhältnis der dynamischen Viskosität zur Dichte des Fluids; die SI-Einheit ist m²/s. Geräte zur Messung der Viskosität umfassen Viskosimeter und Rheometer. Die Viskosität einer hierin beschriebenen Zusammensetzung kann bei 110 °C unter Verwendung eines Rheometers gemessen werden. Beispielsweise kann ein MCR 301-Rheometer von Anton Paar zur rheologischen Messung im Rotationsmodus (PP-25, 50 s-1, 50-115 °C, 3 °C/min) eingesetzt werden.

In bestimmten Aspekten offenbart die vorliegende Offenbarung eine härtbare Zusammensetzung zur Verwendung in einem Photopolymerisationsverfahren, wobei die Zusammensetzung Folgendes umfasst:
1 bis 70 Gew.-%, bezogen auf das Gesamtgewicht der Zusammensetzung, eines Zähigkeitsmodifikators, wobei der Zähigkeitsmodifikator ein polymerisierbares Oligomer mit einem zahlenmittleren Molekulargewicht von mehr als 5 kDa ist;
5 bis 80 Gew.-%, bezogen auf das Gesamtgewicht der Zusammensetzung, eines Reaktivverdünners, wobei der Reaktivverdünner eine polymerisierbare Verbindung mit einem Molekulargewicht von 0,1 bis 1,0 kDa ist; und
0,1 bis 5 Gew.-%, bezogen auf das Gesamtgewicht der Zusammensetzung, eines Photoinitiators;
wobei die Viskosität der Zusammensetzung bei 110 °C 1 bis 70 Pa s beträgt.

In manchen Ausführungsformen umfasst die Zusammensetzung:
20 bis 50 Gew.-%, bezogen auf das Gesamtgewicht der Zusammensetzung, eines Zähigkeitsmodifikators, wobei der Zähigkeitsmodifikator ein polymerisierbares Oligomer mit einem zahlenmittleren Molekulargewicht von mehr als 10 kDa ist;
5 bis 80 Gew.-%, bezogen auf das Gesamtgewicht der Zusammensetzung, eines Reaktivverdünners, wobei der Reaktivverdünner eine polymerisierbare Verbindung mit einem Molekulargewicht von 0,1 bis 0,5 kDa ist; und
0,1 bis 5 Gew.-%, bezogen auf das Gesamtgewicht der Zusammensetzung, eines Photoinitiators;
wobei die Viskosität der Zusammensetzung bei 110 °C 1 bis 70 Pa s beträgt.

Das Kombinieren eines Zähigkeitsmodifikators und eines Reaktivverdünners zur Herstellung einer Zusammensetzung gemäß der vorliegenden Offenbarung ergibt eine härtbare Zusammensetzung, die bei den Verarbeitungstemperaturen, die bei Hochtemperatur-Photopolymerisationsverfahren auf Lithographiebasis üblicherweise eingesetzt werden, d.h. Temperaturen zwischen 90 °C und 120 °C, gut verarbeitbar ist, da ihre Viskosität bei diesen Temperaturen trotz der Gegenwart der hochmolekularen Komponente B ausreichend niedrig ist. Darüber hinaus ergeben solche härtbare Zusammensetzungen, da sie üblicherweise mehrere zweiwertige polymerisierbare Komponenten umfassen, vernetzte Polymeren, insbesondere vernetzte Polymere mit hervorragenden thermomechanischen Eigenschaften, wie nachfolgend im Detail ausgeführt wird.

Der Zähigkeitsmodifikator und der Reaktivverdünner sind in den hierin beschriebenen Verfahren üblicherweise mischbar und verträglich. Bei Verwendung in den gegenständlichen Zusammensetzungen kann der Zähigkeitsmodifikator aufgrund einer verstärkenden Wirkung für hohe Bruchdehnung und Zähigkeit sorgen, und der Reaktivverdünner kann die Verarbeitbarkeit der Formulierungen, insbesondere von jenen, die große Mengen an Zähigkeitsmodifikatoren umfassen, verbessern und gleichzeitig hohe Werte für Festigkeit und T_{g} beibehalten.

Ein Zähigkeitsmodifikator in Zusammensetzungen der Erfindung kann eine niedrige Glasübergangstemperatur (T_{g}) aufweisen, wie z. B. eine T_{g} unter 0 °C. In manchen Beispielen kann die T_{g} des Zähigkeitsmodifikator unter 25 °C, wie z. B. unter 15 °C, unter 10 °C, unter 5 °C, unter 0 °C, unter -5 °C oder unter -10 °C, liegen. Die T_{g} eines/r hierin beschriebenen Polymers oder Zusammensetzung kann mittels dynamisch-mechanischer Analyse (DMA) bestimmt werden und wird hierin als tanδ-Peak angegeben.

Der Zähigkeitsmodifikator kann eine Komponente mit einer niedrigen Glasübergangstemperatur (z.B. unter 0 °C) sein, was bei Verwendung oberhalb seiner Glasübergangstemperatur zu zähem Verhalten beitragen kann. Der Zähigkeitsmodifikator kann ein Molekulargewicht von mehr als 5 kDa, 6 kDa, 7 kDa, 8 kDa, 9 kDa, 10 kDa, 11 kDa, 12 kDa, 13 kDa, 14 kDa, 15 kDa, 16 kDa, 17 kDa, 18 kDa, 19 kDa, 20 kDa, 21 kDa, 22 kDa, 23 kDa, 24 kDa oder mehr als 25 kDa aufweisen. In bestimmten Ausführungsformen kann der Zähigkeitsmodifikator ein Molekulargewicht von mehr als 5 kDa, wie z.B. ein Molekulargewicht von mehr als 10 kDa, aufweisen. Die härtbare Zusammensetzung kann 10 bis 70 Gew.-%, 10 bis 60 Gew.-%, 10 bis 50 Gew.-%, 10 bis 40 Gew.-%, 10 bis 30 Gew.-%, 10 bis 25 Gew.-%, 20 bis 60 Gew.-%, 20 bis 50 Gew.-%, 20 bis 40 Gew.-%, 20 bis 35 Gew.-%, 20 bis 30 Gew.-%, 25 bis 60 Gew.-%, 25 bis 50 Gew.-%, 25 bis 45 Gew.-%, 25 bis 40 Gew.-% oder 25 bis 35 Gew.-%, bezogen auf das Gesamtgewicht der Zusammensetzung, des Zähigkeitsmodifikators umfassen. In bestimmten Ausführungsformen kann die härtbare Zusammensetzung 25 bis 35 Gew.-%, bezogen auf das Gesamtgewicht der Zusammensetzung, des Zähigkeitsmodifikators umfassen. In bestimmten Ausführungsformen kann die härtbare Zusammensetzung 20 bis 40 Gew.-%, bezogen auf das Gesamtgewicht der Zusammensetzung, des Zähigkeitsmodifikators umfassen.

Der Zähigkeitsmodifikator kann ein Polyolefin, einen Polyester, ein Polyurethan, ein Polyvinyl, ein Polyamid, einen Polyether, ein Polyacryl, ein Polycarbonat, ein Polysulfon, ein Polyarylat, ein Cellulose-basiertes Harz, ein Polyvinylchloridharz, ein Polyvinylidenfluorid, ein Polyvinylidenchlorid, ein Cycloolefin-basiertes Harz, ein Polybutadien, ein Glycidylmethacrylat oder einen Methylacrylester umfassen. Beispielsweise kann der Zähigkeitsmodifikator eine Urethangruppe, eine Carbonatgruppe oder sowohl eine Urethangruppe als auch eine Carbonatgruppe umfassen.

In manchen Ausführungsformen umfasst der Zähigkeitsmodifikator zumindest eine Methacrylatgruppe, wie z.B. zwei Methacrylatgruppen. In manchen Ausführungsformen umfasst der Zähigkeitsmodifikator zumindest ein Acrylat. Der Zähigkeitsmodifikator kann ein aus einem Epoxyacrylat (z.B. einem Bisphenol-A-Epoxyacrylat), einem Epoxymethacrylat (z.B. einem Bisphenol-A-Epoxymethacrylat), einem Epoxyacrylat vom Novolak-Typ (z.B. Kresol-Novolak-Epoxyacrylat oder Phenol-Novolak-Epoxyacrylat), einem modifizierten Epoxyacrylat (z.B. Phenylepoxyacrylat, aliphatischen Alkylepoxyacrylat, Sojaöl-Epoxyacrylat, Photocryl^{®} DP296, Photocryl^{®} E207/25TP, Photocryl^{®} E207/25HD oder Photocryl^{®} E207/30PE), einem Urethanacrylat, einem aliphatischen Urethanacrylat (z.B. einem difunktionellen aliphatisches Acrylat, trifunktionellen aliphatischen Acrylat, multifunktionellen aliphatischen Acrylat), einem aromatischen Urethanacrylat (z.B. einem difunktionellen aromatischen Acrylat, trifunktionellen aromatischen Acrylat, multifunktionellen aromatischen Acrylat), einem Polyesteracrylat (z.B. einem trifunktionellen Polyesteracrylat, tetrafunktionellen Polyesteracrylat, difunktionellen Polyesteracrylat, hexafunktionellen Polyesteracrylat), einem Silikonacrylat (z.B. Silikonurethanacrylat, Silikonpolyesteracrylat), einem Melaminacrylat, einem dendritischen Acrylat, einem Acrylacrylat, einem Caprolactonmonomeracrylat (z.B. Caprolactonmethacrylat, Caprolactonacrylat), einem Oligoaminacrylat (z.B. Aminacrylat, aminierten Polyesteracrylat), einem Derivat davon oder einer Kombination davon ausgewähltes Acrylat sein. Nicht einschränkende Beispiele für aliphatische Urethanacrylate umfassen difunktionelle aliphatische Acrylate (z.B. Miramer PU210, Miramer PU2100, Miramer PU2560, Miramer SC2404, Miramer SC2565, Miramer UA5216, Miramer U307, Miramer U3195 oder Photocryl DP102), trifunktionelle aliphatische Acyrlate (z.B. Miramer PU320, Miramer PU340, Miramer PU3450, Miramer U375 oder Photocryl DP225), tetrafunktionelle aliphatische Acrylate (z.B. Miramer U3304), hexafunktionelle aliphatische Acrylate (z.B. Miramer MU9800) und multifunktionelle aliphatische Acrylate (z.B. Miramer MU9800 oder Miramer SC2152).

In manchen Ausführungsformen umfasst der Zähigkeitsmodifikator Acrylmonomere, die aus n-Butylacrylat, Isodecylacrylat, n-Decylmethacrylat, n-Dodecylacrylat, n-Dodecylmethacrylat, 2-Ethylhexylacrylat, 2-(2-Ethoxyethoxy)ethylacrylat, n-Hexylacrylat, 2-Methoxyethylacrylat, n-Octylmethacrylat, 2-Phenylethylacrylat, n-Propylacrylat und Tetrahydrofurfurylacrylat ausgewählt sind. In manchen Ausführungsformen ist der Zähigkeitsmodifikator ein Poly(ethersulfon), ein Poly(sulfon), ein Poly(etherimid) oder eine Kombination daraus. In bestimmten Ausführungsformen ist der Zähigkeitsmodifikator ein Polypropylen oder ein Polypropylenderivat. In manchen Ausführungsformen ist der Zähigkeitsmodifikator ein Gummi oder ein Gummiderivat. In bestimmten Ausführungsformen ist der Zähigkeitsmodifikator ein Polyethylen oder ein Derivat davon oder ein Derivat davon. In manchen Ausführungsformen umfasst der Zähigkeitsmodifikator fluorierte Acrylmonomere, die ausgewählt sein können aus 1H, 1H-Heptafluorbutylacrylat, 1H,1H,3H-Hexafluorbutylacrylat, 1H,1H,5H-Octafluorpentyl-acrylat oder 2,2,2-Trifluorethylacrylat.

In manchen Ausführungsformen ist der Zähigkeitsmodifikator Acetaldehyd, Allylglycidylether, trans-Butadien, 1-Buten, Butylacrylat, sec-Butylacrylat, Benzylacrylat, Butylglydicylether, Butylmethacrylat, Butylvinylether, ε-Caprolacton, cis-Chlorbutadien, trans-Chlorbutadien, 2-Cyanoethylacrylat, Cyclohexylacrylat, Diethylaminoethylmethacrylat, Isobutylacrylat, Isobutylen, Isobutylvinylether, cis-Isopren, trans-Isopren, isotaktisches Isopropylacrylat, 2-Methoxyethylacrylat, Methylacrylat, Methylglycidylether, Methylphenylsiloxan, Methylvinylether, Octadecylmethacrylat, 1-Octen, Octylmethacrylat, Dimethylsiloxan, Dodecylacrylat, Dodecylmethacrylat, Dodecylvinylether, Epibromhydrin, Epichlorhydrin, 1,2-Epoxybutan, 1,2-Epoxydecan, 1,2-Epoxyoctan, 2-Ethoxyethylacrylat, Ethylacrylat, HDPE-Ethylen, Ethylenadipat, Ethylen-trans-1,4-cyclohexyldicarboxylat, Ethylenmalonat, Ethylenoxid, 2-Ethylhexylacrylat, 2-Ethylhexylmethacrylat, 2-Ethylhexylvinylether, Ethylvinylether, Formaldehyd, Hexylacrylat, Hexadecylmethacrylat, Hexylmethacrylat, ataktisches Propylen, isotaktisches Propylen, syndiotaktisches Propylen, Propylenoxid, Propylvinylether, Tetrahydrofuran, Tetramethylenadipat, 2,2,2-Trifluorethylacrylat, Trimethylenoxid, Vinylidenchlorid, Vinylidenfluorid, Vinylpropionat, ein Derivat davon oder eine Kombination davon.

In manchen Ausführungsformen umfasst der Zähigkeitsmodifikator ein chloriertes Polyethylen, ein Methacrylat, ein Copolymer von einem chlorierten Polyethylen und Methacrylat, ein Derivat davon oder eine Kombination davon. In manchen Ausführungsformen ist der Zähigkeitsmodifikator ein Gummipulver. In manchen Ausführungsformen ist der Zähigkeitsmodifikator ein Anhydrid-Pfropfpolymer, ein Anhydridpolymer oder eine Epoxygruppen enthaltende Kombination davon. In bestimmten Ausführungsformen ist das Anhydrid-Pfropfpolymer ein gepfropftes Anhydrid-modifiziertes thermoplastisches Elastomer und kann ein Styroleinheiten und Einheiten eines Olefins (z.B. Ethylen, Propylen oder Buten) umfassendes, Styrol-basiertes thermoplastisches Elastomer umfassen, wie z. B. ein Styrol-Butadien-Styrol- (SBS-), Styrol-Isopren-Styrol-(SIS-), Styrol-Ethylen-Butadien-Styrol- (SEBS-), Styrol-Ethylen-Propylen-Styrol-(SEPS-) Copolymer. Geeignete Anhydride umfassen ungesättigte Carbonsäureanhydride, wobei die Carbonsäure eine Acrylsäure, Methacrylsäure, α-Methylacrylsäure, Maleinsäure, Fumarsäure, Itaconsäure, Citraconsäure, Tetrahydrophthalsäure, Methyltetrahydrophthalsäure oder eine Kombination davon ist.

Spezifische Zähigkeitsmodifikatoren, die für die Verwendung in den Zusammensetzungen der Erfindung geeignet sind, werden hierin nahstehend beschrieben, einschließlich der Verbindungen der Formeln (II), (III), (IV) oder (V). In manchen Ausführungsformen ist der Zähigkeitsmodifikator ausgewählt aus UA5216 (Miwon), einer Verbindung der Formel (II), einer Verbindung der Formel (III), einer Verbindung der Formel (IV), einer Verbindung der Formel (V), TNM1, TNM2, TNM3, TNM4, TNM5 und TNM6.

Ein Reaktivverdünner der gegenständlichen Zusammensetzungen weist typischerweise eine niedrige Viskosität auf. Ein oder mehrere Reaktivverdünner können in der Zusammensetzung umfasst sein, um die Viskosität der Zusammensetzung zu verringern, z.B. auf eine Viskosität, die geringer ist als die Viskosität der Zusammensetzung in Abwesenheit des Reaktivverdünners. Der oder die Reaktivverdünner können die Viskosität der Zusammensetzung um zumindest 10 %, wie z. B. um zumindest 20 %, zumindest 30 %, zumindest 40 %, zumindest 50 %, zumindest 60 %, zumindest 70 %, zumindest 80 % oder zumindest 90 % verringern. Die härtbare Zusammensetzung kann 5 bis 80 Gew.-%, 5 bis 70 Gew.-%, 5 bis 60 Gew.-%, 5 bis 50 Gew.-%, 5 bis 40 Gew.-%, 5 bis 30 Gew.-%, 5 bis 25 Gew.-%, 5 bis 20 Gew.-%, 10 bis 70 Gew.-%, 10 bis 60 Gew.-%, 10 bis 50 Gew.-%, 10 bis 40 Gew.-%, 10 bis 30 Gew.-%, 10 bis 25 Gew.-%, 20 bis 70 Gew.-%, 20 bis 60 Gew.-%, 20 bis 50 Gew.-%, 20 bis 40 Gew.-%, 20 bis 35 Gew.-% oder 20 bis 30 Gew.-%, bezogen auf das Gesamtgewicht der Zusammensetzung, an Reaktivverdünner umfassen. In bestimmten Ausführungsformen kann die härtbare Zusammensetzung 5 bis 80 Gew.-%, bezogen auf das Gesamtgewicht der Zusammensetzung, an Reaktivverdünner umfassen. In bestimmten Ausführungsformen kann die härtbare Zusammensetzung 5 bis 50 Gew.-%, bezogen auf das Gesamtgewicht der Zusammensetzung, an Reaktivverdünner umfassen. Der Reaktivverdünner der härtbaren Zusammensetzung kann monofunktionell sein. In manchen Ausführungsformen umfasst der Reaktivverdünner ein Methacrylat. In manchen Ausführungsformen umfasst der Reaktivverdünner ein Dimethacrylat. Der Reaktivverdünner kann aus der aus Dimethacrylaten von Polyglykolen, Hydroxybenzoesäureester(meth)acrylaten und Gemischen davon bestehenden Gruppe ausgewählt sein. Gegebenenfalls ist der Reaktivverdünner ein Cycloalkyl 2-, 3- oder 4-((Meth)-acryloyloxy)benzoat. In manchen Ausführungsformen ist der Reaktivverdünner eine Verbindung der Formel (VII): 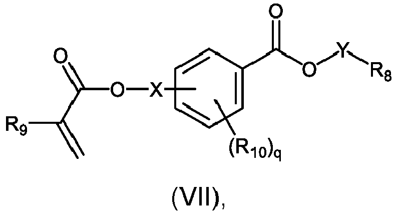 worin:
R₈ für gegebenenfalls substituiertes C₃-C₁₀-Cycloalkyl, gegebenenfalls substituiertes 3- bis 10-gliedriges Heterocycloalkyl oder gegebenenfalls substituiertes C₆-C₁₀-Aryl steht;
R₉ für H oder C₁-C₆-Alkyl steht;
die R₁₀ jeweils unabhängig für ein Halogen, C₁-C₃-Alkyl, C₁-C₃-Alkoxy, Si(R₁₁)₃, P(O)(OR₁₂)₂ oder N(R₁₃)₂ stehen;
die R₁₁ jeweils unabhängig für C₁-C₆-Alkyl oder C₁-C₆-Alkoxy stehen;
die R₁₂ jeweils unabhängig für C₁-C₆-Alkyl oder C₆-C₁₀-Aryl stehen;
die R₁₃ jeweils unabhängig für H oder C₁-C₆-Alkyl stehen;
X fehlt oder für C₁-C₃-Alkylen, 1- bis 3-gliedriges Heteroalkylen oder (CH₂CH₂O)ᵣ steht;
Y fehlt oder für C₁-C₆-Alkylen steht;
q eine ganze Zahl von 0 bis 4 ist; und
r eine ganze Zahl von 1 bis 4 ist.

In manchen Ausführungsformen ist bei einer Verbindung der Formel (VII) R₈ gegebenenfalls unsubstituiert oder substituiert mit einem oder mehreren Substituenten, die aus der aus C₁-C₆-Alkyl, C₁-C₆-Alkoxy, C₃-C₇-Cycloalkyl, C₆-C₁₀-Aryl, C₁-C₆-Alkoxy-(C₆-C₁₀)-aryl, -O(CO)-(C₁-C₆)-Alkyl, -COO-(C₁-C₆)-Alkyl, =O, -F, -Cl und -Br bestehenden Gruppe ausgewählt sind. Spezifische Reaktivverdünner, die für die Verwendung in den Zusammensetzungen der Erfindung geeignet sind, einschließlich Verbindungen der Formel (VI) und (VII), werden hierin nachstehend beschrieben. In manchen Ausführungsformen ist der Reaktivverdünner ausgewählt aus TEGDMA (Triethylenglykoldimethacrylat) (Aldrich), D4MA (1,12-Dodecandioldimethacrylat) (Aldrich), HSMA (3,3,5-Trimethylcyclohexyl-2-(methacryloyloxy)benzoat) (EAG), BSMA (Benzylsalicylatmethacrylat) (EAG), einer Verbindung der Formel (VI) und einer Verbindung der Formel (VII).

Eine härtbare Zusammensetzung der vorliegenden Offenbarung kann zudem 0 bis 50 Gew.-%, bezogen auf das Gesamtgewicht der Zusammensetzung, eines Glasübergangstemperatur- (T_{g}-) Modifikators (hierin auch als Tg-Modifikator, Glasübergangsmodifikator oder Vernetzer bezeichnet). Der T_{g}-Modifikator kann eine hohe Glasübergangstemperatur aufweisen, was eine hohe Wärmeformbeständigkeitstemperatur ergibt, was für die Verwendung eines Materials bei erhöhten Temperaturen erforderlich sein kann. In manchen Ausführungsformen umfasst die härtbare Zusammensetzung 0 bis 80 Gew.-%, 0 bis 75 Gew.-%, 0 bis 70 Gew.-%, 0 bis 65 Gew.-%, 0 bis 60 Gew.-%, 0 bis 55 Gew.-%, 0 bis 50 Gew.-%, 1 bis 50 Gew.-%, 2 bis 50 Gew.-%, 3 bis 50 Gew.-%, 4 bis 50 Gew.-%, 5 bis 50 Gew.-%, 10 bis 50 Gew.-%, 15 bis 50 Gew.-%, 20 bis 50 Gew.-%, 25 bis 50 Gew.-%, 30 bis 50 Gew.-%, 35 bis 50 Gew.-%, 0 bis 40 Gew.-%, 1 bis 40 Gew.-%, 2 bis 40 Gew.-%, 3 bis 40 Gew.-%, 4 bis 40 Gew.-%, 5 bis 40 Gew.-%, 10 bis 40 Gew.-%, 15 bis 40 Gew.-% oder 20 bis 40 Gew.-% eines T_{g}-Modifikators. In bestimmten Ausführungsformen umfasst die härtbare Zusammensetzung 0-50 Gew.-% eines Glasübergangsmodifikators. Der T_{g}-Modifikator weist typischerweise eine höhere T_{g} als der Zähigkeitsmodifikator auf. Das zahlenmittlere Molekulargewicht des T_{g}-Modifikators kann 0,4 bis 5 kDa betragen. In manchen Ausführungsformen beträgt das zahlenmittlere Molekulargewicht des T_{g}-Modifikators 0,1 bis 5 kDa, 0,2 bis 5 kDa, 0,3 bis 5 kDa, 0,4 bis 5 kDa, 0,5 bis 5 kDa, 0,6 bis 5 kDa, 0,7 bis 5 kDa, 0,8 bis 5 kDa, 0,9 bis 5 kDa, von 1,0 bis 5 kDa, 0,1 bis 4 kDa, 0,2 bis 4 kDa, 0,3 bis 4 kDa, 0,4 bis 4 kDa, 0,5 bis 4 kDa, 0,6 bis 4 kDa, 0,7 bis 4 kDa, 0,8 bis 4 kDa, 0,9 bis 4 kDa, 1 bis 4 kDa, 0,1 bis 3 kDa, 0,2 bis 3 kDa, 0,3 bis 3 kDa, 0,4 bis 3 kDa, 0,5 bis 3 kDa, 0,6 bis 3 kDa, 0,7 bis 3 kDa, 0,8 bis 3 kDa, 0,9 bis 3 kDa oder 1 bis 3 kDa. Der Zähigkeitsmodifikator, der Reaktivverdünner und der T_{g}-Modifikator sind in den hierin beschriebenen Verfahren üblicherweise mischbar und verträglich. Bei Verwendung in den gegenständlichen Zusammensetzungen kann der T_{g}-Modifikator für hohe Werte für die T_{g} und die Festigkeit sorgen, was gelegentlich auf Kosten der Bruchdehnung geht. Der Zähigkeitsmodifikator aufgrund einer verstärkenden Wirkung für hohe Bruchdehnung und Zähigkeit sorgen, und der Reaktivverdünner kann die Verarbeitbarkeit der Formulierungen, insbesondere von jenen, die große Mengen an Zähigkeitsmodifikatoren umfassen, verbessern und gleichzeitig hohe Werte für Festigkeit und T_{g} beibehalten.

Der T_{g}-Modifikator kann eine Urethangruppe umfassen. In manchen Ausführungsformen umfasst der T_{g}-Modifikator zumindest eine Methacrylatgruppe. Die härtbare Zusammensetzung kann 10 bis 20 Gew.-%, bezogen auf das Gesamtgewicht der Zusammensetzung, des T_{g}-Modifikators umfassen. Der T_{g}-Modifikator kann eine Urethangruppe umfassen. In manchen Ausführungsformen umfasst der T_{g}-Modifikator zumindest eine Methacrylatgruppe. Die härtbare Zusammensetzung kann 20 bis 40 Gew.-%, bezogen auf das Gesamtgewicht der Zusammensetzung, des T_{g}-Modifikators umfassen. Der T_{g}-Modifikator kann eine Urethangruppe umfassen. In manchen Ausführungsformen umfasst der T_{g}-Modifikator zumindest eine Methacrylatgruppe. Die härtbare Zusammensetzung kann 10 bis 50 Gew.-%, bezogen auf das Gesamtgewicht der Zusammensetzung, des T_{g}-Modifikators umfassen. Spezifische T_{g}-Modifikatoren, die für die Verwendung in den Zusammensetzungen der Erfindung geeignet sind, werden nachfolgend hierin beschrieben, einschließlich Verbindungen der Formel (I). In manchen Ausführungsformen ist der T_{g}-Modifikator aus H1188 (Bis((2-((methacryloyloxy)methyl)octahydro-1H-4,7-methanoinden-5-yl)methyl)cyclohexan-1,4-dicarboxylat), TGM1, TGM2, TGM3, TGM4 und einer Verbindung der Formel (I) ausgewählt. In manchen Ausführungsformen ist der T_{g}-Modifikator ein Derivat von H1188 (DMI), TGM1, TGM2, TGM3, TGM4 oder ein Derivat der Verbindung der Formel (I). In manchen Ausführungsformen ist der T_{g}-Modifikator ein Gemisch aus Modifikatoren, umfassend H1188 (DMI), TGM1, TGM2, TGM3, TGM4 oder eine Verbindung der Formel (I). In manchen Ausführungsformen ist der T_{g}-Modifikator H1188: 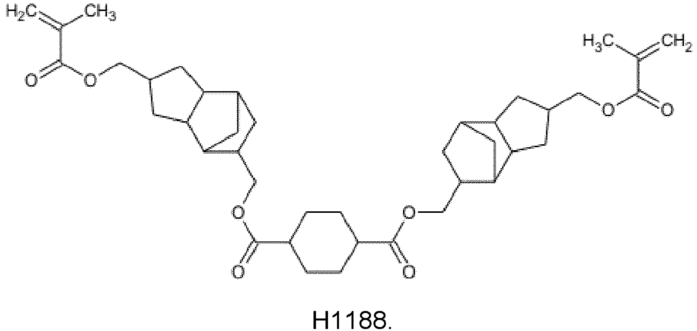 In manchen Ausführungsformen ist der T_{g}-Modifikator TGM1: 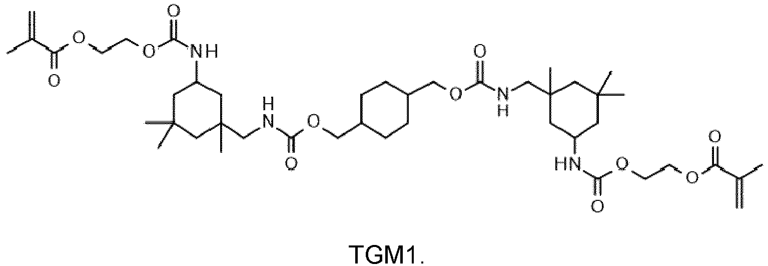 In manchen Ausführungsformen ist der T_{g}-Modifikator TGM2: 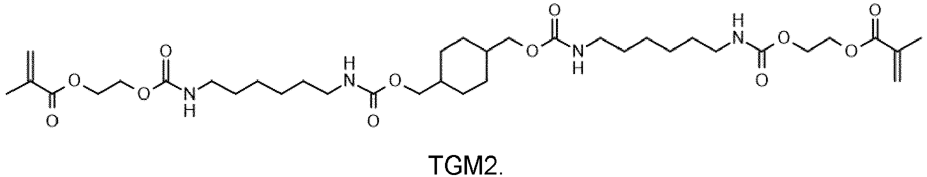 In manchen Ausführungsformen ist der T_{g}-Modifikator TGM3: 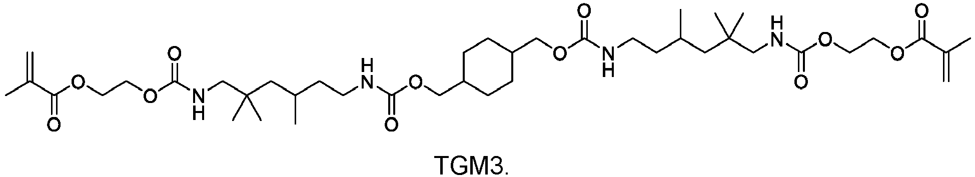 In manchen Ausführungsformen ist der T_{g}-Modifikator TGM4: 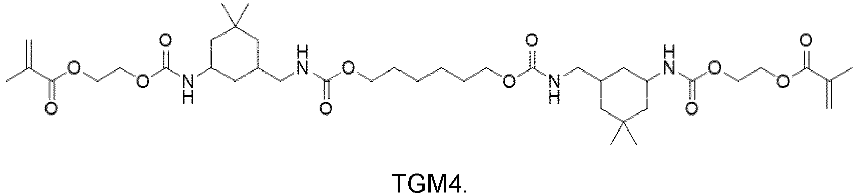 In manchen Ausführungsformen ist der T_{g}-Modifikator eine Verbindung der Formel (I): 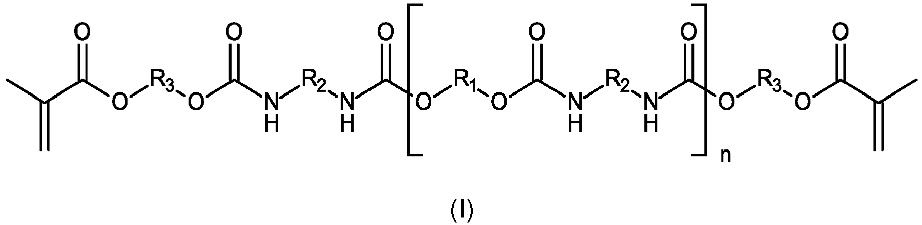 worin:
die R₁ und die R₂ jeweils unabhängig für einen zweiwertigen unverzweigten, verzweigten oder zyklischen aliphatischen C₅-C₁₅-Rest stehen, mit der Maßgabe, dass zumindest eines von R₁ und R₂ eine cycloaliphatische C₅-C₆-Struktur ist oder eine solche umfasst;
die R₃ jeweils unabhängig für einen zweiwertigen unverzweigten oder verzweigten C₂-C₄-Alkylrest stehen; und
n eine ganze Zahl von 1 bis 5 ist;
mit der Maßgabe, dass R₁, R₂, R₃ und n so gewählt sind, dass das oligomere Dimethacrylat ein zahlenmittleres Molekulargewicht von 0,4 bis 5 kDa aufweist.

In manchen Ausführungsformen umfasst der T_{g}-Modifikator eine Vielzahl von aliphatischen Ringen. In bestimmten Ausführungsformen umfasst der T_{g}-Modifikator eine Vielzahl von aliphatischen Ringen. In manchen Ausführungsformen sind die aliphatischen Ringe Kohlenwasserstoffringe. In manchen Ausführungsformen sind die aliphatischen Ringe gesättigt. In manchen Ausführungsformen umfasst die Vielzahl von aliphatischen Ringen Cyclobutan, Cyclopentan, Cyclohexan, Cycloheptan, Cyclooctan, Cyclononan, Cyclodecan oder beliebige Kombinationen davon. In manchen Ausführungsformen umfasst die Vielzahl von aliphatischen Ringen verbrückte Ringstrukturen. In manchen Ausführungsformen umfasst die Vielzahl von aliphatischen Ringen kondensierte Ringstrukturen. In bestimmten Ausführungsformen umfasst der mittlere Abschnitt des T_{g}-Modifikators eine Cyclohexan-1,4-dicarbonsäure, ein Cyclohexandimethanol, ein Cyclohexan-1,4-diylbis(methylen)dicarbamat oder eine Kombination davon. In bestimmten Ausführungsformen umfasst das Zentrum der T_{g}-Modifikatorstruktur ein Cyclohexan-1,4-diylbis(methylen)dicarbamat (z.B. TGM1, TGM2 und TGM3).

In manchen Ausführungsformen umfasst der T_{g}-Modifikator ein Methacrylat. In manchen Ausführungsformen umfasst der T_{g}-Modifikator zumindest zwei Methacrylate. In bestimmten Ausführungsformen weist der T_{g}-Modifikator endständige Abschnitte auf, die Methacrylate umfassen. In manchen Ausführungsformen weist der T_{g}-Modifikator eine Struktur auf, die an jedem Ende mit einem Methacrylat endet. In manchen Ausführungsformen ist der T_{g}-Modifikator ein Bis(2-methacrylat) (z.B. TGM1, TGM2, TGM3, TGM4 und H1188).

In manchen Ausführungsformen umfasst der T_{g}-Modifikator ein Gemisch aus Komponenten, die ausgewählt sind aus TGM1, TGM2, TGM3, TGM4, H1188, einer Verbindung der Formel (I), D3MA (1,10-Decandioldimethacrylat), D4MA (1,12-Dodecandioldimethacrylate, RDI, LPU624, einem Derivat davon oder einer Kombination davon.

Eine härtbare Zusammensetzung der vorliegenden Offenbarung kann zudem 0,1 bis 10 Gew.-%, bezogen auf das Gesamtgewicht der Zusammensetzung, eines Additivs umfassen. Additive können die Leistung oder die Verarbeitbarkeit der Zusammensetzung in direkten oder additiven Fertigungsprozessen verbessern. Das Additiv kann aus einem Harz, einem Entschäumer und einem Tensid oder einer Kombination davon ausgewählt sein. Ein in der Zusammensetzung als Additiv umfasstes Harz kann hochfunktionell sein, was die Gelierzeit verringern kann. Zu der Zusammensetzung können ein oder mehrere Entschäumer zugesetzt wurden, um Schaum in der Formulierung zu verringern, was zu weniger Fehlern (z.B. Lufttaschen) in einem aus der Zusammensetzung hergestellten Polymer führen kann. Ein Tensid kann zugesetzt werden, um die Oberflächenspannung der Zusammensetzung zu verringern, was die Verarbeitung in einem additiven Fertigungsverfahren, wie z. B. 3D-Druck, verbessern kann. In manchen Ausführungsformen umfasst die Zusammensetzung 0,01 bis 20 Gew.-%, 0,01 bis 15 Gew.-%, 0,01 bis 10 Gew.-%, 0,01 bis 9 Gew.-%, 0,01 bis 8 Gew.-%, 0,01 bis 7 Gew.-%, 0,01 bis 6 Gew.-%, 0,01 bis 5 Gew.-%, 0,1 bis 10 Gew.-%, 0,1 bis 9 Gew.-%, 0,1 bis 8 Gew.-%, 0,1 bis 7 Gew.-%, 0,1 bis 6 Gew.-%, 0,1 bis 5 Gew.-%, 0,5 bis 10 Gew.-%, 0,5 bis 9 Gew.-%, 0,5 bis 8 Gew.-%, 0,5 bis 7 Gew.-%, 0,5 bis 6 Gew.-%, 0,5 bis 5 Gew.-%, 1 bis 10 Gew.-%, 1 bis 9 Gew.-%, 1 bis 8 Gew.-%, 1 bis 7 Gew.-%, 1 bis 6 Gew.-% oder 1 bis 5 Gew.-% eines Additivs, bezogen auf das Gesamtgewicht der Zusammensetzung. In manchen Ausführungsformen umfasst die Zusammensetzung 0,3 bis 3,5 Gew.-% eines Additivs, bezogen auf das Gesamtgewicht der Zusammensetzung. In manchen Ausführungsformen umfasst der Entschäumer einen modifizierten Harnstoff (z.B. BYK^{®}-7411 ES, BYK^{®}-7420 ES und BYK^{®}-7410 ET), ein silikonfreies schaumzerstörendes Polymer (z.B. BYK^{®}-A 535), eine Zusammensetzung mit einem kurzen Siloxangerüst und langen organischen Modifikationen (z.B. TEGO^{®} RAD 2100), einen Entschäumer auf Siliciumbasis, hydrophobes Silica, ein Wachs, einen Fettalkohol, eine Fettsäure oder eine Benetzungskomponente (z.B. eine silikonfreie Benetzungskomponente, wie z. B. TEGO^{®} Wet 510). In manchen Ausführungsformen ist der Entschäumer aus der aus BYK^{®}-7411 ES, BYK^{®}-7420 ES, BYK^{®}-7410 ET, BYK^{®}-A 535, TEGO^{®} RAD2100 und TEGO^{®} WET510 bestehenden Gruppe ausgewählt. In manchen Ausführungsformen ist das Additiv ein Tensid, das aus der aus einem amphoteren Tensid, einem zwitterionischen Tensid, einem anionischen Tensid, einem nichtionischen Tensid, einem kationischen Tensid und einer beliebigen Kombination davon bestehenden Gruppe ausgewählt ist. Das kationische Tensid ist aus quaternären Salzen, bestimmten Aminen und Kombinationen davon ausgewählt. In manchen Ausführungsformen ist das Additiv ausgewählt aus SIU2400 (Miwon), BDT1006 (Dymax), BYK^{®}-430 und BYK^{®}-A535.

In manchen Ausführungsformen umfasst die Zusammensetzung zudem 0,05 bis 1 Gew.-%, 0,05 bis 2 Gew.-%, 0,05 bis 3 Gew.-%, 0,05 bis 4 Gew.-%, 0,05 bis 5 Gew.-%, 0,1 bis 1 Gew.-%, 0,1 bis 2 Gew.-%, 0,1 bis 3 Gew.-%, 0,1 bis 4 Gew.-%, 0,1 bis 5 Gew.-%, 0,1 bis 6 Gew.-%, 0,1 bis 7 Gew.-%, 0,1 bis 8 Gew.-%, 0,1 bis 9 Gew.-% oder 0,1 bis 10 Gew.-% eines Photoblockers, bezogen auf das Gesamtgewicht der Zusammensetzung. Der Photoblocker kann Strahlung absorbieren und die Polymerisations- oder Abbaurate verringern bzw. diesen vorbeugen, und seine Zugabe zu der härtbaren Zusammensetzung kann die Auflösung von druckbaren Materialien verbessern. In bestimmten Ausführungsformen umfasst der Photoblocker ein Hydrochinon, 1,4-Dihydroxybenzol, eine zur HALS- (sterisch gehindertes Amin-Lichtstabilisator-) Familie zählende Verbindung, ein Benzophenon, ein Benzotriazol, ein beliebiges Derivat davon oder eine beliebige Kombination davon. In manchen Ausführungsformen umfasst der Photoblocker 2,2'-Dihydroxy-4-methoxybenzophenon. In bestimmten Ausführungsformen ist der Photoblocker aus der aus Michlers Keton, 4-Allyloxy-2-hydroxybenzophenon 99 %, 2-(2H-Benzotriazol-2-yl)-4,6-bis(1-methyl-1-phenylethyl)phenol-Pulver, 2-(2H-Benzotriazol-2-yl)-4,6-di-tert-pentylphenol, 2-(2H-Benzotriazol-2-yl)-6-dodecyl-4-methylphenol, 2-[3-(2H-Benzotriazol-2-yl)-4-hydroxyphenyl]ethylmethacrylat, 2-(2H-Benzotriazol-2-yl)-4-methyl-6-(2-propenyl)phenol, 2-(2H-Benzotriazol-2-yl)-4-(1,1,3,3-tetramethylbutyl)phenol, 2-(4-Benzoyl-3-hydroxy-phenoxy)ethylacrylat, 3,9-Bis(2,4-dicumylphenoxy)-2,4,8,10-tetraoxa-3,9-diphospha-spiro[5.5]undecan, Bis(octadecyl)hydroxylamin-Pulver, 3,9-Bis(octadecyloxy)-2,4,8,10-tetraoxa-3,9-diphosphaspiro[5.5]undecan, Bis(1-octyloxy-2,2,6,6-tetramethyl-4-piperidyl)sebacat, Bis(2,2,6,6-tetramethyl-4-piperidyl)sebacat, 2-tert-Butyl-6-(5-chlor-2H-benzotriazol-2-yl)-4-methylphenol, 2-tert-Butyl-4-ethylphenol, 5-Chlor-2-hydroxybenzophenon, 5-Chlor-2-hydroxy-4-methylbenzophenon, 2,4-Di-tert-butyl-6-(5-chlor-2H-benzotriazol-2-yl)phenol, 2,6-Di-tert-butyl-4-(dimethylaminomethyl)-phenol, 3',5'-Dichlor-2'-hydroxyacetophenon, Didodecyl 3,3'-thiodipropionat, 2,4-Dihydroxybenzophenon, 2,2'-Dihydroxy-4-methoxybenzophenon, 2',4'-Dihydroxy-3'-propylacetophenon, 2,3-Dimethylhydrochinon, 2-(4,6-Diphenyl-1,3,5-triazin-2-yl)-5-[(hexyl)oxy]-phenol, 5-Ethyl-1-aza-3,7-dioxabicyclo[3.3.0]octan, Ethyl-2-cyano-3,3-diphenylacrylat, 2-Ethylhexyl-2-cyano-3,3-diphenylacrylat, 2-Ethylhexyl-trans-4-methoxycinnamat, 2-Ethylhexylsalicylat, 2-Hydroxy-4-(octyloxy)benzophenon, Menthylanthranilat, 2-Methoxyhydrochinon, Methyl-p-benzochinon, 2,2'-Methylenbis[6-(2H-benzotriazol-2-yl)-4-(1,1,3,3-tetramethylbutyl)phenol], 2,2'-Methylenbis(6-tert-butyl-4-ethylphenol), 2,2'-Methylenbis(6-tert-butyl-4-methylphenol), 5,5'-Methylenbis(2-hydroxy-4-methoxybenzophenon), Methylhydrochinon, 4-Nitrophenolnatriumsalzhydrat, Octadecyl-3-(3,5-di-tert-butyl-4-hydroxyphenyl)propionat, Pentaerythrit-tetrakis(3,5-di-tert-butyl-4-hydroxyhydrocinnamat), 2-Phenyl-5-benzimidazolsulfonsäure, Poly[[6-[(1,1,3,3-tetramethylbutyl)amino]-s-triazin-2,4-diyl]-[(2,2,6,6-tetramethyl-4-piperidyl)imino]-hexamethylen-[(2,2,6,6-tetramethyl-4-piperidyl)imino], Natrium-D-isoascorbatmonohydrat, Tetrachlor-1,4-benzochinon, Triisodecylphosphit, 1,3,5-Trimethyl-2,4,6-tris(3,5-di-tert-butyl-4-hydroxybenzyl)benzol, Tris(4-tert-butyl-3-hydroxy-2,6-dimethylbenzyl)isocyanurat, Tris(2,4-di-tert-butylphenyl)phosphit, 1,3,5-Tris(2-hydroxyethyl)isocyanurat und Tris(nonylphenyl)phosphit bestehenden Gruppe ausgewählt.

In manchen Ausführungsformen weist der Photoblocker ein Wellenlängenabsorptionsmaximum zwischen 200 und 300 nm, zwischen 300 und 400 nm, zwischen 400 und 500 nm, zwischen 500 und 600 nm, zwischen 600 und 700 nm, zwischen 700 und 800 nm, zwischen 800 und 900 nm, zwischen 150 und 200 nm, zwischen 200 und 250 nm, zwischen 250 und 300 nm, zwischen 300 und 350 nm, zwischen 350 und 400 nm, zwischen 400 und 450 nm, zwischen 450 und 500 nm, zwischen 500 und 550 nm, zwischen 550 und 600 nm, zwischen 600 und 650 nm, zwischen 650 und 700 nm oder zwischen 700 und 750 nm auf. In manchen Ausführungsformen weist der Photoblocker ein Wellenlängenabsorptionsmaximum zwischen 300 und 500 nm, wie z.B. bei 300 bis 400 nm oder 350 bis 480 nm, auf.

In manchen Ausführungsformen umfasst die Zusammensetzung zudem 0,05 bis 1 Gew.-%, 0,05 bis 2 Gew.-%, 0,05 bis 3 Gew.-%, 0,05 bis 4 Gew.-%, 0,05 bis 5 Gew.-%, 0,1 bis 1 Gew.-%, 0,1 bis 2 Gew.-%, 0,1 bis 3 Gew.-%, 0,1 bis 4 Gew.-%, 0,1 bis 5 Gew.-%, 0,1 bis 6 Gew.-%, 0,1 bis 7 Gew.-%, 0,1 bis 8 Gew.-%, 0,1 bis 9 Gew.-% oder 0,1 bis 10 Gew.-% eines Photoinitiators, bezogen auf das Gesamtgewicht der Zusammensetzung. In manchen Ausführungsformen ist der Photoinitiator ein radikalischer Photoinitiator. In bestimmten Ausführungsformen umfasst der radikalische Photoinitiator eine α-Hydroxyketongruppierung (z.B. 2-Hydroxy-2-methylpropiophenon oder 1-Hydroxycyclohexylphenylketon), ein α-Aminoketon (z.B. 2-Benzyl-2-(dimethylamino)-4'-morpholinobutyrophenon oder 2-Methyl-1-[4-(methylthio)phenyl]-2-morpholinopropan-1-on), 4-Methylbenzophenon, eine Azo-Verbindung (z.B. 4,4'-Azobis(4-cyanovaleriansäure), 1,1'-Azobis(cyclohexancarbonitril, Azobisisobutyronitril, 2,2'-Azobis(2-methylpropionitril) oder 2,2'-Azobis(2-methylpropionitril)), ein anorganisches Peroxid, ein organisches Peroxid oder eine beliebige Kombination davon. In manchen Ausführungsformen umfasst die Zusammensetzung einen SpeedCure TPO-L (Ethyl(2,4,6-trimethylbenzoyl)phenylphosphinat) umfassenden Photoinitiator. In manchen Ausführungsformen umfasst die Verbindung einen Photoinitiator, der aus einem Benzophenon, einem Gemisch aus Benzophenon und einem tertiären Amin, das eine direkt an zumindest einen aromatischen Ring gebundene Carbonylgruppe enthält und einem Irgacure (z.B. Irgacure 907 (2-Methyl-1-[4-(methylthio)phenyl]-2-morpholino-propanon-1) oder Irgacure 651 (2,2-Dimethoxy-1,2-diphenylethan-1-on) ausgewählt ist. In manchen Ausführungsformen umfasst der Photoinitiator einen Acetophenon-Photoinitiator (z.B. 4'-Hydroxyacetophenon, 4'-Phenoxyacetophenon, 4'-Ethoxyacetophenon), ein Benzoin, ein Benzoin-Derivat, ein Benzil, ein Benzil-Derivat, ein Benzophenon (z.B. 4-Benzoylbiphenyl, 3,4-(Dimethylamino)benzophenon, 2-Methylbenzophenon), einen kationischen Photoinitiator (z.B. Diphenyliodoniumnitrat, (4-lodphenyl)diphenylsulfoniumtriflat, Triphenylsulfoniumtriflat), ein Anthrachinon, ein Chinon (z.B. Camphorchinon), ein Phosphinoxid, ein Phosphinat, 9,10-Phenanthrachinon, ein Thioxanthon, eine beliebige Kombination davon oder ein beliebiges Derivat davon.

In manchen Ausführungsformen weist der Photoinitiator ein Wellenlängenabsorptionsmaximum zwischen 200 und 300 nm, zwischen 300 und 400 nm, zwischen 400 und 500 nm, zwischen 500 und 600 nm, zwischen 600 und 700 nm, zwischen 700 und 800 nm, zwischen 800 und 900 nm, zwischen 150 und 200 nm, zwischen 200 und 250 nm, zwischen 250 und 300 nm, zwischen 300 und 350 nm, zwischen 350 und 400 nm, zwischen 400 und 450 nm, zwischen 450 und 500 nm, zwischen 500 und 550 nm, zwischen 550 und 600 nm, zwischen 600 und 650 nm, zwischen 650 und 700 nm oder zwischen 700 und 750 nm auf. In manchen Ausführungsformen weist der Photoinitiator ein Wellenlängenabsorptionsmaximum zwischen 300 und 500 nm auf.

In manchen Ausführungsformen ist das Additiv ein verzweigtes dendritisches Oligomer. In manchen Ausführungsformen weist das Additiv eine oder mehr, zwei oder mehr, drei oder mehr, vier oder mehr, fünf oder mehr, sechs oder mehr, sieben oder mehr, acht oder mehr, neun oder mehr, zehn oder mehr oder mehr als zehn funktionelle Gruppen auf. In manchen Ausführungsformen weist das Additiv eine oder mehr, zwei oder mehr, drei oder mehr, vier oder mehr, fünf oder mehr, sechs oder mehr, sieben oder mehr, acht oder mehr, neun oder mehr, zehn oder mehr oder mehr als zehn funktionelle Gruppen auf. In bestimmten Ausführungsformen ist das verzweigte dendritische Oligomer-Additiv ein dendritisches Acrylat-Oligomer. In manchen Ausführungsformen ist das dendritisches Acrylat-Oligomer Bomar^{™} BDT-1006, Bomar^{™} BDT-1018, Bomar^{™} BDT-4330 und dergleichen. In manchen Ausführungsformen umfasst das multifunktionelle Additiv ein Silikon-Urethanacrylat. Als nichteinschränkendes Beispiel kann das Silikon-Urethanacrylat 1 funktionelle Gruppe, 2 funktionelle Gruppen, 3 funktionelle Gruppen, 4 funktionelle Gruppen, 5 funktionelle Gruppen, 6 funktionelle Gruppen, 7 funktionelle Gruppen, 8 funktionelle Gruppen, 9 funktionelle Gruppen, 10 funktionelle Gruppen, 11 funktionelle Gruppen, 12 funktionelle Gruppen, 13 funktionelle Gruppen, 14 funktionelle Gruppen, 15 funktionelle Gruppen, 16 funktionelle Gruppen, 17 funktionelle Gruppen, 18 funktionelle Gruppen, 19 funktionelle Gruppen, 20 funktionelle Gruppen oder mehr als 20 funktionelle Gruppen aufweisen. In manchen Ausführungsformen kann das Additiv ein Silikonurethanacrylat sein oder ein Silikonurethanacrylat umfassen. Als nichteinschränkendes Beispiel kann das Silikonurethanacrylat 1 Acrylatgruppe, 2 Acrylatgruppen, 3 Acrylatgruppen, 4 Acrylatgruppen, 5 Acrylatgruppen, 6 Acrylatgruppen, 7 Acrylatgruppen, 8 Acrylatgruppen, 9 Acrylatgruppen, 10 Acrylatgruppen, 11 Acrylatgruppen, 12 Acrylatgruppen, 13 Acrylatgruppen, 14 Acrylatgruppen, 15 Acrylatgruppen, 16 Acrylatgruppen, 17 Acrylatgruppen, 18 Acrylatgruppen, 19 Acrylatgruppen, 20 Acrylatgruppen oder mehr als 20 Acrylatgruppen aufweisen. Als nichteinschränkende Beispiele für Silikonacrylate kann das Additiv Miramer SIU2400 (ein Silikon-Urethanacrylat mit einer Anzahl an Funktionalitäten von 10, verdünnt mit 10 % TPGDA) oder SIP910 (ein Silikonpolyesteracrylat mit einer Funktionalitätszahl von 2) sein.

In bestimmten Aspekten stellt die vorliegende Offenbarung eine härtbare Zusammensetzung zur Verwendung in einem Hochtemperatur-Photopolymerisationsverfahren auf Lithographiebasis bereit, wobei die Zusammensetzung die folgenden polymerisierbaren Komponenten A bis C umfasst,
wobei Komponente A zumindest ein oligomeres Dimethacrylat der folgenden chemischen Formel (I) ist, das als Glasübergangstemperaturmodifikator dient: 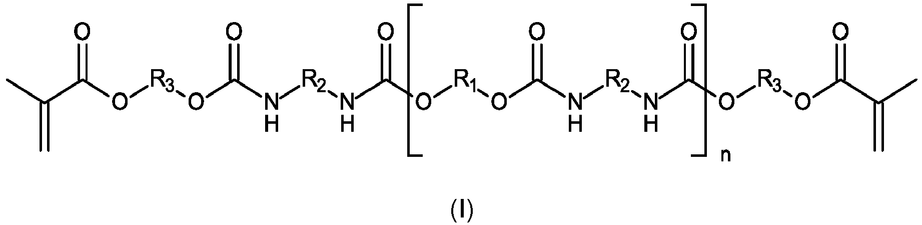 worin:
   die R₁ und die R₂ jeweils unabhängig für einen zweiwertigen, unverzweigten, verzweigten oder zyklischen aliphatischen C₅-C₁₅-Rest stehen, mit der Maßgabe, dass zumindest eines von R₁ und R₂ eine cycloaliphatische C₅-C₆-Struktur ist oder eine solche umfasst,
   die R₃ jeweils unabhängig für einen zweiwertigen, unverzweigten oder verzweigten C₂-C₄-Alkylrest stehen und
   n eine ganze Zahl von 1 bis 5 ist,
   mit der Maßgabe, dass R₁, R₂, R₃ und n so gewählt sind, dass das oligomere Dimethacrylat ein zahlenmittleres Molekulargewicht von 0,4 bis 5 kDa aufweist;
wobei Komponente B zumindest ein, gegebenenfalls Polyether-modifiziertes, (Poly-)Carbonat-(Poly-)Urethan-Dimethacrylat einer der folgenden chemischen Formeln (II), (III), (IV) oder (V) ist, das als Zähigkeitsmodifikator dient: 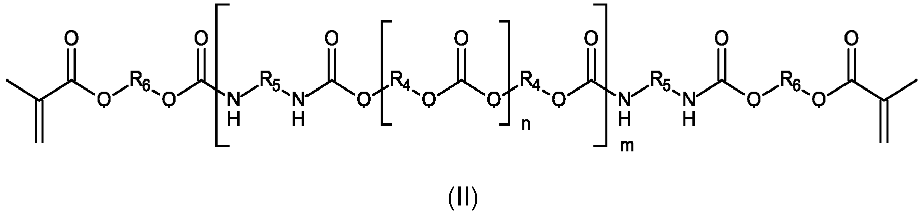 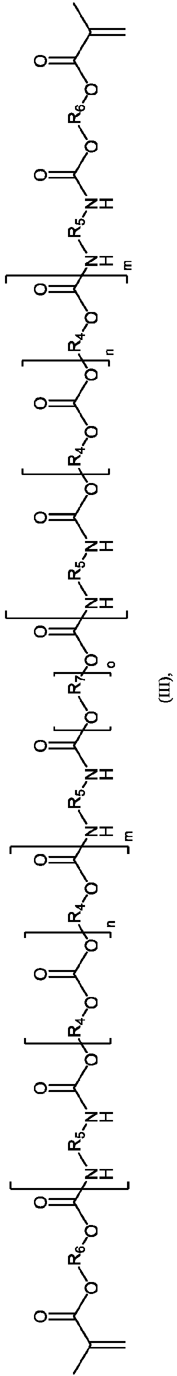 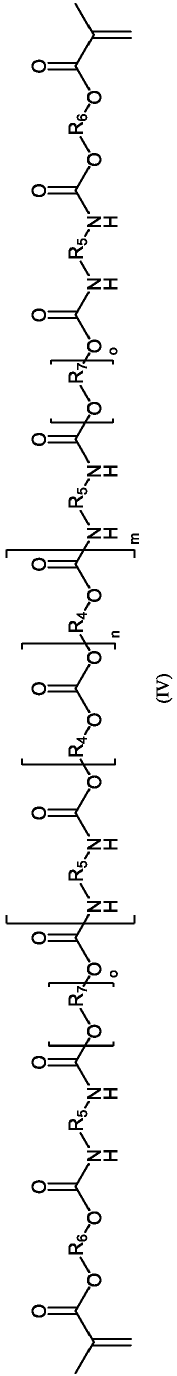 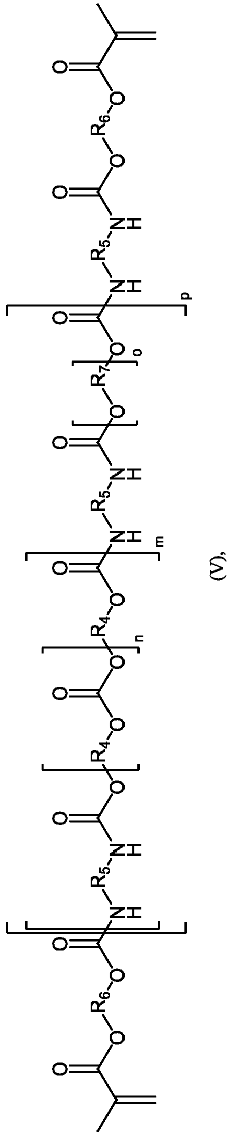 worin:
   die R₄ und die R₅ jeweils unabhängig für einen zweiwertigen, unverzweigten, verzweigten oder zyklischen aliphatischen C₅-C₁₅-Rest stehen,
   die R₆ jeweils unabhängig für einen zweiwertigen, unverzweigten oder verzweigten C₂-C₄-Alkylrest stehen,
   die R₇ jeweils unabhängig für einen zweiwertigen, unverzweigten oder verzweigten C₂-C₆-Alkylrest stehen,
   die n jeweils unabhängig eine ganze Zahl von 1 bis 10 sind,
   die m jeweils unabhängig eine ganze Zahl von 1 bis 20 sind,
   die o jeweils unabhängig eine ganze Zahl von 5 bis 50 sind und
   p eine ganze Zahl von 1 bis 40 ist,
   mit der Maßgabe, dass R₄, R₅, R₆, R₇, n, m, o und p so gewählt sind, dass das (Poly-)Carbonat-(Poly-)Urethan-Dimethacrylat ein zahlenmittleres Molekulargewicht von mehr als 5 kDa aufweist; und
wobei Komponente C zumindest ein mono- oder multifunktioneller Methacrylat-basierter Reaktivverdünner ist.

Diese oligomeren (Poly-)Carbonat-(Poly-)Urethan-Dimethacrylate mit einem relativ niedrigen Molekulargewicht von 0,4 bis 5 kDa, die als Glasübergangstemperaturmodifikatoren verwendet werden und die polymeren (Poly-)Carbonat-(Poly-)Urethan-Dimethacrylate mit einem hohen Molekulargewicht von mehr als 5 kDa, die als Zähigkeitsmodifikatoren verwendet werden, wie oben definiert, sind aufgrund ihrer verwandten (Poly-)Carbonat-(Poly-)Urethan-Grundstrukturen typischerweise mischbar und verträglich.

Beim Vermischen mit einem oder mehreren Reaktivverdünner(n) ergeben sie härtbare Zusammensetzungen, die bei den Verarbeitungstemperaturen, die bei Hochtemperatur-Photopolymerisationsverfahren auf Lithographiebasis üblicherweise eingesetzt werden, d.h. Temperaturen zwischen 90 °C und 120 °C, gut verarbeitbar sind, da ihre Viskositäten bei diesen Temperaturen trotz der Gegenwart der hochmolekularen Komponente B ausreichend niedrig sind. Darüber hinaus ergeben solche härtbare Zusammensetzungen, da sie üblicherweise mehrere zweiwertige polymerisierbare Komponenten umfassen, vernetzte Polymeren, insbesondere vernetzte Polymere mit hervorragenden thermomechanischen Eigenschaften, wie nachstehend im Detail ausgeführt wird.

Bevorzugte Zusammensetzungsbereiche der Mengen dieser drei Komponenten sind 20 bis 50 Gew.-% von Komponente A, 25 bis 50 Gew.-% von Komponente B und 10 bis 40 Gew.-% von Komponente C, bezogen auf das Gesamtgewicht der härtbaren Zusammensetzung.

In bevorzugten Ausführungsformen der vorliegenden Offenbarung ist der "Carbonatrest" R₁ der Glasübergangstemperaturmodifikatoren von Komponente A ein zweiwertiger Rest, der von einem Diol herrührt, das aus der aus 1,4-Cyclo-hexandimethanol (CHDM), 4,4'-Isopropylidendicyclohexanol (HBPA), 4,8-Bis-(hydroxymethyl)tricyclo[5.2.1.0^{2,6}]decan (HTCD), 3,9-Bis(1,1-dimethyl-2-hydroxy-ethyl)-2,4,8,10-tetraoxaspiro[5.5]undecan, 1,3-Bis(hydroxymethyl)adamantan, 1,4-, 1,3- oder 1,2-Dihydroxycyclohexan, 1,3-Adamantandiol, 4-Hydroxy-α,α,4-trimethyl-cyclohexanmethanol, 2,3-Pinandiol, 1,6-Hexandiol und Gemischen davon bestehenden Gruppe ausgewählt ist, noch bevorzugter ein zweiwertiger Rest, der von 1,4-Cyclohexandimethanol (CHDM) herrührt, da zyklische Strukturen für einen relativ hohen Steifigkeitsgrad der Moleküle des oligomeren Dimethacrylats A sorgen. Eine solche Steifigkeit kann zu einer relativ hohen Glasübergangstemperatur der Polymerisate beitragen, d.h. vorzugsweise einer Glasübergangstemperatur > 90 °C, noch bevorzugter >100°C.

Der "Urethanrest" R₂ der Glasübergangstemperaturmodifikatoren von Komponente A ist vorzugsweise ein zweiwertiger Rest, der von einem Diisocyanat herrührt, das jeweils unabhängig aus der aus Isophorondiisocyanat (IPDI), Hexamethylendiisocyanat (HDI), Trimethylhexamethylendiisocyanat (TMDI), Dicyclohexylmethan-4,4'-diisocyanat (HMDI), 1,3-Bis(isocyanatomethyl)cyclohexan und Gemischen davon bestehenden Gruppe ausgewählt ist, noch bevorzugter jeweils unabhängig aus Isophorondiisocyanat (IPDI) oder Hexamethylendiisocyanat (HDI) ausgewählt ist. Solche cycloaliphatische oder kurzkettige unverzweigte aliphatische Strukturen sorgen typischerweise für einen geeigneten Steifigkeitsgrad der Glasübergangstemperaturmodifikatoren von Komponente A.

Um hohe Zähigkeit und andere mechanischen Eigenschaften der Polymerisate bereitzustellen und auch ihre Glasübergangstemperaturen relativ hoch zu halten, ist der "Carbonatrest" R₄ des Zähigkeitsmodifikators von Komponente B vorzugsweise ein zweiwertiger Rest, der von einem Diol herrührt, das aus der aus 2,2-Dimethyl-1,3-propandiol (DMP), 1,6-Hexandiol, 1,4-Cyclohexandimethanol (CHDM) und Gemischen davon bestehenden Gruppe ausgewählt ist, und noch bevorzugter für die Alkoholgruppierung eines Polycarbonat-Diols steht. Für den "Urethanrest" R₅ gelten dieselben Präferenzen wie für R₂, was bedeutet, dass R₅ vorzugsweise ein zweiwertiger Rest ist, der von einem Diisocyanat stammt, das jeweils unabhängig aus der aus Isophorondiisocyanat (IPDI), Hexamethylendiisocyanat (HDI), Trimethylhexamethylendiisocyanat (TMDI), Dicyclohexylmethan-4,4'-diisocyanat (HMDI), 1,3-Bis(isocyanatomethyl)-cyclohexan und Gemischen davon bestehenden Gruppe ausgewählt ist, noch bevorzugter jeweils unabhängig aus Isophorondiisocyanat (IPDI) oder Hexamethylendiisocyanat (HDI) ausgewählt ist.

In weiteren bevorzugten Ausführungsformen sind die endständigen "Methacrylatreste" R₃ und R₆ der Modifikatoren der Komponenten A bzw. B zweiwertige Reste, die von einem kurzkettigen Diol herrühren, das jeweils unabhängig aus der aus 1,2-Ethandiol, 1,3-Propandiol, 1,2-Propandiol, 1,4-Butandiol und Gemischen davon bestehenden Gruppe ausgewählt ist, noch bevorzugter jeweils unabhängig aus 1,2-Ethandiol ausgewählt ist, wobei das entsprechende Methacrylat Hydroxyethylmethacrylat, HEMA, ein häufig verwendetes und wirtschaftliches Methacrylatmonomer ist.

Wie schon oben erwähnt, dient die optionale Polyether-Modifikation des Zähigkeitsmodifikators von Komponente B als "Soft Block", um eine weichmachende oder plastifizierende Wirkung für die aus der härtbaren Zusammensetzung der vorliegenden Offenbarung erhaltenen Polymerisate bereitzustellen, und kann zwischen zwei Blöcken eines in Formel (II) gezeigten (Poly-)Carbonat-(Poly-)Urethans liegen (zwischen den zwei endständigen R₆-Methacrylat-Gruppierungen), wie in Formel (III) dargestellt, oder zwei Polyether-Blöcke können auf beiden Seiten eines Blocks eines solchen (Poly-)Carbonat-(Poly-)Urethans liegen, wie in Formel (IV) dargestellt, oder Polyether-Blöcke und (Poly-)Carbonat-(Poly-)Urethan-Blöcke können alternieren, um das in Formel (V) dargestellte Polymer zu erhalten, wobei jede dieser Kombinationen aus Polyether-Blöcken und (Poly-)Carbonat-(Poly-)Urethan-Blöcken als Endgruppen zwei polymerisierbare R₆-Methacrylatgruppierungen aufweist. In bevorzugten Ausführungsformen ist der entsprechende "Etherrest" R₇ der Polyether-Modifikation ein zweiwertiger Rest, der von 1,4-Butandiol herrührt, was bedeutet, dass der Polyether, der als Modifikation eingesetzt wird, vorzugsweise Polytetrahydrofuran ist, das im Handel erhältlich und somit eine wirtschaftliche Wahl ist.

**Generell** können beliebige im Handel erhältliche Verbindungen als Komponenten A, B und C der härtbaren Zusammensetzungen gemäß der vorliegenden Offenbarung verwendet werden, mit der Maßgabe, dass solche Verbindungen die hierin definierten Anforderungen erfüllen. Alternativ dazu können die Komponenten A, B und C durch beliebige auf dem Gebiet der Erfindung bekannte Herstellungsverfahren synthetisiert werden; beispielsweise wie in den Synthesebeispielen hierin veranschaulicht.

Wie oben erwähnt werden die Komponenten A und B, insbesondere die Glasübergangstemperaturmodifikatoren von Komponente A und die unmodifizierten Zähigkeitsmodifikatoren von Komponente B der Formel (II), vorzugsweise auf im Wesentlichen analoge Weise hergestellt, indem ein Diol, das den "Carbonatrest" R₁ bzw. R₄ umfasst, mit einem molaren Überschuss an Diisocyanat, das den entsprechenden "Urethanrest" R₂ bzw. R₅ umfasst, umgesetzt wird. Für die Herstellung der oligomeren Komponente A ist der molare Überschuss an Diisocyanat vorzugsweise relativ hoch, beispielsweise im Bereich von 1,8 bis 2 Äquivalenten, vorzugsweise im Bereich von 1,9 bis 2 Äquivalenten, Diisocyanat pro 1 Äquivalent Diol, um das gewünschte relativ geringe Molekulargewicht zu erhalten. Andererseits kann für die Herstellung der polymeren Zähigkeitsmodifikatoren mit relativ hohem Molekulargewicht der Komponente B ein kleinerer molarer Überschuss an Diisocyanat eingesetzt werden, beispielsweise im Bereich von 1,1 bis 1,6 Äquivalenten, vorzugsweise im Bereich von 1,1 bis 1,4 Äquivalenten, Diisocyanat pro 1 Äquivalent Diol, um die entsprechenden (Poly-)Carbonat-(Poly-)Urethan-Moleküle mit Isocyanat-Endgruppen zu erhalten. Jeweils ein Äquivalent des R₁ und R₂ umfassenden Oligomermoleküls oder des R₄ und R₅ umfassenden Polymermoleküls wird schließlich mit (zumindest) 2 Äquivalenten eines den entsprechenden "Methacrylatrest" R₃ bzw. R₆ umfassenden ω-Hydroxyalkylmethacrylats umgesetzt, um das oligomere oder polymere Dimethacrylat von Komponente A bzw. B zu erhalten. Diese Synthesewege werden in den nachfolgenden Reaktionsschemata gezeigt.

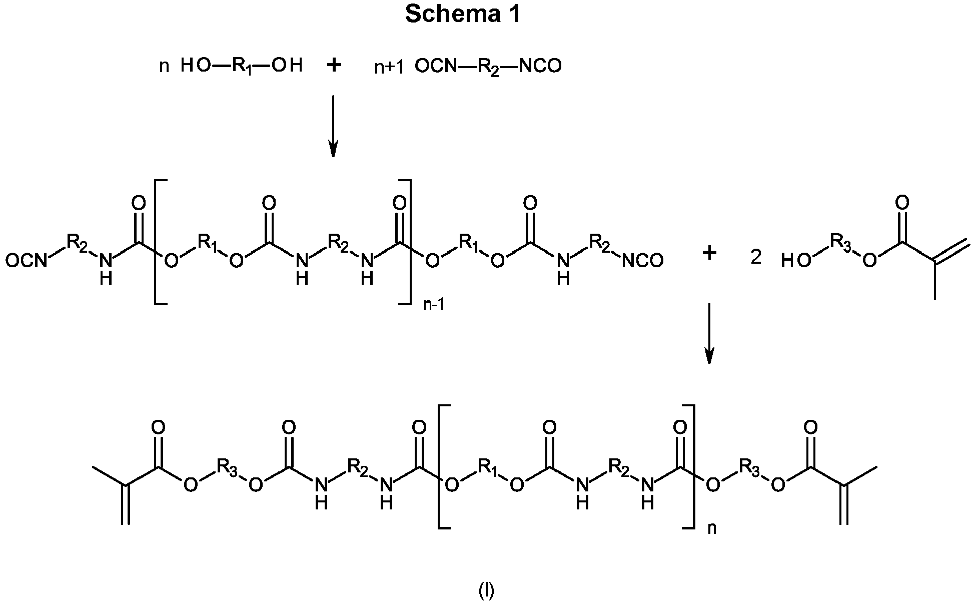

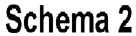

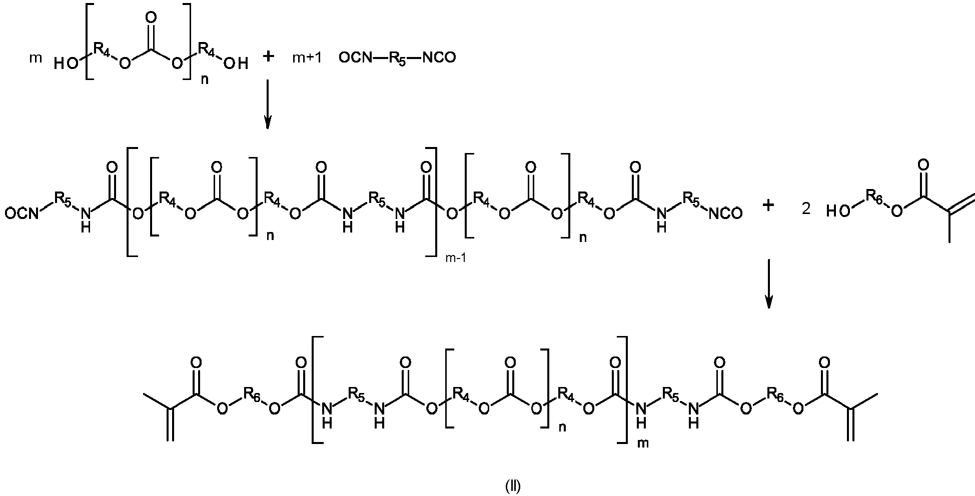

Der Einfachheit halber werden vorzugsweise auch die durch die Formeln (III) bis (V) dargestellten Polyether-modifizierten Ausführungsformen des Zähigkeitsmodifikators von Komponente B auf sehr ähnliche Weise mittels (Poly-)Additionsreaktionen zwischen Diolen und Diisocyanaten hergestellt. In bevorzugten Ausführungsformen dieser Synthesen gibt es allerdings - zusätzlich zu dem den "Alkoholrest" R₄ umfassenden (Poly-)Carbonatdiol - eine zweite Spezies von Diolreaktanten, nämlich ein den "Etherrest" R₇ umfassendes Polyetherdiol, das auch mit Diisocyanat umgesetzt wird.

Abhängig von der vorgesehenen Position des/der Polyether-Blocks/Blöcke, kann eine dieser zwei Diol-Spezies zuerst mit einem molaren Überschuss an Diisocyanat umgesetzt werden, um ein oligomeres erstes Zwischenprodukt mit Isocyanat-Endgruppen herzustellen, das dann wiederum mit der zweiten Diol-Spezies umgesetzt wird. Abhängig von den gewählten Molverhältnissen weist dieses polymere zweite Zwischenprodukt entweder Diol- oder Isocyanat-Endgruppen auf. In letzterem Fall wird das zweite Zwischenprodukt einfach mit dem geeigneten ω-Hydroxyalkylmethacrylat, beispielsweise 2-Hydroxyethylmethacrylat (HEMA), umgesetzt, um die fertige Polyether-modifizierte Komponente B zu erhalten. Im Fall von zweiten Zwischenprodukten mit Diol-Endgruppen wird das w-Hydroxyalkylmethacrylat zuerst mit einer äquimolaren Menge des entsprechenden Diisocyanats umgesetzt, um einen Isocyanat-funktionellen Methacrylat-Reaktanten zu erhalten.

Das nachfolgende Reaktionsschema zeigt einen bevorzugten Syntheseweg für die Herstellung eines Polyether-modifizierten (Poly-)Carbonat-(Poly-)Urethan-Dimethacrylats der Formel (III). Zuerst wird ein ähnliches Zwischenprodukt mit Diisocyanat-Endgruppen wie in obigem Schema 2 hergestellt, indem (Poly-)Carbonat-Diol mit einem molaren Überschuss an Diisocyanat hergestellt wird, wonach 2 Äquivalente dieses ersten Zwischenprodukts mit 1 Äquivalent Polyetherdiol umgesetzt werden, um ein zweites Zwischenprodukt mit Isocyanat-Endgruppen zu erhalten, an das schließlich 2 Äquivalente ω-Hydroxyalkylmethacrylat addiert werden, wodurch ein durch die Formel (III) dargestellter Polyether-modifizierter Zähigkeitsmodifikator hergestellt wird.

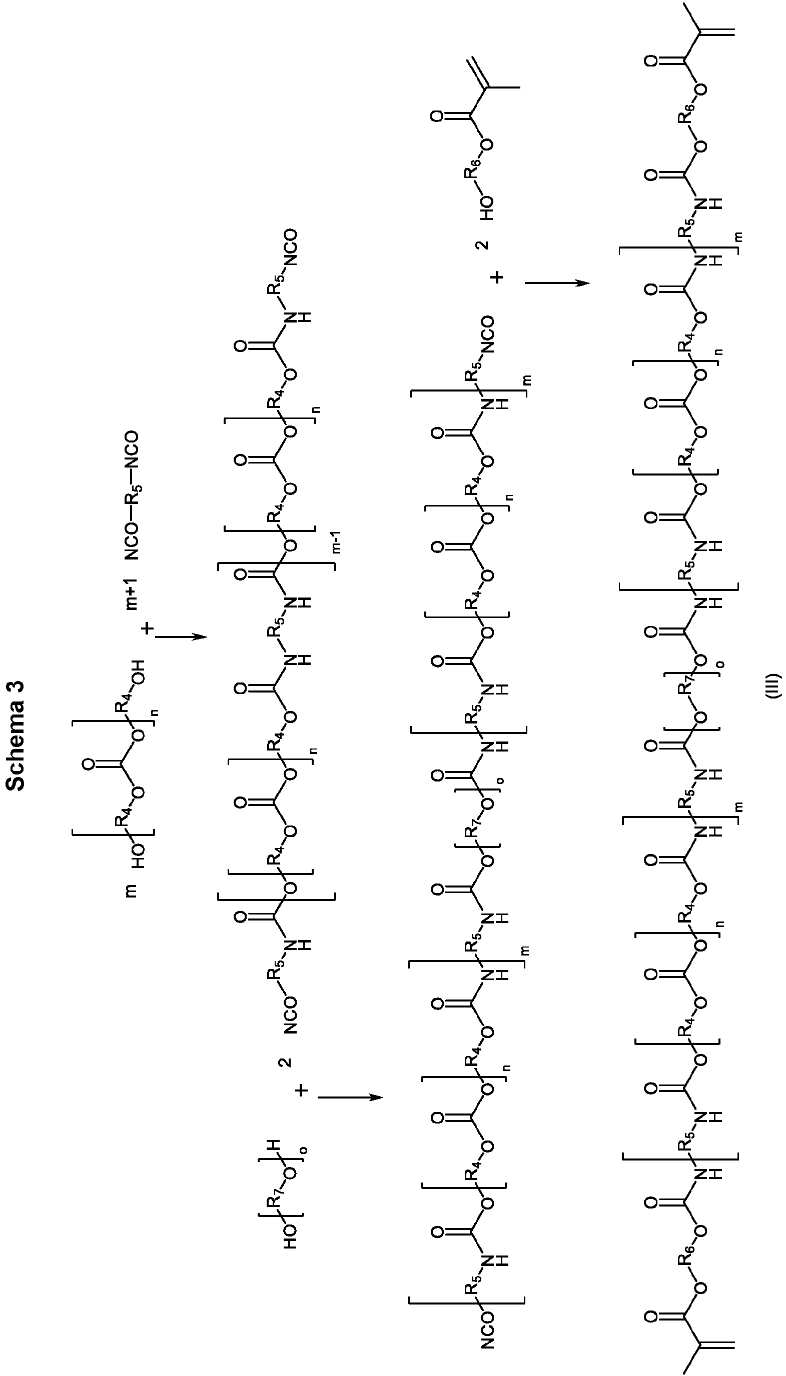

Alternativ dazu können Zähigkeitsmodifikatoren der Formel (III) allerdings auch durch Umsetzen des R₇-hältigen Polyether-Blocks mit 2 Äquivalenten des Rs-hältigen Diisocyanats synthetisiert werden, wodurch ein erstes Zwischenprodukt mit Isocyanat-Endgruppen hergestellt wird, das wiederum mit 2 Äquivalenten des R₄-hältigen (Poly-)Carbonat-Diols umgesetzt wird, um ein zweites Zwischenprodukt mit Diol-Endgruppen zu erhalten. Zudem wird das R₆-hältige ω-Hydroxyalkylmethacrylat mit einer äquimolaren Menge des Rs-hältigen Diisocyanats umgesetzt, um einen Isocyanatfunktionellen Methacrylat-Reaktanten zu erhalten, von dem 2 Äquivalente dann mit dem zweiten Zwischenprodukt mit Diol-Endgruppen umgesetzt werden, um Komponente B der Formel (III) zu erhalten.

Dieser Syntheseweg wurde in Synthesebeispiel 10 zum Synthetisieren des Zähigkeitsmodifikators TNM6 befolgt und umfasst die Herstellung des ersten und des zweiten Zwischenprodukts mit der Bezeichnung TNM6-A bzw. TNM6-B und eines Isocyanat-funktionellen Methacrylatreaktanten mit der Bezeichnung IUEM ("Isocyanoisophoron-Urethanethylmethacrylat").

Auf ähnliche Weise können Zähigkeitsmodifikatoren der Formeln (IV) oder (V) synthetisiert werden. Für die Herstellung jener der Formel (IV) wird wiederum ein erstes Zwischenprodukt mit Isocyanat-Endgruppen, ähnlich jenem aus Schema 2 oder Schema 3, durch Umsetzen des (Poly-)Carbonat-Diols mit 2 Äquivalenten Diisocyanat synthetisiert, das wiederum mit 2 Äquivalenten Polyetherdiol umgesetzt wird, um ein zweites Zwischenprodukt mit Diol-Endgruppen zu erhalten, das schließlich mit 2 Äquivalenten eines Isocyanat-funktionalisierten Methacrylat-Reaktanten umgesetzt wird. Dieser Syntheseweg wird nachfolgend in Schema 4 gezeigt.

Da die Zähigkeitsmodifikatoren der Formel (IV) die doppelte Anzahl an Polyether-Modifikationen als jene der Formel (III) umfassen, kann es bevorzugt sein, relativ kurzkettige oder zyklische Reste R₄ und/oder R₅ auszuwählen, um steifere (Poly-)Carbonat-Urethan-Blöcke bereitzustellen. Zusätzlich oder alternativ dazu kann bevorzugt werden, einen kurzkettigen "Etherrest" R₇ auszuwählen, um die zähigkeitsverbessernde oder zähigkeitsstabilisierende Wirkung der Komponente B nicht zu beeinträchtigen.

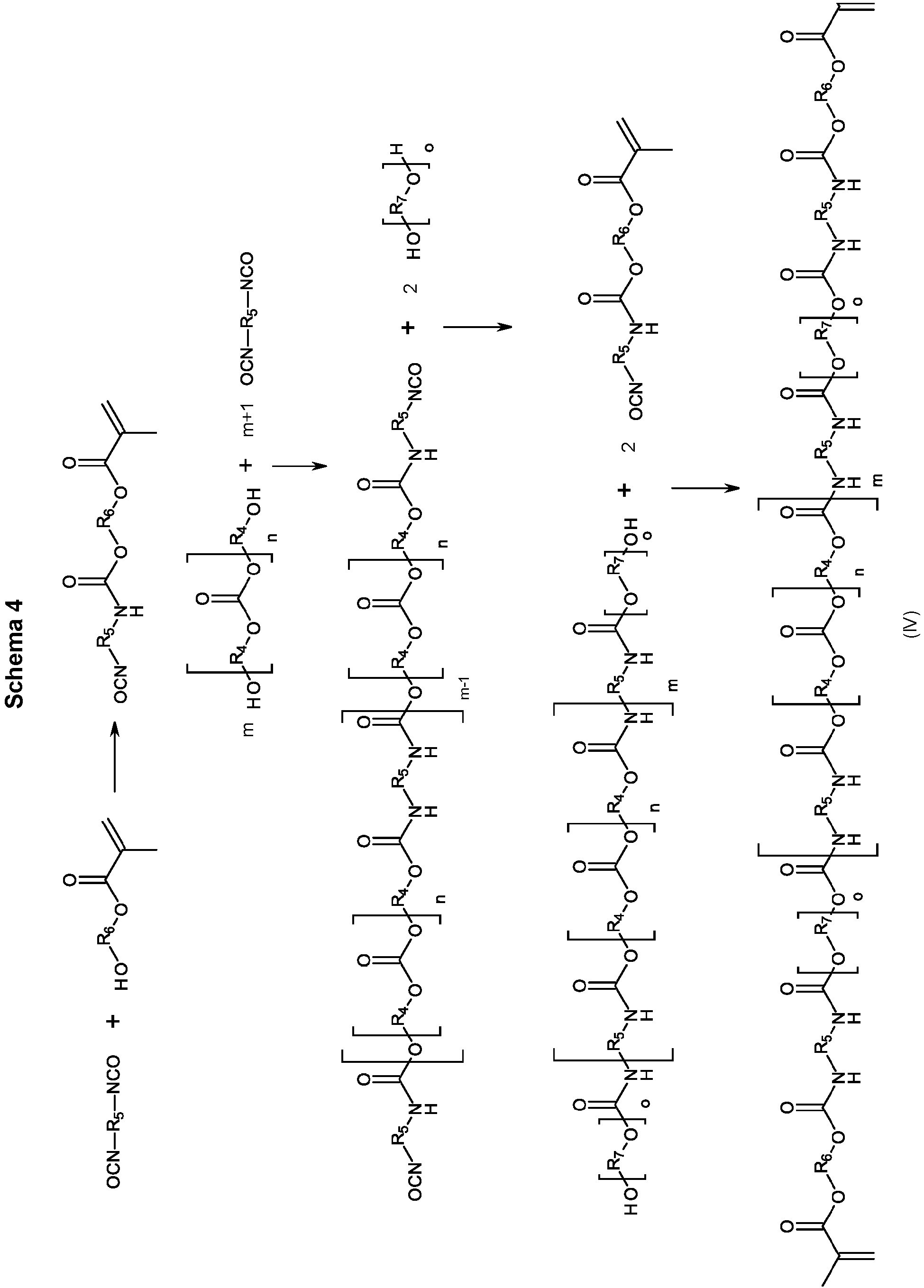

Zum Synthetisieren der Zähigkeitsmodifikatoren der Formel (V) wird wiederum ein erstes Zwischenprodukt mit Isocyanat-Endgruppen, ähnlich jenem aus den Schemata 2 bis 4, durch Umsetzen des (Poly-)Carbonat-Diols mit 2 Äquivalenten Diisocyanats synthetisiert. Allerdings wird im gegenwärtigen Fall dieses erste Zwischenprodukt mit einer äquimolaren Menge an Polyetherdiol umgesetzt, wodurch relativ langkettige Polyadditionsprodukte erhalten werden, die alternierende Urethan-Carbonat-Blöcke und Polyether-Blöcke sowie sowohl Isocyanat- als auch Hydroxyl-Endgruppen umfassen. Diese Polyadditionsreaktion kann durch Zusatz von terminierenden Monoisocyanat- oder Monohydroxy-Monomeren gequencht werden, vorzugsweise von entweder ω-Hydroxyalkylmethacrylat oder dessen Isocyanat-funktionalisiertem Derivat, wie z. B. oben in der ersten Zeile von Schema 4 gezeigt. Das Molekulargewicht dieses so erhaltenen zweiten Zwischenprodukts kann durch geeignete Auswahl der Reaktionszeit bis zur Zugabe des terminierenden Monomers kontrolliert werden.

Dieses zweite Zwischenprodukt weist an einem Ende eine Methacrylat-Endgruppe und entweder eine Hydroxy- oder eine Isocyanat-Endgruppe am anderen Ende auf. Um die zweite Methacrylat-Endgruppe einzuführen, wird das zweite Zwischenprodukt mit der anderen Spezies der terminierenden Monomere, d.h. dem ω-Hydroxyalkylmethacrylat oder dessen Isocyanat-funktionalisiertem Derivat, umgesetzt. Wurde das ω-Hydroxyalkylmethacrylat zum Quenchen der Polyadditionsreaktion verwendet, wird das zweite Zwischenprodukt schließlich mit seinem Isocyanat-funktionalisierten Derivat umgesetzt oder umgekehrt. Nachstehend in Schema 5 wird die Gegenreaktion gezeigt, d.h. die Polyaddition wird durch Zugabe des Isocyanat-funktionalisierten Methacrylats gequencht, und das dadurch erhaltene zweite Zwischenprodukt wird schließlich mit dem ω-Hydroxyalkylmethacrylat umgesetzt, um den durch Formel (V) dargestellten Zähigkeitsmodifikator von Komponente B zu erhalten.

Da die Zähigkeitsmodifikatoren der Formel (V) typischerweise die größte Anzahl an Polyether-Modifikationen umfassen, d.h. wenn p ≥ 3 ist, kann es bevorzugt sein, relativ kurzkettige Reste R₄, R₅ und/oder R₇ und/oder oder zyklische Reste R₄ oder R₅ auszuwählen.

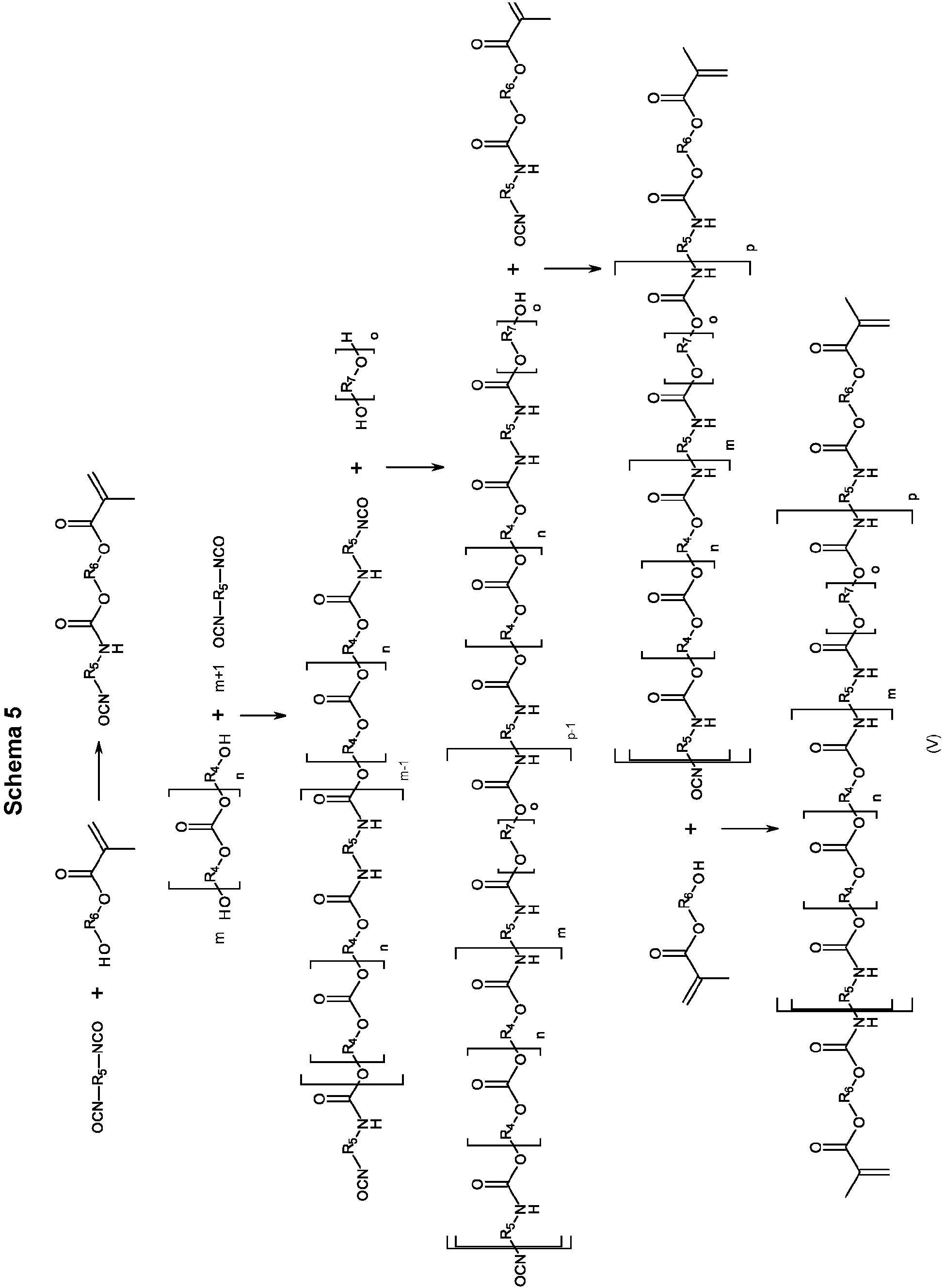

Wie oben erwähnt werden Fachleute auf dem Gebiet der Erfindung in der Lage sein, alternative Wege für die Synthese von Glasübergangstemperatur- oder Zähigkeitsmodifikatoren der Formeln (I) bis (V) zu finden.

Wie oben bereits erwähnt ist gemäß der vorliegenden Offenbarung der Reaktivverdünner der Formel C nicht speziell eingeschränkt, so dass jede bekannte Art von Reaktivverdünnern eingesetzt werden kann, solange sie mit den Modifikatoren der Komponenten A und B verträglich ist. Bevorzugte Verdünner sind allerdings der gebräuchliche und kostengünstige Verdünner TEGDMA (Triethylenglykoldimethacrylat) und insbesondere 2-, 3- oder 4-((Meth)acryloyloxy)benzoesäureester oder 2-, 3- oder 4-Hydroxybenzoesäureester(meth)acrylat, wie z. B. substituierte Cycloalkyl-2-, -3- oder -4-((meth)acryloyloxy)benzoate, wobei letztere sehr gute Ergebnisse geliefert haben, wie im nachfolgenden experimentellen Abschnitt gezeigt wird. Noch bevorzugter ist der Reaktivverdünner ein gegebenenfalls substituierter 2-, 3- oder 4-((Meth)acryloyloxy)benzoesäureester der folgenden Formel (VI): 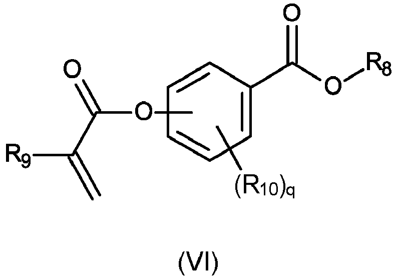 worin:
R₈ für einen cycloaliphatischen C₅-C₂₀-Hydrocarbylrest steht, der aus der aus gegebenenfalls substituierten C₅-C₇-Cycloalkylresten bestehenden Gruppe ausgewählt ist;
R₉ für H oder CH₃ steht;
die R₁₀ jeweils unabhängig für C₁-C₃-Alkyl oder C₁-C₃-Alkoxy stehen und q eine ganze Zahl von 0 bis 4 ist.

In noch bevorzugteren Ausführungsformen der Erfindung ist der Reaktivverdünner ein 2-, 3- oder 4-((Meth)acryloyloxy)benzoesäureester der Formel (VI), worin R₈ aus der aus gegebenenfalls substituierten C₅-C₇-Cycloalkylresten mit insgesamt 5 bis 15, noch bevorzugter 5 bis 12, besonders bevorzugt 5 bis 10, Kohlenstoffatomen bestehenden Gruppe ausgewählt ist. In noch bevorzugteren Ausführungsformen ist Ra aus der aus Cyclohexylresten mit einer oder mehreren, unverzweigten oder verzweigten C₁-C₆-Alkylgruppen, noch bevorzugter einer oder mehreren C₁-C₃-Alkylgruppen, bestehenden Gruppe ausgewählt, wobei zwei der C₁-C₆-Alkylgruppen oder C₁-C₃-Alkylgruppen verbunden sein können, um mit den Kohlenstoffatomen, an die sie gebunden sind und gegebenenfalls einem oder mehreren zusätzlichen, dazwischenliegenden Kohlenstoffatomen des Cyclohexylrings einen Ring zu bilden. Solche Monomere sind bei Raumtemperatur typischerweise flüssig oder weisen niedrige Schmelzpunkte auf und zeigen eine ausgeprägte viskositätsverringernde Wirkung. Besonders bevorzugt ist Ra aus der aus 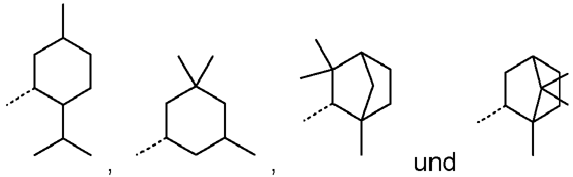 bestehenden Gruppe ausgewählt, worin die gestrichelten Linien jeweils für eine Bindung an das Ester-Sauerstoffatom stehen.

Ein beispielhafter Vertreter dieser Gruppe, Menthylsalicylatmethacrylat, wurde wie in Synthesebeispiel 11 offenbart hergestellt und wurde als Reaktivverdünner 1 (RD1) in den meisten Beispielen der vorliegenden Offenbarung eingesetzt.

In manchen Ausführungsformen ist der Reaktivverdünner eine Verbindung der Formel (VII): 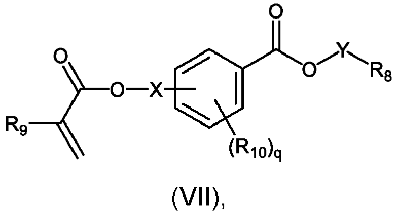 worin:
R₈ für gegebenenfalls substituiertes C₃-C₁₀-Cycloalkyl, gegebenenfalls substituiertes 3- bis 10-gliedriges Heterocycloalkyl oder gegebenenfalls substituiertes C₆-C₁₀-Aryl steht;
R₉ für H oder C₁-C₆-Alkyl steht;
die R₁₀ jeweils unabhängig für ein Halogen, C₁-C₃-Alkyl, C₁-C₃-Alkoxy, Si(R₁₁)₃, P(O)(OR₁₂)₂ oder N(R₁₃)₂ stehen;
die R₁₁ jeweils unabhängig für C₁-C₆-Alkyl oder C₁-C₆-Alkoxy stehen;
die R₁₂ jeweils unabhängig für C₁-C₆-Alkyl oder C₆-C₁₀-Aryl stehen;
die R₁₃ jeweils unabhängig für H oder C₁-C₆-Alkyl stehen;
X fehlt oder für C₁-C₃-Alkylen, 1- bis 3-gliedriges Heteroalkylen oder (CH₂CH₂O)ᵣ steht;
Y fehlt oder für C₁-C₆-Alkylen steht;
q eine ganze Zahl von 0 bis 4 ist; und
r eine ganze Zahl von 1 bis 4 ist.

In manchen Ausführungsformen ist Ra bei einer Verbindung der Formel (VII) aus gegebenenfalls substituiertem C₅-C₁₀-Cycloalkyl und gegebenenfalls substituiertem C₆-C₁₀-Aryl ausgewählt, wie z. B. gegebenenfalls substituiertem Phenyl. In manchen Ausführungsformen ist R₈ gegebenenfalls substituiertes C₅-C₇-Cycloalkyl. Das gegebenenfalls substituierte C₅-C₇-Cycloalkyl kann insgesamt 5 bis 15 Kohlenstoffatome aufweisen, wie z. B. 5 bis 12 oder 5 bis 10 Kohlenstoffatome. Bei einer Verbindung der Formel (VII) kann R₈ ein monozyklisches Cycloalkyl, wie z. B. Cyclohexyl, sein. In manchen Ausführungsformen ist R₈ ein bizyklisches Cycloalkyl, wie z. B. ein verbrücktes, kondensiertes oder spiro-zyklisches Cycloalkyl. Das umfasst beispielsweise Bicyclo[2.2.1]heptyl, Bicyclo[1.1.1]pentyl, Spiro[4.4]nonyl und Decahydronaphthyl, die alle jeweils optional substituiert sein können. In manchen Ausführungsformen ist R₈ unsubstituiert. In manchen Ausführungsformen ist Ra mit zumindest einem Substituenten substituiert.

Beispiele für Substituenten von R₈ umfassen C₁-C₆-Alkyl, C₁-C₆-Alkoxy, C₃-C₇-Cycloalkyl, C₆-C₁₀-Aryl, C₁-C₆-Alkoxy-(C₆-C₁₀)-aryl, -O(CO)-(C₁-C₆)-Alkyl, -COO-(C₁-C₆)-Alkyl, =O, -F, -Cl und -Br. In manchen Ausführungsformen ist Ra mit zumindest einem -CHs substituiert. Beispielsweise ist Ra in manchen Beispielen mit einem oder mehreren -CHs substituiert und gegebenenfalls mit einem oder mehreren aus der aus C₁-C₆-Alkyl, C₁-C₆-Alkoxy, -O(CO)-(C₁-C₆)-Alkyl, -COO-(C₁-C₆)-Alkyl, =O, -F, -Cl und -Br bestehenden Gruppe ausgewählten Substituenten substituiert. In manchen Ausführungsformen ist Ra mit einem oder mehreren unverzweigten oder verzweigten C₁₋C₆-Alkylen, wie z. B. Methyl, Ethyl, n-Propyl, Isopropyl, n-Butyl, sec-Butyl, Isobutyl oder tert-Butyl substituiert. Zwei Substituenten von R₈, wie z. B. zwei C₁-C₆-Alkyle, können zu einem Ring verbunden sein. Beispielsweise können zwei Substituenten einer Cyclohexylgruppe eine Brücke bilden, wie z. B. die in Bicyclo[2.2.1]heptyl vorkommende Methylenbrücke. In manchen Ausführungsformen ist Ra mit einem oder mehreren aus der der aus C₁-C₄-Alkyl und C₁-C₄-Alkoxy bestehenden Gruppe substituiert.

Beispielhafte Rs-Gruppen umfassen, ohne darauf beschränkt zu sein, 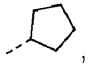 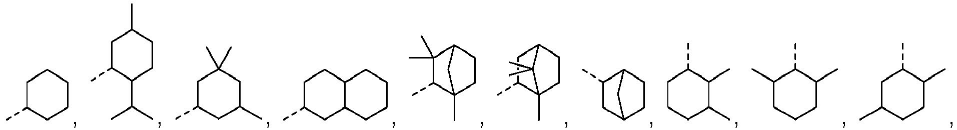 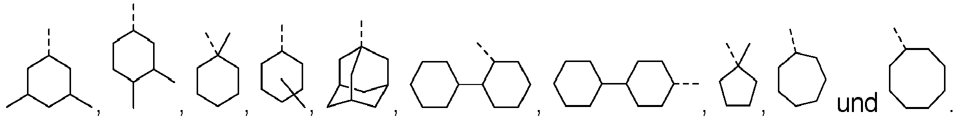 Die gestrichelte Linie dient hierin dazu, die Bindung an den Rest des Moleküls darzustellen (z.B. die Bindung an den Linker Y der Formel (VII)). Weitere beispielhafte -Y-R₈-Gruppen umfassen, ohne darauf beschränkt zu sein,

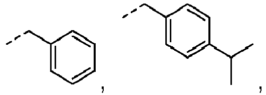

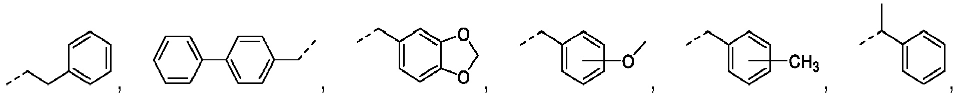

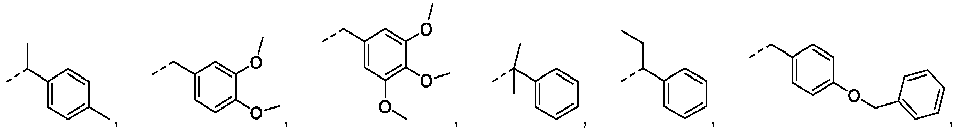

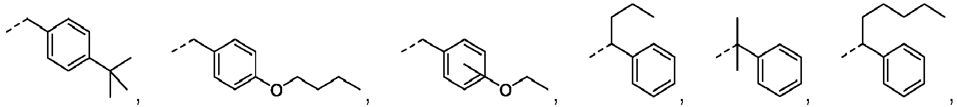

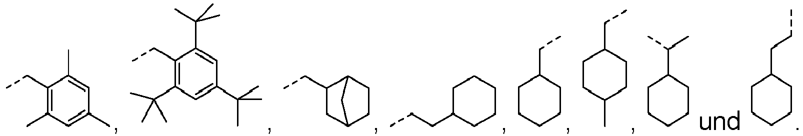

In manchen Ausführungsformen ist q = 0 oder 1, wie z. B. q = 0. In manchen Ausführungsformen ist R₉ H oder CH₃. In manchen Ausführungsformen ist X C₁-C₃-Alkylen, wie z. B. Methylen. In manchen Ausführungsformen fehlt X. In manchen Ausführungsformen ist Y C₁-C₃-Alkylen.

In bestimmten Aspekten stellt die vorliegende Offenbarung ein Verfahren zur Herstellung vernetzter Polymere bereit, wobei das Verfahren das Herstellen einer hierin beschriebenen härtbaren Zusammensetzung; und das Polymerisieren der Zusammensetzung umfasst; wodurch die vernetzten Polymere hergestellt werden. Das Polymerisieren kann mittels Anwendung eines Hochtemperatur-Photopolymerisationsverfahrens auf Lithographiebasis erfolgen. Gegebenenfalls wird eine die Zusammensetzung umfassende feste oder hochviskose Harzformulierung auf eine vorbestimmte erhöhte Verfahrenstemperatur erhitzt und anschließend mit Licht einer geeigneten Wellenlänge bestrahlt, das von einem Photoinitiator absorbiert wird, um dadurch die Zusammensetzung zu polymerisieren und zu vernetzen, um das vernetzte Polymer zu erhalten. Die erhöhte Verfahrenstemperatur kann im Bereich von 50 °C bis 120 °C liegen. In manchen Ausführungsformen ist das Photopolymerisationsverfahren ein direktes oder ein additives Fertigungsverfahren, wie z. B. ein 3D-Druckverfahren.

In bestimmten Aspekten stellt die vorliegende Offenbarung ein vernetztes Polymer zur Verwendung in einer kieferorthopädischen Vorrichtung bereit, wobei das vernetzte Polymer gekennzeichnet ist durch eines oder mehrere aus einer Spannungsrelaxation von 5 % der Anfangslast oder mehr; und einer Glasübergangstemperatur von 70 °C oder darüber, z. B. eine Glasübergangstemperatur von 90 °C oder darüber. Das vernetzte Polymer kann zudem durch eines oder mehrere aus einem Zugmodul von 100 MPa oder mehr; einer Zugfestigkeit bei der Streckgrenze von 5 MPa oder mehr; einer Streckgrenzendehnung von 4 % oder mehr; einer Bruchdehnung von 5 % oder mehr; einem Speichermodul von 300 MPa oder mehr; und einer Restspannung bei 2 % Spannung von 0,01 MPa oder mehr nach 2 Stunden Belastung.

In manchen Ausführungsformen ist das vernetzte Polymer gekennzeichnet durch eine Spannungsrelaxation von 5 % bis 85 % der Anfangslast, wie z. B. 5 % bis 45 %, 15 % bis 85 % oder 20 % bis 45 % der Anfangslast. In manchen Ausführungsformen ist das vernetzte Polymer gekennzeichnet durch eine Glasübergangstemperatur von 90 °C bis 150 °C. In manchen Ausführungsformen ist das vernetzte Polymer gekennzeichnet durch einen Zugmodul von 100 MPa bis 2000 MPa, wie z. B. 800 MPa bis 2000 MPa. In manchen Ausführungsformen ist das vernetzte Polymer gekennzeichnet durch eine Zugfestigkeit bei der Streckgrenze von 5 MPa bis 85 MPa, wie z. B. 20 MPa bis 55 MPa. In manchen Ausführungsformen ist das vernetzte Polymer gekennzeichnet durch eine Zugfestigkeit bei der Streckgrenze von 25 MPa bis 55 MPa. In manchen Ausführungsformen ist das vernetzte Polymer gekennzeichnet durch eine Streckgrenzendehnung von 4 % bis 10 %, wie z. B. 5 % bis 10 %. In manchen Ausführungsformen ist das vernetzte Polymer gekennzeichnet durch eine Bruchdehnung von 5 % bis 250 %, wie z. B. 20 % bis 250 %. In manchen Ausführungsformen ist das vernetzte Polymer gekennzeichnet durch einen Speichermodul von 300 MPa bis 3000 MPa, wie z. B. 750 MPa bis 3000 MPa. In manchen Ausführungsformen ist das vernetzte Polymer gekennzeichnet durch eine Spannungsrelaxation von 0,01 MPa bis 15 MPa, wie z. B. 2 MPa bis 15 MPa. In manchen Ausführungsformen ist das vernetzte Polymer gekennzeichnet durch eine Spannungsrelaxation von 20 % der Anfangslast oder mehr; eine Glasübergangstemperatur von 90 °C oder mehr; einem Zugmodul von 800 MPa bis 2000 MPa; und einer Bruchdehnung von 20 % oder mehr.

Die Spannungsrelaxationseigenschaften können unter Verwendung eines RSA-G2-Instruments von TA Instruments mittels eines 3-Punkt-Biegeverfahrens mit 2 % Dehnung bewertet werden. Die Spannungsrelaxation wird typischerweise bei 37 °C und 100 % relativer Luftfeuchtigkeit gemessen und als Restlast nach 2 Stunden, entweder als Prozentsatz (%) der Anfangslast oder in MPa angegeben. Der Speichermodul wird typischerweise bei 37 ° C gemessen und in MPa angegeben. Die T_{g} des vernetzten Polymers kann mittels dynamisch-mechanischer Analyse (DMA) bestimmt werden und wird hier als tanδ-Peak angegeben. Der Zugmodul, die Zugfestigkeit, die Streckdehnung und die Bruchdehnung können gemäß ISO 527-2 5B bestimmt werden.

Ein hierin beschriebenes vernetztes Polymer kann eine erste Grundeinheit mit einem zahlenmittleren Molekulargewicht von mehr als 5 kDa umfassen, wobei die erste Grundeinheit Carbonat- und Urethangruppen umfasst. Gegebenenfalls kann die erste Grundeinheit von einem (Poly-)Carbonat-(Poly-)Urethan-Dimethacrylat-Oligomer herrühren. In manchen Ausführungsformen beträgt das the zahlenmittlere Molekulargewicht des (Poly-)Carbonat-(Poly-)Urethan-Dimethacrylat-Oligomers zwischen 5 kDa und 20 kDa, wie z. B. zwischen 10 kDa und 20 kDa. Ein hierin beschriebenes vernetztes Polymer kann eine zweite Grundeinheit mit einem zahlenmittleren Molekulargewicht von 0,4 bis 5 kDa umfassen, wobei die zweite Grundeinheit eine Urethangruppe umfasst. Die zweite Grundeinheit kann von einem (Poly-)Urethan-Dimethacrylat-Oligomer stammen. In manchen Ausführungsformen umfasst das vernetzte Polymer ein Monomer der Formel: 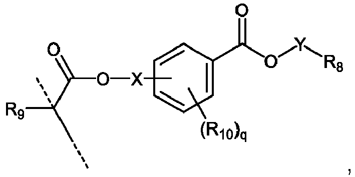 worin:
R₈ für gegebenenfalls substituiertes C₃-C₁₀-Cycloalkyl, gegebenenfalls substituiertes 3- bis 10-gliedriges Heterocycloalkyl oder gegebenenfalls substituiertes C₆-C₁₀-Aryl steht;
R₉ für H oder C₁-C₆-Alkyl steht;
die R₁₀ jeweils unabhängig für ein Halogen, C₁-C₃-Alkyl, C₁-C₃-Alkoxy, Si(R₁₁)₃, P(O)(OR₁₂)₂ oder N(R₁₃)₂ stehen;
die R₁₁ jeweils unabhängig für C₁-C₆-Alkyl oder C₁-C₆-Alkoxy stehen;
die R₁₂ jeweils unabhängig für C₁-C₆-Alkyl oder C₆-C₁₀-Aryl stehen;
die R₁₃ jeweils unabhängig für H oder C₁-C₆-Alkyl stehen;
X fehlt oder für C₁-C₃-Alkylen, 1- bis 3-gliedriges Heteroalkylen oder (CH₂CH₂O)ᵣ steht;
Y fehlt oder für C₁-C₆-Alkylen steht;
q eine ganze Zahl von 0 bis 4 ist und
r eine ganze Zahl von 1 bis 4 ist,
worin jede gestrichelte Linie für eine Bindung an ein Kohlenstoffatom steht.

In manchen Ausführungsformen ist R₈ unsubstituiert oder mit einem oder mehreren aus der aus C₁-C₆-Alkyl, C₁-C₆-Alkoxy, C₃-C₇-Cycloalkyl, C₆-C₁₀-Aryl, C₁-C₆-Alkoxy-C₆-C₁₀-Aryl, -O(CO)-(C₁-C₆)-Alkyl, -COO-(C₁-C₆)-Alkyl, =O, -F, -Cl und -Br bestehenden Gruppe ausgewählten Substituenten.

In manchen Ausführungsformen umfasst ein hierin beschriebenes vernetztes Polymer 20 bis 50 Gew.-% der ersten Grundeinheit, bezogen auf das Gesamtgewicht des vernetzten Polymers, wie z. B. 25 bis 50 % der ersten Grundeinheit, bezogen auf das Gesamtgewicht des vernetzten Polymers. Ein hierin beschriebenes vernetztes Polymer kann 1 bis 50 Gew.-% der zweiten Grundeinheit, bezogen auf das Gesamtgewicht des vernetzten Polymers, wie z. B. 20 bis 50 Gew.-% der zweiten Grundeinheit, bezogen auf das Gesamtgewicht des vernetzten Polymers, umfassen. In manchen Ausführungsformen umfasst ein hierin beschriebenes vernetztes Polymer 1 bis 80 Gew.-% des Monomers, bezogen auf das Gesamtgewicht des vernetzten Polymers, wie z. B. 10 bis 40 Gew.-% des Monomers, bezogen auf das Gesamtgewicht des vernetzten Polymers.

In bestimmten Aspekten stellt die vorliegende Offenbarung ein Verfahren zur Herstellung einer ein vernetztes Polymer umfassenden kieferorthopädischen Vorrichtung bereit, wobei das Verfahren das Bereitstellen einer hierin beschriebenen härtbaren Zusammensetzung; und das Fertigen des vernetzten Polymers durch ein direktes oder additives Fertigungsverfahren umfasst. Die Zusammensetzung kann in dem direkten oder additiven Fertigungsverfahren Licht ausgesetzt werden. Das Verfahren kann zudem nach der Herstellung des vernetzten Polymers einen zusätzlichen Härtungsschritt umfassen.

In bestimmten Aspekten stellt die vorliegende Offenbarung eine ein hierin beschriebenes vernetztes Polymer umfassende kieferorthopädische Vorrichtung bereit. Die kieferorthopädische Vorrichtung kann ein Aligner, Expander oder Spacer sein. In manchen Ausführungsformen umfasst die kieferorthopädische Vorrichtung eine Vielzahl von zahnaufnehmenden Ausnehmungen, die ausgebildet sind, um Zähne, ausgehend von einer ersten Anordnung in eine zweite Anordnung zu repositionieren. In manchen Ausführungsformen ist die kieferorthopädische Vorrichtung eine aus einer Vielzahl von kieferorthopädischen Vorrichtungen, die ausgebildet sind, um die Zähne, ausgehend von einer Anfangsanordnung, gegebenenfalls gemäß einem Behandlungsplan, in eine Zielanordnung zu repositionieren.

Wie hierin verwendet sind die Begriffe "Steifigkeit" und "Starrheit" austauschbar, ebenso wie die entsprechenden Begriffe "steif" und "starr".

Wie hierin verwendet umfasst eine "Vielzahl von Zähnen" zwei oder mehr Zähne.

In zahlreichen Ausführungsformen umfassen ein oder mehrere posteriore Zähne einen oder mehrere aus einem Molar, einem Prämolar und einem Eckzahn, und ein oder mehrere anteriore Zähne umfassen einen oder mehr aus einem mittleren Schneidezahn, einem seitlichen Schneidezahn, einem Eckzahn, einem ersten Vormahlzahn und einem zweiten Vormahlzahn.

Die härtbaren Zusammensetzungen und vernetzten Polymere gemäß der vorliegenden Offenbarung zeigen günstige thermomechanische Eigenschaften für die Verwendung als kieferorthopädische Vorrichtungen, beispielsweise für die Bewegung eines oder mehrerer Zähne.

Die hierin offenbarten Ausführungsformen können verwendet werden, um Gruppen aus einem oder mehreren Zähnen miteinander zu verbinden. Die Gruppen aus einem oder mehreren Zähnen können eine erste Gruppe aus einem oder mehreren anterioren Zähnen und eine zweite Gruppe aus einem oder mehreren posterioren Zähnen umfassen. Die erste Gruppe von Zähnen kann mit den hierin offenbarten Polymerschalenvorrichtungen mit der zweiten Gruppe von Zähnen verbunden werden.

Die hierin offenbarten Ausführungsformen sind gut geeignet, um einen oder mehrere Zähne aus der ersten Gruppe aus einem oder mehreren Zähnen zu bewegen oder um einen oder mehrere Zähne aus der zweiten Gruppe aus einem oder mehreren Zähnen zu bewegen, sowie Kombinationen davon.

Die hierin offenbarten Ausführungsformen sind für eine Kombination mit einem oder mehreren bekannten im Handel erhältlichen Zahnbewegungskomponenten, wie etwa Aufsätze oder Polymerschalenvorrichtungen, gut geeignet. In zahlreichen Ausführungsformen sind die Vorrichtung und ein oder mehrere Aufsätze ausgebildet, um einen oder mehrere Zähne entlang eines sechs Freiheitsgrade umfassenden Zahnbewegungsvektors zu bewegen, wobei drei Freiheitsgrade Rotationsfreiheitsgrade sind und drei Freiheitsgrade Translationsfreiheitsgrade sind.

Die vorliegende Offenbarung stellt kieferorthopädische Systeme und verwandte Verfahren für die Konzeption und Bereitstellung verbesserter oder wirksamerer Zahnbewegungssysteme bereit, um eine gewünschte Zahnbewegung und/oder Repositionierung von Zähnen in eine gewünschte Anordnung zu bewirken.

Obwohl auf eine Vorrichtung verwiesen wird, die eine Polymerschalenvorrichtung umfasst, sind die hierin offenbarten Ausführungsformen für die Verwendung mit zahlreichen zahnaufnehmenden Vorrichtungen geeignet, beispielsweise Vorrichtungen ohne ein/e oder mehrere Polymere oder Schalen. Die Vorrichtung kann aus einem oder mehreren von zahlreichen Materialien gefertigt sein, wie etwa z.B. Metall, Glas, Verstärkungsfasern, Kohlenstofffasern, Verbundstoffen, verstärkten Verbundstoffen, Aluminium, biologischen Materialien und Kombinationen davon. In manchen Fällen können die verstärkten Verbundstoffe beispielsweise eine mit Keramik oder Metallteilchen verstärkte Polymermatrix umfassen. Die Vorrichtung kann auf vielerlei Arten geformt werden, wie etwa z.B. durch Thermoformen oder direkte Fabrikation, wie hierin beschrieben. Alternativ oder in Kombination dazu kann die Vorrichtung durch maschinelle Bearbeitung erzeugt werden, wobei eine Vorrichtung mit rechnergestützter numerischer Steuerung aus einem Materialblock gefertigt wird. Vorzugsweise wird die Vorrichtung unter Verwendung einer härtbaren Zusammensetzung der vorliegenden Offenbarung gefertigt.

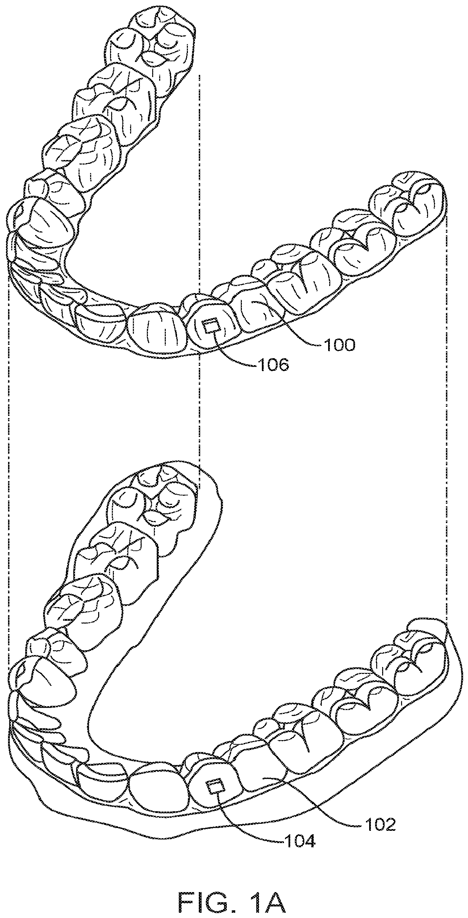

Nun auf die Zeichnungen Bezug nehmend, in denen die gleichen Zahlen in den verschiedenen Zeichnungen dieselben Elemente bezeichnen, veranschaulicht **Fig. 1A** eine(n) beispielhafte(n) Zahnrepositionierungsvorrichtung oder Aligner 100, die/der von einem Patienten getragen werden kann, um eine inkrementelle Repositionierung einzelner Zähne 102 im Kiefer zu erreichen. Die Vorrichtung kann eine Schale (z.B. eine durchgehende Polymerschale oder eine segmentierte Schale) umfassen, die zahnaufnehmende Ausnehmungen aufweist, die die Zähne aufnehmen und federnd repositionieren. Eine Vorrichtung oder (ein) Abschnitt(e) davon kann unter Verwendung eines physischen Zahnmodells indirekt hergestellt werden. Beispielsweise kann eine Vorrichtung (z.B. Polymervorrichtung) unter Verwendung eines physischen Zahnmodells und eines Bogens von geeigneten Schichten Polymermaterial gebildet werden. In manchen Ausführungsformen wird eine physische Vorrichtung direkt, z.B. unter Verwendung von Rapid-Prototyping-Fertigungsverfahren, aus einem digitalen Modell einer Vorrichtung hergestellt. Eine Vorrichtung kann über alle in einem Ober- oder Unterkiefer vorhandenen Zähne oder über weniger als alle Zähne passen. Die Vorrichtung kann so gestaltet sein, dass sie sich an die Zähne des Patienten anpasst (z.B. die Topographie der zahnaufnehmenden Ausnehmungen passt zu der Topographie der Zähne des Patienten), und kann basierend auf durch einen Abdruck, Scannen und dergleichen erzeugten, positiven oder negativen Modellen der Zähne des Patienten hergestellt werden. Alternativ dazu kann die Vorrichtung eine allgemeine Vorrichtung sein, die zum Aufnehmen der Zähne ausgebildet ist, aber nicht notwendigerweise geformt ist, um zur Topographie der Zähne des Patienten zu passen. In manchen Fällen werden nur gewisse von einer Vorrichtung aufgenommene Zähne von der Vorrichtung repositioniert, während andere Zähne eine Basis oder eine Ankerregion bereitstellen, um die Vorrichtung in Position zu halten, während sie gegen den Zahn oder die Zähne, auf den/die die Repositionierung abzielt, Kraft ausübt. In manchen Fällen werden manche, die meisten oder sogar alle Zähne zu einem gewissen Zeitpunkt während der Behandlung repositioniert. Zähne, die bewegt werden, können auch als Basis oder Anker dienen, um die Vorrichtung beim Tragen durch den Patienten festzuhalten. Typischerweise werden keine Drähte oder andere Mittel bereitgestellt, um eine Vorrichtung über den Zähnen in Position zu halten. In manchen Fällen kann es jedoch wünschenswert oder nötig sein, einzelne Aufsätze oder andere Ankerelemente 104 auf den Zähnen 102 mit entsprechenden Aufnehmern oder Öffnungen 106 in der Vorrichtung 100 bereitzustellen, so dass die Vorrichtung eine ausgewählte Kraft auf den Zahn ausüben kann. Beispielhafte Vorrichtungen, einschließlich der im Invisalign^{®}-System verwendeten, sind in zahlreichen Patenten und Patentanmeldungen, die Align Technology, Inc. zugeordnet werden, beschrieben, z.B. in US-Patent Nr. 6.450.807 und 5.975.893, sowie auf der Firmen-Webseite, auf die über das World Wide Web zugegriffen werden kann (siehe z.B. "invisalign.com"). Beispiele für am Zahn angebrachte Aufsätze, die für die Verwendung mit kieferorthopädischen Vorrichtungen geeignet sind, sind ebenfalls in Patenten und Patenanmeldungen von Align Technology, Inc., beschrieben, einschließlich z.B. US-Patent Nr. 6.309.215 und 6.830.450.

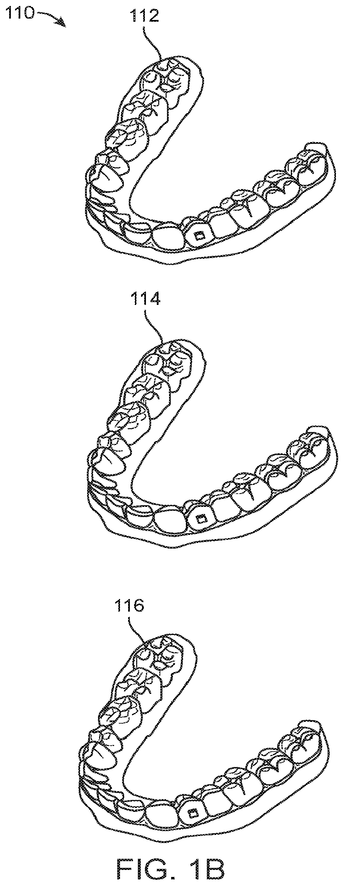

**Fig. 1B** veranschaulicht ein Zahnrepositionierungssystem 110, das eine Vielzahl von Vorrichtungen 112, 114, 116 umfasst. Jede der hierin beschriebenen Vorrichtungen kann als Teil eines Sets aus einer Vielzahl von Vorrichtungen, die in einem Zahnrepositionierungssystem verwendet werden, konzipiert und/oder bereitgestellt sein. Jede Vorrichtung kann so ausgebildet sein, das ihre zahnaufnehmende Ausnehmung eine Geometrie aufweist, die einer für die Vorrichtung vorgesehenen Zwischen- oder Endzahnanordnung entspricht. Die Zähne des Patienten können ausgehend von einer Anfangszahnanordnung sukzessive in eine Zielzahnanordnung repositioniert werden, indem eine Reihe inkrementeller Positionsanpassungsvorrichtungen über die Zähne des Patienten platziert werden. Beispielsweise kann das Zahnrepositionierungssystem 110 eine erste Vorrichtung 112, die einer Anfangszahnanordnung entspricht, eine oder mehrere Zwischenvorrichtungen, die einer oder mehreren Zwischenanordnungen entsprechen, und eine Endvorrichtung 116, die einer Zielanordnung entspricht, umfassen. Eine Zielzahnanordnung kann eine geplante Endzahnanordnung sein, die für die Zähne des Patienten am Ende der gesamten kieferorthopädischen Behandlung gewählt wurde. Alternativ dazu kann eine Zielanordnung eine von mehreren Zwischenanordnungen sein, die für die Zähne des Patienten während des Verlaufs einer kieferorthopädischen Behandlung ausgewählt wurde, die mehrere verschiedene Behandlungsszenarien umfassen kann, einschließlich, ohne darauf beschränkt zu sein, Fälle, in denen ein operativer Eingriff empfohlen wird, in denen eine interproximale Reduktion (IPR) angemessen ist, in denen eine Verlaufskontrolle geplant ist, wo die Anker platziert werden sollten, wo eine Gaumenexpansion wünschenswert ist, wo restaurative Zahnheilkunde beteiligt ist (z.B. Inlays, Onlays, Kronen, Brücken, Implantate, Veneers und dergleichen) etc. Somit versteht es sich, dass eine Zielzahnanordnung eine beliebige geplante Folgeanordnung für die Zähne eines Patienten sein, die auf eine oder mehrere inkrementelle Repositionierungsstufen folgt. Ebenso kann eine Anfangszahnanordnung eine beliebige Anfangsanordnung für die Zähne eines Patienten sein, auf die eine oder mehrere inkrementelle Repositionierungsstufen folgen.

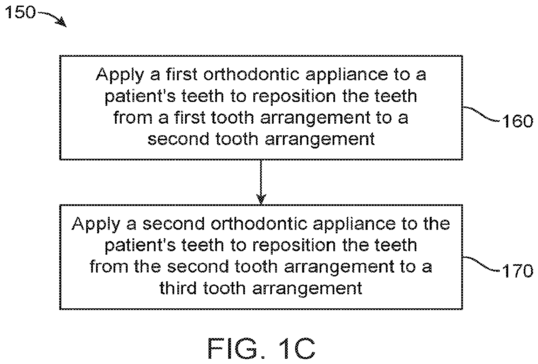

**Fig. 1C** veranschaulicht ein Verfahren 150 einer kieferorthopädischen Behandlung unter Verwendung einer Vielzahl von Vorrichtungen in Übereinstimmung mit Ausführungsformen. Das Verfahren 150 kann unter Verwendung jeder der hierin beschriebenen Vorrichtungen oder Vorrichtungssets durchgeführt werden. In Schritt 160 wird eine erste kieferorthopädische Vorrichtung an den Zähnen eines Patienten angebracht, um die Zähne ausgehend von einer ersten Zahnanordnung in eine zweite Zahnanordnung zu repositionieren. In Schritt 170 wird eine zweite kieferorthopädische Vorrichtung an den Zähnen eines Patienten angebracht, um die Zähne ausgehend von der zweiten Zahnanordnung in eine dritte Zahnanordnung zu repositionieren. Das Verfahren 150 kann gegebenenfalls unter Verwendung einer geeigneten Anzahl und Kombination sequentieller Vorrichtungen wiederholt werden, um die Zähne des Patienten ausgehend von einer Anfangsanordnung in eine Zielanordnung inkrementell zu repositionieren. Die Vorrichtungen können alle in derselben Stufe erzeugt werden oder in Sets oder Chargen (z.B. am Beginn einer Behandlungsstufe) oder die Vorrichtungen können einzeln gefertigt werden und der Patient kann jede Vorrichtung tragen, bis der Druck einer jeden Vorrichtung auf die Zähne nicht länger spürbar ist oder bis das Höchstmaß an Zahnbewegung für die jeweilige Stufe erreicht wurde. Eine Vielzahl verschiedener Vorrichtungen (z.B. ein Set) kann entworfen und sogar gefertigt werden, bevor der Patient eine Vorrichtung der Vielzahl trägt. Nachdem eine Vorrichtung für eine angemessene Zeitdauer getragen wurde, kann der Patient die aktuelle Vorrichtung durch die nächste Vorrichtung in der Serie ersetzen, bis keine weiteren Vorrichtungen verbleiben. Die Vorrichtungen sind im Allgemeinen nicht an den Zähnen befestigt und der Patient kann die Vorrichtungen zu jedem Zeitpunkt während des Verfahrens entfernen und wiedereinsetzen (z.B. vom Patienten entfernbare Vorrichtungen). Die Endvorrichtung oder mehrere Vorrichtungen in der Serie weisen eine Geometrie oder Geometrien auf, die zum Überkorrigieren der Zahnanordnung ausgewählt sind. Beispielsweise können eine oder mehrere Vorrichtungen eine Geometrie aufweisen, die (wenn sie vollständig erreicht wird) einzelne Zähne über die als "final" ausgewählte Zahnanordnung hinaus bewegen würde. Eine solche Überkorrektur kann erwünscht sein, um einem möglichen Rückfall nach Abschluss des Repositionierungsverfahrens vorzubeugen (z. B. Bewegung einzelner Zähne zurück in ihre Position vor der Korrektur erlauben). Eine Überkorrektur kann auch nützlich sein, um die Geschwindigkeit der Korrektur zu beschleunigen (z.B. eine Vorrichtung mit einer Geometrie, die über einer gewünschten Zwischen- oder Endposition hinaus positioniert ist, kann die einzelnen Zähne rascher hin Richtung der Position verschieben). In solchen Fällen kann die Verwendung einer Vorrichtung beendet werden, bevor die Zähne die durch die Vorrichtung definierten Positionen erreichen. Darüber hinaus kann eine Überkorrektur bewusst eingesetzt werden, um etwaige Ungenauigkeiten oder Einschränkungen der Vorrichtung zu kompensieren.

Die verschiedenen Ausführungsformen der hierin präsentierten kieferorthopädischen Vorrichtungen können auf zahlreiche verschiedene Arten hergestellt werden. In manchen Ausführungsformen können die kieferorthopädischen Vorrichtungen hierin (oder Teile davon) unter Verwendung von Direktfertigung, wie etwa additiven Fertigungsverfahren (hierin auch als "3D-Druck" bezeichnet" oder subtraktiven Fertigungsverfahren (z.B. Fräsen), hergestellt werden. In manchen Ausführungsformen umfasst Direktfertigung das Ausbilden eines Gegenstands (z.B. einer kieferorthopädischen Vorrichtung oder eines Teils davon), ohne eine physische Vorlage (z.B. Form, Maske etc.) zum Definieren der Geometrie des Gegenstands zu verwenden. Additive Fertigungsverfahren können wie folgt kategorisiert werden: (1) Wannenphotopolymerisation (z.B. Stereolithographie), bei der ein Gegenstand schichtweise aus einer Wanne mit flüssigem Pohotopolymerharz konstruiert wird; (2) "Material Jetting", ein Verfahren bei dem Material durch die Verwendung entweder eines kontinuierlichen oder Dropon-Demand- (DOD-) Ansatzes auf eine Bauplattform aufgespritzt wird; (3) "Binder Jetting", ein Verfahren bei dem alternierende Schichten eines Baumaterials (z.B. ein pulverbasiertes Material) und eines Bindematerials (z.B. eines flüssigen Bindemittels) durch einen Druckkopf abgelagert werden; (4) "Fused Deposition Modeling (FDM)", ein Verfahren bei dem Material durch eine Düse gezogen, erhitzt und schichtweise abgelagert wird; (5) Pulverbettfusion, einschließlich, ohne darauf beschränkt zu sein, des selektiven Heißsinterns (SHS), selektiven Laserschmelzens (SLM) und selektiven Lasersinterns (SLS); (6) Folienlaminierung, einschließlich, ohne darauf beschränkt zu sein, "Laminated Object Manufacturing (LOM)" und Ultraschall-Additiv-Fertigung (UAM); und (7) "Direct Energy Deposition (DED)", einschließlich, ohne darauf beschränkt zu sein, "Laser Engineering Net Shaping (LENS)", "Direct Metal Deposition" und 3D-Laser-Cladding. Beispielsweise kann Stereolithographie eingesetzt werden, um eine oder mehrere der Vorrichtungen hierin direkt herzustellen. In manchen Ausführungsformen umfasst Stereolithographie die selektive Polymerisation eines lichtempfindlichen Harzes (z.B. eines Photopolymers) mittels Licht (z.B. ultraviolettem Licht) in Übereinstimmung mit einer gewünschten Querschnittsform. Die Geometrie des Gegenstands kann durch sequentielles Polymerisieren einer Vielzahl von Querschnitten des Gegenstands schichtweise aufgebaut werden. Als weiteres Beispiel können die Vorrichtungen hierin mittels selektiven Lasersinterns direkt gefertigt werden. In manchen Ausführungsformen umfasst das selektive Lasersintern die Verwendung eines Laserstrahls, um eine Schicht aus pulverförmigem Material in Übereinstimmung mit einer gewünschten Querschnittsform selektiv zu schmelzen und zu verschmelzen, um die Geometrie des Gegenstands aufzubauen. Als noch ein weiteres Beispiel können die Vorrichtungen durch "Fused Deposition Modeling" direkt hergestellt werden. In manchen Ausführungsformen umfasst Fused Deposition Modeling das schichtweise Schmelzen und selektive Ablagern eines dünnen Filaments eines thermoplastischen Polymers, um einen Gegenstand zu bilden. In noch einem weiteren Beispiel kann "Material Jetting" eingesetzt werden, um die Vorrichtungen hierin direkt herzustellen. In manchen Ausführungsformen umfasst Material Jetting das Aufspritzen oder Extrudieren von einem oder mehreren Materialien auf eine Bauplattform, um sukzessive Schichten der Geometrie des Gegenstands zu bilden. In einem weiteren Beispiel können die Vorrichtungen hierin direkt durch Fused Deposition Modeling erzeugt werden. In machen Ausführungsformen umfasst Fused Deposition Modeling das Schmelzen und selektive schichtweise Abscheiden eines dünnen Filaments aus thermoplastischem Polymer zur Ausbildung eines Gegenstands. In einem weiteren Beispiel kann Material Jetting angewandt werden, um die Vorrichtungen hierin herzustellen. In manchen Ausführungsformen umfasst Material Jetting das Aufspritzen oder Extrudieren eines oder mehrerer Materialien zum Aufbau einer Oberfläche, um aufeinanderfolgende Schichten der Objektgeometrie zu bilden.

Alternativ dazu oder in Kombination damit können Ausführungsformen der Vorrichtungen hierin (oder Teile davon) unter Anwendung indirekter Fertigungsverfahren, wie z.B. Thermoformen mittels Positiv- oder Negativ-Form, hergestellt werden. Die indirekte Fertigung einer kieferorthopädische Vorrichtung kann das Herstellen einer Positiv- oder Negativ-Form der Zahnstruktur des Patienten in einer Zielanordnung (z.B. durch Rapid Prototying, Fräsen, etc.) und das Thermoformen einer oder mehrerer Materialbahnen über der Form zur Herstellung einer Vorrichtungshülle umfassen.

In manchen Ausführungsformen wird durch die hierin bereitgestellten direkten Fertigungsverfahren die Objektgeometrie schichtweise aufgebaut, wobei aufeinanderfolgende Schichten in eigenen Aufbauschritten ausgebildet werden. Alternativ dazu oder in Kombination damit können direkt Fertigungsverfahren angewandt werden, die den kontinuierlichen Aufbau einer Objektgeometrie ermöglichen und hierin als "kontinuierliche Direktfertigung" bezeichnet werden. Verschiedene Arten von kontinuierlichen Direktfertigungsverfahren können angewandt werden. Beispielsweise werden in manchen Ausführungsformen die Vorrichtungen hierin unter Anwendung von "kontinuierlichem Flüssiginterphasendruck" hergestellt, wobei ein Gegenstand aus einem Behälter mit photopolymerisierbarem Harz durch Ausbilden eines Gradienten von teilweise gehärtetem Harz zwischen der Aufbaufläche des Gegenstands und einer "toten Zone" mit gehemmter Polymerisation kontinuierlich aufgebaut wird. In manchen Ausführungsformen wird eine semipermeable Membran eingesetzt, um den Transport eines Photopolymerisationshemmers (z.B. Sauerstoff) in die tote Zone zu steuern, um den Polymerisationsgradienten auszubilden. Kontinuierlicher Flüssiginterphasendruck kann Fertigungsgeschwindigkeiten erzielen, die 25- bis 1000-mal schneller sind als andere direkte Fertigungsverfahren, und um das bis zu etwa 1000-Fache gesteigerte Geschwindigkeiten können durch den Einbau von Kühlsystemen erzielt werden. Kontinuierlicher Flüssiginterphasendruck ist in US-Patentveröffentlichung Nr. 2015/ 0097315, 2015/0097316 und 2015/0102532 beschrieben, deren Offenbarung durch Verweis hierin vollständig aufgenommen ist.

**Als** weiteres Beispiel kann ein kontinuierliches Direktfertigungsverfahren den kontinuierlichen Aufbau einer Objektgeometrie durch kontinuierliche Bewegung der Aufbauplattform (z.B. in vertikaler oder Z-Richtung) während der Bestrahlungsphase erzielen, so dass die Härtungstiefe des bestrahlten Photopolymers durch die Bewegungsgeschwindigkeit gesteuert wird. Dementsprechend kann eine kontinuierliche Polymerisation des Materials auf der Aufbauoberfläche erzielt werden. Solche Verfahren sind in US-Patent Nr. 7,892.474 beschrieben, dessen Offenbarung durch Verweis vollständig hierin aufgenommen ist.

In einem weiteren Beispiel kann ein kontinuierliches Direktfertigungsverfahren das Extrudieren eines Verbundmaterials umfassen, das aus einem härtbaren flüssigen Material besteht, das einen festen Strang umgibt. Das Verbundmaterial kann entlang eines durchgehenden dreidimensionalen Pfads extrudiert werden, um den Gegenstand zu formen. Solche Verfahren sind in US-Patentveröffentlichung Nr. 2014/ 0061974 beschrieben, deren Offenbarung durch Verweis hierin vollständig aufgenommen ist.

In einem weiteren Beispiel wird in einem kontinuierlichen Direktfertigungsverfahren ein "Heliolithographie"-Ansatz genutzt, bei dem das flüssige Photopolymer mit fokussierter Strahlung gehärtet wird, während die Aufbauplattform kontinuierlich gedreht und angehoben wird. Dementsprechend kann die Objektgeometrie entlang eines spiralförmigen Aufbaupfads kontiniuerlich aufgebaut werden. Solche Verfahren sind in US-Patentnveröffentlichung Nr. 2014/0265034, deren Offenbarung durch Verweis vollständig hierin aufgenommen ist.

Die hierin bereitgestellten Direktfertigungsansätze sind mit einer breiten Palette von Materialien kompatibel, einschließlich, aber nicht ausschließlich ein oder mehrere der folgenden Materialien: einem Polyester, einem Copolyester, einem Polycarbonat, einem thermoplastischen Polyurethan, einem Polypropylen, einem Polyethylen, einem Polypropylen und Polyethylencopolymer, einem Acryl, einem zyklischen Blockcopolymer, einem Polyetherketon, einem Polyamid, einem Polyethylenterephthalat, einem Polybutylenterephthalat, einem Polyetherimid, einem Polyethersulfon, einem Polytrimethylenterephthalat, einem Styrol-Blockcopolymer (SBC), einem Silikonkautschuk, einer Elastomerlegierung, einem thermoplastischen Elastomer (TPE), einem thermoplastischen Vulkanisat- (TPV-) Elastomer, einem Polyurethanelastomer, einem Blockcopolymer-Elastomer, einem Polyolefingemisch-Elastomer, einem thermoplastischen Copolyester-Elastomer, einem thermoplastischen Polyamid-Elastomer, einem duroplastischen Material oder Kombinationen davon. Die für Direktfertigung eingesetzten Materialien können in einer ungehärteten Form (z.B. als Flüssigkeit, Harz, Pulver usw.) bereitgestellt und gehärtet werden (z.B. durch Photopolymerisation, Lichthärten, Gashärten, Laserhärten, Vernetzen usw.), um eine kieferorthopädische Vorrichtung oder einen Teil davon zu bilden. Die Eigenschaften des Materials vor dem Härten können sich von den Eigenschaften des Materials nach dem Härten unterscheiden. Nach dem Härten können die Materialien hierin ausreichende Festigkeit, Steifigkeit, Haltbarkeit, Biokompatibilität usw. für eine Verwendung in kieferorthopädischen Vorrichtungen aufweisen. Die Eigenschaften der eingesetzten Materialien nach dem Härten können abhängig von den gewünschten Eigenschaften für die jeweiligen Teile der Vorrichtung ausgewählt werden.

In manchen Ausführungsformen können relative starre Abschnitte der kieferorthopädischen Vorrichtung durch Direktfertigung unter Verwendung eines oder mehrerer der folgenden Materialien ausgebildet werden: eines Polyesters, eines Copolyesters, eines Polycarbonats, eines thermoplastischen Polyurethans, eines Polypropylens, eines Polyethylens, eines Polypropylen-Polyethylen-Copolymers, eines Acryls, eines zyklischen Blockcopolymers, eines Polyetherketons, eines Polyamids, eines Polyethylenterephthalats, eines Polybutylenterephthalats, eines Polyetherimids, eines Polyethersulfons und/oder eines Polytrimethylenterephthalats.

In manchen Ausführungsformen können relative elastische Abschnitte der kieferorthopädischen Vorrichtung durch Direktfertigung unter Verwendung eines oder mehrerer der folgenden Materialien ausgebildet werden: eines Styrol-Blockcopolymers (SBC), eines Silikonkautschuks, einer Elastomerlegierung, eines thermoplastischen Elastomers (TPE), eines thermoplastischen Vulkanisat- (TPV-) Elastomers, eines Polyurethan-Elastomers, eines Blockcopolymer-Elastomers, eines Polyolefingemisch-Elastomers, eines thermoplastischen Copolyester-Elastomers und/oder eines thermoplastischen Polyamid-Elastomers.

Die Maschinenparameter können Härtungsparameter umfassen. Für Härtungssysteme, die auf Digital Light Processing (DLP) basieren, können die Härtungsparameter, Leistung, Härtungsdauer und/oder Graustufen des Vollbildes umfassen. Für laserbasierte Härtungssysteme können die Härtungsparameter Leistung, Geschwindigkeit, Strahlgröße, Strahlform und/oder Leistungsverteilung des Strahls umfassen. Für Drucksysteme können die Härtungsparameter Materialtropfengröße, Viskosität und/oder Härtungsleistung umfassen. Diese Maschinenparameter können als Teil der Verfahrenssteuerung der Fertigungsmaschine überwacht und regelmäßig angepasst werden (z.B. manche Parameter alle 1-x Schichten und manche Parameter nach jedem Aufbau). Verfahrenssteuerung kann durch das Einbauen eines Sensors in die Maschine erzielt werden, der Leistung und andere Strahleigenschaften für jede Schicht oder alle paar Sekunden misst und diese durch eine Feedback-Schleife automatisch anpasst. Für DLP-Maschinen können Graustufen vor, während und/oder am Ende jedes Aufbaus und/oder in vorbestimmten zeitlichen Abständen (z.B. bei jedem n-ten Aufbau, einmal pro Stunde, einmal pro Tag, einmal pro Woche usw.) abhängig von der Stabilität des Systems gemessen und kalibriert werden. Zusätzlich dazu können Materialeigenschaften und/oder Photo-Eigenschaften in Bezug auf die Fertigungsmaschine bereitgestellt werden, und ein Maschinenverfahrensteuermodul kann diese Parameter nutzen, um die Maschinenparameter (z.B. Leistung, Graustufe usw.) anzupassen, um die Variabilität von Materialeigenschaften auszugleichen. Durch das Umsetzen von Verfahrenssteuerung für die Fertigungsmaschine kann eine geringere Variabilität in Bezug auf Auftragspräzision und Eigenspannung erzielt werden.

Gegebenenfalls ermöglichen die hierin beschriebenen Direktfertigungsverfahren die Herstellung einer Vorrichtung, die mehrere Materialien umfasst, was hierin als "Multimaterial-Direktfertigung" bezeichnet wird. In manchen Ausführungsformen umfasst ein Multimaterial-Direktfertigungsverfahren das gleichzeitige Formen eines Gegenstands aus mehreren Materialien in einem einzigen Fertigungsschritt. Beispielsweise kann eine Extrusionsvorrichtung mit mehreren Düsen verwendet werden, um selektiv mehrere Materialtypen aus separaten Materialversorgungsquellen abzugeben, um ein Gegenstand aus einer Vielzahl verschiedener Materialien zu fertigen. Solche Verfahren werden in US-Patent Nr. 6.749.414 beschrieben, dessen Offenbarung durch Verweis vollständig hierin aufgenommen ist. Alternativ dazu oder in Kombination damit kann ein Multimaterialdirektfertigungsverfahren das Ausbilden eines Gegenstands aus mehreren Materialien in einer Vielzahl aufeinanderfolgender Fertigungsschritte umfassen. Beispielsweise kann ein erster Abschnitt des Gegenstands aus einem ersten Material gemäß einem der Direktfertigungsverfahren hierin ausgebildet werden, wonach ein zweiter Abschnitt des Gegenstands durch aus einem zweiten Material gemäß den hierin beschriebenen Verfahren ausgebildet werden kann usw., bis der vollständige Gegenstand ausgebildet wurde.

Direktfertigung kann verschiedene Vorteile im Vergleich zu anderen Fertigungsverfahren bieten. Beispielsweise ermöglicht Direktfertigung im Gegensatz zu indirekter Fertigung die Produktion einer kieferorthopädischen Vorrichtung ohne die Verwendung von Formen oder Schablonen für die Formgebung der Vorrichtung, wodurch die Anzahl der Fertigungsschritte reduziert und die Auflösung und Präzision der letztendlichen Geometrie der Vorrichtung verbessert wird. Zusätzlich dazu ermöglicht Direktfertigung eine präzise Steuerung der dreidimensionalen Geometrie der Vorrichtung, wie z.B. der Dicke der Vorrichtung. Komplexe Strukturen und/oder Hilfskomponenten können einstückig mit der Vorrichtungshülle in einem einzigen Fertigungsschritt ausgebildet werden, anstatt in einem separaten Fertigungsschritt zu der Hülle hinzugefügt zu werden. In manchen Ausführungsformen wird Direktfertigung angewandt, um Vorrichtungsgeometrien zu erzeugen, die unter Anwendung alternativer Fertigungsverfahren schwierig herzustellen wären, wie z.B. Vorrichtungen mit sehr kleinen oder feinen Merkmalen, komplexe geometrische Formen, Hinterschnitte, interproximale Strukturen, Hüllen mit variabler Dicke und/oder internen Strukturen (z.B. zur Verbesserung der Festigkeit bei reduziertem Gewicht und Materialverbrauch). In manchen Ausführungsformen ermöglichen die Direktfertigungsansätze hierin beispielsweise die Fertigung einer kieferorthopädischen Vorrichtung mit Merkmalen in der Größenordnung von etwa 5 µm oder weniger oder in einem Bereich von etwa 5 µm bis etwa 50 µm oder in einem Bereich von etwa 20 µm bis etwa 50 µm.

Die Direktfertigungstechniken, die hierin beschrieben sind, können angewandt werden, um Vorrichtungen mit im Wesentlichen isotropen Materialeigenschaften herzustellen, wie z.B. mit Festigkeiten, die im Wesentlichen in allen Richtungen gleich oder ähnlich sind. In manchen Ausführungsformen ermöglichen die Direktfertigungsansätze hierin die Herstellung einer kieferorthopädischen Vorrichtung mit einer Festigkeit, die in allen Richtungen um nicht mehr als etwa 25 %, etwa 20 %, etwa 15 %, etwa 10 %, etwa 5 %, etwa 1 % oder etwa 0,5 % variiert. Zusätzlich dazu können die Direktfertigungsansätze hierin angewandt werden, um kieferorthopädische Vorrichtungen im Vergleich zu anderen Fertigungstechniken rascher herzustellen. In manchen Ausführungsformen ermöglichen die Direktfertigungsansätze hierin die Produktion einer kieferorthopädischen Vorrichtung in einem Zeitintervall von etwa 1 h, etwa 30 min, etwa 25 min, etwa 20 min, etwa 15 min, etwa 10 min, etwa 5 min, etwa 4 min, etwa 3 min, etwa 2 min, etwa 1 min oder etwa 30 s oder weniger. Solche Fertigungsgeschwindigkeiten ermöglichen eine rasche Herstellung individuell angepasster Vorrichtungen "am Behandlungsstuhl", z.B. während eines Routinetermins oder einer Kontrolle.

In manchen Ausführungsformen werden in den hierin beschriebenen Direktfertigungsverfahren Verfahrenskontrollen für verschiedene Maschinenparameter eines Direktfertigungssystems oder einer Direktfertigungsvorrichtung umgesetzt, um sicherzustellen, dass die resultierenden Vorrichtungen mit höchster Präzision gefertigt werden. Eine solche Präzision kann vorteilhaft sein, um sicherzustellen, dass das gewünschte Kraftsystem präzise auf die Zähne ausgeübt wird, um auf wirksame Weise Zahnbewegungen zu bewirken. Verfahrenskontrolle kann umgesetzt werden, um Verfahrensvariabilität aufgrund mehrerer Faktoren, wie z.B. Materialeigenschaften, Maschinenparametern, Umweltvariablen und/oder Nachbearbeitungsparametern, gerecht zu werden.

Materialeigenschaften können in Abhängigkeit von den Eigenschaften der Rohmaterialien und/oder Verfahrensvariablen während des Vermischens der Rohmaterialien variieren. In zahlreichen Ausführungsformen sollten Harze oder andere Materialien für die Direktfertigung unter strenger Verfahrenskontrolle hergestellt werden, um geringe Variabilität in Bezug auf Photoeigenschaften, Materialeigenschaften (z.B. Viskosität, Oberflächenspannung), physikalische Eigenschaften (z.B. Modul, Festigkeit, Dehnung) und/oder thermische Eigenschaften (z.B. Glasübergangstemperatur, Formbeständigkeitstemperatur) sicherzustellen. Verfahrenskontrolle für Materialfertigungsverfahren kann durch Screening der Rohmaterialien in Bezug auf ihre physikalischen Eigenschaften und/oder Steuerung von Temperatur, Feuchtigkeit und/oder anderen Verfahrensparamatern während des Mischverfahrens erzielt werden. Durch Umsetzung der Prozesskontrolle für das Materialfertigungsverfahren können eine geringere Variabilität der Verfahrensparameter und einheitliche Materialeigenschaften für jede Materialcharge erzielt werden. Eine Restvariabilität der Materialeigenschaften kann durch Verfahrenskontrolle an der Maschine erzielt werden, wie hierin ausführlicher erläutert wird.

Maschinenparameter können Härtungsparameter umfassen. Für Härtungssysteme auf der Basis von Digital Light Processing (DLP) können die Härtungsparameter die Leistung, Härtungsdauer und/oder Graustufen des Vollbilds umfassen. Für laserbasierte Härtungssysteme können die Härtungsparameter Leistung, Geschwindigkeit, Strahlgröße, Strahlform und/oder Leistungsverteilung des Strahls umfassen. Für Drucksysteme können die Härtungsparameter Materialtropfengröße, Viskosität und/ oder Härtungsleistung umfassen. Diese Maschinenparameter können als Teil der Verfahrenssteuerung der Fertigungsmaschine überwacht und regelmäßig angepasst werden (z.B. manche Parameter alle 1-x Schichten und manche Parameter nach jedem Aufbau). Verfahrenssteuerung kann durch Einbau eines Sensors in die Maschine erzielt werden, der die Leistung und andere Strahleigenschaften für jede Schicht oder alle paar Sekunden misst und diese durch eine Feedback-Schleife automatisch anpasst. Für DLP-Maschinen können Graustufen am Ende jedes Aufbaus gemessen und kalibriert werden. Zusätzlich dazu können Materialeigenschaften und/oder Photo-Eigenschaften in Bezug auf die Fertigungsmaschine bereitgestellt werden, und ein Maschinenverfahrensteuermodul kann diese Parameter nutzen, um die Maschinenparameter (z.B. Leistung, Graustufe usw.) anzupassen, um die Variabilität von Materialeigenschaften auszugleichen. Durch das Umsetzen von Verfahrenssteuerung für die Fertigungsmaschine kann eine geringere Variabilität in Bezug auf Auftragspräzision und Eigenspannung erzielt werden.

In zahlreichen Ausführungsformen werden Umweltvariablen (z.B. Temperatur, Feuchtigkeit, Sonnenlicht oder Aussetzen gegenüber anderen Energie-/Härtungsquellen) in einem engen Bereich gehalten, um die Variabilität in Bezug auf die Dicke der Vorrichtung und/oder andere Eigenschaften zu reduzieren. Gegebenenfalls können Maschinenparameter angepasst werden, um Umweltvariablen auszugleichen.

In zahlreichen Ausführungsformen umfasst die Nachbearbeitung von Vorrichtungen Reinigungs-, Nachhärtungs- und/oder Trägerentfernungsverfahren. Relevante Nachbearbeitungsparameter können Reinheit des Reinigungsmittels, Reinigungsdruck und/oder -temperatur, Reinigungsdauer, Nachhärtungsenergie und/oder -dauer und/oder Art des Trägerentfernungsverfahrens umfassen. Diese Parameter können als Teil eines Verfahrenskontrollschemas gemessen und angepasst werden. Zusätzlich dazu können die physikalischen Eigenschaften der Vorrichtung durch Modifizieren der Nachbearbeitungsparameter variiert werden. Das Anpassen von Nachbearbeitungsmaschinenparametern kann eine weitere Möglichkeit zum Ausgleich der Variabilität in Bezug auf Materialeigenschaften und/oder Maschineneigenschaften bereitstellen.

Die Konfiguration der kieferorthopädische Vorrichtungen hierin kann gemäß einem Behandlungsplan für einen Patienten bestimmt werden, z.B. gemäß einem Behandlungsplan, der die aufeinanderfolgende Behandlung mit einer Vielzahl von Vorrichtungen umfasst, die die Zähne schrittweise neu positionieren. Computer-basierte Behandlungsplanung und/oder Vorrichtungsfertigungsverfahren können angewandt werden, um die Gestaltung und Fertigung der Vorrichtungen zu erleichtern. Beispielsweise kann eine oder können mehrere der Vorrichtungskomponenten, die hierin beschrieben werden, digital gestaltet und unter Einsatz computergesteuerter Fertigungsvorrichtungen (z.B. Computer-Numerical-Control- (CNC-) Fräsen, computergesteuertes Rapid Prototyping, wie z.B. 3D-Druck, usw.) gefertigt werden. Die computerbasierten Verfahren, die hierin vorgestellt werden, können die Präzision, Flexibilität und Annehmlichkeit der Fertigung der Vorrichtungen verbessern.

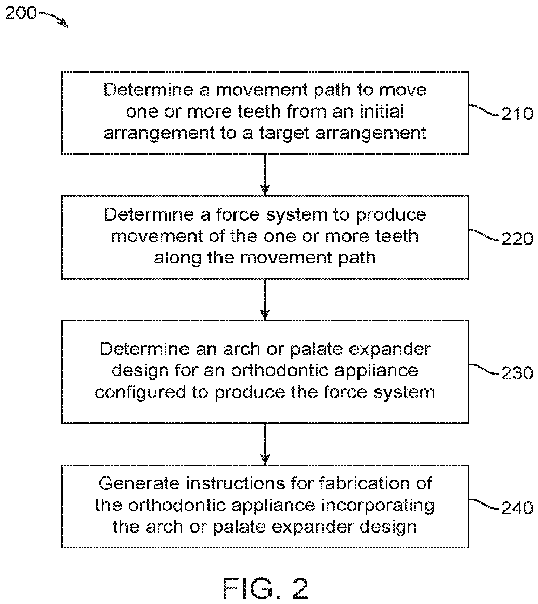

**FIG. 2** zeigt ein Verfahren 200 zur Gestaltung einer durch Direktfertigung herzustellenden kieferorthopädischen Vorrichtung gemäß den Ausführungsformen. Das Verfahren 200 kann auf jede beliebige Ausführungsform der hierin beschriebenen kieferorthopädischen Vorrichtungen angewandt werden. Manche oder alle der Schritte von Verfahren 200 können durch ein beliebiges geeignetes Datenverarbeitungssystem oder eine beliebige geeignete Datenverarbeitungsvorrichtung, z.B. einen oder mehrere Prozessoren, die durch geeignete Befehle konfiguriert sind, durchgeführt werden.

In Schritt 210 wird ein Bewegungspfad für die Bewegung eines oder mehrerer Zähne aus einer Ausgangsanordnung in eine Zielanordnung bestimmt. Die Ausgangsanordnung kann anhand eines Abdrucks oder eines Scans der Zähne oder des Mundgewebes des Patienten bestimmt werden, z.B. unter Verwendung von Wachsbissen, Direktkontaktscannen, Röntgenbildgebung, tomographischer Bildgebung, sonographischer Bildgebung und weiterer Verfahren zum Erhalt von Informationen in Bezug auf die Position und Struktur von Zähnen, Kiefer, Zahnfleisch und weiterem kieferorthopädisch relevantem Gewebe. Anhand der erfassten Daten kann ein digitaler Datensatz abgeleitet werden, die die Ausgangsanordnung der Zähne und anderen Gewebe des Patienten (z.B. vor der Behandlung) repräsentiert. Gegebenenfalls wird der Ausgangsdatensatz verarbeitet, um die Gewebekomponenten von einander zu trennen. Beispielsweise können Datenstrukturen erzeugt werden, die einzelne Zahnkronen digital abbilden. Vorteilhafterweise können digitale Modelle ganzer Zähne, einschließlich gemessener oder extrapolierter versteckter Flächen und Wurzelstrukturen, sowie der umgebenden Knochen- und Weichgewebestrukturen erstellt werden.

Die Zielanordnung der Zähne (z.B. ein gewünschtes und beabsichtigtes Endergebnis der kieferorthopädischen Behandlung) kann vom behandelnden Arzt in Form einer Verschreibung bezogen werden, anhand grundlegender Prinzipien der Kieferorthopädie berechnet und/oder mittels Computer anhand einer klinischen Verschreibung extrapoliert werden. Mit einer Beschreibung der gewünschten Endpositionen der Zähne und einer digitalin Darstellung der Zähne selbst können die Endposition und die Oberflächengeometrie jedes Zahns angegeben werden, um ein vollständiges Modell der Zahnanordnung zum Zeitpunkt des gewünschten Endes der Behandlung zu erstellen.

Gibt es für jeden Zahn eine Ausgangs- und eine Zielposition, kann ein Bewegungspfad für die Bewegung jedes Zahnes definiert werden. In manchen Ausführungsformen sind die Bewegungspfade konfiguriert, um die Zähne möglichst schnell mit möglichst wenig Umwegen zu bewegen, um sie von ihren Ausgangspositionen in die gewünschten Endpositionen zu bringen. Die Zahnpfade können gegebenenfalls unterteilt werden, und die einzelnen Segmente können so berechnet werden, dass die Bewegung jedes Zahns innerhalb eines Segments innerhalb der Grenzwerte der linearen und Drehverschiebung bleibt. Auf diese Weise können die Endpunkte jedes Pfadsegments eine klinisch realisierbare Neupositionierung darstellen, und die Summe der Segmentendpunkte kann eine klinisch realisierbare Abfolge von Zahnpositionen darstellen, so dass die Bewegung von einem Punkt zum nächsten in der Abfolge keine Kollision von Zähnen bewirkt.

In Schritt 220 wird ein Kraftsystem bestimmt, um die Bewegung des einen Zahns oder der mehreren Zähne entlang des Bewegungspfads hervorzurufen. Ein Kraftsystem kann eine oder mehrere Kräfte und/oder ein oder mehrere Drehmomente umfassen. Verschiedene Kraftsysteme können verschiedene Arten von Zahnbewegungen hervorrufen, wie z.B. Kippen, Verschieben, Drehen, Verschieben nach außen, Verschieben nach innen, Wurzelbewegung usw. Biomechanische Grundsätze, Modellerstellungsverfahren, Kraftberechungs-/-messverfahren und dergleichen, einschließlich des Wissens und der Ansätze, die auf dem Gebiet der Kieferorthopädie üblicherweise eingesetzt werden, können angewandt werden, um das geeignete Kraftsystem zu bestimmen, das auf die Zähne anzuwenden ist, um die Zahnbewegung zu erzielen. Bei der Bestimmung des anzuwendenden Kraftsystems können Quellen einschließlich Literatur, durch Experimente oder virtuelle Modellerstellung bestimmte Kraftsysteme, computerbasierte Modellerstellung, klinische Erfahrung, die Minimierung unerwünschter Kräfte usw. in Betracht gezogen werden.

Die Bestimmung des Kraftsystems kann Einschränkungen in Bezug auf die zulässigen Kräfte umfassen, wie z.B. zulässige Richtungen und Größenordnungen, sowie erwünschte Bewegungen, die durch die ausgeübten Kräfte hervorgerufen werden sollen. Beispielsweise können in der Fertigung von Gaumenexpandern verschiedene Bewegungsstrategien für verschiedene Patienten wünschenswert sein. Das Ausmaß an Kraft, das erforderlich ist, um den Gaumen zu erweitern, kann beispielsweise vom Alter des Patienten abhängig sein, da sehr junge Patienten möglicherweise noch keine vollständig ausgebildete Gaumennaht haben. Demnach kann bei jugendlichen Patienten und solchen mit nicht vollständig geschlossener Gaumennaht die Erweiterung des Gaumens mit geringeren Kraftgrößenordnungen erzielt werden. Eine langsamere Bewegung des Gaumens kann dabei helfen, dass Knochen wächst, der die sich erweiternde Naht füllt. Bei anderen Patienten kann eine raschere Erweiterung wünschenswert sein, was durch die Anwendung größerer Kräfte erzielt werden kann. Diese Anforderungen können nach Bedarf berücksichtigt werden, um die Struktur und Materialien für Vorrichtungen auszuwählen; beispielsweise durch die Auswahl von Gaumenexpandern, die in der Lage sind, starke Kräfte auszuüben, um die Gaumennaht aufzubrechen und/oder eine rasche Erweiterung des Gaumens hervorzurufen. Spätere Vorrichtungsstufen können so gestaltet sein, dass sie verschiedene Kraftausmaße ausüben, wobei z.B. zunächst eine große Kraft angewandt wird, um die Naht aufzubrechen, und dann kleinere Kräfte angewandt werden, um die Naht offen zu halten oder den Gaumen und/oder den Gaumenbogen allmählich zu erweitern.

Das Bestimmen des Kraftsystems kann eine Modellerstellung der Gesichtsstrukturen des Patienten umfassen, wie z.B. der Skelettstruktur von Kiefer und Gaumen. Scandaten des Gaumens und des Bogens, wie z.B. Röntgendaten oder Daten von optischem 3D-Scannen, können verwendet werden, um Parameter des Skelett- und Muskelsystems des Munds des Patienten zu ermitteln, um Kräfte zu bestimmen, die ausreichen, um für eine gewünschte Expansion des Gaumens und/oder Bogens zu sorgen. In manchen Ausführungsformen kann die Dicke und/oder Dichte der Naht in der Mitte des Gaumens gemessen oder durch einen behandelnden Arzt eingegeben werden. In anderen Ausführungsformen kann der behandelnde Arzt eine geeignete Behandlung auf Grundlage von physiologischen Eigenschaften des Patienten festlegen. Beispielsweise können die Eigenschaften des Gaumens auch aufgrund von Faktoren wie dem Alter des Patienten eingeschätzt werden; beispielsweise brauchen junge jugendliche Patienten typischerweise geringere Kräfte, um die Naht zu erweitern, als ältere Patienten, da die Naht bei den jüngeren Patienten noch nicht vollständig ausgebildet ist.

In Schritt 230 wird die Gestaltung eines Bogen- oder Gaumenexpanders für eine kieferorthopädische Vorrichtung ermittelt, die konfiguriert ist, um das Kraftsystem zu erzeugen. Die Bestimmung der Gestaltung des Bogen- oder Gaumenexpanders, die Geometrie der Vorrichtung, die Materialzusammenseztung und/oder -eigenschaften kann unter Anwendung einer Behandlungs- oder Kraftanwendungssimulationsumgebung durchgeführt werden. Eine Simulationsumgebung kann z.B. Computermodellerstellungssysteme, biomechanische Systeme oder Vorrichtungen und dergleichen umfassen. Gegebenenfalls können digitale Modelle der Vorrichtung und/oder der Zähne erzeugt werden, wie z.B. Finite-Elemente-Modelle. Die Finite-Elemente-Modelle können unter Verwendung einer Computerprogrammanwendungssoftware erstellt werden, die von verschiedenen Anbietern bezogen werden können. Zur Herstellung von soliden Geometriemodellen können computergestützte Engineering- (CAE-) oder computergestützte Design- (CAD-) Programme verwendet werden, wie z.B. die Auto-CAD^{®}-Softwareprodukt von Autodesk, Inc., aus San Rafael, CA. Zum Erstellen von Finite-Elemente-Modellen und deren Analyse können Programmprodukte von verschiedenen Anbietern verwendet werden, einschließlich die Finite-Elemente-Analysepakete von ANSYS, Inc., aus Canonsburg, PA, und SIMULIA- (Abaqus-) Softwareprodukte von Dassault Systèmes aus Waltham, MA.

Gegebenenfalls können ein oder mehrere Bogen- oder Gaumenexpanderdesigns für Tests oder Kraftmodellerstellung ausgewählt werden. Wie oben angemerkt können eine gewünschte Zahnbewegung sowie ein für das Hervorrufen der gewünschte Zahnbewegung erforderliches oder gewünschtes Kraftsystem identifiziert werden. Unter Nutzung der Simulationsumgebung kann ein Kandidaten-Bogen- oder Gaumenexpanderdesign analysiert werden, oder ein entsprechendes Modell kann erstellt werden, um ein tatsächliches Kraftsystem zu bestimmen, das aus der Verwendung der Kandidatenvorrichtung resultiert. Eine oder mehrere Modifikationen können gegebenenfalls an einer Kandidatenvorrichtung vorgenommen werden, und eine Kraftmodellerstellung kann weiter wie beschrieben analysiert werden, z.B. um die Gestaltung der Vorrichtung, die das gewünschte Kraftsystem erzeugt, schrittweise festzulegen.

In Schritt 240 werden Befehle für die Fertigung der kieferorthopädischen Vorrichtung, die das Bogen- oder Gaumenexpanderdesign umfasst, erstellt. Die Befehle können so konfiguriert sein, dass ein Fertigungssystem oder eine Fertigungsvorrichtung so gesteuert wird, dass die kieferorthopädische Vorrichtung mit dem festgelegten Bogen- oder Gaumenexpanderdesign erzeugt wird. In manchen Ausführungsformen sind die Befehle so konfiguriert, dass die kieferorthopädische Vorrichtung durch Direktfertigung (z.B. Stereolithographie, selektives Laser-Sintern, Fused Deposition Modeling, 3D-Druck, kontinuierliche Direktfertigung, Direktfertigung aus mehreren Materialien usw.) gemäß den verschiedenen hierin vorgestellten Verfahren erzeugt wird. In alternativen Ausführungsformen können die Befehle für die indirekte Fertigung der Vorrichtung, z.B. durch Thermoformen, konfiguriert sein.

Verfahren 200 kann zusätzliche Schritte umfassen: 1) Der obere Bogen und Gaumen des Patienten wird intraoral gescannt, um dreidimensionale Daten des Gaumens und des oberen Bogens zu erfassen. 2) Das dreidimensionale Formprofil der Vorrichtung wird ermittelt, um Abstands- und Zahneingriffsstrukturen wie hierin beschrieben bereitzustellen.

Wenngleich die oben beschriebenen Schritte ein Verfahren 200 zur Gestaltung einer kieferorthopädischen Vorrichtung gemäß manchen Ausführungsformen veranschaulichen, sind für Fachleute auf dem Gebiet der Erfindung auf Grundlage der hierin beschriebenen Lehre einige Variationen ersichtlich. Manche der Schritte können untergeordnete Schritte umfassen. Manche der Schritte können beliebig oft wiederholt werden. Einer oder mehrere Schritte des Verfahrens 200 können mit einem beliebigen Fertigungssystem oder einer beliebigen Fertigungsvorrichtung durchgeführt werden, wie z.B. mit den hierin beschriebenen Ausführungsformen. Manche der Schritte können optional sein, und die Reihenfolge der Schritte kann nach Wunsch variiert werden.

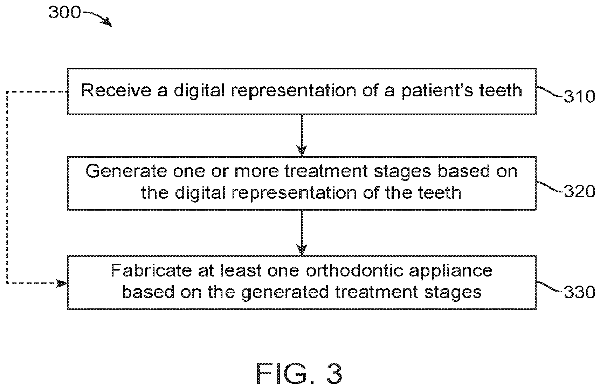

**FIG.** 3 zeigt ein Verfahren 300 zur digitalen Planung einer kieferorthopädischen Behandlung und/oder zur Gestaltung oder Fertigung einer Vorrichtung gemäß den Ausführungsformen. Das Verfahren 300 kann auf ein beliebiges der hierin beschriebenen Behandlungsverfahren angewandt werden und durch ein beliebiges geeignetes Datenverarbeitungssystem durchgeführt werden.

In Schritt 310 wird eine digitale Darstellung der Zähne eines Patienten erhalten. Die digitale Darstellung kann Oberflächentopographiedaten für den Mundraum des Patienten umfassen (einschließlich Zähne, Zahnfleisch usw.). Die Oberflächentopographiedaten können durch direktes Scannen der Mundhöhle, anhand eines physischen Modells (positive oder negative) der Mundhöhle oder durch einen Abdruck der Mundhöhle unter Verwendung einer geeigneten Scanvorrichtung (z.B. eines handgeführten Scanners, eines Desktop-Scanners usw.) erfasst werden.

In Schritt 320 werden eine oder mehrere Behandlungsstufen auf Grundlage der digitalen Darstellung der Zähne erstellt. Die Behandlungsstufen können schrittweise Repositionierungsstufen eines kieferorthopädischen Behandlungsverfahrens sein, das so gestaltet ist, dass ein oder mehrere der Zähne des Patienten aus einer Ausgangsanordnung in eine Zielanordnung bewegt werden. Beispielsweise können die Behandlungsstufen durch Bestimmen der Ausgangszahnanordnung, die durch die digitale Darstellung angegeben ist, die Bestimmung einer Zielzahnanordnung und das Bestimmen von Bewegungspfaden eines oder mehrerer Zähne in der Ausgangsanordnung, die zum Erreichen der Zielanordnung der Zähne notwendig ist, festgelegt werden. Der Bewegungspfad kann auf Grundlage des Minimierens der Gesamtdistanz der Bewegung optimiert werden, wobei Kollisionen zwischen Zähnen vermieden werden, Zahnbewegungen vermieden werden, die zu schwierig zu bewerkstelligen sind, oder andere geeignete Kriterien angewandt werden.

In Schritt 330 wird zumindest eine kieferorthopädische Vorrichtung auf Grundlage der ermittelten Behandlungsstufen gefertigt. Beispielsweise kann ein Satz von Vorrichtungen gefertigt werden, die jeweils gemäß einer durch die Behandlungsstufen festgelegten Zahnanordnung entsprechen, so dass die Vorrichtungen nacheinander vom Patienten getragen werden können, um schrittweise die Zähne aus der Ausgangsanordnung in die Zielanordnung neu zu positionieren. Der Vorrichtungssatz kann eine oder mehrere der hierin beschriebenen kieferorthopädischen Vorrichtungen umfassen. Die Fertigung der Vorrichtung kann das Gestalten eines digitalen Modells der Vorrichtung umfassen, das als Eingabe für ein computergesteuertes Fertigungssystem verwendet wird. Die Vorrichtung kann unter Anwendung von Direktfertigungsverfahren, indirekten Fertigungsverfahren oder Kombinationen davon nach Wunsch gefertigt werden.

In manchen Fällen kann es sein, dass es nicht erforderlich ist, mehrere Anordnungen oder Behandlungsstufen durchzuführen, um eine Vorrichtung zu gestalten und/oder zu fertigen. Wie durch die gestrichelte Linie in **FIG.** 3 dargestellt, können die Gestaltung und/oder Fertigung einer kieferorthopädischen Vorrichtung und möglicherweise eine bestimmte kieferorthopädische Behandlung die Verwendung einer Darstellung der Zähne des Patienten umfassen (z.B. das Empfangen einer digitalen Darstellung der Zähne des Patienten 310), gefolgt von der Gestaltung und/oder Fertigung einer kieferorthopädischen Vorrichtung auf Grundlage einer Darstellung der Zähne des Patienten in der durch die empfangene Darstellung dargestellten Anordnung.

### BEISPIELE

Die folgenden Beispiele werden zum Zweck der Veranschaulichung verschiedener Ausführungsformen der Erfindung angegeben und sollen die vorliegende Offenbarung in keiner Weise einschränken. Die vorliegenden Beispiele sind zusammen mit den hierin beschriebenen Verfahren in der gegebenen Form repräsentativ für manche Ausführungsformen, sind beispielhaft und sind nicht als Einschränkungen des Schutzumfangs der Erfindung zu verstehen. Änderungen daran und andere Verwendungen, die im Geiste der Erfindung, wie durch den Schutzumfang der Ansprüche definiert, umfasst sind, erschließen sich Fachleuten auf dem Gebiet der Erfindung.

Alle Chemikalien wurden aus kommerziellen Quellen erstanden und, wenn nicht anders angegeben, ohne weitere Reinigung eingesetzt.

¹H-NMR-Spektra wurden auf einem BRUKER AC-E-200 FT-NMR-Spektrometer aufgenommen. Die chemischen Verschiebungen sind in ppm (s: Singulett, d: Dublett, t: Triplett, q: Quartett, m: Multiplett) angegeben. Das verwendete Lösungsmittel war deuteriertes Chloroform (CDCl₃, 99,5 % Deuterierung). Die IR-Spektren wurden auf einem Perkin-Elmer-Spektrum 65 FT-IR-Spektrometer aufgenommen.

### Synthesebeispiel 1: Synthese des Glasübergangsmodifikators TGM1.

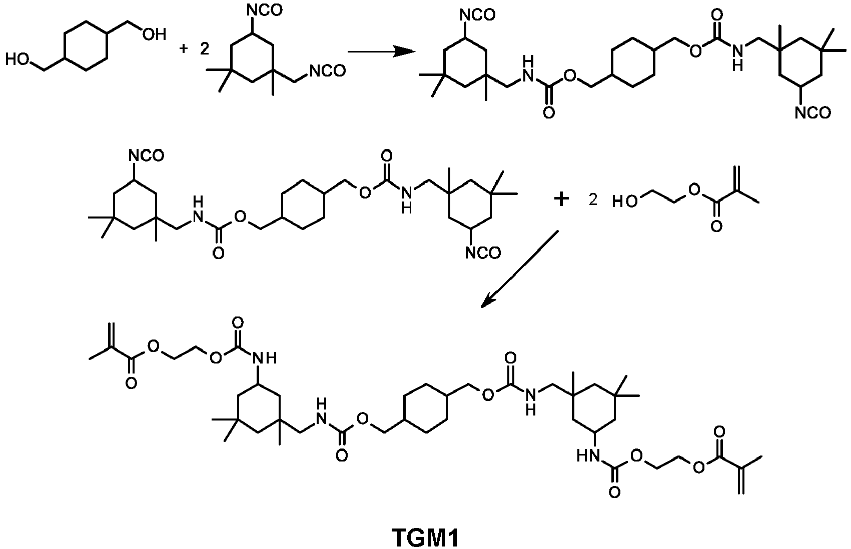

**20** g Cyclohexandimethanol (CHDM, M=144,21 g/mol, 0,139 mol) wurden zu 200 ml Dimethylformamid zugesetzt und bei 60 °C gerührt, bis sie vollständig gelöst waren. Dann wurden 61,66 g Isophorondiisocyanat (IPDI, M=222,3 g/mol, 0,277 mol) zu dem Gemisch zugesetzt. Die Reaktion wurde unter Verwendung von ATR-IR-Spektroskopie überwacht und war vollständig, sobald die Fläche des Absorptionssignals der NCO-Gruppe (2275-2250 cm⁻¹) im IR-Spektrum konstant war (ca. 3 h). Anschließend wurden 36,10 g Hydroxyethylmethacrylat (HEMA, M=130,14 g/mol, 0,277 mol) zusammen mit 35 mg 3,5-Di-tert-butyl-4-hydroxytoluol (BHT) als Inhibitor (300 ppm) und 58 mg Dibutylzinndilaurat (DBTDL) als Katalysator (500 ppm) zu dem Gemisch zugesetzt. Die Lösung wurde reagieren gelassen, bis das Signal der NCO-Gruppe im IR-Spektrum vollständig verschwunden war. Das Lösungsmittel wurde abdestilliert, und der daraus resultierende farblose, viskos-flüssige **TGM1** wurde ohne weitere Reinigung eingesetzt. ¹H-NMR (CDCl₃, 200 MHz, δ, ppm): 6,14 (d, 2H, 2x >C=C**H₂**, cis), 5,61 (d, 2H, 2x >C=C**H₂**, trans), 4,95-4,47 (m, 4H, 4x C-N**H-**), 4,32 (m, 8H, 2x -O-C**H₂**-C**H₂**-O-), 4,1-3,8 (m, 6**H**, 2x >C**H**-NH, 2x >CH-C**H₂**-O), 3,2 (q, 1H, NH-C**H₂**-), 2,9 (m, 3H, NH-C**H₂**-), 1,95 (s, 6**H**, 2x CH₂=C-C**H₃**), 1,9-0,8 (m, 40H, >C**H₂**, >C-C**H₃**, >C**H**-). IRₙₑₐt (cm⁻¹): 3325 (v_{N-H}), 2950 (v_{C-H}), 2923 (v_{C-H}), 1703 (vc=o), 1637 (vc=c), 1527 (δ_{NH}), 1452 (δ_{CH3}), 1300 (δ_{CH2}), 1237 (vc-o), 1165 (v_{C-N}), 1139 (vc-o), 1037 (δ_{>CH2}), 891 (γc=c).

### Synthesebeispiel 2: Synthese des Glasübergangsmodifikators TGM2.

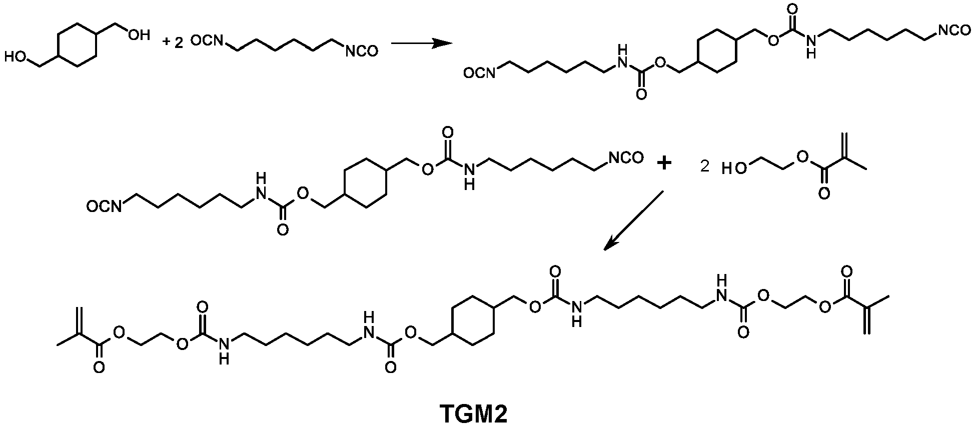

Die Herstellung von **TGM2** erfolgte ähnlich jener von Synthesebeispiel 1, wobei in der ersten Stufe Hexamethylendiisocyanat (HDI) als reaktive Isocyanatverbindung eingesetzt wurde. Das weiße, feste Produkt **TGM2** wurde in entionisiertem Wasser gequencht, abfiltriert und getrocknet, bevor es eingesetzt wurde. ¹H-NMR (CDCl₃, 200 MHz, δ, ppm): 6,06 (d, 2H, 2x >C=C**H₂**, cis), 5,52 (d, 2H, 2x >C=C**H₂**, trans), 4,72 (s, 4H, 4x -N**H**-), 4,25 (m, 8H, 2x -O-C**H₂**-C**H₂**-O-), 3,84 (d, 4H, 2x >CH-C**H₂**-O), 3,09 (m, 8H, 4x OCO-NH-C**H₂**-), 1,88 (s, 6H, 2x CH₂=C-C**H₃**), 1,8-0,8 (m, 26H, -C**H₂**-, >C**H**-). IRₙₑₐt (cm⁻¹): 3325 (v_{N-H}), 2940 (v_{C-H}), 2854 (v_{C-H}), 1715 (v_{C=O}), 1685 (vc=o), 1638 (vc=c), 1532 (δ_{NH}), 1441 (δ_{CH2}), 1342 (δ_{CH2}), 1260 (vc-o), 1167 (v_{C-N}), 1137 (vc-o), 1061 (δ_{>CH2}), 944 (γc=c).

### Synthesebeispiel 3. Synthese des Glasübergangsmodifikators TGM3.

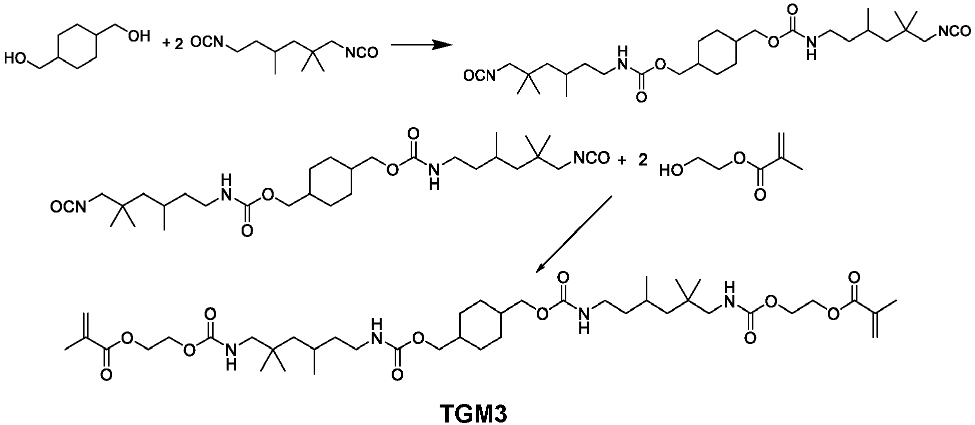

Die Herstellung von **TGM3** erfolgte ähnlich jener von Synthesebeispiel 1, wobei in der ersten Stufe Trimethylhexamethylendiisocyanat (TMDI) als reaktive Isocyanatverbindung eingesetzt wurde. Das weiße, feste Produkt **TGM3** wurde in entionisiertem Wasser gequencht, abfiltriert und getrocknet, bevor es eingesetzt wurde. ¹H-NMR (CDCl₃, 200 MHz, δ, ppm): 6,07 (d, 2H, 2x >C=C**H₂**, cis), 5,52 (d, 2H, 2x >C=C**H₂**, trans), 4,95-4,55 (m, 4H, 4x C-**NH**-), 4,26 (m, 8H, 2x -O-C**H₂**-C**H₂**-O-), 3,95-3,75 (m, 4H, 2x >CH-C**H₂**-O-), 3,2-2,8 (m, 8H, NH-C**H₂**-), 1,88 (s, 6H, 2x CH₂=C-C**H₃**), 1,8-0,7 (m, 38H, >C**H₂**, -C**H₂**-C**H₂**-,CH-C**H₃** >C**H**-). IRₙₑₐt (cm⁻¹): 3335 (v_{N-H}), 2928 (v_{C-H}), 2865 (v_{C-H}), 1695 (vc=o), 1640 (vc=c), 1529 (δ_{NH}), 1450 (δ_{CH2}), 1364 (δ_{CH2}), 1240 (vc-o), 1163 (v_{C-N}), 1139 (vc-o), 1033 (δ_{>CH2}), 946 (γc=c).

### Synthesebeispiel 4: Synthese des Glasübergangsmodifikators TGM4.

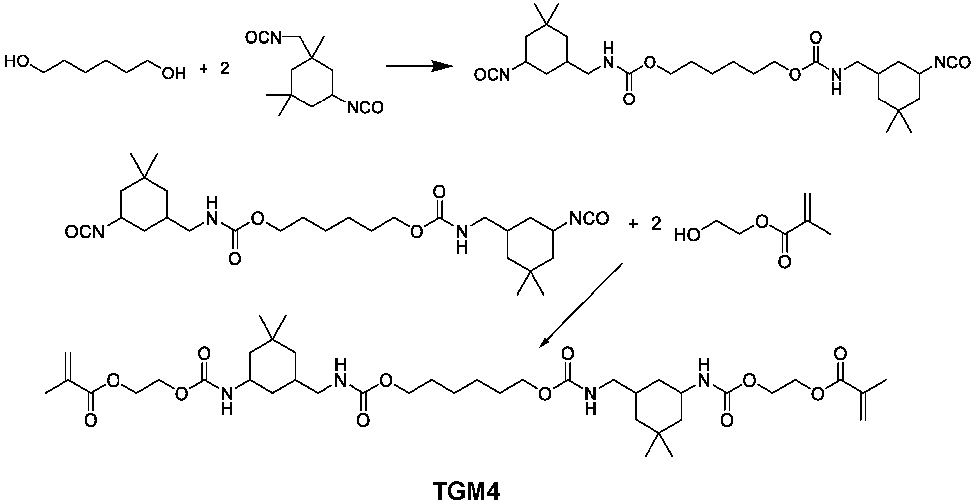

Die Herstellung erfolgte ähnlich jener von Synthesebeispiel 1, wobei in der ersten Stufe Hexandiol (HD) als Diolverbindung eingesetzt wurde. Das farblose, viskose Produkt **TGM4** wurde in entionisiertem Wasser gequencht, abfiltriert und getrocknet, bevor es eingesetzt wurde. ¹H-NMR (CDCl₃, 200 MHz, δ, ppm): 6,07 (d, 2H, 2x >C=C**H₂**, cis), 5,53 (d, 2H, 2x >C=C**H₂**, trans), 4,72 (s, 4H, 4x -NH-), 4,25 (m, 8H, 2x -O-C**H₂**-C**H₂**-O-), 3,84 (d, 4H, 2x >CH-C**H₂**-O), 3,09 (m, 8H, 4x OCO-NH-C**H₂**-), 1,88 (s, 6H, 2x CH₂=C-C**H₃**), 1,8-0,8 (m, 26H, -C**H₂**-, >C**H**-). IRₙₑₐₜ(cm⁻¹): 3330 (v_{N-H}), 2952 (v_{C-H}), 2861 (v_{C-H}), 1691 (v_{C=O}), 1636 (vc=c), 1529 (δ_{NH}), 1454 (δ_{CH2}), 1364 (δ_{CH2}),1301 (vc-o), 1238 (vc-o), 1171 (v_{C-N}), 1041 (vc-o), 946 (γc=c).

### Synthesebeispiel 5: Synthese des Zähigkeitsmodifikators TNM1.

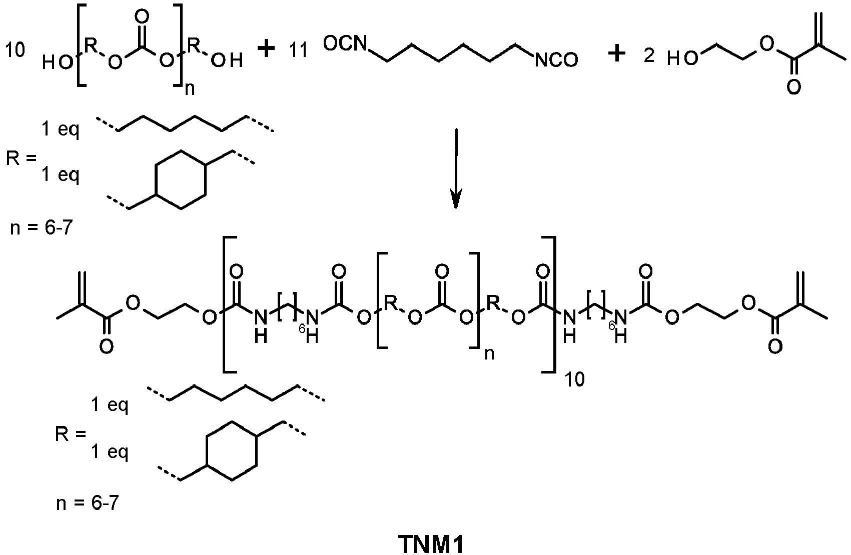

40 g Polycarbonatdiol UBE Eternacoll UM-90 (1/1) (M_{avg}=900 g/mol, 0,044 mol, 10 Äqu.) wurden zu 200 ml Dimethylformamid zugesetzt, und die Lösung wurde bei 90 °C gerührt. Dann wurden 8,22 g HDI (M=168,2 g/mol, 0,049 mol, 11 Äqu.) und 25 mg Dibutylzinndilaurat (500 ppm) zu dem Kolben zugesetzt und die Reaktion wurde mittels ATR-IR-Spektroskopie überwacht. Nach etwa 3 h blieb das Isocyanatsignal im IR-Spektrum konstant. In der zweiten Stufe der Reaktion wurden 1,15 g HEMA (M= 130,14 g/mol, 0,0089 mol, 2 Äqu.) und 15 mg Butylhydroxytoluol (300 ppm) zugesetzt und die Reaktion wurde fortgesetzt, bis das Signal der NCO-Gruppe im IR-Spektrum vollständig verschwunden war (etwa 1 h). Anschließend wurde Wasser zugesetzt, um das farblose, feste Produkt **TNM1** auszufällen, das mit entionisiertem Wasser gewaschen und im Vakuum getrocknet wurde. ¹H-NMR (CDCl₃, 200 MHz, δ, ppm): 6,10 (d, 2H, 2x >C=C**H₂**, cis), 5,54 (d, 2H, 2x >C=C**H₂**, trans), 4,69 (s, 22H, 22x -NH-), 4,27 (m, 8H, 2x -O-C**H₂**-C**H₂**-O-), 4,15-3,77 (m, 264H, O=C-O-C**H₂**-), 3,12 (q, 44H, 22x OCO-NH-C**H₂**-), 1,81 (s, 6H, 2x CH₂=C-C**H₃**), 1,75-0,98 (m, 692H, >C**H₂**, -C**H₂**-, >CH-). IRₙₑₐt (cm⁻¹): 3333 (v_{N-H}), 2930 (v_{C-H}), 2858 (v_{C-H}), 1717 (vc=o), 1684 (vc=o), 1637 (vc=c), 1530 (δ_{NH}), 1454 (δ_{CH3}), 1318 (δ_{CH2}), 1243 (vc-o), 1167 (v_{C-N}), 1131 (vc-o), 1045 (δ_{>CH2}), 951 (γc=c). GPC: Mn = 13,170 Da; PDI = 2,27.

### Synthesebeispiel 6: Synthese des Zähigkeitsmodifikators TNM2.

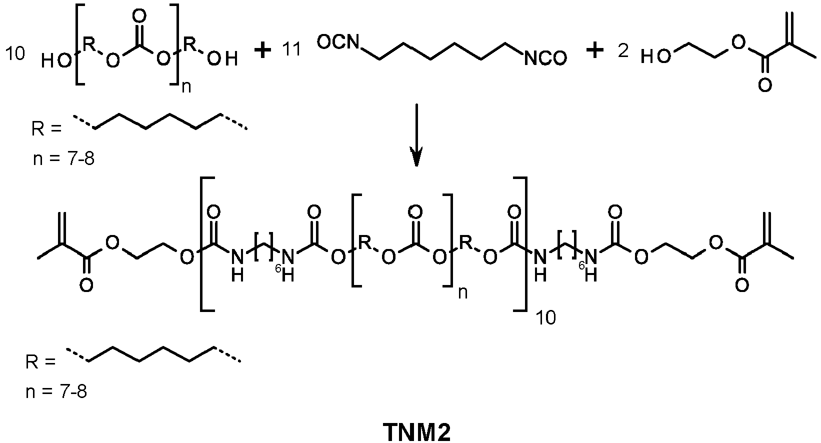

Die Herstellung erfolgte ähnlich jener von Synthesebeispiel 3, wobei das Polycarbonatdiol UBE Eternacoll UH-100 (M_{avg}=1000 g/mol, 10 Äqu.) als Reaktant eingesetzt wurde. Das weiße, feste Produkt **TNM2** wurde mit Ethanol ausgefällt und im Vakuum getrocknet. ¹H-NMR (CDCl₃, 200 MHz, δ, ppm): 6,11 (d, 2H, 2x >C=C**H₂**, cis), 5,56 (d, 2H, 2x >C=C**H₂**, trans), 4,69 (s, 22H, 22x -N**H**-), 4,27 (m, 8H, 2x -O-C**H₂**-C**H₂**-O-), 4,16-3,96 (m, 284H, O=C-O-C**H₂**-), 3,12 (q, 44H, 22x OCO-NH-C**H₂**-), 1,92 (s, 6H, 2x CH₂=C-C**H₃**), 1,75-1,21 (m, 656H, -C**H₂**-). IRₙₑₐt (cm⁻¹): 3322 (v_{N-H}), 2936 (v_{C-H}), 2862 (v_{C-H}), 1717 (vc=o), 1683 (vc=o), 1638 (vc=c), 1537 (δ_{NH}), 1455 (δ_{CH3}), 1319 (δ_{CH2}), 1245 (vc-o), 1167 (v_{C-N}), 1139 (vc-o), 1044 (δ_{>CH2}), 954 (γc=c). GPC: Mₙ = 14,899 Da; PDI = 2,28.

### Synthesebeispiel 7: Synthese des Zähigkeitsmodifikators TNM3.

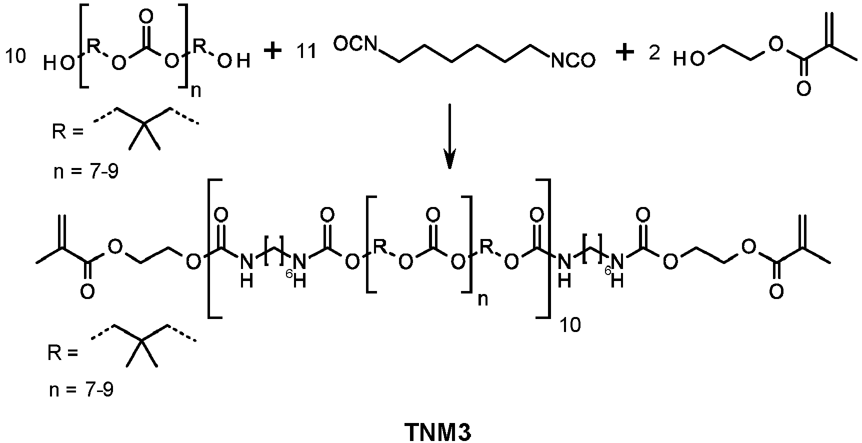

Die Herstellung erfolgte ähnlich jener von Synthesebeispiel 3, wobei BENEBiOL NL1050B von Mitsubishi Chemical (M_{avg}=1000 g/mol, 10 Äqu.) als Polycarbonatdiol eingesetzt wurde. Am Ende der Synthese wurde das Lösungsmittel abdestilliert und die farblose, viskose Flüssigkeit **TNM3** wurde ohne weitere Reinigung eingesetzt. ¹H-NMR (CDCl₃, 200 MHz, δ, ppm): 6,07 (d, 2H, 2x >C=C**H₂**, cis), 5,50 (d, 2H, 2x >C=C**H₂**, trans), 4,74 (s, 22H, 22x -N**H**-), 4,26 (m, 8H, 2x -O-C**H₂**-C**H₂**-O-), 4,14 (m, 184H, O=C-O-C**H₂**-), 3,93 (m, 156H, O=C-O-C**H₂**-), 3,13 (m, 44H, 22x OCO-NH-C**H₂**-), 1,88 (s, 6H, 2x CH₂=C-C**H₃**), 1,75 (s, 260H, -(C**H₂**), 1,51-1,20 (m, 88H, NH-CH2-(C**H₂**)4-CH₂-NH), 0,98 (m, 250H >C-(C**H₃**)2). IRₙₑₐt (cm⁻¹): 3384 (v_{N-H}), 2961 (v_{C-H}), 2936 (v_{C-H}), 2879 (vc_{H}), 1742 (vc=o), 1716 (vc=o), 1637 (vc=c), 1524 (δ_{NH}), 1455 (δ_{CH3}), 1403 (δ_{CH2}), 1319 (δ_{CH2}), 1235 (vc-o), 1168 (v_{C-N}), 1139 (vc-o), 1027 (δ_{>CH2}), 944 (γc=c). GPC: Mₙ = 14,932 Da; PDI = 2,13.

### Synthesebeispiel 8: Synthese des Zähigkeitsmodifikators TNM4.

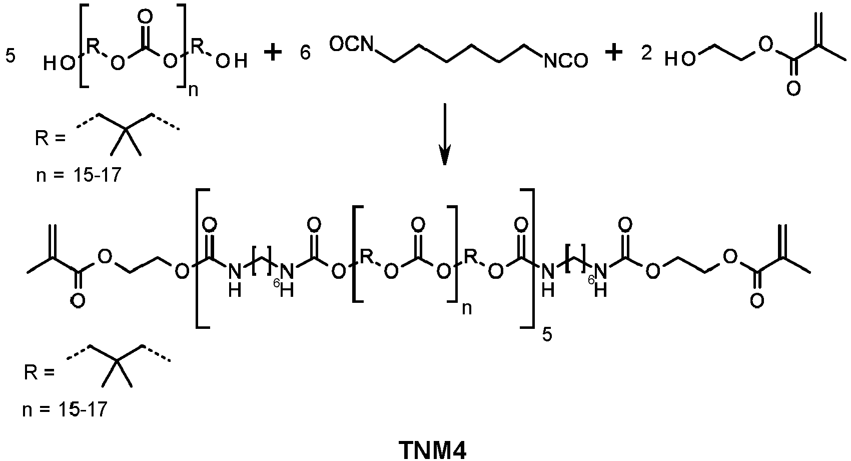

Die Herstellung erfolgte ähnlich jener von Synthesebeispiel 3, wobei BENEBiOL NL2050B von Mitsubishi Chemical (M_{avg}=2000 g/mol, 5Äqu.) und HDI (M=168,2 g/mol, 6 Äqu.) in einem Verhältnis von 5/6 eingesetzt wurden, um ein End-Molekulargewicht von -15,000 g/mol zu erhalten. Abschließend wurde das Lösungsmittel abdestilliert und der farblose, viskos-flüssige **TNM4** wurde ohne weitere Reinigung eingesetzt. ¹H-NMR (CDCl₃, 200 MHz, δ, ppm): 6,09 (d, 2H, 2x >C=C**H₂**, cis), 5,54 (d, 2H, 2x >C=C**H₂**, trans), 4,66 (s, 12H, 12x -N**H**-), 4,25 (m, 8H, 2x -O-C**H₂**-C**H₂**-O-), 4,09 (m, 192H, O=C-O-C**H₂**-), 3,89 (m, 164H, O=C-O-C**H₂**-), 3,10 (m, 24H, 12x OCO-NH-C**H₂**-), 1,88 (s, 6H, 2x CH₂=C-C**H₃**), 1,71 (s, 250H, -(C**H₂**)-), 1,51-1,20 (m, 48H, NH-CH₂-(C**H₂**)₄-CH₂-NH), 0,99 (m, 240H >C-(C**H₃**)₂). IRₙₑₐt (cm⁻¹): 3372 (v_{N-H}), 2960 (v_{C-H}), 2912 (v_{C-H}), 2880 (v_{C-H}), 1730 (vc=o), 1716 (vc=o), 1635 (vc=c), 1520 (δ_{NH}), 1468 (δ_{CH3}), 1399 (δ_{CH2}), 1305 (δ_{CH2}), 1242 (vc-o), 1173 (v_{C-N}), 1148 (vc-o), 1025 (δ_{>CH2}), 952 (γc=c). GPC: Mₙ = 12,940 Da; PDI = 2,04.

### Synthesebeispiel 9: Synthese des Zähigkeitsmodifikators TNM5.

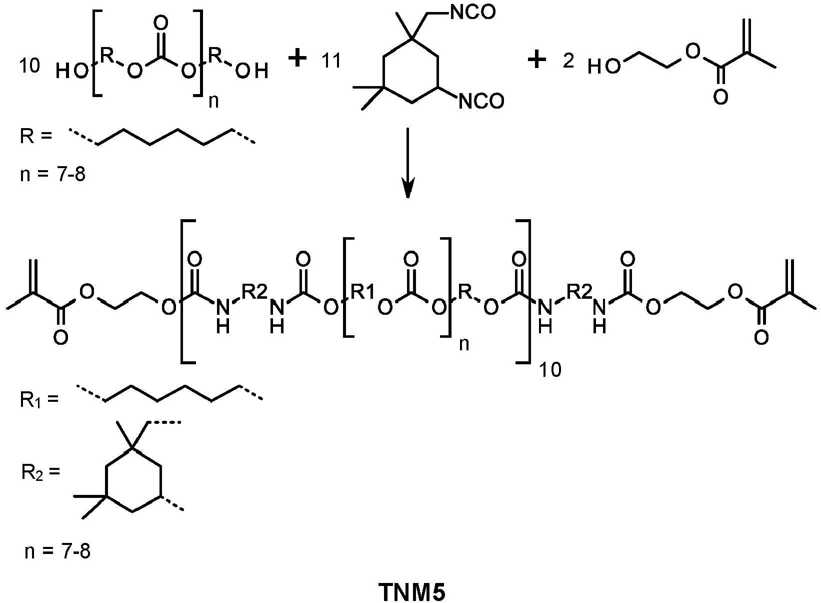

Die Herstellung erfolgte ähnlich jener von Synthesebeispiel 3, wobei BENEBiOL NL1050B von Mitsubishi Chemical (M_{avg}=1000 g/mol, 10 Äqu.) als Polycarbonatdiol und Isophorondiisocyanat (M=222,3 g/mol, 11 Äqu.) in einem Verhältnis von 10/11 eingesetzt wurden, um ein End-Molekulargewicht von -15,000 g/mol zu erhalten. Das Produkt **TNM5** wurde ausgefällt, mit entionisiertem Wasser gewaschen und im Vakuum getrocknet. ¹H-NMR (CDCl₃, 200 MHz, δ, ppm): 6,15 (d, 2H, 2x >C=C**H₂**, cis), 5,60 (d, 2H, 2x >C=C**H₂**, trans), 4,82 (s, 11H, 11x >CH-N**H-**), 4,58 (s, 11H, 11x -CH₂-N**H-**), 4,32 (t, 8H, 2x -O-C**H₂**-C**H₂**-O-), 4,24-3,86 (m, 250H, >C**H**-NH, -C**H₂**-O), 3,28 (s, 6H, -C**H₂**-NH-), 2,95 (m, 16H, -C**H₂**-NH-), 1,97 (s, 6H, 2x CH₂=C-C**H₃**), 1,9-0,8 (t, 645H, >CH₂, >C-C**H₃**, >C**H-**). IRₙₑₐt (cm⁻¹): 3377 (v_{N-H}), 2957 (v_{C-H}), 2925 (v_{C-H}), 2875 (v_{C-H}), 1742 (vc=o), 1717 (vc=o), 1637 (vc=c), 1524 (δ_{NH}), 1455 (δ_{CH3}), 1403 (δ_{CH2}), 1319 (δ_{CH2}), 1234 (vc-o), 1168 (v_{C-N}), 1131 (vc-o), 1027 (δ_{>CH2}), 944 (γc=c). GPC: Mₙ = 13,901 Da; PDI = 2,15.

### Synthesebeispiel 10: Synthese des Zähigkeitsmodifikators TNM6.

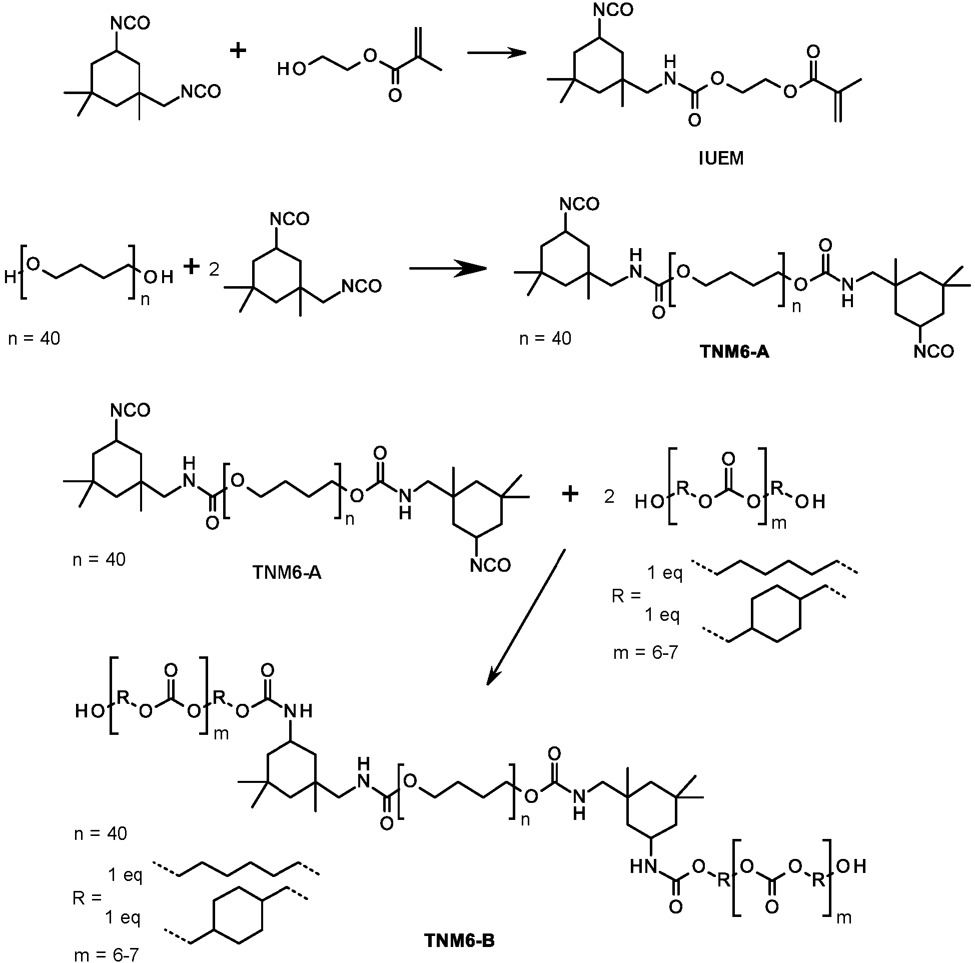

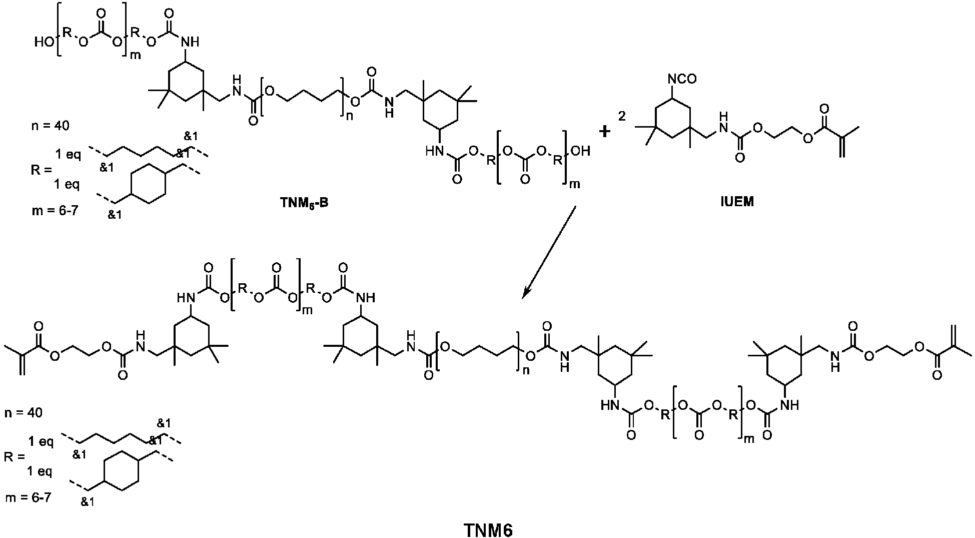

Für diese Synthese wurden 2900 Da Polytetrahydrofuran, Isophorondiisocyanat, gemischtes Cyclohexancarbonat-Hexamethylencarbonat-Diol UBE Eternacoll UM-90 (1/1) und 2-Hydroxyethylmethacrylat eingesetzt. Zuerst erfolgte die Synthese der Isocyanoisophoronurethanethylmethacrylat-Verbindung, **IUEM,** durch Vermischen von 2,6 g 2-Hydroxyethylmethacrylat (M=130,14 g/mol, 0,02 mol) und 4,45 g Isophorondiisocyanat (M=222,3 g/mol, 0,02 mol) bei 40 °C für 2 h. Die Reaktion wurde unter Verwendung von ATR-IR-Spektroskopie und ¹H-NMR überwacht.

Die Synthese des **TNM6-A**-Vorläufers erfolgte durch Umsetzung von 29 g Polytetrahydrofuran (M_{avg}=2900 g/mol, 0,01 mol) mit 4,45 g Isophorondiisocyanat (M= 222,3 g/mol, 0,02 mol) bei 90°C unter Argon-Atmosphäre. Die Reaktion wurde unter Verwendung von ATR-IR Spektroskopie überwacht und war nach etwa 3 h vollständig.

Nachdem **TNM6-A** gebildet worden war, wurden 18 g Polycarbonatdiol UBE Eternacoll UM-90 (1/1) (M_{avg}=900 g/mol, 0,02 mol) in 40 ml destilliertem Chloroform bei 25 °C zu dem Gemisch zugesetzt und dann wurde das Gemisch auf 60 °C erhitzt und 29 mg Dibutylzinndilaurat (500 ppm) wurden als Katalysator zugesetzt. Die Reaktionslösung wurde gerührt und die Bildung von **TNM6-B** wurde anhand des Verschwindens der Isocyanat-Peaks im ATR-IR-Spektrum (nach etwa 3 h) beurteilt. Sobald das gesamte Isocyanat mit dem Polycarbonatdiol umgesetzt war, wurden 7,05 g **IUEM** (2 Äqu.) zu dem Gemisch zugesetzt und bei 40 °C umgesetzt. Die Vollständigkeit wurde mittels ATR-IR-Spektrum bestimmt. Nach Abdampfen des Chloroforms wurden 29 mg BHT-Inhibitor (500 ppm) zugesetzt und das farblose, viskos-flüssige Produkt **TNM6** im Vakuum getrocknet. ¹H-NMR (CDCl₃, 200 MHz, δ, ppm): 6,09 (d, 2H, 2x >C=C**H₂**, cis), 5,55 (d, 2H, 2x >C=C**H₂**, trans), 4,78 (s, 4H, 4x CH-N**H**-), 4,52 (s, 4H, 4x CH₂-N**H**-), 4,27 (m, 8H, 2x -O-C**H₂**-C**H₂**-O-), 4,08-3,73 (m, 54H, O=C-O-C**H₂**-),3,36 (s, 156H, -C**H₂**-O-C**H₂**-), 3,19 (s, 4H, 4x OCO-NH-C**H**<), 2,86 (s, 8H, 4x OCO-NH-C**H₂**-), 1,90 (s, 6H, 2x C**H**₂=C-C**H** ₃), 1,79-0,68 (m, 308H, >C**H**2, -C**H**2-, >C**H**-, >CH-C**H**₃). IRneat (cm⁻¹): 3329 (v_{N-H}), 2942 (v_{C-H}), 2855 (v_{C-H}), 2796 (v_{C-H}), 1743 (vc=o), 1720 (vc=o), 1639 (vc=c), 1529 (δ_{NH}), 1449 (δ_{CH3}), 1366 (δ_{CH2}), 1246 (vc-o), 1104 (vc-o), 1045 (δ_{>CH2}), 955 (γc=c). GPC: Mₙ: 6,434 Da; PDI=2,79

### Synthesebeispiel 11: Synthese des Reaktivverdünners RD1.

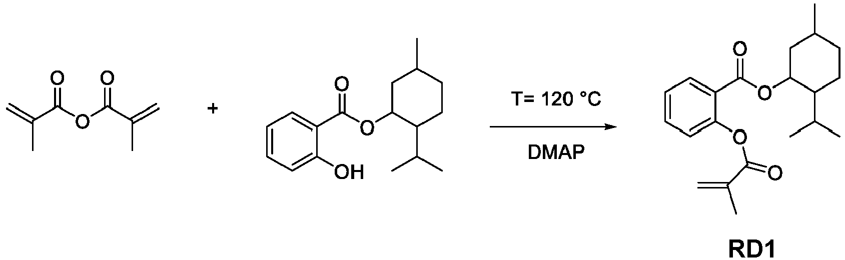

5,55 g Menthylsalicylat (20 mmol) wurden zusammen mit 5,27 g Methacrylsäureanhydrid (34 mmol) und 0,12 g 4-Dimethylaminopyridin (1 mmol, DMAP) in einen 50 ml fassenden Rundkolben gefüllt. Der Kolben wurde mit Ar gespült, auf 120 °C (Ölbadtemperatur) erhitzt und 24 h lang gerührt. Der Umsatz wurde durch DC überwacht. Sobald dieser vollständig war, wurden restliches Methacrylsäureanhydrid sowie Nebenprodukte im Vakuum abdestilliert. Dann wurde das Rohprodukt mittels Säulenchromatographie (PE:EE = 6:1) gereinigt, um 5,67 g (83 %) **RD1,** Menthylsalicylatmethacrylat, zu erhalten, das unter Verwendung von 250 ppm 3,5-Di-tert-butyl-4-hydroxytoluol (BHT) stabilisiert wurde. ¹H-NMR (CDCl₃, 200 MHz, δ, ppm): 8,01 (d, 1H; Ar-H), 7,52 (t, 1H; Ar-H), 7,29 (t, 1H; Ar-H), 7,29 (d, 1H; Ar-H), 6,39 (d, 1H; =CH₂), 5,78 (d, 1H; =CH₂), 4,87 (q, 1H; COO-CH), 2,08 (s, 3H; CH₂=CH₂-CH₃), 1,93-1,00 (m, 9H) 0,84 (d, 6H; (CH₂)₂-CH-(CH₃)₂), 0,75 (d, 3H; (CH₂)₂-CH-CH₃). APT-NMR (CDCl₃, 50,3 MHz, δ, ppm): 165,7 (C4, CO), 164,2 (C4, CO), 150,6 (C4), 135,7 (C4), 133,4 (C1), 131,7 (C1), 128,9 (C4), 127,4 (C2), 125,9 (C1), 123,8 (C1), 74,9 (C1), 47,1 (C1), 40,8 (C2), 34,3 (C2), 31,4 (C1), 26,1 (C1), 23,3 (C2), 22,0 (C3), 20,8 (C3), 18,4 (C3), 16,1 (C3).

### Beispiel 1: Herstellung von härtbaren Zusammensetzungen

Härtbare Zusammensetzungen gemäß der vorliegenden Offenbarung wurden hergestellt, indem die erfindungsgemäßen Komponenten A bis C, gegebenenfalls unter Erhitzen derselben und gegebenenfalls unter Beimengung weiterer Komponenten, ausgewählt aus einem weiteren Verdünner und Core-Shell-Partikeln, vermischt wurden. Letztere dienen als zusätzliche Zähigkeitsmodifikatoren, d.h. zur weiteren Erhöhung der Zähigkeit des aus der jeweiligen Zusammensetzung erhaltenen Polymerisats. Genauer gesagt wurden in den Zusammensetzungen (**1**) bis (**15**) die folgenden Komponenten in den in der nachstehenden Tabelle 1 angeführten Bereichen vermischt.

**Tabelle 1: Zusammensetzung der härtbaren Zusammensetzungen (1) bis (15)**

| Komponente | Zusammensetzungsbereiche (Gew.-%) |
|---|---|
| Komponente A: (erster) Glasübergangstemperaturmodifikator, TGM | 20-50 |
| Komponente B: (erster) Zähigkeitsmodifikator, TNM | 25-50 |
| Komponente C: (erster) Reaktivverdünner | 10-40 |
| Komponente A: zweiter Glasübergangstemperaturmodifikator, TGM | 0-30 |
| Komponente B: zweiter Zähigkeitsmodifikator, TNM | 0-50 |
| Komponente C: zweiter Reaktivverdünner | 0-15 |
| Zusätzliche Komponente: Core-Shell-Partikel | 0-5 |

Die so erhaltenen Zusammensetzungen wurden auf eine Verarbeitungstemperatur von 90 °C bzw. 110 °C erhitzt und ihre Scherviskosität bei diesen Temperaturen wurde unter Verwendung eines modularen kompakten Rheometers von Anton Paar, MCR 300, bestimmt.

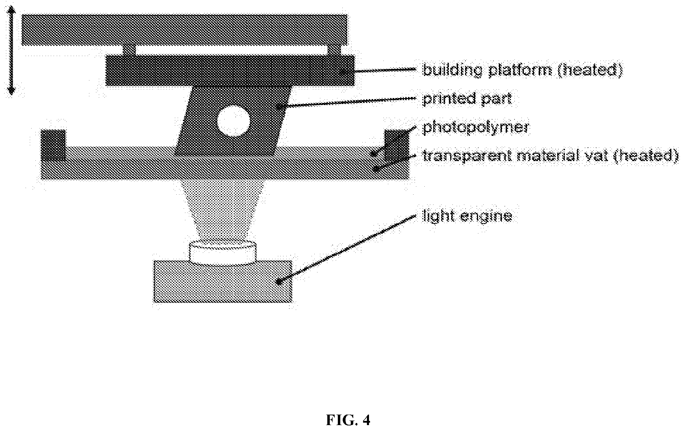

Anschließend wurden die Zusammensetzungen jeweils in einem 3D-Druckverfahren unter Verwendung eines Hot-Lithography-Vorrichtungsprototyps von Cubicure (Wien, Österreich), der im Wesentlichen wie in Fig. 4 schematisch dargestellt konfiguriert war, gehärtet. Zu diesem Zweck wurde eine härtbare Zusammensetzung gemäß dem ersten Aspekt der vorliegenden Offenbarung, wie in den folgenden Beispielen definiert, in die transparente Materialwanne der in Fig. 4 gezeigten Vorrichtung gefüllt und die Wanne auf 90-110 °C erhitzt. Die Bauplattform wurde ebenfalls auf 90-110 °C erhitzt und abgesenkt, um einen vollflächigen Kontakt mit der oberen Oberfläche der härtbaren Zusammensetzung herzustellen. Durch Bestrahlung der Zusammensetzung mit UV-Strahlung mit 375 nm unter Verwendung eines Diodenlasers von Soliton mit einer Ausgabeleistung von 70 mW, die so gesteuert wurde, dass ein vorgegebenes Prototypendesign nachgezeichnet wurde, und alternierendes Anheben der Bauplattform wurde die Zusammensetzung durch ein Photopolymerisationsverfahren gemäß dem zweiten Aspekt der Offenbarung Schicht für Schicht gehärtet, was ein vernetztes Polymer gemäß dem dritten Aspekt der vorliegenden Offenbarung ergab.

### Beispiel 2: Herstellung der härtbaren Zusammensetzungen (1) bis (3).

Die folgenden Komponenten wurden in den in Tabellen 2 bis 4 angegebenen Verhältnissen vermischt, um die härtbaren Zusammensetzungen (**1**) bis (**3**) zu erhalten:

**Tabelle 2: Zusammensetzung (1)**

| Härtbare Zusammensetzung 1 | Zusammensetzung (Gew.-%) | Komponente |
|---|---|---|
| Komponente A: Glasübergangsmodifikator | 42,5 | **TGM1** |
| Komponente B: Zähigkeitsmodifikator | 50 | **TNM1** |
| Komponente C: Reaktivverdünner | 7,5 | **RD2*** |

| | | |
|---|---|---|
| * RD2: Triethylenglykoldimethacrylat (TEGDMA), erstanden von Sigma Aldrich | | |

**Tabelle 3: Zusammensetzung (2)**

| Härtbare Zusammensetzung 2 | Zusammensetzung (Gew.-%) | Komponente |
|---|---|---|
| Komponente A: Glasübergangsmodifikator | 34 | **TGM1** |
| Komponente B: Zähigkeitsmodifikator | 30 | **TNM1** |
| Komponente C: Reaktivverdünner 1 | 30 | **RD1** |
| Komponente C: Reaktivverdünner 2 | 6 | **RD2** |

**Tabelle 4: Zusammensetzung (3)**

| Härtbare Zusammensetzung 3 | Zusammensetzung (Gew.-%) | Komponente |
|---|---|---|
| Komponente A: Glasübergangsmodifikator | 39 | **TGM1** |
| Komponente B: Zähigkeitsmodifikator | 38 | **TNM2** |
| Komponente C: Reaktivverdünner 1 | 15 | **RD1** |
| Komponente C: Reaktivverdünner 2 | 7 | **RD2** |

Die nachstehende Tabelle 5 gibt die Viskositäten der härtbaren Zusammensetzungen (**1**) bis (**3**) sowie die relevantesten Eigenschaften der unter Anwendung von Hot Lithography daraus erhaltenen vernetzten Polymere und die erwünschten Bereiche für jede Eigenschaft an.

Die Werte der jeweiligen Eigenschaften wurden unter Anwendung der folgenden Verfahren bestimmt:
Scherviskosität: Rheometer MCR 301 von Anton Paar, rheologische Messung im Rotationsmodus (PP-25, 50 s-1, 50-115°C, 3 °C/min);
Zugeigenschaften: Zugprüfvorrichtung RetroLine Z050 von Zwick Roell;
Thermomechanische Eigenschaften: DMA 2980 von TA Instruments, Testverfahren: 3-Punkt-Biegung (-50°C bis 110°C, 3°C/min, 1 Hz, Amplitude 10 µm, statische Kraft 0,5 N);
Spannungsrelaxationseigenschaften: RSA-G2 von TA Instruments, Testverfahren: 3-Punkt-Biegung, 2 % Belastung);
Zugfestigkeit bei der Streckgrenze: gemäß ISO 527-2 5B;
Streckgrenzendehnung: gemäß ISO 527-2 5B;
Bruchdehnung: gemäß ISO 527-2 5B, gegebenenfalls mit einer Kreuzkopf-Geschwindigkeit von 5 mm/min;
Zugmodul: gemäß ISO 527-2 5B;
T_{g} (°C): tanδ-Peak;
Speichermodul bei 37°C (MPa): siehe oben;
Spannungsrelaxation bei 37°C und 100 % RH (%): Restlast nach 2 h; und
Spannungsrelaxation bei 37°C und 100 % RH (MPa): Restlast nach 2 h.

**Tabelle 5: Ergebnisse der Zusammensetzungen (1) bis (3)\**

| **Eigenschaften** | **Erwünschter Bereich** | **(1)** | **(2)** | **(3)** |
|---|---|---|---|---|
| Viskosität der Formulierung | 1 <x<70 Pa.s bei 90°C | 182 Pa.s | 16,0 Pa·s | 45 Pa s |
| | bei 11 0°C | 68 Pa s | 7,5 Pa·s | 16 Pa·s |

| | | Polymer 1 | Polymer 2 | Polymer 3 |
|---|---|---|---|---|
| Zugfestigkeit bei der Streckgrenze (MPa) | > 25 MPa, vorz. > 40 MPa | 43,1 | 46,0 | 43,3 |
| Streckgrenzendehnung (%) | > 5 % | 6 | 6 | 7 |
| Bruchdehnung (%) | > 20 %, vorz. > 30 % | 31,1 | 30 | 35,2 |
| Zugmodul (MPa) | > 800 MPa, vorz. > 1000 MPa | 867 | 1050 | 943 |
| T_{g} (°C) | > 90°C, vorz. > 100°C | >120* | 147 | 134 |
| Speichermodul (MPa) | > 750 MPa, vorz. > 1000 MPa | 830 | 1330 | 1350 |
| Spannungsrelaxation (% der Anfangslast) | > 20 %, vorz. > 35 % | 35,6 | 40,4 | 37,3 |
| Spannungsrelaxation (MPa) | > 2 MPa, vorz. ≥ 3 MPa | 3,9 | 10,5 | 7,6 |

| | | | | |
|---|---|---|---|---|
| *: Näherungswert (Probe brach bei einer Temperatur über 105 °C) | | | | |

Tabelle 5 zeigt, dass die 3D-gedruckten Photopolymere, die aus den härtbaren Zusammensetzungen (**1**) bis (**3**) erhalten wurden, sehr gute Eigenschaften aufwiesen, wobei fast alle innerhalb der erwünschten Bereiche lagen und der Großteil innerhalb der bevorzugten Bereiche lagen. Insbesondere wiesen alle drei Polymere eine hohe Zugfestigkeit > 40 MPa, eine hohe T_{g} > 120 °C und eine hohe Bruchdehnung > 30 % auf. Die Zähigkeitsmodifikatoren **TNM1** und **TNM2** sorgten für die besten festigenden Wirkungen aller getesteter Zähigkeitsmodifikatoren, was zu hohen Bruchdehnungen führte, wobei die hohen Zugfestigkeits- und T_{g}-Werte beibehalten wurden. Aufgrund der relativ hohen Viskositäten von **TNM1** und **TNM2** (Mw > 13 kDa) wurden Reaktivverdünner (< 10 Gew.-%) zu den Formulierungen zugesetzt, um verarbeitbare Formulierungen zu erhalten. Durch einen Vergleich zwischen (**1**) und (**2**) wird deutlich, dass größere Mengen an Reaktivverdünnern besser verarbeitbare Formulierungen (mit Viskositäten < 20 Pa s bei 90 °C) ergaben, die die erforderlichen mechanischen Eigenschaften beibehielten.

### Beispiel 3: Herstellung der härtbaren Zusammensetzungen (4) bis (6).

Die folgenden Komponenten wurden in den in Tabellen 6 bis 8 angegebenen Verhältnissen vermischt, um die härtbaren Zusammensetzungen (**4**) bis (**6**) zu erhalten:

**Tabelle 6: Zusammensetzung (4)**

| Härtbare Zusammensetzung 4 | Zusammensetzung (Gew.-%) | Komponente |
|---|---|---|
| Komponente A: Glasübergangsmodifikator | 24,5 | **TGM1** |
| Komponente B: Zähigkeitsmodifikator | 30 | **TNM1** |
| Komponente C: Reaktivverdünner 1 | 40 | **RD1** |
| Komponente C: Reaktivverdünner 2 | 4,5 | **RD2** |

**Tabelle 7: Zusammensetzung (5)**

| Härtbare Zusammensetzung 5 | Zusammensetzung (Gew.-%) | Komponente |
|---|---|---|
| Komponente A: Glasübergangsmodifikator | 42,5 | **TGM1** |
| Komponente B: Zähigkeitsmodifikator | 50 | **TNM2** |
| Komponente C: Reaktivverdünner | 7,5 | **RD2** |

**Tabelle 8: Zusammensetzung (6)**

| Härtbare Zusammensetzung 6 | Zusammensetzung (Gew.-%) | Komponente |
|---|---|---|
| Komponente A: Glasübergangsmodifikator | 30,5 | **TGM1** |
| Komponente B: Zähigkeitsmodifikator | 50 | **TNM2** |
| Komponente C: Reaktivverdünner 1 | 15 | **RD1** |
| Komponente C: Reaktivverdünner 2 | 4,5 | RD2 |

Die nachstehende Tabelle 9 gibt die Viskositäten der härtbaren Zusammensetzungen (**4**) bis (**6**) sowie die relevantesten Eigenschaften der unter Anwendung von Hot Lithography daraus erhaltenen vernetzten Polymere und die erwünschten Bereiche für jede der Eigenschaften an.

**Tabelle 9: Ergebnisse der Zusammensetzungen (4) bis (6)**

| **Eigenschaft** | **Erwünschter Bereich** | **(4)** | **(5)** | **(6)** |
|---|---|---|---|---|
| Viskosität der Formulierung | 1 <x<70 Pa s bei 90°C | 13,4 Pa·s | 78,6 Pa·s | 55,6 Pa·s |
| | bei 110°C | 4,3 Pa·s | 28,4 Pa·s | 21,4 Pa·s |

| | | Polymer 4 | Polymer 5 | Polymer 6 |
|---|---|---|---|---|
| Zugfestigkeit bei der Streckgrenze (MPa) | > 25 MPa, vorz. > 40 MPa | 26,4 | 35,5 | 36,3 |
| Streckgrenzendehnung (%) | > 5 % | 6 | 7 | 6 |
| Bruchdehnung (%) | > 20 %, vorz. > 30 % | 58,7 | 42,6 | 81,6 |
| Zugmodul (MPa) | > 800 MPa, vorz. > 1000 MPa | 601 | 519 | 481 |
| T_{g} (°C) | > 90°C, vorz. > 100°C | 131 | 122 | 127 |
| Speichermodul (MPa) | > 750 MPa, vorz. > 1000 MPa | 1140 | 805 | 780 |
| Spannungsrelaxation (% der Anfangslast) | > 20 %, vorz. > 35 % | 22,3 | 24,1 | 24,7 |
| Spannungsrelaxation (MPa) | > 2 MPa, vorz. ≥ 3 MPa | 3,6 | 2,3 | 2,8 |

Tabelle 9 zeigt, dass die Photopolymere, die aus den härtbaren Zusammensetzungen (**4**) bis (**6**) erhalten wurden, erwünschte Werte für Zugfestigkeit, Streckgrenzendehnung, Speichermodul und Spannungsrelaxation aufwiesen, niedrigere Werte für Zugmodul aufwiesen und sehr gute Ergebnisse für die Bruchdehnung und T_{g} erzielten. Die erhaltenen Polymere wiesen höhere Bruchdehnungen auf, als **TNM2** statt **TNM1** verwendet wurde, was wahrscheinlich auf die flexibleren aliphatischen Strukturen im Gegensatz zu den starreren cycloaliphatischen Gruppierungen in **TNM1** (vgl. Zusammensetzungen (**1**) und (**5**)) zurückzuführen ist. Weiters führten größere Mengen an Reaktivverdünnern zu erhöhten Bruchdehnungen, was aus einem Vergleich der Zusammensetzungen (**2**) und (**4**) hervorgeht. Beide Strategien führten zu niedrigeren Zugfestigkeiten und -modulen. Allerdings machten große Mengen an **TNM2** (Zusammensetzungen (**5**) und (**6**)) das Verarbeiten der Harze schwieriger, vermutlich aufgrund der höheren Viskosität.

### Beispiel 4: Herstellung der härtbaren Zusammensetzungen (7) und (8).

Die folgenden Komponenten wurden in den in den Tabellen 10 und 11 angegebenen Verhältnissen vermischt, um die härtbaren Zusammensetzungen (7) und (8) zu erhalten:

**Tabelle 10: Zusammensetzung (7)**

| Härtbare Zusammensetzung 7 | Zusammensetzung (Gew.-%) | Komponente |
|---|---|---|
| Komponente A: Glasübergangsmodifikator | 30 | **TGM1** |
| Komponente B: Zähigkeitsmodifikator | 40 | **TNM2** |
| Komponente C: Reaktivverdünner | 30 | **RD1** |

**Tabelle 11: Zusammensetzung (8)**

| Härtbare Zusammensetzung 8 | Zusammensetzung (Gew.-%) | Komponente |
|---|---|---|
| Komponente A: Glasübergangsmodifikator | 30 | **TGM1** |
| Komponente B: Zähigkeitsmodifikator | 40 | **TNM2** |
| Komponente C: Reaktivverdünner | 30 | **RD1** |
| Zusätzliche Komponente: Core-Shell-Partikel | +5 | Albidur EP XP* |

| | | |
|---|---|---|
| * Albidur EP XP-Pulver (Core-Shell-Partikel) ist im Handel erhältlich von TEGO^{®}. | | |

Die nachstehende Tabelle 12 gibt die Viskositäten der härtbaren Zusammensetzungen (**7**) und (**8**) sowie die relevantesten Eigenschaften der vernetzten Polymere, die unter Anwendung von Hot Lithography daraus erhalten wurden, und die erwünschten Bereiche für jede der Eigenschaften an.

**Tabelle 12: Ergebnisse der Zusammensetzungen (7) und (8)**

| **Eigenschaft** | **Erwünschter Bereich** | **(7)** | **(8)** |
|---|---|---|---|
| Viskosität der Formulierung | 1 <x<70 Pa s bei 90°C | 5,4 Pa·s | 7,8 Pa·s |
| | bei 11 0°C | 1,9 Pa·s | 2,7 Pa·s |

| | | Polymer 7 | Polymer 8 |
|---|---|---|---|
| Zugfestigkeit bei der Streckgrenze (MPa) | > 25 MPa, vorz. > 40 MPa | 33,0 | 31,0 |
| Streckgrenzendehnung (%) | > 5 % | 7 | 7 |
| Bruchdehnung (%) | > 20 %, vorz. > 30 % | 47,1 | 65,2 |
| Zugmodul (MPa) | > 800 MPa, vorz. > 1000 MPa | 608 | 567 |
| T_{g} (°C) | > 90°C, vorz. > 100°C | 105 | 102 |
| Speichermodul (MPa) | > 750 MPa, vorz. > 1000 MPa | 1180 | 1070 |
| Spannungsrelaxation (% der Anfangslast) | > 20 %, vorz. > 35 % | 14,2 | 12,3 |
| Spannungsrelaxation (MPa) | > 2 MPa, vorz. ≥ 3 MPa | 1,8 | 1,0 |

**Tabelle** 12 zeigt, dass die Gegenwart eines relativ großen Anteils an Reaktivverdünner **RD1** und der Zusatz von Albidur XP-Pulver als zusätzlicher Zähigkeitsmodifikator erwünschte Werte für Zugfestigkeit, Streckgrenzendehnung und Bruchdehnung ergab. Allerdings waren die Ergebnisse für Speichermodul und Spannungsrelaxation weniger wünschenswert. Die Zugabe von Albidur EP XP-Pulver zu (**8**) führte zu einer erhöhten Bruchdehnung von > 65 % im Vergleich zu (**7**) ohne Core-Shell-Partikel (47 %), wobei bei allen anderen mechanischen Eigenschaften ähnliche Werte beibehalten wurden.

### Beispiel 5: Herstellung der härtbaren Zusammensetzungen (9) und (10).

Die folgenden Komponenten wurden in den in den Tabellen 13 und 14 angegebenen Verhältnissen vermischt, um die härtbaren Zusammensetzungen (**9**) und (**10**) zu erhalten:

**Tabelle 13: Zusammensetzung (9)**

| Härtbare Zusammensetzung 9 | Zusammensetzung (Gew.-%) | Komponente |
|---|---|---|
| Komponente A: Glasübergangsmodifikator | 42,5 | **TGM1** |
| Komponente B: Zähigkeitsmodifikator | 35 | **TNM5** |
| Komponente C: Reaktivverdünner | 22,5 | **RD2** |

**Tabelle 14: Zusammensetzung (10)**

| Härtbare Zusammensetzung 10 | Zusammensetzung (Gew.-%) | Komponente |
|---|---|---|
| Komponente A: Glasübergangsmodifikator | 30 | **TGM1** |
| Komponente B: Zähigkeitsmodifikator | 40 | **TNM5** |
| Komponente C: Reaktivverdünner 1 | 13 | **RD1** |
| Komponente C: Reaktivverdünner 2 | 17 | **RD2** |

Die nachstehende Tabelle 15 gibt die Viskositäten der härtbaren Zusammensetzungen (**9**) und (**10**) sowie die relevantesten Eigenschaften der vernetzten Polymere, die unter Anwendung von Hot Lithography daraus erhalten wurden, und die erwünschten Bereiche für jede der Eigenschaften an.

**Tabelle 15: Ergebnisse der Zusammensetzungen (9) und (10)**

| **Eigenschaft** | **Erwünschter Bereich** | **(9)** | **(10)** |
|---|---|---|---|
| Viskosität der Formulierung | 1 <x<70 Pa s bei 90°C | 6,3 Pa s | 8,5 Pa.s |
| | bei 11 0°C | 1,9 Pa·s | 2,6 Pa.s |

| | | Polymer 9 | Polymer 10 |
|---|---|---|---|
| Zugfestigkeit bei der Streckgrenze (MPa) | > 25 MPa, vorz. > 40 MPa | 78,9 | 66,0 |
| Streckgrenzendehnung (%) | > 5 % | * | 7 |
| Bruchdehnung (%) | > 20 %, vorz. > 30 % | 7,6 | 14,6 |
| Zugmodul (MPa) | > 800 MPa, vorz. > 1000 MPa | 1740 | 1530 |
| T_{g}(°C) | >90°C, vorz. > 100°C | 125 | 113 |
| Speichermodul (MPa) | > 750 MPa, vorz. > 1000 MPa | 2540 | 2600 |
| Spannungsrelaxation (% der Anfangslast) | > 20 %, vorz. > 35 % | 9,2 | 3,6 |
| Spannungsrelaxation (MPa) | > 2 MPa, vorz. ≥ 3 MPa | 7,5 | 3,0 |

| | | | |
|---|---|---|---|
| *: Probe brach, bevor die Streckgrenze erreicht wurde | | | |

Tabelle 15 zeigt, dass die aus den Zusammensetzungen (**9**) und (**10**) erhaltenen Polymere bezüglich der meisten der angeführten Eigenschaften, abgesehen von Bruchdehnung und Spannungsrelaxation, ausgezeichnete Ergebnisse erzielten. Ohne sich auf eine bestimmte Theorie festlegen zu weollen, vermuten die Erfinder, dass dies auf den höheren Gehalt an starren cycloaliphatischen Strukturen (von Isophorondiisocyanat stammend) in **TNM5** im Vergleich zu **TNM1** und **TNM2** zurückzuführen ist.

### Beispiel 6: Herstellung der härtbaren Zusammensetzungen (11) und (12).

Die folgenden Komponenten wurden in den in den Tabellen 16 und 17 angegebenen Verhältnissen vermischt, um die härtbaren Zusammensetzungen (**11**) und (**12**) zu erhalten:

**Tabelle 16: Zusammensetzung (11)**

| Härtbare Zusammensetzung 11 | Zusammensetzung (Gew.-%) | Komponente |
|---|---|---|
| Komponente A: Glasübergangsmodifikator | 23 | **TGM1** |
| Komponente B: Zähigkeitsmodifikator | 47 | **TNM3** |
| Komponente C: Reaktivverdünner | 30 | **RD1** |

**Tabelle 17: Zusammensetzung (12)**

| Härtbare Zusammensetzung 12 | Zusammensetzung (Gew.-%) | Komponente |
|---|---|---|
| Komponente A: Glasübergangsmodifikator | 23 | **TGM1** |
| Komponente B: Zähigkeitsmodifikator | 47 | **TNM4** |
| Komponente C: Reaktivverdünner | 30 | **RD1** |

Die nachstehende Tabelle 18 gibt die Viskositäten der härtbaren Zusammensetzungen (**11**) und (**12**) sowie die relevantesten Eigenschaften der vernetzten Polymere, die unter Anwendung von Hot Lithography daraus erhalten wurden, und die erwünschten Bereiche für jede der Eigenschaften an.

**Tabelle 18: Ergebnisse der Zusammensetzungen (11) und (12)**

| **Eigenschaft** | **Erwünschter Bereich** | **(11)** | **(12)** |
|---|---|---|---|
| Viskosität der Formulierung | 1 <x<70 Pa s bei 90°C | 9,2 Pa·s | 7,1 Pa·s |
| | bei 11 0°C | 2,1 Pa·s | 2,0 Pa·s |
| | | Polymer 11 | Polymer 12 |
| Zugfestigkeit bei der Streckgrenze (MPa) | > 25 MPa, vorz. > 40 MPa | 28,3 | 24,1 |
| Streckgrenzendehnung (%) | > 5 % | 8 | 7 |
| Bruchdehnung (%) | > 20 %, vorz. > 30 % | 77,9 | 80,5 |
| Zugmodul (MPa) | > 800 MPa, vorz. > 1000 MPa | 541 | 389 |
| T_{g}(°C) | >90°C, vorz. > 100°C | 107 | 111 |
| Speichermodul (MPa) | > 750 MPa, vorz. > 1000 MPa | 1110 | 1010 |
| Spannungsrelaxation (% der Anfangslast) | > 20 %, vorz. > 35 % | 9,7 | 12,8 |
| Spannungsrelaxation (MPa) | > 2 MPa, vorz. ≥ 3 MPa | 0,79 | 1,24 |

Tabelle 18 zeigt, dass die Zusammensetzungen (**11**) und (**12**) zu Polymeren führten, die erwünschte Werte für Zugfestigkeit, Streckgrenzen- und Bruchdehnung, T_{g} und Speichermodul, aber weniger erwünschte Werte für Zugmodul und Spannungsrelaxation aufwiesen. Weiters zeigt sie, dass der Austausch des in (**11**) verwendeten Zähigkeitsmodifikators **TNM3** durch den in (**12**) verwendeten **TNM4,** wodurch die Kettenlänge des Polycarbonatdiols auf Basis von 2,2-Dimethyl-1,3-propandiol annähernd verdoppelt wurde, wobei aber die Verhältnisse der Komponenten A bis C beibehalten wurden, zu Polymereigenschaften führte, die mit jenen von (**11**) vergleichbar waren. Wie zu erwarten war, übertrifft die Bruchdehnung jene aus (**1**) bis (**3**). Ohne sich auf eine bestimmte Theorie festlegen zu wollen, vermuten die Erfinder, dass der Grund dafür, dass die Werte für Zugfestigkeit, Zugmodul und T_{g} nicht die bevorzugten Bereiche erreichten, darin liegt, dass in **TNM3** und **TNM4** keine starren cycloaliphatischen Strukturen vorhanden sind.

### Beispiel 7: Herstellung der härtbaren Zusammensetzung (13).

Die folgenden Komponenten wurden in den in Tabelle 19 angegebenen Verhältnissen vermischt, um die härtbare Zusammensetzung (**13**) zu erhalten:

**Tabelle 19: Zusammensetzung (13)**

| Härtbare Zusammensetzung 13 | Zusammensetzung (Gew.-%) | Komponente |
|---|---|---|
| Komponente A: Glasübergangsmodifikator | 28 | **TGM1** |
| Komponente B: Zähigkeitsmodifikator | 67 | **TNM6** |
| Komponente C: Reaktivverdünner | 5 | **RD1** |

Die nachstehende Tabelle 20 gibt die Viskositäten der härtbaren Zusammensetzung (**13**) sowie die relevantesten Eigenschaften des vernetzten Polymers, das unter Anwendung von Hot Lithography daraus erhalten wurde, und die erwünschten Bereiche für jede der Eigenschaften an.

**Tabelle 20: Ergebnisse der Zusammensetzung (13)**

| **Eigenschaften** | **Erwünschter Bereich** | **(13)** |
|---|---|---|
| Viskosität der Formulierung | 1 <x<70 Pa s bei 90°C | 37,0 Pa·s |
| | bei 11 0°C | 12,2 Pa·s |
| | | Polymer 13 |
| Zugfestigkeit bei der Streckgrenze (MPa) | > 25 MPa, vorz. > 40 MPa | 18,0 |
| Streckgrenzendehnung (%) | > 5 % | 9 |
| Bruchdehnung (%) | > 20 %, vorz. > 30 % | 16,3 |
| Zugmodul (MPa) | > 800 MPa, vorz. > 1000 MPa | 246 |
| T_{g} (°C) | > 90°C, vorz. > 100°C | 146 |
| Speichermodul (MPa) | > 750 MPa, vorz. > 1000 MPa | 495 |
| Spannungsrelaxation (% der Anfangslast) | > 20 %, vorz. > 35 % | n.e. |
| Spannungsrelaxation (MPa) | > 2 MPa, vorz. ≥ 3 MPa | n.e. |

| | | |
|---|---|---|
| n.e.: nicht ermittelt | | |

**Tabelle** 20 zeigt, dass das aus der Zusammensetzung (**13**) erhaltene Photopolymer eine sehr hohe Glasübergangstemperatur, T_{g} und die höchste Streckgrenzendehnung von allen erhaltenen Polymeren aufwies. Die restlichen gemessenen Werte waren allerdings weniger vorteilhaft. Ohne sich auf eine bestimmte Theorie festlegen zu wollen, vermuten die Erfinder, dass dies sowohl auf das relativ niedrige Molekulargewicht von < 7 kDa von **TNM6,** das in einem ungünstig großen Anteil (67 %) in der härtbaren Zusammensetzung vorhanden ist, zurückzuführen ist.

### Beispiel 8: Evaluierung der härtbaren Zusammensetzungen und der daraus erhaltenen vernetzten Polymere.

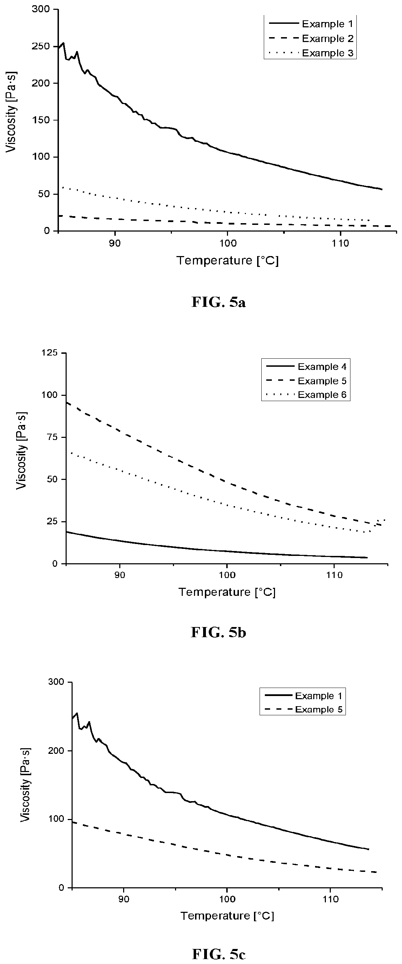

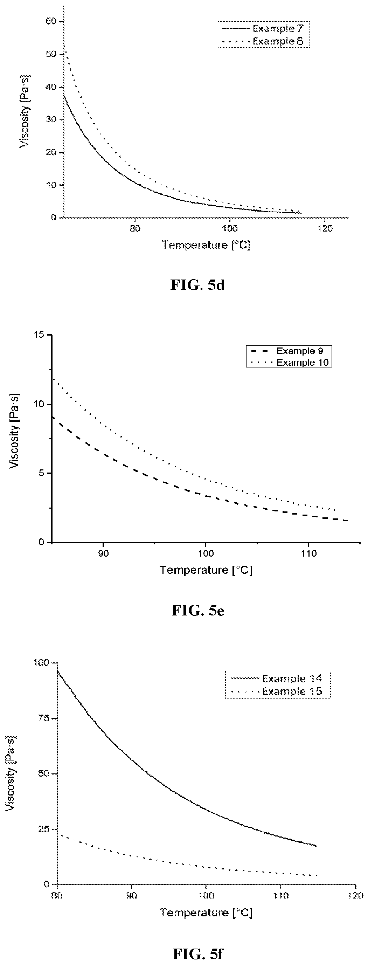

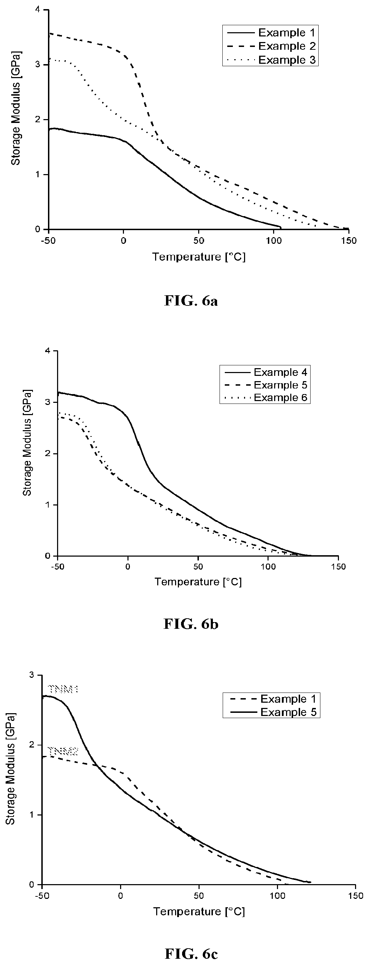

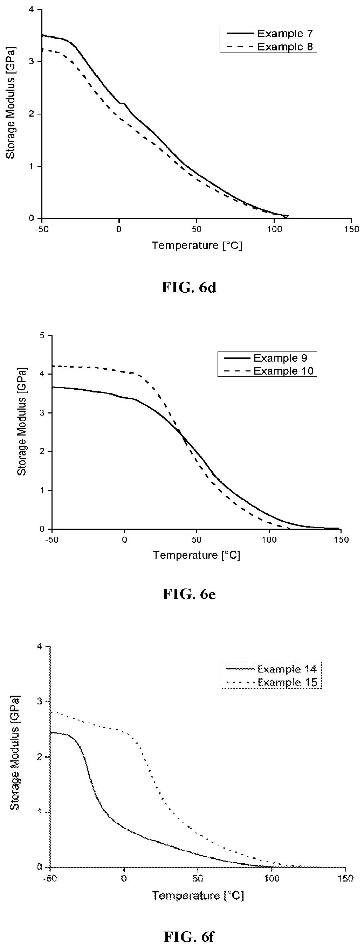

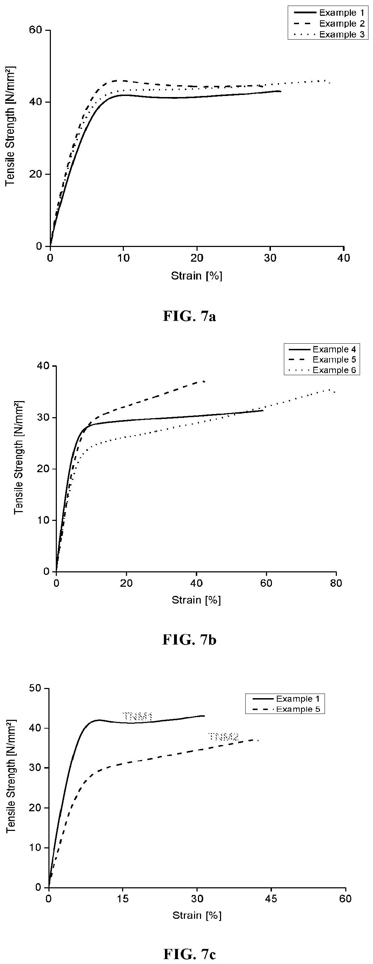

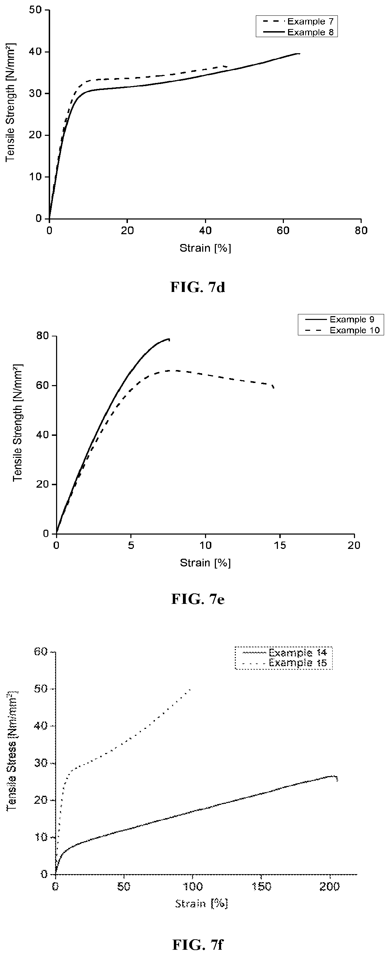

Die Figuren 5 bis 7 zeigen die Messergebnisse von Tests der härtbaren Zusammensetzungen (**1**) bis (**10**) bzw. der daraus erhaltenen vernetzten Polymere bezüglich Viskosität (Pa s) und Speichermodul (GPa) bei verschiedenen Temperaturen (°C) sowie bezüglich Zugfestigkeit (N/mm²) bei verschiedenen Belastungen (%). Diese Diagramme zeigen, dass in allen zehn Beispielen härtbare Zusammensetzungen erhalten wurden, die bei Verarbeitungstemperaturen von 90 °C oder 110 °C gut verarbeitbar waren und die vernetzte Polymere mit bevorzugten Speichermodulen bei 37 °C (d. h. Körpertemperatur), die 0,8 GPa, d. h. 800 MPa oder mehr betrugen, und bevorzugten Zugfestigkeiten bei der Streckgrenze, die 40 N/mm², d. h. 40 MPa, oder mehr betrugen, ergaben.

Auf den folgenden Seiten sind die Verhältnisse der Komponenten A bis C der härtbaren Zusammensetzungen (**1**) bis (**13**) in Tabelle 21 zusammengefasst; die Eigenschaften aller Polymere, die durch das 3D-Drucken dieser härtbaren Zusammensetzungen erhalten wurden, sind in Tabelle 22 zusammengefasst.

**Tabelle 21: Zusammenfassung der Zusammensetzungen der härtbaren Zusammensetzungen (1) bis (13)**

| **(1)** | **(2)** | **(3)** | **(4)** | **(5)** | **(6)** | **(7)** | **(8)** | **(9)** | **(10)** | **(11)** | **(12)** | **(13)** |
|---|---|---|---|---|---|---|---|---|---|---|---|---|
| 42,5 % **TGM1** | 34 % **TGM1** | 39 % **TGM1** | 24,5 % **TGM1** | 42,5 % **TGM1** | 30,5 % **TGM1** | 30 % **TGM1** | 30 % **TGM1** | 42,5 % **TGM1** | 30 % **TGM1** | 23 % **TGM1** | 23 % **TGM1** | 28 % **TGM1** |
| 50 % **TNM1** | 30 % **TNM1** | 38 % **TNM1** | 30 % **TNM1** | 50 % **TNM2** | 50 % **TNM2** | 40 % **TNM2** | 40 % **TNM2** | 35 % **TNM5** | 40 % **TNM5** | 47 % **TNM3** | 47 % **TNM4** | 67 % **TNM6** |
| 7,5 % **RD2** | 30 % **RD1** | 15 % **RD1** | 40 % **RD1** | 7,5 % **RD2** | 15 % **RD1** | 30 % **RD1** | 30 % **RD1** | 22,5 % **RD2** | 13 % **RD1** | 30 % **RD1** | 30 % **RD1** | 5% **RD1** |
| | 6% **RD2** | 7% **RD2** | 4,5 % **RD2** | | 4,5 % **RD2** | | | | 17 % **RD2** | | | |
| - | - | - | - | - | - | - | +5 % | - | - | - | - | - |

| | | | | | | | | | | | | |
|---|---|---|---|---|---|---|---|---|---|---|---|---|
| CSP: Core-Shell-Partikel Alle Prozentangaben sind in Gew.-% angegeben, bezogen auf 100 Gew.-% der Komponenten A bis C. | | | | | | | | | | | | |

**Tabelle 22: Zusammenfassung der Eigenschaften der aus (1) bis (13) erhaltenen vernetzten Polymere**

| Eig. | Bereiche | **1** | **2** | **3** | **4** | **5** | **6** | **7** | **8** | **9** | **10** | **11** | **12** | **13** | |
|---|---|---|---|---|---|---|---|---|---|---|---|---|---|---|---|
| T.S.Y. (MPa) | >25 | 43,1 | 46 | 43,3 | 26,4 | 35,5 | 36,3 | 33 | 31 | 78,9 | 66 | 28,3 | 24,1 | 18 | **Verb.** |
| | >40 | | | | | | | | | | | | | | |
| E.Y. (%) | >5 | 6 | 6 | 7 | 6 | 7 | 6 | 7 | 7 | n.d. | 7 | 8 | 7 | 9 | |
| | >6 | | | | | | | | | | | | | | A |
| E.B. (%) | >20 | 31,1 | 30 | 35,2 | 58,7 | 42,6 | 81,6 | 47,1 | 65,2 | 7,6 | 14,6 | 77,9 | 80,5 | 16,3 | |
| | >30 | | | | | | | | | | | | | | |
| T.M. (MPa) | >800 | 867 | 1050 | 943 | 601 | 519 | 481 | 608 | 567 | 1740 | 1530 | 541 | 389 | 246 | B |
| | >1000 | | | | | | | | | | | | | | |
| Tg (°C) | >90 | >120 | 147 | 134 | 131 | 122 | 127 | 105 | 102 | 125 | 113 | 107 | 111 | 146 | |
| | >100 | | | | | | | | | | | | | | |
| S.M. (MPa) | >750 | 830 | 1330 | 1350 | 1140 | 805 | 780 | 1180 | 1070 | 2540 | 2600 | 1110 | 1010 | 495 | C |
| | >1000 | | | | | | | | | | | | | | |
| S.R,1 (%) | >20 | 35,6 | 40.4 | 37,3 | 22,3 | 24,1 | 24,7 | 14,2 | 12,3 | 9,2 | 3,6 | 9,7 | 12,8 | n.d. | |
| | >35 | | | | | | | | | | | | | | |
| S.R,2 (MPa) | >2 | 3,9 | 10.5 | 7,6 | 3,6 | 2,3 | 2,8 | 1,8 | 1 | 7,5 | 3 | 0,79 | 1,24 | n.d. | |
| | ≥3 | | | | | | | | | | | | | | |
| T.S.Y.: Zugfestigkeit bei der Streckgrenze (MPa); E.Y.: Streckgrenzendehnung (%); E.B.: Bruchdehnung (%); T.M.: | | | | | | | | | | | | | | | CSP |
| Zugmodul (MPa); T_{g}: Glasübergangstemperatur (°C); S.M.: Speichermodul (MPa); S.R,1: Spannungsrelaxation (% der Anfangslast); S.R,2: Spannungsrelaxation (MPa). Die höchsten Werte aller Beispiele für die jeweilige Eigenschaft sind unterstrichen. | | | | | | | | | | | | | | | |

Aus den Zusammenfassungen der Tabellen 21 und 22 ist ersichtlich, dass (**1**) bis (**3**) die besten Ergebnisse erzielten, da alle Eigenschaften in den erwünschten Bereichen lagen und nahezu alle ((**1**) und (**3**)) oder tatsächlich alle ((**2**)) gemessenen Werte in den bevorzugten Bereichen lagen. Zusätzlich zeigte das am besten abschneidende Polymer (**2**) sogar die höchsten Werte für T_{g} (147 °C) und Spannungsrelaxation (40,4 % der Anfangslast bzw. 10,2 MPa) aller Beispiele.

In Anbetracht der Verhältnisse der Komponenten A bis C in der härtbaren Zusammensetzung von (**2**), d. h. 34 Gew.-% von Komponente A **(TGM1),** 30 Gew.-% von Komponente B (**TNM1**) und 36 Gew.-% gesamt von Komponente C, als Summe aus 30 Gew.-% von **RD1** und 6 Gew.-% von **RD2,** und von (**3**), d. h. 39 Gew.-% von Komponente A **(TGM1),** 38 Gew.-% von Komponente B **(TNM1)** und 22 Gew.-% gesamt von Komponente C, als Summe aus 15 Gew.-% von **RD1** und 7 Gew.-% von **RD2,** wie in Tabelle 21 gezeigt wird, können Fachleute darauf schließen, dass es zum Erzielen optimaler Resultate wünschenswert ist, ein ausgewogenes Verhältnis aller drei Komponenten zu finden, und dass Komponente A für hohe T_{g}- und Festigkeitswerte auf Kosten der Bruchdehnung sorgt. Komponente B ermöglicht durch eine festigende Wirkung hohe Bruchdehnung und Zähigkeit, allerdings ist es schwierig, davon große Mengen in der härtbaren Zusammensetzung zu verarbeiten, und Komponente C verbessert die Verarbeitbarkeit der Formulierungen, insbesondere jener mit großen Mengen an hochmolekularen Zähigkeitsmodifikatoren, während hohe Festigkeits- und T_{g}-Werte beibehalten werden.

Zusätzlich ist aus einem Vergleich der Ergebnisse von (**3**), (**8**) und (**10**) mit (**12**), bei denen die Zähigkeitsmodifikatoren **TNM1** bis **TNM5** in etwa vergleichbaren Mengen eingesetzt wurden, zu schließen, dass **TNM1, TNM2** und **TNM5,** die jeweils einen linearen C₆- (Hexamethylen) und/oder einen zyklischen Cs- (Cyclohexandimethylen) Rest R₄ in den Polycarbonatblöcken umfassen, deren längste Kette 6 Kohlenstoffatome umfasst, gegenüber **TNM3** und **TNM4,** die jeweils einen relativ kurzkettigen Rest R₄ (d. h. 2,2-Dimethylpropylen, dessen längste Kette nur 3 Kohlenstoffatome umfasst) umfassen, zu bevorzugen sind. Weiters sind **TNM1** und **TNM2** gegenüber dem eher starren **TNM5,** das weniger wünschenswerte Ergebnisse in Bezug auf Zähigkeit und Bruchdehnung erzielte, zu bevorzugen. Daraus können Fachleute schließen, dass die starren cycloaliphatischen Gruppierungen vorzugsweise vom Polycarbonatdiol und nicht vom Diisocyanat herrühren, da sterische Effekte die erwarteten festigende Wirkung der Harnstoffgruppen beeinträchtigen können.

Weiters ist aus den Ergebnissen von (**13**) abzuleiten, dass Polyether-modifizierte Zähigkeitsmodifikatoren wie etwa **TNM6** oder zumindest allzu hohe Anteile solcher Modifikatoren mit relativ niedrigen Molekulargewichten in der härtbaren Zusammensetzung weniger bevorzugt sind, insbesondere im Hinblick auf die mechanischen Eigenschaften der Polymere, obwohl die Glasübergangstemperatur, die mit (**13**) erzielt wurde, den zweithöchsten Wert unter allen erhaltenen Polymeren darstellt (146 °C).

Allerdings erzielte jedes der erhaltenen vernetzten Polymere gemäß der vorliegenden Offenbarung zumindest zwei (**12**) oder zumindest vier ((**10**) und (**11**)) bevorzugte Werte, was zeigt, dass die härtbaren Zusammensetzungen gemäß der vorliegenden Offenbarung zur Verwendung in einem Hochtemperatur-Photopolymerisationsverfahren auf Lithographiebasis bestens geeignet sind, um vernetzte Polymere mit erwünschten Eigenschaften herzustellen. Auf diese Weise hergestellte Polymere der vorliegenden Offenbarung sind, besonders bei Verwendung als kieferorthopädische Vorrichtungen, in der Lage, derzeit verfügbare Materialien in mehrfacher Hinsicht zu übertreffen, insbesondere im Hinblick auf ihre thermomechanischen Eigenschaften und Herstellungskosten.

### Beispiel 9: Herstellung der härtbaren Zusammensetzungen (14) und (15).

Die folgenden Komponenten wurden in den in Tabellen 23 und 24 angegebenen Verhältnissen vermischt, um die härtbaren Zusammensetzungen (**14**) und (**15**) zu erhalten:

**Tabelle 23: Zusammensetzung (14)**

| Härtbare Zusammensetzung 14 | Zusammensetzung (Gew.-%) | Komponente |
|---|---|---|
| Komponente A: Glasübergangsmodifikator | 30 | **TGM4** |
| Komponente B: Zähigkeitsmodifikator | 49 | **TNM2** |
| Komponente C: Reaktivverdünner 1 | 21 | **RD1** |

**Tabelle 24: Zusammensetzung (15)**

| Härtbare Zusammensetzung 15 | Zusammensetzung (Gew.-%) | Komponente |
|---|---|---|
| Komponente A: Glasübergangsmodifikator | 30 | **TGM4** |
| Komponente B: Zähigkeitsmodifikator | 49 | **TNM1** |
| Komponente C: Reaktivverdünner | 21 | **RD2** |

Die nachstehende Tabelle 25 gibt die Viskositäten der härtbaren Zusammensetzungen (**14**) und (1**5)** sowie die relevantesten Eigenschaften der vernetzten Polymere, die unter Anwendung von Hot Lithography daraus erhalten wurden, und die erwünschten Bereiche für jede der Eigenschaften an.

**Tabelle 25: Ergebnisse der Zusammensetzungen 14 und 15**

| **Eigenschaft** | **Erwünschter Bereich** | **(14)** | **(15)** |
|---|---|---|---|
| Viskosität der Formulierung | 1 <x<70 Pa s bei 90°C | 56,0 Pa·s | 13,0 Pa·s |
| | bei 110°C | 21,5 Pa·s | 5,0 Pa·s |

| | | Polymer 14 | Polymer 15 |
|---|---|---|---|
| Zugfestigkeit bei der Streckgrenze (MPa) | > 25 MPa, vorz. > 40 MPa | 5,6 | 26,2 |
| Streckgrenzendehnung (%) | > 5 % | 6,3 | 8,3 |
| Bruchdehnung (%) | > 20 %, vorz. > 30 % | 205 | 98 |
| Zugmodul (MPa) | > 800 MPa, vorz. > 1000 MPa | 154 | 552 |
| T_{g} (°C) | > 90°C, vorz. > 100°C | 101 | 107 |
| Speichermodul (MPa) | > 750 MPa, vorz. > 1000 MPa | 334 | 886 |
| Spannungsrelaxation (% der Anfangslast) | > 20 %, vorz. > 35 % | 6,4 | 24,1 |
| Spannungsrelaxation (MPa) | > 2 MPa, vorz. ≥ 3 MPa | 0,07 | 2,68 |

Tabelle 25 zeigt, dass die aus (**14**) und (**15**) erhaltenen Photopolymere gute Werte für Streckgrenzendehnung, Bruchdehnung und T_{g} erzielten. Die erhaltenen Polymere wiesen höhere Bruchdehnungen auf, als **TGM4** statt **TGM1** eingesetzt wurde (vgl. (**1**) bis (**13**)). Allerdings waren die Ergebnisse des **TNM2** enthaltenden Beispiels im Hinblick auf Zugfestigkeit, Speichermodul und Spannungsrelaxation weniger wünschenswert. Ohne sich auf eine bestimmte Theorie festlegen zu wollen, vermuten die Erfinder, dass der Grund für dieses Ergebnis in der geringeren Starrheit des Systems liegt. Durch die Verwendung von **TNM1** erzielte die Formulierung auch im Hinblick auf die Eigenschaften Zugfestigkeit bei der Streckgrenze und Spannungsrelaxation erwünschte Ergebnisse. Beide Beispiele wiesen einen niedrigen Zugmodul auf.

### Beispiel 10: Herstellung der härtbaren Zusammensetzungen (16) bis (22).

Die folgenden Komponenten wurden in den in Tabelle 26 angegebenen Verhältnissen vermischt, um die härtbaren Zusammensetzungen (**16**) bis (**22**) zu erhalten:

**Tabelle 26: Zusammensetzungen (16) bis (22)**

| Verb. Nr. | Glasübergangsmodifikator¹ (Gew.-%) | ZähigkeitsModifikator² (Gew.-%) | Reaktivverdünner³ (Gew.-%) | Reaktivverdünner⁴ (Gew.-%) | Additiv⁵ (Gew.-%) | Additiv⁶ (Gew.-%) | Photoinitiator⁷ (Gew.-%) |
|---|---|---|---|---|---|---|---|
| 16 | 15 | 31,5 | 40 | 13,5 | 1 | - | 0,4 |
| 17 | 15 | 31,5 | 40 | 13,5 | 1 | - | 1 |
| 18 | 15 | 31,5 | 40 | 13,5 | 0,5 | 0,5 | 0,4 |
| 19 | 15 | 31,5 | 40 | 13,5 | 0,5 | 0,5 | 1 |
| 20 | 15 | 31,5 | 40 | 13,5 | - | - | 1 |
| 21 | 15 | 31,4 | 40 | 13,5 | - | 1 | 1 |
| 22 | 15 | 31,5 | 40 | 13,5 | - | 3 | 1 |

| | | | | | | | |
|---|---|---|---|---|---|---|---|
| ¹ TGM1-RD1 (TGM1 with 30 wt% TEGDMA); ² TNM2; ³ HSMA; ⁴ Triethylenglykoldimethacrylate; ⁵ BYK^{®}-430; ⁶ BYK^{®}-A535; ⁷ TPO-L | | | | | | | |

BYK^{®}-430 ist eine Lösung von hochmolekularen, Harnstoff-modifizierten, mittelpolaren Polyamiden. Es ist anzunehmen, dass andere hochmolekulare, Harnstoffmodifizierte, mittelpolare Polyamide auf vergleichbare Weise fungieren. BYK^{®}-A535 ist eine silikonfreie Lösung, die Schaumpolymere zerstört. Es wird angenommen, dass andere Entschäumer auf vergleichbare Weise fungieren. Speedcure TPO-L von Lambson (Ethyl(2,4,6-trimethylbenzoyl)phenylphospinat) ist ein Photoinitiator, der bei 380 nm absorbiert. Vorgesehen sind andere Photoinitiatoren sowie Photoinitiatoren, die bei anderen Wellenlängen absorbieren. Die nachstehende Tabelle 27 gibt relevante Eigenschaften der unter Anwendung von Hot Lithography aus den härtbaren Zusammensetzungen (**16**) bis (**22**) erhaltenen vernetzten Polymere sowie erwünschte Bereiche für jede der Eigenschaften an.

Die jeweiligen Eingeschaftswerte der Zusammensetzungen 16 bis 62 wurden unter Anwendung der folgenden Verfahren bestimmt:
Zugfestigkeit bei der Streckgrenze: gemäß ASTM D1708;
Bruchdehnung: gemäß ASTM D1708, gegebenenfalls mit einer Kreuzkopf-Geschwindigkeit von 1,7 mm/min;
Zugfestigkeit: gemäß ASTM D1708; und
Elastizitätsmodul: gemäß ASTM D1708.

**Tabelle 27: Ergebnisse der Zusammensetzungen 16 bis 22**

| **Eigenschaft** | **Erw. Bereich** | **P16** | **P17** | **P18** | **P19** | **P20** | **P21** | **P22** |
|---|---|---|---|---|---|---|---|---|
| Zugfestigkeit bei der Streckgrenze (MPa) | >25 MPa, vorz. >40 MPa | 35 | 34 | 35 | 35 | 37 | 35 | 33 |
| Bruchdehnung (%) | >20 %, vorz. >30 % | 47,1 | 34,6 | 44,7 | 38,4 | 35,2 | 34,7 | 20,9 |
| Zugfestigkeit (MPa) | >25 MPa, vorz. >40 MPa | 40 | 36 | 40 | 40 | 42 | 40 | 35 |
| Elastizitätsmodul (MPa) | >900 MPa, vorz. >1100 MPa | 991 | 1110 | 988 | 1064 | 1195 | 1136 | 1088 |

Tabelle 27 zeigt, dass jede der Zusammensetzungen 16 bis 22 eine Zugfestigkeit bei der Streckgrenze im erwünschten Bereich aufwies. Die Zusammensetzungen 16 bis 21 ergaben auch Bruchdehnungswerte im bevorzugten Bereich, wobei Zusammensetzung 22 jedoch einen Bruchdehnungswert am unteren Rand des erwünschten Bereichs aufwies. Ohne sich auf eine bestimmte Theorie festlegen zu wollen, wird angenommen, dass die Zugabe eines Überschusses ab Additiv BYK^{®}-A535 die Bildung einer vollständigen kohäsiven Struktur beeinträchtigt haben könnte. Im Vergleich dazu betrug die Menge an BYK^{®}-A535 in Zusammensetzung 21 nur ein Drittel, und die Zusammensetzung wies Eigenschaften im bevorzugten Bereich auf (Bruchdehnung von 34,7 %). Die Zusammensetzung mit der höchsten Zugfestigkeit bei der Streckgrenze und der maximalen Zugfestigkeit war P20, die Zusammensetzung ohne jegliche zugesetzte Additive. Allerdings wiesen die Zusammensetzungen P16 bis P19 bessere Bruchdehnungswerte als P20 auf. P16 und P17 unterschieden sich in der Menge an Photoinitiator (0,4 Gew.-% bzw. 1 Gew.-%), und Tabelle 27 zeigt, dass eine geringere Menge an Photoinitiator die Bruchdehnungswerte verbessern kann. Ein Vergleich von P18 und P19 lässt eine ähnliche Schlussfolgerung zu.

### Beispiel 11: Herstellung der härtbaren Zusammensetzungen (23) bis (33).

Die folgenden Komponenten wurden in den in Tabelle 28 angegebenen Verhältnissen vermischt, um die härtbaren Zusammensetzungen (**23**) bis (**29**) zu erhalten:

**Tabelle 28: Zusammensetzungen (23) bis (29)**

| Verb. Nr. | Vernetzer¹ (Gew.-%) | Vernetzer² (Gew.-%) | Vernetzer³ (Gew.-%) | Zähigkeitsmodifikator⁴ (Gew.-%) | Reaktivverdünner⁵ (Gew.-%) | Additiv⁶ (Gew.-%) |
|---|---|---|---|---|---|---|
| 23 | - | - | 45 | 45 | 10 | - |
| 24 | - | - | 25 | 45 | 30 | - |
| 25 | - | - | 15 | 45 | 40 | - |
| 26 | - | - | 14,2 | 43 | 38 | 4,8 |
| 27 | - | - | 12 | 45 | 38 | 5 |
| 28 | 15 | - | - | 45 | 40 | - |
| 29 | - | 20 | 10 | 45 | 25 | - |

| | | | | | | |
|---|---|---|---|---|---|---|
| ¹ TGM1-D4MA (**TGM1** mit 15 Gew.-% D4MA); ² H1188; ³ TGM1-RD1 (**TGM1** mit 30 Gew.-% TEGDMA); ⁴ TNM2-RD1 (**TNM2** mit 30 Gew.-% **RD1);** ⁵ HSMA; ⁶ BDT1006 | | | | | | |

BDT1006 bezeichnet Bomar^{™} BDT-1006, ein hyperverzweigtes dendritisches Acrylat-Oligomer mit einer mittleren Acrylat-Funktionalität von 6 Gruppen pro Molekül. Andere Acrylat-Oligomere sind als Additiva vorgesehen. Auch andere verzweigte dendritische Oligomere mit einer Vielzahl von funktionellen Gruppen sind als Additiva vorgesehen. Zu jeder dieser Zusammensetzungen wurde TPO-L als Photoinitiator (1 Gew.-%) zugesetzt. Zu P26 und P27 wurden 0,25 bzw. 0,2 Gew.-% 2,2'-Dihydroxy-4-methoxybenzophenon als UV-Blocker zugesetzt. Die nachstehende Tabelle 29 gibt relevante Eigenschaften der vernetzten Polymere, die unter Anwendung von Hot Lithography aus den härtbaren Zusammensetzungen (**23**) bis (**29**) erhalten wurden, an.

**Tabelle 29: Ergebnisse der Zusammensetzungen 23 bis 29**

| **Eigenschaft** | **Erw. Bereich** | **P23** | **P24** | **P25** | **P26** | **P27** | **P28** | **P29** |
|---|---|---|---|---|---|---|---|---|
| Spannungsrelaxation der Anfangslast (%) | >20 %, vorz. >35 % | 11,07 | 11,15 | 23,33 | 16,75 | 20,00 | 15,92 | 20,24 |
| Bruchdehnung (%) | >20 %, vorz. >30 % | 20,5 | 15,5 | 18,6 | 19,0 | 14,1 | 15,8 | 12,9 |
| maximale Zugfestigkeit (MPa) | >25 MPa, vorz. >40 MPa | 50 | 40 | 34 | 37 | 33 | 35 | 40 |
| Elastizitätsmodul (MPa) | >900 MPa, vorz. >1100 MPa | 1350 | 1248 | 995 | 1171 | 917 | 1035 | 1260 |

Diese Ergebnisse zeigten, dass die Zusammensetzungen P25, P27 und P29 eine erwünschte Spannungsrelaxation der Anfangslast aufwiesen. In der Gruppe der Zusammensetzungen P23 bis P27 wies P25 die größte Menge an Reaktivverdünner auf. P28 wies zwar eine vergleichbare Menge an Reaktivverdünner wie P25 auf, die Änderung des Vernetzers von TGM1-RD1 zu TGM1-D4MA führte jedoch zu verringerter Spannungsrelaxation der Anfangslast und Bruchdehnung. Von diesen Zusammensetzungen lieferte nur P23 einen erwünschten Bruchdehnungswert. Es wurden zusätzliche Zusammensetzungen hergestellt, um die Veränderungen der Spannungsrelaxation der Anfangslast zu analysieren, und zwar im Hinblick auf Veränderungen der Glasübergangsmodifikatoren und unter Verwendung verschiedener Zähigkeitsmodifikatoren. Die folgenden Komponenten wurden in den in Tabelle 30 angegebenen Verhältnissen vermischt, um die härtbaren Zusammensetzungen (**30**) bis (**33**) zu erhalten:

**Tabelle 30: Zusammensetzungen (30) bis (33)**

| Verb. Nr. | Vernetzer¹ (Gew.-%) | Vernetzer² (Gew.-%) | Zähigkeitsmodifikator³ (Gew.-%) | Reaktivverdünner⁴ (Gew.-%) | Reaktivverdünner⁵ (Gew.-%) | Additiv⁶ (Gew.-%) |
|---|---|---|---|---|---|---|
| 30 | 10 | 20 | 45 | 25 | - | - |
| 31 | 14,3 | - | 43 | - | 38 | 4,8 |
| 32 | 27,9 | - | 34,6 | - | 33,5 | 4 |
| 33 | 17,9 | - | 39 | 38,1 | - | 5 |

| | | | | | | |
|---|---|---|---|---|---|---|
| ¹ TGM1-D4MA (**TGM1** mit 15 Gew.-% D4MA); ² H1188; ³TNM2-D3MA; ⁴ HSMA; ⁵ BSMA; ⁶ SIU2400 | | | | | | |

SIU2400 ist ein funktionalisiertes Silikonurethanacrylat mit 10 funktionellen Gruppen, verdünnt mit 10 Gew.-% TPGDA (Tripropylenglykoldiacrylat). Vor der Härtung wurde zu jeder dieser Zusammensetzungen TPO-L als Photoinitiator (1 Gew.-%) zugesetzt. Die nachstehende Tabelle 31 gibt die relevanten Eigenschaften der unter Anwendung von Hot Lithography aus den härtbaren Zusammensetzungen (**30**) bis (**33**) erhaltenen vernetzten Polymere an.

**Tabelle 31: Ergebnisse der Zusammensetzungen 30 bis 33**

| **Eigenschaft** | **Erw. Bereich** | **P30** | **P31** | **P32** | **P33** |
|---|---|---|---|---|---|
| Spannungsrelaxation der Anfangslast (%) | >20 %, vorz. >35 % | 21,67 | 16,84 | 12,31 | 13,51 |
| Bruchdehnung (%) | >20 %, vorz. >30 % | 21,0 | 21,4 | 15,2 | 25,8 |
| maximale Zugfestigkeit (MPa) | >25 MPa, vorz. >40 MPa | 40 | 45 | 40 | 39 |
| Elastizitätsmodul (MPa) | >900 MPa, vorz. >1100 MPa | 997 | 1003 | 1109 | 879 |

Insgesamt zeigen diese Ergebnisse, dass unterschiedliche Kombinationen von Vernetzern und Zähigkeitsmodifikatoren erwünschte gehärtete Zusammensetzungen mit einer Spannungsrelaxation über 20 % der Anfangslast bereitstellen können. Von diesen Kombinationen wies P30 sowohl eine erwünschte Spannungsrelaxation der Anfangslast asl auch eine erwünschte Bruchdehnung auf. Diese Daten zeigen, dass der Zusatz von multifunktionellen Additiven (Zusammensetzungen 26-27 und 31-33) den Wert der Spannungsrelaxation der Anfangslast senken können.

### Beispiel 12: Herstellung der härtbaren Zusammensetzungen (34) bis (35).

Die Zusammensetzungen 26 und 27 wurden wie oben beschrieben hergestellt. Die folgenden Komponenten wurden in den in Tabelle 32 angegebenen Verhältnissen vermischt, um die härtbaren Zusammensetzungen (**34**) bis (**35**) zu erhalten:

**Tabelle 32: Zusammensetzungen (26-27) und (34-35)**

| Verb. Nr. | Vernetzer¹ (Gew.-%) | Zähigkeitsmodifikator² (Gew.-%) | Reaktivverdünner³ (Gew.-%) | Reaktivverdünner⁴ (Gew.-%) | Additiv⁵ (Gew.-%) | Additiv⁶ (Gew.-%) |
|---|---|---|---|---|---|---|
| 26 | 14,2 | 43 | 38 | - | - | 4,8 |
| 34 | 14,2 | 43 | - | 38 | 4,8 | - |
| 27 | 12 | 45 | 38 | - | - | 5 |
| 35 | 15 | 45 | 40 | - | - | - |

| | | | | | | |
|---|---|---|---|---|---|---|
| ¹ TGM1-RD1 (**TGM1** mit 15 Gew.-% **RD1**); ²TNM2-RD1 (**TNM2** mit 30 Gew.-% **RD1**); ³ HSMA; ⁴BSMA; ⁵ SIU2400; ⁶ BDT1006 | | | | | | |

Zu jeder dieser Zusammensetzungen wurde TPO-L als Photoinitiator (1 Gew.-%) zugesetzt. Zu P26, P27, P34 und P35 wurden 0,25; 0,2; 0,25 bzw. 0,3 Gew.-% 2,2'-Dihydroxy-4-methoxybenzophenon als UV-Blocker zugesetzt. Die nachstehende Tabelle 33 gibt die relevanten Eigenschaften der vernetzten Polymere, die unter Anwendung von Hot Lithography aus den härtbaren Zusammensetzungen (**26-27**) und (**34-35**) erhalten wurden, an.

**Tabelle 33: Ergebnisse der Zusammensetzungen 26-27 und 34-35**

| **Eigenschaft** | **P26** | **P27** | **P34** | **P35** |
|---|---|---|---|---|
| Bruchdehnung (%) (im Mittel) | 19,0 | 14,1 | 16,4 | 22,6 |
| Zugfestigkeit (MPa) (im Mittel) | 37 | 33 | 35 | 35 |
| Elastizitätsmodul (MPa) | 1171 | 917 | 932 | 1056 |

Diese Ergebnisse stellen einen Vergleich einer Zusammensetzung ohne Additiv (Zusammensetzung P35) mit ähnlichen Zusammensetzungen, zu denen BDT1006 zugesetzt wurde (P26 und P27) bereit. Die Zusammensetzung ohne Additiv, P35, wies eine längere mittlere Bruchdehnung, aber vergleichbare mittlere Werte für Zugfestigkeit und Elastizitätsmodul auf. In Zusammensetzung P34 wurden ein anderer Verdünner und ein multifunktionelles Additiv (SIU2400) eingesetzt, und sie weist mittlere Werte ähnlich jenen von P26 und P27 auf. Demgemäß kann der Zusatz von multifunktionalisierten Additiven die mittlere Bruchdehnung senken.

### Beispiel 13: Herstellung der härtbaren Zusammensetzungen (36) bis (44).

Die folgenden Komponenten wurden in den in Tabelle 34 angegebenen Verhältnissen vermischt, um die härtbaren Zusammensetzungen (**36**) bis (**44**) zu erhalten:

**Tabelle 34: Zusammensetzungen (36) bis (44)**

| Verb. Nr. | Vernetzer¹ (Gew.-%) | Zähigkeitsmodifikator² (Gew.-%) | Zähigkeitsmodifikator³ (Gew.-%) | Zähigkeitsmodifikator⁴ (Gew.-%) | Reaktivverdünner⁵ (Gew.-%) | Additiv⁶ (Gew.-%) |
|---|---|---|---|---|---|---|
| 36 | 15 | - | - | 45 | 40 | - |
| 37 | 25 | - | - | 35 | 40 | - |
| 38 | 35 | - | - | 35 | 30 | - |
| 39 | 25 | - | - | 45 | 30 | - |
| 40 | 20 | 45 | - | - | 35 | 30 |
| 41 | 40 | - | - | - | 30 | 30 |
| 42 | 25 | - | 35 | - | 30 | 10 |
| 43 | 15 | 45 | - | - | 40 | - |
| 44 | 14,3 | 43 | - | - | 38 | 4,8 |

| | | | | | | |
|---|---|---|---|---|---|---|
| ¹ TGM1-D3MA (**TGM1** mit 15 Gew.-% D3MA); ²TNM2-RD1, 16kDa; ³TNM2-RD1, 25kDa; ⁴UA5216, setzte sich ab; ⁵ HSMA; ⁶ SIU2400 | | | | | | |

UA5216 bezeichnet Miramer UA5216, ein aliphatisches difunktionelles Acrylat. Es wird angenommen, dass andere aliphatische difunktionelle Acrylate eine ähnliche Wirkung haben. Zu jeder dieser Zusammensetzungen wurde TPO-L als Photoinitiator (1 Gew.-%) zugesetzt. Zu P36 und P37 wurden 0,2 bzw. 0,19 Gew.-% 2,2'-Dihydroxy-4-methoxybenzophenon als UV-Blocker zugesetzt. Die nachstehende Tabelle 35 gibt die relevanten Eigenschaften der unter Anwendung von Hot Lithography aus den härtbaren Zusammensetzungen (**36**) bis (**44**) erhaltenen vernetzten Polymeren an.

**Tabelle 35: Ergebnisse der Zusammensetzungen 36 bis 44**

| **Eigenschaft** | **P36** | **P37** | **P38** | **P39** | **P40** | **P41** | **P42** | **P43** | **P44** |
|---|---|---|---|---|---|---|---|---|---|
| Bruchdehnung (%) (im Mittel) | 92,5 | 29,0 | 24,6 | 55,7 | 29,5 | 5,1 | 18,6 | 32,4 | 45,3 |
| maximale Zugfestigkeit (MPa) (im Mittel) | 25 | 39 | 45 | 33 | 36 | 44 | 44 | 34 | 33 |
| Elastizitätsmodul (MPa) | 370 | 734 | 737 | 474 | 544 | - | - | - | - |

Diese Ergebnisse liefern Daten, die ausgewählte Vergleiche zulassen. Zahlreiche Zusammensetzungen wiesen bevorzugte Werte für Bruchdehnung auf, wobei P36 einen sehr hohen Wert von 92,5 % aufwies und die Werte von P39, P43 und P44 allesamt über 30 % lagen. Die Verringerung des Zähigkeitsmodifikators und die Erhöhung des Vernetzers von P36 zu P37 verringerten die mittlere Bruchdehnung stark, wohingegen die mittlere Zugfestigkeit und der Elastizitätsmodul erhöht wurden. Ähnliche Auswirkungen wurden infolge der Verringerung des Zähigkeitsmodifikators und der Erhöhung des Vernetzers von P39 zu P38 beobachtet. Ein Vergleich von P42 und P37 liefert Informationen bezüglich der Bedeutung des Zähigkeitsmodifikators, wobei Unterschiede zwischen P39 (unter Verwendung von UA5216 als Zähigkeitsmodifikator) und P42 (unter Verwendung von TNM2-RD2, 25kDa, als Zähigkeitsmodifikator) im Hinblick auf mittlere Bruchdehnung, mittlere Zugfestigkeit und mittleren Elastizitätsmodul zu beobachten waren.

### Beispiel 14: Herstellung der härtbaren Zusammensetzungen (45) bis (51).

Die folgenden Komponenten wurden in den in Tabelle 36 angegebenen Verhältnissen vermischt, um die härtbaren Zusammensetzungen (**45**) bis (**51**) zu erhalten:

**Tabelle 36: Zusammensetzungen (45) bis (51)**

| Verb. Nr. | Vernetzer¹ (Gew.-%) | Zähigkeitsmodifikator² (Gew.-%) | Reaktivverdünner³ (Gew.-%) | Reaktivverdünner⁴ (Gew.-%) | Additiv⁵ (Gew.-%) | Additiv⁶ (Gew.-%) |
|---|---|---|---|---|---|---|
| 45 | 20 | 31,5 | 35 | 13,5 | - | - |
| 46 | 20 | 45 | 35 | - | - | 0,6 |
| 47 | 25 | 35 | 40 | - | - | 0,6 |
| 48 | 20 | 31,5 | 35 | 13,5 | - | 0,4 |
| 49 | 20 | 31,5 | 35 | 13,5 | - | 1 |
| 50 | 25 | 24,5 | 40 | 10,5 | - | 1 |
| 51 | 14,3 | 31,5 | 38 | 13,5 | 4,8 | - |

| | | | | | | |
|---|---|---|---|---|---|---|
| ¹ TGM1-RD1 (MUA+30); ² TNM2-RD1 (2098-5B); ³ HSMA; ⁴ Triethylenglykoldimethacrylat; ⁵ SIU2400; ⁶ TPO-L | | | | | | |

Der Photoinitiator TPO-L wurde erst nach anfänglichem Vermischen der Anteile aus den anderen Spalten in Tabelle 36 zugegeben. Die nachstehende Tabelle 37 gibt relevante Eigenschaften der unter Anwendung von Hot Lithography aus den härtbaren Zusammensetzungen (**45**) bis (**51**) erhaltenen vernetzten Polymere an.

**Tabelle 37: Ergebnisse der Zusammensetzungen 45 bis 51**

| **Eigenschaft** | **P45** | **P46** | **P47** | **P48** | **P49** | **P50** | **P51** |
|---|---|---|---|---|---|---|---|
| Bruchdehnung (%) (*Mittel)* | 24,9 | 113,9 | 59,5 | 40,7 | 36,9 | 20,5 | 9,9 |
| maximale Zugfestigkeit (MPa) (*Mittel*) | 41 | 42 | 44 | 46 | 44 | 50 | 55 |
| Elastizitätsmodul (MPa) | 1214 | 572 | 1007 | 1059 | 1134 | 1540 | 1900 |
| Mittlere Streckgrenze (MPa) | 41 | 23 | 35 | 40 | 39 | 51 | 60 |

Tabelle 37 zeigt, dass die Zusammensetzungen P47 bis P51 jeweils eine erwünschte Zugfestigkeit bei der Streckgrenze (über 25 MPa) aufwiesen, wobei die Zusammensetzungen P50 bis P51 Zugfestigkeiten bei der Streckgrenze im bevorzugten Bereich (über 40 MPa) aufwiesen. Im Gegenteil dazu zeigten P50 bis P51 die niedrigsten mittleren Bruchdehnungswerte in der Tabelle, während P45 bis P49 Bruchdehnungswerte im erwünschten Bereich (> 20 %) aufwiesen und auch P46 bis P49 diese Werte im bevorzugten Bereich (> 30 %) aufwiesen. P46 wies den höchsten Bruchdehnungswert und die niedrigste mittlere Streckgrenze auf, wohingegen P51 die höchste mittlere Streckgrenze und die niedrigste mittlere Bruchdehnung der Zusammensetzungen in der Tabelle aufwies.

Während P45 keinerlei Photoinitiator umfasste, wurden bei P48 0,4 Gew.-% und bei P49 1 Gew.-% eingesetzt. Ein Vergleich von P45 mit P48 und P49 zeigt, dass ein zumindest geringer Zusatz von Photoinitiator die mittlere Bruchdehnung erhöht, die maximale Zugfestigkeit erhöht und den Elastizitätsmodul leicht verringert.

### Beispiel 15: Herstellung der härtbaren Zusammensetzungen (52) bis (56) mit Entschäumern

Zusammensetzung 23 wurde wie zuvor beschrieben hergestellt. Die folgenden Komponenten wurden in den in Tabelle 38 angegebenen Verhältnissen vermischt, um die härtbaren Zusammensetzungen (**52**) bis (**56**) mit verschiedenen Entschäumern zu erhalten:

**Tabelle 38: Zusammensetzungen (52) bis (56)**

| Verb. Nr. | Vernetzer¹ (Gew.-%) | Zähigkeitsmodifikator² (Gew.-%) | Reaktivverdünner³ (Gew.-%) | Entschäumer |
|---|---|---|---|---|
| 23 | 45 | 45 | 10 | - |
| 52 | 45 | 45 | 10 | BYK^{®}7420ET |
| 53 | 45 | 45 | 10 | BYK^{®}7411ES |
| 54 | 45 | 45 | 10 | BYK^{®}7410ET |
| 55 | 45 | 45 | 10 | TEGO^{®} RAD2100 |
| 56 | 45 | 45 | 10 | TEGO^{®} WET510 |

| | | | | |
|---|---|---|---|---|
| ¹ TGM1-RD1 (**TGM1** mit 30 Gew.-% TEGDMA); ²TNM2-RD1 (16 kDa); ³ HSMA | | | | |

Nach der Herstellung des Anfangsgemischs, das den Vernetzer, den Zähigkeitsmodifikator und den Reaktivverdünner umfasste, wurde zu jeder der entsprechenden Proben 52 bis 56 1 Gew.-% Entschäumer zugesetzt. Zu jeder dieser Zusammensetzungen wurde TPO-L als Photoinitiator (1 Gew.-%) zugesetzt. Zu P52 bis P56 wurde 0,1 Gew.-% 2,2'-Dihydroxy-4-methoxybenzophenon als UV-Blocker zugesetzt. Zu P23 wurde 0,2 Gew.-% 2,2'-Dihydroxy-4-methoxybenzophenon als UV-Blocker zugesetzt. Die nachstehende Tabelle 39 gibt die relevanten Eigenschaften der unter Anwendung von Hot Lithography aus den härtbaren Zusammensetzungen (**23**) und (**52**) bis (**56**) erhaltenen vernetzten Polymere an.

**Tabelle 39: Ergebnisse der Zusammensetzungen 23 und 52 bis 56**

| **Eigenschaft** | **P23** | **P52** | **P53** | **P54** | **P55** | **P56** |
|---|---|---|---|---|---|---|
| Bruchdehnung (%) (im Mittel) | 20,5 | 25,5 | 25,6 | 23,3 | 27,4 | 22,8 |
| maximale Zugfestigkeit (MPa) (im Mittel) | 50 | 49 | 49 | 49 | 51 | 45 |
| Elastizitätsmodul (MPa) | 1350 | 1136 | 1136 | 1156 | 1128 | 1145 |

Tabelle 39 zeigt, dass die Zugabe eines Entschäumers zur Zusammensetzung den Wert für die mittlere Bruchdehnung in unterschiedlichem Ausmaß erhöhen kann. Die Veränderungen der Zugfestigkeitswerte waren in den meisten Fällen mäßig, obwohl der Entschäumer TEGO^{®} WET510 die Zugfestigkeit der Zusammensetzung P56 mäßig verringerte. Die Zugabe von Entschäumern zu den Zusammensetzungen scheint den Wert des Elastizitätsmoduls mäßig zu verringern.

### Beispiel 16: Herstellung der härtbaren Zusammensetzungen (57) bis (59)

Die folgenden Komponenten wurden in den in Tabelle 40 angegebenen Verhältnissen vermischt, um die härtbaren Zusammensetzungen (**57**) bis (**59**) zu erhalten:

**Tabelle 40: Zusammensetzungen (57) bis (59)**

| Verb. Nr. | Vernetzer¹ (Gew.-%) | Vernetzer² (Gew.-%) | Zähigkeitsmodifikator³ (Gew.-%) | Reaktivverdünner⁴ (Gew.-%) | Reaktivverdünner⁵ (Gew.-%) |
|---|---|---|---|---|---|
| 57 | - | 30 | 45 | 25 | - |
| 58 | - | 30 | 45 | - | 25 |
| 59 | 30 | - | 45 | - | 25 |

| | | | | | |
|---|---|---|---|---|---|
| ¹ LPU624;²TGM1-D3MA (**TGM1** mit 15 Gew.-% D3MA); ³TNM2-RD1 (16 kDa); ⁴ HSMA; ⁵ BSMA | | | | | |

Nach der Herstellung des Anfangsgemischs, das den Vernetzer, den Zähigkeitsmodifikator und den Reaktivverdünner umfasste, wurde TPO-L als Photoinitiator (1 Gew.-%) zu jeder Probe zugesetzt. Zu P57 und P58 wurden 0,15 Gew.-% 2,2'-Dihydroxy-4-methoxybenzophenon als UV-Blocker zugesetzt. Zu P59 wurden 0,225 Gew.-% 2,2'-Dihydroxy-4-methoxybenzophenon als UV-Blocker zugesetzt. Die nachstehende Tabelle 41 gibt relevante Eigenschaften der unter Anwendung von Hot Lithography aus den härtbaren Zusammensetzungen (**57**) bis (**59**) erhaltenen vernetzten Polymeren bereit.

**Tabelle 41: Ergebnisse der Zusammensetzungen 57 bis 59**

| **Eigenschaft** | **P57** | **P58** | **P59** |
|---|---|---|---|
| Bruchdehnung (%) (im Mittel) | 33,4 | 13,7 | 24,8 |
| maximale Zugfestigkeit (MPa) (im Mittel) | 43 | 32 | 38 |
| Elastizitätsmodul (MPa) | 1388 | 1289 | 1529 |

Diese Ergebnisse liefern Daten, die ausgewählte Vergleiche von Zusammensetzungen ermöglichen. In P57 wird HSMA als Verdünner eingesetzt, wohingegen in P58 BSMA als Verdünner eingesetzt wird. Die Änderung von HSMA zu BSMA ergab eine geringfügige Abnahme des Elastizitätsmoduls. Allerdings führte das Ersetzen von LPU624 als Vernetzer in P59 im Vergleich zu P58 zu einer moderaten Erhöhung des Elastizitätsmoduls.

### Beispiel 17: Herstellung der härtbaren Zusammensetzungen (60) und (61)

Die folgenden Komponenten wurden in den in Tabelle 42 angegebenen Verhältnissen vermischt, um die härtbaren Zusammensetzungen (**60**) und (**61**) zu erhalten:

**Tabelle 42: Zusammensetzungen (60) und (61)**

| Verb. Nr. | Zähigkeitsmodifikator¹ (Gew.-%) | Reaktivverdünner² (Gew.-%) | Additiv³ (Gew.-%) |
|---|---|---|---|
| 60 | 30 | 70 | 0,6 |
| 61 | 30 | 70 | 3 |

| | | | |
|---|---|---|---|
| ¹ TNM2-RD1 (TMX); ² HSMA; ³ TPO-L | | | |

Nach der Herstellung der Anfangsgemische, die den Zähigkeitsmodifikator und den Reaktivverdünner umfassten, wurde TPO-L als Photoinitiator zu jeder Probe zugesetzt, wie aus Tabelle 42 ersichtlich ist. Zu P60 und P61 wurden 0,15 Gew.-% 2,2'-Dihydroxy-4-methoxybenzophenon als UV-Blocker zugesetzt. Die nachstehende Tabelle 43 gibt relevante Eigenschaften der unter Anwendung von Hot Lithography aus den härtbaren Zusammensetzungen (**60**) und (**61**) erhaltenen vernetzten Polymere an.

**Tabelle 43: Ergebnisse der Zusammensetzungen 60 und 61**

| **Eigenschaft** | **P60** | **P61** |
|---|---|---|
| Bruchdehnung (%) (im Mittel) | 50,6 | 19,9 |
| maximale Zugfestigkeit (MPa) (im Mittel) | 25 | 26 |
| Elastizitätsmodul (MPa) | 815 | 1168 |
| Mittlere Streckgrenze (MPa) | 15 | 16 |

Diese Ergebnisse liefern Daten, die die Auswirkungen der Menge an Photoinitiator auf eine Zusammensetzung beleuchten. P60 und P61 wurden unter Verwendung von gleichen Mengen an TNM2-RD1 als Zähigkeitsmodifikator und HSMA als Reaktivverdünner hergestellt. Allerdings wurde zu P61 die 5-fache Menge des Photoinitiators TPO-L zugesetzt. Folglich wies P61 einen wesentlich niedrigeren Bruchdehnungswert und einen wesentlich höheren Elastizitätsmodul auf. Dieses Ergebnis stellte eine weitere Verifizierung der in Beispiel 10 (Vergleich von P16 mit P17 und P18 mit P19) gemachten Beobachtung dar, dass größere Mengen eines Photoinitiator-Additivs die mittlere Bruchdehnung verringern können. Die Veränderungen in der Zugfestigkeit und mittleren Streckgrenze waren mäßig.

### Beispiel 18: Drucken unter Verwendung oder oben offenbarten Zusammensetzungen

Unter Verwendung von Zusammensetzungen, die wie oben angeführt hergestellt worden waren, wurden Strukturen gedruckt. Die Druckuntersuchung bewertete die prozentuelle Laserleistung (375 nm UV-Strahlung eines Diodenlasers von Soliton mit einer Ausgabeleistung von 2x70 mW), die verwendet wurde, um die Zusammensetzungen zu härten, die untersuchte Scan-Geschwindigkeit, die Anzahl an übereinander geschichteten Wiederholungen, die Temperatur der Härtung, die Schraffur sowie die Höhe des Harzes. Diese Werte sind in der nachstehenden Tabelle 44 angeführt:

**Tabelle 44: Druckergebnisse von ausgewählten Zusammensetzungen**

| Verb. Nr. | Laserleistung (%) | Scan-Rate (m/s) | Wiederholungen (#) | Temperatur (°C) | Schraffur | Harzhöhe (mm) |
|---|---|---|---|---|---|---|
| 23 | 60 | 2 | 1 | 100 | xy | 0,4 |
| 24 | 100 | 2 | 1 | 90 | xy | - |
| 25 | 100 | 2 | 1 | 90 | xy | 0,4 |
| 26 | 100 | 8 | - | 90 | x | 0,3 |
| 27 | 100 | 2 | 1 | 100 | xy | 0,4 |
| 28 | 50 | 2 | 1 | 90 | xy | 0,4 |
| 29 | 60 | 2 | 1 | 100 | xy | 0,4 |
| 30 | 60 | 2 | 1 | 100 | xy | 0,4 |
| 35 | 100 | 4 | 10 | 90 | x | 0,3 |
| 36 | 100 | 0,5 | 1 | 100 | xy | - |
| 45 | 100 | 8 | 10 | 70 | x | - |
| 47 | 100 | 8 | 10 | 90 | x | - |
| 57 | 100 | 0,5 | 5 | 100 | xy | - |
| 58 | 100 | 0,5 | 1 | 100 | xy | - |
| 59 | 100 | 0,5 | 1 | 100 | xy | - |
| 60 | 100 | 8 | 12 | 80 | x | - |
| 61 | 100 | 8 | 12 | 80 | x | - |

Diese Daten zeigen, dass zahlreiche Variationen der offenbarten Zusammensetzungen in druckbarem Format eingesetzt werden könnten. Ein Vergleich der Verbindungen P25 und P26 zeigt die Vorteile des Zusatzes eines multifunktionalisierten Mittels. Die Zusammensetzung P26 ist der Zusammensetzung P25 ähnlich, es wurde jedoch BDT1006 dazu zugesetzt. Aufgrunddessen konnte Zusammensetzung P26 schneller gedruckt werden, obwohl die Harzhöhe leicht abzunehmen schien. Tabelle 44 zeigt, dass verschiedene Mischungen von Vernetzern, Zähigkeitsmodifikatoren, Reaktivverdünnern und Additiven wie hierin beschrieben in 3D-druckbaren Materialien und Strukturen eingesetzt werden können.

Die hierin verwendeten Begriffe und Ausdrücke werden als beschreibende und nicht einschränkende Begriffe verwendet, und bei der Verwendung solcher Begriffe und Ausdrücke sollen keinerlei Äquivalente der gezeigten und beschriebenen Merkmale oder Teile davon ausgeschlossen sein, wobei es sich jedoch versteht, dass innerhalb des beanspruchten Schutzumfangs der Erfindung verschiedene Modifikationen möglich sind. Daher versteht es sich, dass, obwohl die vorliegende Erfindung anhand bestimmter Ausführungsformen, beispielhafter Ausführungsformen und optionaler Merkmale spezifisch offenbart wurde, Fachleute auf dem Gebiet der Erfindung auf Modifikationen und Variationen der hierin offenbarten Konzepte zurückgreifen können und dass solche Modifikationen und Variationen als im Schutzumfang der Erfindung, wie durch die beigefügten Ansprüche definiert, umfasst erachtet werden. Die hierin bereitgestellten spezifischen Ausführungsformen sind Beispiele für zweckmäßige Ausführungsformen der vorliegenden Erfindung, und Fachleuten auf dem Gebiet der Erfindung ist klar, dass die vorliegende Erfindung unter Verwendung zahlreicher Variationen der Vorrichtungen, Vorrichtungskomponenten und Verfahrensstufen, die in der vorliegenden Beschreibung angeführt sind, durchgeführt werden kann.

Wenn hierin eine Gruppe von Substituenten offenbart wird, versteht es sich, dass alle einzelnen Mitglieder dieser Gruppe und alle Untergruppen, einschließlich jeglicher Isomere, Enantiomere und Diastereomere der Gruppenmitglieder, separat offenbart werden. Wenn hierin eine Markush-Gruppe oder eine andere Gruppierung verwendet wird, ist beabsichtigt, dass alle einzelnen Mitglieder der Gruppe und alle für die Gruppe möglichen Kombinationen und Unterkombinationen einzeln in der Offenbarung umfasst sind. Wenn eine Verbindung so hierin beschrieben wird, dass ein bestimmtes Isomer, Enantiomer oder Diastereomer der Verbindung nicht spezifiziert ist, beispielsweise in einer Formel oder in einer chemischen Bezeichnung, soll diese Beschreibung alle Isomere und Enantiomere der beschriebenen Verbindung einzeln oder in einer beliebigen Kombination umfassen. Wenn nicht anders angegeben, sollen zusätzlich dazu alle Isotopenvarianten von hierin offenbarten Verbindungen von der Offenbarung umfasst sein. Spezifische Bezeichnungen für Verbindungen sind beispielhaft gemeint, zumal bekannt ist, dass Fachleute auf dem Gebiet der Erfindung dieselben Verbindungen unterschiedlich bezeichnen können.

Es ist anzumerken, dass die Singularformen "ein(e)" und "der/die/das", wie hierin und in den beigefügten Ansprüchen verwendet, auch Pluralbezüge umfassen, wenn der Kontext nicht klar etwas anderes vorgibt. Somit umfasst beispielsweise die Bezugnahme auf "eine Zelle" eine Vielzahl solcher Zellen und Äquivalente davon, die Fachleuten auf dem Gebiet der Erfindung bekannt sind, usw. Ebenso können die Begriffe "ein(e)", "ein(e) oder mehrere" und "zumindest ein(e)" hierin austauschbar verwendet werden. Es ist auch anzumerken, dass die Begriffe "umfassend", "einschließlich" und "aufweisend" austauschbar verwendet werden können.

Wenn nicht anders definiert, haben alle hierin verwendeten technischen und wissenschaftlichen Begriffe jene Bedeutungen, wie sie für gewöhnlich von Fachleuten auf dem Gebiet der Erfindung verstanden werden. Obwohl in der praktischen Durchführung oder Testung der vorliegenden Erfindung beliebige Verfahren und Materialien eingesetzt werden können, die zu den hierin beschriebenen ähnlich oder äquivalent sind, werden nun manche Verfahren und Materialien beschrieben. Nichts hierin soll als Zugeständnis ausgelegt werden, dass die Erfindung nicht als frühere Erfindung eine solche Offenbarung vorwegnehmen kann.

Jede hierin beschriebene oder exemplifizierte Formulierung oder Kombination von Komponenten kann eingesetzt werden, um die Erfindung praktisch durchzuführen, wenn nicht anders angegeben.

Sooft in dieser Patentschrift ein Bereich, beispielsweise ein Temperaturbereich, ein zeitlicher Bereich oder ein Zusammensetzungs- oder Konzentrationsbereich, angegeben ist, sollen alle Zwischen- und Unterbereiche sowie alle Einzelwerte, die in den gegebenen Bereichen umfasst sind, von der Offenbarung umfasst sein. Wie hierin verwendet, umfassen Bereiche spezifisch die Werte, die als Endpunktwerte des Bereichs bereitgestellt sind. Beispielsweise umfasst ein Bereich von 1 bis 100 spezifisch die Endpunktwerte 1 und 100. Es versteht sich, dass jegliche Unterbereiche oder Einzelwerte in einem Bereich oder Unterbereich, die in der Beschreibung hierin umfasst sind, von den Ansprüchen hierin ausgeschlossen werden können.

Wie hierin verwendet, ist "umfassend" synonym zu "einschließlich", "enthaltend" oder "gekennzeichnet durch" und ist einschließend oder offen und schließt zusätzliche, nicht genannte Elemente oder Verfahrensschritte nicht aus. Wie hierin verwendet, schließt "bestehend aus" jegliche(s)/jeglichen Element, Stufe oder Bestandteil, das/ die/der im Anspruchselement nicht spezifiziert ist, aus. Wie hierin verwendet, schließt "im Wesentlichen bestehend aus" Materialien oder Schritte, die die grundlegenden und neuen Merkmale des Anspruchs nicht erheblich beeinflussen, nicht aus. In jedem hierin umfassten Fall können beliebige der Begriffe "umfassend", "bestehend im Wesentlichen aus" und "bestehend aus" durch jeden der anderen beiden Begriffe ersetzt werden. Die hierin veranschaulichend beschriebene Erfindung kann entsprechend in Abwesenheit eines/r oder mehrerer beliebigen/r Elements oder Elemente, Einschränkung oder Einschränkungen, das/die hierin nicht spezifisch offenbart ist/sind, praktisch durchgeführt werden.

Dem Durchschnittsfachmann auf dem Gebiet der Erfindung ist klar, dass Ausgangsmaterialien, biologische Materialien, Reagenzien, Syntheseverfahren, Reinigungsverfahren, Analyseverfahren, Testverfahren und biologische Verfahren, die nicht die spezifisch exemplifizierten sind, bei der praktischen Durchführung der Erfindung ohne übermäßiges Experimentieren eingesetzt werden können. Alle fachbekannten funktionellen Äquivalente beliebiger solcher Materialien und Verfahren sollen in der vorliegenden Erfindung umfasst sein. Die eingesetzten Begriffe und Ausdrücke werden als beschreibende und nicht einschränkende Begriffe verwendet, und bei der Verwendung solcher Begriffe und Ausdrücke sollen keinerlei Äquivalente der gezeigten und beschriebenen Merkmale oder Teile davon ausgeschlossen sein, wobei jedoch anerkannt ist, dass innerhalb des beanspruchten Schutzumfangs der Erfindung verschiedene Modifikationen möglich sind. Daher versteht es sich, dass, obwohl die vorliegende Erfindung spezifisch durch bestimmte Ausführungsformen und optionale Merkmale offenbart wurde, Fachleute auf dem Gebiet der Erfindung auf Modifikationen und Variationen der hierin offenbarten Konzepte zurückgreifen können und dass solche Modifikationen und Variationen als vom durch die beiliegenden Ansprüche definierten Schutzumfang der Erfindung umfasst erachtet werden.

### AUSFÜHRUNGEN IN BEZUG AUF CHEMISCHE VERBINDUNGEN UND NOMENKLATUR

Wie hierin verwendet, kann sich der Begriff "Gruppe" auf eine funktionelle Gruppe einer chemischen Verbindung beziehen. Gruppen der vorliegenden Verbindungen beziehen sich auf ein Atom oder ein Kollektiv von Atomen, die Teil der Verbindung sind. Gruppen der vorliegenden Erfindung können über eine oder mehrere kovalente Bindungen an andere Atome der Verbindung gebunden sein. Gruppen können auch in Bezug auf ihren Valenzzustand charakterisiert werden. Die vorliegende Erfindung umfasst Gruppen, die durch einen einwertigen, zweiwertigen, dreiwertigen etc. Valenzzustand charakterisiert sind.

Wie hierin verwendet, bezieht sich der Begriff "substituiert" auf eine Verbindung, in der ein Wasserstoff durch eine andere funktionelle Gruppe ersetzt ist.

Alkylgruppen umfassen unverzweigte, verzweigte und zyklische Alkylgruppen. Alkylgruppen umfassen jene, die 1 bis 30 Kohlenstoffatome aufweisen. Alkylgruppen umfassen kleine Alkylgruppen mit 1 bis 3 Kohlenstoffatomen. Alkylgruppen umfassen Alkylgruppen mittlerer Länge mit 4 bis 10 Kohlenstoffatomen. Alkylgruppen umfassen lange Alkylgruppen mit mehr als 10 Kohlenstoffatomen, insbesondere jene mit 10 bis 30 Kohlenstoffatomen. Der Begriff "Cycloalkyl" bezieht sich spezifisch auf eine Alkylgruppe mit einer Ringstruktur, wie z. B. einer Ringstruktur, die 3 bis 30 Kohlenstoffatome, gegebenenfalls 3 bis 20 Kohlenstoffatome und gegebenenfalls 3 bis 10 Kohlenstoffatome, umfasst, einschließlich Alkylgruppen mit einem oder mehreren Ringen. Cycloalkylgruppen umfassen jene mit einem oder mehreren 3-, 4-, 5-, 6-, 7-, 8-, 9- oder 10-gliedrigen Kohlenstoffringen und insbesondere jene mit einem oder mehreren 3-, 4-, 5-, 6-, 7- oder 8-gliedrigen Ringen. Die Kohlenstoffringe in Cycloalkylgruppen können auch Alkylgruppen tragen. Cycloalkylgruppen können bizyklische und trizyklische Alkylgruppen umfassen. Alkylgruppen sind gegebenenfalls substituiert. Substituierte Alkylgruppen umfassen unter anderem jene, die mit Arylgruppen substituiert sind, die wiederum gegebenenfalls substituiert sind. Spezifische Alkylgruppen umfassen Methyl-, Ethyl-, n-Propyl-, Isopropyl-, Cyclopropyl-, n-Butyl-, sec-Butyl-, tert-Butyl-, Cyclobutyl-, n-Pentyl-, verzweigte Pentyl-, Cyclopentyl-, n-Hexyl-, verzweigte Hexyl- und Cyclohexylgruppen, die gegebenenfalls substituiert sind. Substituierte Alkylgruppen umfassen vollständig halogenierte oder semihalogenierte Alkylgruppen, wie z. B. Alkylgruppen, in denen ein oder mehrere Wasserstoffe durch ein oder mehrere Fluoratome, Chloratome, Bromatome und/oder lodatome ersetzt sind. Substituierte Alkylgruppen umfassen vollständig fluorierte oder semifluorierte Alkylgruppen, wie z. B. Alkylgruppen, in denen ein oder mehrere Wasserstoffe durch ein oder mehrere Fluoratome ersetzt sind. Eine Alkoxygruppe ist eine durch Bindung an Sauerstoff modifizierte Alkylgruppe, die durch die Formel R-O dargestellt werden kann und auch als Alkylethergruppe bezeichnet werden kann. Beispiele für Alkoxygruppen umfassen, ohne darauf eingeschränkt zu sein, Methoxy, Ethoxy, Propoxy, Butoxy und Heptoxy. Alkoxygruppen umfassen substituierte Alkoxygruppen, worin der Alkylteil der Gruppen substituiert ist, wie hierin in Verbindung mit der Beschreibung von Alkylgruppen erwähnt. Wie hierin verwendet, bezieht sich MeO- auf CH₃O-.

Alkenylgruppen umfassen unverzweigte, verzweigte und zyklische Alkenylgruppen. Alkenylgruppen umfassen jene mit 1, 2 oder mehr Doppelbindungen und jene, in denen zwei oder mehr der Doppelbindungen konjugierte Doppelbindungen sind. Alkenylgruppen umfassen jene mit 2 bis 20 Kohlenstoffatomen. Alkenylgruppen umfassen kleine Alkenylgruppen mit 2 bis 3 Kohlenstoffatomen. Alkenylgruppen umfassen Alkenylgruppen mittlerer Länge mit 4 bis 10 Kohlenstoffatomen. Alkenylgruppen umfassen lange Alkenylgruppen mit mehr als 10 Kohlenstoffatomen, insbesondere jene mit 10 bis 20 Kohlenstoffatomen. Cycloalkenylgruppen umfassen jene, in denen eine Doppelbindung im Ring oder in einer an einen Ring gebundenen Alkenylgruppe vorliegt. Der Begriff "Cycloalkenyl" bezieht sich spezifisch auf eine Alkenylgruppe mit einer Ringstruktur, einschließlich einer Alkenylgruppe mit einem oder mehreren 3-, 4-, 5-, 6-, 7-, 8-, 9- oder 10-gliedrigen Kohlenstoffringen, und insbesondere jene mit einem oder mehreren 3-, 4-, 5-, 6-, 7- oder 8- gliedrigen Ringen. Die Kohlenstoffringe in Cycloalkenylgruppen können auch Alkylgruppen tragen. Cycloalkenylgruppen können bizyklische und trizyklische Alkenylgruppen umfassen. Alkenylgruppen sind gegebenenfalls substituiert. Substituierte Alkenylgruppen umfassen u. a. jene, die mit Alkyl- oder Arylgruppen substituiert sind, wobei diese Gruppen wiederum gegebenenfalls substituiert sind. Spezifische Alkenylgruppen umfassen Ethenyl, Prop-1-enyl, Prop-2-enyl, Cycloprop-1-enyl, But-1-enyl, But-2-enyl, Cyclobut-1-enyl, Cyclo-but-2-enyl, Pent-1-enyl, Pent-2-enyl, verzweigtes Pentenyl, Cyclopent-1-enyl, Hex-1-enyl, verzweigtes Hexenyl, Cyclohexenyl, die alle gegebenenfalls substituiert sind. Substituierte Alkenylgruppen umfassen vollständig halogenierte oder semihalogenierte Alkenylgruppen, wie z. B. Alkenylgruppen, in denen ein oder mehrere Wasserstoffe durch ein oder mehrere Fluoratome, Chloratome, Bromatome und/oder lodatome ersetzt sind. Substituierte Alkenylgruppen umfassen vollständig fluorierte oder semifluorierte Alkenylgruppen, wie z. B. Alkenylgruppen, in denen ein oder mehrere Wasserstoffatome durch ein oder mehrere Fluoratome ersetzt sind.

Arylgruppen umfassen Gruppen mit einem oder mehreren 5-, 6-, 7- oder 8-gliedrigen aromatischen Ringen, einschließlich heterozyklischer aromatischer Ringe. Der Begriff "Heteroaryl" bezieht sich spezifisch auf Arylgruppen mit zumindest einem 5-, 6-, 7- oder 8-gliedrigen heterozyklischen aromatischen Ring. Arylgruppen können einen oder mehrere kondensierte aromatische Ringe enthalten, einschließlich eines oder mehrerer kondensierter heteroaromatischer Ringe und/oder einer Kombination aus einem oder mehreren aromatischen Ringen und einem oder mehreren nichtaromatischen Ringen, die kondensiert oder über kovalente Bindungen verbunden sein können. Heterozyklische aromatische Ringe können ein oder mehrere N-, O- oder S-Atome im Ring umfassen. Heterozyklische aromatische Ringe können jene mit einem, zwei oder drei N-Atomen, jene mit einem oder zwei O-Atomen und jene mit einem oder zwei S-Atomen oder Kombinationen aus einem oder zwei oder drei N-, O- oder S-Atomen umfassen. Arylgruppen sind gegebenenfalls substituiert. Substituierte Arylgruppen umfassen u. a. jene, die mit Alkyl- oder Alkenylgruppen substituiert sind, wobei diese Gruppen wiederum gegebenenfalls substituiert sind. Spezifische Arylgruppen umfassen Phenyl, Biphenylgruppen, Pyrrolidinyl, Imidazolidinyl, Tetrahydrofuryl, Tetrahydrothienyl, Furyl, Thienyl, Pyridyl, Chinolyl, Isochinolyl, Pyridazinyl, Pyrazinyl, Indolyl, Imidazolyl, Oxazolyl, Thiazolyl, Pyrazolyl, Pyridinyl, Benzoxadiazolyl, Benzothiadiazolyl und Naphthylgruppen, die alle gegebenenfalls substituiert sind. Substituierte Arylgruppen umfassen vollständig halogenierte oder semihalogenierte Arylgruppen, wie z. B. Arylgruppen, in denen ein oder mehrere Wasserstoffe durch ein oder mehrere Fluoratome, Chloratome, Bromatome und/oder lodatome ersetzt sind. Substituierte Arylgruppen umfassen vollständig fluorierte oder semifluorierte Arylgruppen, wie z. B. Arylgruppen, in denen ein oder mehrere Wasserstoffe durch ein oder mehrere Fluoratome ersetzt sind. Arylgruppen umfassen, ohne darauf eingeschränkt zu sein, aromatische Gruppen enthaltende oder heterozyklische aromatische Gruppen enthaltende Gruppen, die beliebigen der folgenden entsprechen: Benzol, Naphthalin, Naphthochinon, Diphenylmethan, Fluoren, Anthracen, Anthrachinon, Phenanthren, Tetracen, Tetracendion, Pyridin, Chinolin, Isochinolin, Indole, Isoindol, Pyrrol, Imidazol, Oxazol, Thiazol, Pyrazol, Pyrazin, Pyrimidin, Purin, Benzimidazol, Furane, Benzofuran, Dibenzofuran, Carbazol, Acridin, Acridon, Phenanthridin, Thiophen, Benzothiophen, Dibenzothiophen, Xanthen, Xanthon, Flavon, Cumarin, Azulen oder Anthracyclin. Wie hierin verwendet, umfasst eine Gruppe, die den oben angeführten Gruppen entspricht, ausdrücklich eine aromatische oder heterozyklische aromatische Gruppe, einschließlich einwertiger, zweiwertiger und mehrwertiger Gruppen der hierin angeführten aromatischen und heterozyklischen aromatischen Gruppen, die in einer kovalent gebundenen Konfiguration in den Verbindungen der Erfindung an einer beliebigen geeigneten Bindungsstelle bereitgestellt sind. In Ausführungsformen enthalten Arylgruppen zwischen 5 und 30 Kohlenstoffatomen. In Ausführungsformen enthalten Arylgruppen einen aromatischen oder heteroaromatischen sechsgliedrigen Ring und einen oder mehrere zusätzliche fünf- oder sechsgliedrige aromatische oder heteroaromatische Ringe. In Ausführungsformen enthalten Arylgruppen zwischen fünf und achtzehn Kohlenstoffatome in den Ringen. Arylgruppen weisen gegebenenfalls einen oder mehrere aromatische Ringe oder heterozyklische aromatische Ringe auf, die eine oder mehrere Elektronen abgebende Gruppen, Elektronen anziehende Gruppen und/oder Targeting-Liganden, die als Substituenten bereitgestellt sind, aufweisen.

Arylalkylgruppen sind Alkylgruppen, die mit einer oder mehreren Arylgruppen substituiert sind, wobei die Alkylgruppen gegebenenfalls zusätzliche Substituenten tragen und die Arylgruppen gegebenenfalls substituiert sind. Spezifische Alkylarylgruppen sind Phenyl-substituierte Alkylgruppen, z. B. Phenylmethylgruppen. Alkylarylgruppen werden alternativ als Arylgruppen beschrieben, die mit einer oder mehreren Alkylgruppen substituiert sind, wobei die Alkylgruppen gegebenenfalls zusätzliche Substituenten tragen und die Arylgruppen gegebenenfalls substituiert sind. Spezifische Alkylarylgruppen sind Alkyl-substituierte Phenylgruppen wie z. B. Methylphenyl. Substituierte Arylalkylgruppen umfassen vollständig halogenierte oder semihalogenierte Arylalkylgruppen, wie z. B. Arylalkylgruppen mit einer oder mehreren Alkyl- und/oder Arylgruppen, in denen ein oder mehrere Wasserstoffe durch ein oder mehrere Fluoratome, Chloratome, Bromatome und/oder lodatome ersetzt sind.

Wie hierin verwendet, werden die Begriffe "Alkylen" und "Alkylengruppe" synonym verwendet und beziehen sich auf eine zweiwertige Gruppe, die von einer Alkylgruppe wie hierin definiert herrührt. Die Erfindung umfasst Verbindungen mit einer oder mehreren Alkylengruppen. Alkylengruppen fungieren in manchen Verbindungen als Bindungs- und/oder Spacergruppen. Verbindungen der Erfindung können substituierte und/oder unsubstituierte C₁-C₂₀-Alkylen-, C₁-C₁₀-Alkylen- und C₁-C₅-Alkylengruppen aufweisen.

Wie hierin verwendet, werden die Begriffe "Cycloalkylen" und "Cycloalkylengruppe" synonym verwendet und beziehen sich auf eine zweiwertige Gruppe, die von einer Cycloalkylgruppe wie hierin definiert herrührt. Die Erfindung umfasst Verbindungen mit einer oder mehreren Cycloalkylengruppen. Cycloalkylgruppen fungieren in manchen Verbindungen als Bindungs- und/oder Spacergruppen. Verbindungen der Erfindung können substituierte und/oder unsubstituierte C₃-C₂₀-Cycloalkylen-, C₃-C₁₀-Cycloalkylen- und Cs-Cs-Cycloalkylengruppen aufweisen.

Wie hierin verwendet, werden die Begriffe "Arylen" und "Arylengruppe" synonym verwendet und beziehen sich auf eine zweiwertige Gruppe, die von einer Arylgruppe wie hierin definiert herrührt. Die Erfindung umfasst Verbindungen mit einer oder mehreren Arylengruppen. In manchen Ausführungsformen ist ein Arylen eine zweiwertige Gruppe, die durch Entfernen von Wasserstoffatomen von zwei im Ring befindlichen Kohlenstoffatomen eines aromatischen Rings der Arylgruppe von einer Arylgruppe abgeleitet ist. Arylengruppen fungieren in manchen Verbindungen als Bindungs- und/oder Spacergruppen. Arylengruppen fungieren in manchen Verbindungen als Chromophor-, Fluorophor-, aromatische Antennen-, Farbstoff- und/oder Bildgebungsgruppen. Verbindungen der Erfindung umfassen substituierte und/oder unsubstituierte C₆-C₃₀-Arylen-, C₆-C₁₈-Arylen-, C₆-C₁₄-Arylen- und C₆-C₁₀-Arylengruppen.

Wie hierin verwendet, werden die Begriffe "Heteroarylen" und "Heteroarylengruppe" synonym verwendet und beziehen sich auf eine zweiwertige Gruppe, die von einer Heteroarylgruppe wie hierin definiert herrührt. Die Erfindung umfasst Verbindungen mit einer oder mehreren Heteroarylengruppen. In manchen Ausführungsformen ist ein Heteroarylen eine zweiwertige Gruppe, die durch Entfernen von Wasserstoffatomen von zwei im Ring befindlichen Kohlenstoffatomen oder im Ring befindlichen Stickstoffatomen eines heteroaromatischen oder aromatischen Rings der Heteroarylgruppe abgeleitet ist. Heteroarylengruppen fungieren in manchen Verbindungen als Bindungs- und/oder Spacergruppen. Heteroarylengruppen fungieren in manchen Verbindungen als Chromophor-, Fluorophor-, aromatische Antennen-, Farbstoff- und/oder Bildgebungsgruppen. Verbindungen der Erfindung umfassen beispielsweise substituierte und/oder unsubstituierte Heteroarylengruppen mit 5 bis 30 Ringatomen, 5 bis 20 Ringatomen, 5 bis 10 Ringatomen, 5 bis 8 Ringatomen oder 5 bis 6 Ringatomen.

Wie hierin verwendet, werden die Begriffe "Alkenylen" und "Alkenylengruppe" synonym verwendet und beziehen sich auf eine zweiwertige Gruppe, die von einer Alkenylgruppe wie hierin definiert herrührt. Die Erfindung umfasst Verbindungen mit einer oder mehreren Alkenylengruppen. Alkenylengruppen fungieren in manchen Verbindungen als Bindungs- und/oder Spacergruppen. Verbindungen der Erfindung umfassen substituierte und/oder unsubstituierte C₂-C₂₀-Alkenylen-, C₂-C₁₀-Alkenylen- und C₂-C₅-Alkenylengruppen.

Wie hierin verwendet, werden die Begriffe "Cycloalkenylen" und "Cycloalkenylengruppe" synonym verwendet und beziehen sich auf eine zweiwertige Gruppe, die von einer Cycloalkenylgruppe wie hierin definiert herrührt. Die Erfindung umfasst Verbindungen mit einer oder mehreren Cycloalkenylengruppen. Cycloalkenylengruppen fungieren in manchen Verbindungen als Bindungs- und/oder Spacergruppen. Verbindungen der Erfindung umfassen substituierte und/oder unsubstituierte C₃-C₂₀-Cycloalkenylen-, C₃-C₁₀-Cycloalkenylen- und Cs-Cs-Cycloalkenylengruppen.

Wie hierin verwendet, werden die Begriffe "Alkinylen" und "Alkinylengruppe" synonym verwendet und beziehen sich auf eine zweiwertige Gruppe, die von einer Alkinylgruppe wie hierin definiert stammt. Die Erfindung umfasst Verbindungen mit einer oder mehreren Alkinylengruppen. Alkinylengruppen fungieren in manchen Verbindungen als Bindungs- und/oder Spacergruppen. Verbindungen der Erfindung umfassen substituierte und/oder unsubstituierte C₂-C₂₀-Alkinylen-, C₂-C₁₀-Alkinylen- und C₂-C₅-Alkinylengruppen.

Wie hierin verwendet, bezieht sich der Begriff "Halogen" auf eine Halogengruppe wie z. B. Fluor (-F), Chlor (-Cl), Brom (-Br) oder Iod (-I).

Der Begriff "heterozyklisch" bezieht sich auf Ringstrukturen, die zusätzlich zu Kohlenstoff zumindest eine andere Art von Atom im Ring enthalten. Beispiele für solche Heteroatome umfassen Stickstoff, Sauerstoff und Schwefel. Heterozyklische Ringe umfassen heterozyklische alizyklische Ringe und heterozyklische aromatische Ringe. Beispiele für heterozyklische Ringe umfassen, ohne darauf eingeschränkt zu sein, Pyrrolidinyl-, Piperidyl-, Imidazolidinyl-, Tetrahydrofuryl-, Tetrahydrothienyl-, Furyl-, Thienyl-, Pyridyl-, Chinolyl-, Isochinolyl-, Pyridazinyl-, Pyrazinyl-, Indolyl-, Imidazolyl-, Oxazolyl-, Thiazolyl-, Pyrazolyl-, Pyridinyl-, Benzoxadiazolyl-, Benzothiadiazolyl-, Triazolyl- und Tetrazolylgruppen. Die Atome heterozyklischer Ringe können an eine breite Vielzahl anderer Atome und funktioneller Gruppen, die beispielsweise als Substituenten bereitgestellt sind, gebunden sein.

Der Begriff "carbozyklisch" bezieht sich auf Ringstrukturen, die nur Kohlenstoffatome im Ring enthalten. Die Kohlenstoffatome carbozyklischer Ringe können an eine breite Vielzahl anderer Atome und funktioneller Gruppen, die beispielsweise als Substituenten bereitgestellt sind, gebunden sein.

Der Begriff "alizyklischer Ring" bezieht sich auf einen Ring oder eine Vielzahl kondensierter Ringe, der/die kein aromatischer Ring ist. Alizyklische Ringe umfassen sowohl carbozyklische als auch heterozyklische Ringe.

Der Begriff "aromatischer Ring" bezieht sich auf einen Ring oder eine Vielzahl kondensierter Ringe, die zumindest eine aromatische Ringgruppe umfasst. Der Begriff "aromatischer Ring" umfasst aromatische Ringe, die Kohlenstoff, Wasserstoff und Heteroatome umfassen. Ein aromatischer Ring umfasst carbozyklische und heterozyklische aromatische Ringe. Aromatische Ringe sind Komponenten von Arylgruppen.

Der Begriff "kondensierter Ring" oder "kondensierte Ringstruktur" bezieht sich auf eine Vielzahl von alizyklischen und/oder aromatischen Ringen, die in einer kondensierten Ringkonfiguration bereitgestellt sind, wie z. B. kondensierte Ringe, die zumindest zwei gemeinsame, im Ring befindliche Kohlenstoffatome und/oder Heteroatome aufweisen.

Wie hierin verwendet, bezieht sich der Begriff "Alkoxyalkyl" auf einen Substituenten der Formel Alkyl-O-alkyl.

Wie hierin verwendet, bezieht sich der Begriff "Polyhydroxyalkyl" auf einen Substituenten mit 2 bis 12 Kohlenstoffatomen und 2 bis 5 Hydroxylgruppen, wie z. B. einen 2,3-Dihydroxypropyl-, 2,3,4-Trihydroxybutyl- oder 2,3,4,5-Tetrahydroxypentylrest.

Wie hierin verwendet bezieht sich der Begriff "Polyalkoxyalkyl" auf einen Substituenten der Formel Alkyl(alkoxy)n-alkoxy, worin n eine ganze Zahl von 1 bis 10, vorzugsweise 1 bis 4 und noch bevorzugter für manche Ausführungsformen 1 bis 3, ist.

In Bezug auf die hierin beschriebenen Gruppen, die einen oder mehrere Substituenten enthalten, versteht es sich, dass solche Gruppen keine Substitution oder Substitutionsmuster enthalten, die sterisch unmöglich und/oder synthetisch nicht herstellbar sind. Zusätzlich dazu umfassen die Verbindungen der vorliegenden Erfindung alle stereochemischen Isomere, die aus der Substitution dieser Verbindungen hervorgehen. Eine optionale Substitution von Alkylgruppen umfasst eine Substitution mit einer oder mehreren Alkenylgruppen, Arylgruppen oder beidem, wobei die Alkenylgruppen oder Arylgruppen gegebenenfalls substituiert sind. Eine optionale Substitution von Alkenylgruppen umfasst eine Substitution mit einer oder mehreren Alkylgruppen, Arylgruppen oder beidem, wobei die Alkylgruppen oder Arylgruppen gegebenenfalls substituiert sind. Eine optionale Substitution von Arylgruppen umfasst eine Substitution des Arylrings mit einer oder mehreren Alkylgruppen, Alkenylgruppen oder beidem, wobei die Alkylgruppen oder Alkenylgruppen gegebenenfalls substituiert sind.

Optionale Substituenten für eine beliebige Alkyl-, Alkenyl- und Arylgruppe umfassen eine Substitution mit einem oder mehreren der folgenden Substituenten:
Halogen, einschließlich Fluor, Chlor, Brom oder Iod;
Pseudohalogeniden, einschließlich -CN, -OCN (Cyanat), -NCO (Isocyanat), -SCN (Thiocyanat) und -NCS (Isothiocyanat);
-COOR, worin R Wasserstoff oder eine Alkylgruppe oder eine Arylgruppe ist und worin R im Speziellen eine Methyl-, Ethyl-, Propyl-, Butyl- oder Phenylgruppe ist, wobei alle diese Gruppen gegebenenfalls substituiert sind;
-COR, worin R Wasserstoff oder eine Alkylgruppe oder eine Arylgruppe ist und worin R im Speziellen eine Methyl-, Ethyl-, Propyl-, Butyl- oder Phenylgruppe ist, wobei alle diese Gruppen gegebenenfalls substituiert sind;
-CON(R)2, worin die R jeweils unabhängig voneinander Wasserstoff oder eine Alkylgruppe oder eine Arylgruppe sind und wobei R im Speziellen eine Methyl-, Ethyl-, Propyl-, Butyl- oder Phenylgruppe ist, wobei alle diese Gruppen gegebenenfalls substituiert sind; und wobei R und R gegebenenfalls einen Ring bilden, der eine oder mehrere Doppelbindungen und ein oder mehrere zusätzliche Kohlenstoffatome enthalten kann;
-OCON(R)2, worin die R jeweils unabhängig voneinander Wasserstoff oder eine Alkylgruppe oder eine Arylgruppe sind und worin R im Speziellen eine Methyl-, Ethyl-, Propyl-, Butyl- oder Phenylgruppe ist, wobei alle diese Gruppen gegebenenfalls substituiert sind; und wobei R und R gegebenenfalls einen Ring bilden, der eine oder mehrere Doppelbindungen und ein oder mehrere zusätzliche Kohlenstoffatome enthalten kann;
-N(R)₂, worin die R jeweils unabhängig voneinander Wasserstoff oder eine Alkylgruppe oder eine Acylgruppe oder eine Arylgruppe sind und worin R im Speziellen eine Methyl-, Ethyl-, Propyl-, Butyl-, Phenyl- oder Acetylgruppe ist, die alle gegebenenfalls substituiert sind; und wobei R und R gegebenenfalls einen Ring bilden, der eine oder mehrere Doppelbindungen und ein oder mehrere zusätzliche Kohlenstoffatome enthalten kann;
-SR, worin R Wasserstoff oder eine Alkylgruppe oder eine Arylgruppe ist und worin R im Speziellen Wasserstoff, Methyl, Ethyl, Propyl, Butyl oder eine Phenylgruppe ist, die gegebenenfalls substituiert sind;
-SO₂R, oder -SOR, worin R eine Alkylgruppe oder eine Arylgruppe ist und worin R im Speziellen eine Methyl-, Ethyl-, Propyl-, Butyl- oder Phenylgruppe ist, die alle gegebenenfalls substituiert sind;
-OCOOR, worin R eine Alkylgruppe oder eine Arylgruppe ist;
-SO₂N(R)₂, worin die R jeweils unabhängig voneinander Wasserstoff oder eine Alkylgruppe oder eine Arylgruppe sind, die alle gegebenenfalls substituiert sind, und wobei R und R gg einen Ring bilden, der eine oder mehrere Doppelbindungen und ein oder mehrere zusätzliche Kohlenstoffatome enthalten kann; und
-OR, worin R H, eine Alkylgruppe, eine Arylgruppe oder eine Acylgruppe ist, die alle gegebenenfalls substituiert sind. In einem bestimmten Beispiel kann R ein Acyl sein, das -OCOR" ergibt, worin R" Wasserstoff oder eine Alkylgruppe oder eine Arylgruppe ist und worin R" im Speziellen ein Methyl-, Ethyl-, Propyl-, Butyl- oder Phenylgruppe ist, wobei alle diese Gruppen gegebenenfalls substituiert sind.

Spezifische substituierte Alkylgruppen umfassen Halogenalkylgruppen, insbesondere Trihalogenmethylgruppen und im Speziellen Trifluormethylgruppen. Spezifische substituierte Arylgruppen umfassen Mono-, Di-, Tri, Tetra- und Pentahalogensubstituierte Phenylgruppen; Mono-, Di-, Tri-, Tetra-, Penta-, Hexa- und Heptahalogensubstituierte Naphthalingruppen; 3- oder 4-Halogen-substituierte Phenylgruppen, 3- oder 4-Alkyl-substituierte Phenylgruppen, 3- oder 4-Alkoxy-substituierte Phenylgruppen, 3- oder 4-RCO-substituiertes Phenyl, 5- oder 6-Halogen-substituierte Naphthalingruppen. Im Speziellen umfassen substituierte Arylgruppen Acetylphenylgruppen, insbesondere 4-Acetylphenylgruppen; Fluorphenylgruppen, insbesondere 3-Fluorphenyl- und 4-Fluorphenylgruppen; Chlorphenylgruppen, insbesondere 3-Chlorphenyl und 4-Chlorphenylgruppen; Methylphenylgruppen, insbesondere 4-Methylphenylgruppen; und Methoxyphenylgruppen, insbesondere 4-Methoxyphenylgruppen.

In Bezug auf beliebige der obigen Gruppen, die einen oder mehrere Substituenten enthalten, versteht es sich, dass solche Gruppen keine Substitution oder Substitutionsmuster enthalten, die sterisch unmöglich und/oder synthetisch nicht herstellbar sind. Zusätzlich dazu umfassen die Verbindungen der vorliegenden Erfindung alle stereochemischen Isomere, die aus der Substitution dieser Verbindungen hervorgehen.
In speziellen Ausgestaltungen stellt die vorliegende Erfindung die folgenden Ausführungsformen zur Verfügung:
1. Härtbare Zusammensetzung zur Verwendung in einem Hochtemperatur-Photopolymerisationsverfahren auf Lithographiebasis, wobei die Zusammensetzung die folgenden polymerisierbaren Komponenten A bis C umfasst,
   wobei Komponente A zumindest ein oligomeres Dimethacrylat gemäß der folgenden chemischen Formel (I) ist und als Glasübergangstemperaturmodifikator dient: 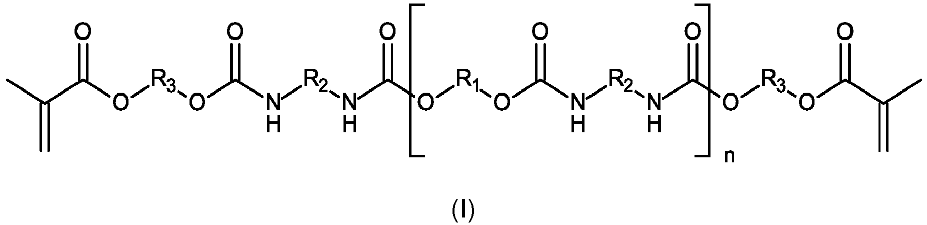 worin
      R₁ und die R₂ jeweils unabhängig für einen zweiwertigen, unverzweigten oder verzweigten zyklischen aliphatischen C₅-C₁₅-Rest stehen, mit der Maßgabe, dass zumindest einer von R₁ und R₂ eine cycloaliphatische C₅-C₆-Struktur ist oder umfasst,
      die R₃ jeweils für einen zweiwertigen, unverzweigten oder verzweigten C₂-C₄-Alkylrest stehen und
      n eine ganze Zahl von 1 bis 5 ist,
   mit der Maßgabe, dass R₁, R₂, R₃ und n so gewählt sind, dass dass das oligomere Dimethacrylat ein zahlenmittleres Molekulargewicht von 0,4 bis 5 kDa aufweist;
   Komponente B zumindest ein, gegebenenfalls Polyether-modifiziertes, (Poly-)Carbonat-(Poly-)Urethan-Dimethacrylat einer der folgenden chemischen Formeln (II), (III), (IV) oder (V) ist, das als Zähigkeitsmodifikator dient: 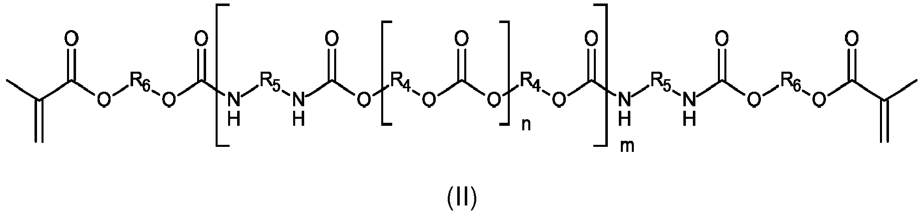 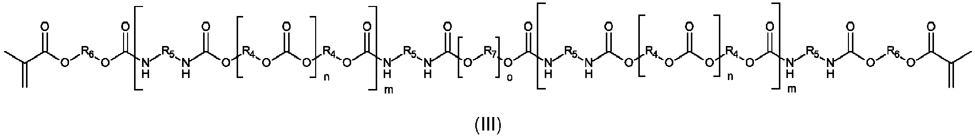 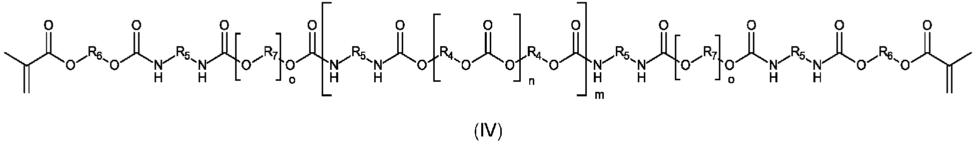 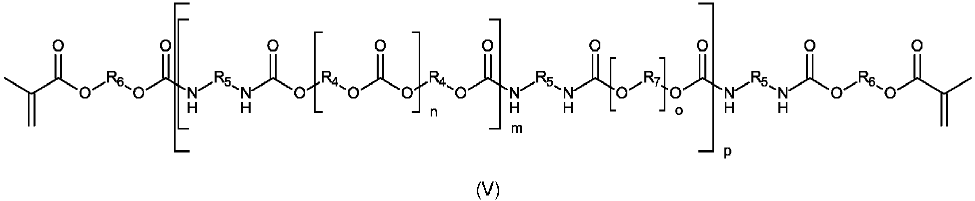 worin:
      die R₄ und die R₅ jeweils unabhängig für einen zweiwertigen, unverzweigten oder verzweigten oder zyklischen aliphatischen C₅-C₁₅-Rest stehen,
      die R₆ jeweils unabhängig für einen zweiwertigen, unverzweigten oder verzweigten C₂-C₄-Alkylrest stehen,
      die R₇ jeweils unabhängig für einen zweiwertigen, unverzweigten oder verzweigten C₂-C₆-Alkylrest stehen,
      die n jeweils unabhängig eine ganze Zahl von 1 bis 10 sind,
      die m jeweils unabhängig eine ganze Zahl von 1 bis 20 sind,
      die o jeweils unabhängig eine ganze Zahl von 5 bis 50 sind, und
      p eine ganze Zahl von 1 bis 40 ist,
   mit der Maßgabe, dass R₄, R₅, R₆, R₇, n, m, o und p so gewählt sind, dass das (Poly-)Carbonat-(Poly-)Urethan-Dimethacrylat ein zahlenmittleres Molekulargewicht von mehr als 5 kDa aufweist; und
   Komponente C zumindest ein mono- oder multifunktioneller Methacrylat-basierter Reaktivverdünner ist.
2. Zusammensetzung nach Ausführungsform 1, dadurch gekennzeichnet, dass die Menge an Komponente A im Bereich von 20 bis 50 Gew.-%, die Menge an Komponente B im Bereich von 25 bis 50 Gew.-% und die Menge an Komponente C im Bereich von 10 bis 40 Gew.-% liegt, jeweils bezogen auf das Gesamtgewicht der härtbaren Zusammensetzung.
3. Zusammensetzung nach Ausführungsform 1 oder 2, dadurch gekennzeichnet, dass R₁ ein zweiwertiger Rest ist, der von einem Diol herrührt, das aus der aus 1,4-Cyclohexandimethanol (CHDM), 4,4'-Isopropylidendicyclohexanol (HBPA), 4,8-Bis-(hydroxymethyl)tricyclo[5.2.1.0^{2,6}]decan (HTCD), 3,9-Bis(1,1-dimethyl-2-hydroxyethyl)-2,4,8,10-tetraoxaspiro[5.5]undecan, 1,3-Bis(hydroxymethyl)adamantan, 1,4-, 1,3- oder 1,2-Dihydroxycyclohexan, 1,3-Adamantandiol, 4-Hydroxy-α,α,4-trimethyl-cyclohexanmethanol, 2,3-Pinandiol, 1,6-Hexandiol und Gemischen davon bestehenden Gruppe ausgewählt ist.
4. Zusammensetzung nach einer der Ausführungsformen 1 bis 3, dadurch gekennzeichnet, dass R₁ ein zweiwertiger Rest ist, der von einem 1,4-Cyclohexandimethanol (CHDM) herrührt.
5. Zusammensetzung nach einer der Ausführungsformen 1 bis 4, dadurch gekennzeichnet, dass R₂ und R₅ zweiwertige Reste sind, die von einem Diisocyanat herrühren, das jeweils unabhängig aus der aus Isophorondiisocyanat (IPDI), Hexamethylendiisocyanat (HDI), Trimethylhexamethylendiisocyanat (2,2,4- und 2,4,4-Gemisch, TMDI), Dicyclohexylmethan-4,4'-diisocyanat (HMDI), 1,3-Bis(isocyanatomethyl)cyclohexan und Gemischen davon bestehenden Gruppe ausgewählt ist.
6. Zusammensetzung nach Ausführungsform 5, dadurch gekennzeichnet, dass R₂ ein zweiwertiger Rest ist, der von Isophorondiisocyanat (IPDI) oder Hexamethylendiisocyanat (HDI) herrührt.
7. Zusammensetzung nach einer der Ausführungsformen 1 bis 6, dadurch gekennzeichnet, dass R₃ und R₆ zweiwertige Reste sind, die von einem Diol herrühren, das jeweils unabhängig aus der aus 1,2-Ethandiol, 1,3-Propandiol, 1,2-Propandiol, 1,4-Butandiol und Gemischen davon bestehenden Gruppe ausgewählt ist.
8. Zusammensetzung nach Ausführungsform 7, dadurch gekennzeichnet, dass R₃ und R₆ zweiwertige Reste sind, die von 1,2-Ethandiol herrühren.
9. Zusammensetzung nach einer der Ausführungsformen 1 bis 8, dadurch gekennzeichnet, dass R₄ ein zweiwertiger Rest ist, der von einem Diol herrührt, das aus der aus 2,2-Dimethyl-1,3-propandiol (DMP), 1,6-Hexandiol, 1,4-Cyclohexandimethanol (CHDM) und Gemischen davon bestehenden Gruppe ausgewählt ist.
10. Zusammensetzung nach einer der Ausführungsformen 1 bis 9, dadurch gekennzeichnet, dass R₄ die Alkoholgruppierung eines Polycarbonats ist.
11. Zusammensetzung nach einer der Ausführungsformen 1 bis 10, dadurch gekennzeichnet, dass R₇ ein zweiwertiger Rest ist, der von einem Diol herrührt, das aus der aus C₂-C₆-Alkandiolen und Gemischen davon bestehenden Gruppe ausgewählt ist.
12. Zusammensetzung nach Ausführungsform 11, dadurch gekennzeichnet, dass R₇ ein zweiwertiger Rest ist, der von 1,4-Butandiol herrührt.
13. Zusammensetzung nach einer der Ausführungsformen 1 bis 12, dadurch gekennzeichnet, dass
   n in Formel (I) 1 oder 2 ist; und/oder
   n in den Formeln (II) bis (V) im Bereich von 5 bis 8 liegt; und/oder
   m in den Formeln (II) bis (V) im Bereich von 5 bis 10 liegt; und/oder
   o in den Formeln (II) bis (V) im Bereich von 35 bis 45 liegt; und/oder
   p in den Formeln (II) bis (V) im Bereich von 2 bis 5 liegt.
14. Zusammensetzung nach einer der Ausführungsformen 1 bis 13, dadurch gekennzeichnet, dass der Methacrylat-basierende Reaktivverdünner von Komponente C aus der aus Dimethacrylaten von Polyglykolen, Hydroxybenzoesäureester(meth)acrylaten und Gemischen davon bestehenden Gruppe ausgewählt ist.
15. Zusammensetzung nach Ausführungsform 14, dadurch gekennzeichnet, dass der Reaktivverdünner ein 2-, 3- oder 4-((Meth)acryloyloxy)benzoat ist.
16. Zusammensetzung nach einer der Ausführungsformen 1 bis 15, dadurch gekennzeichnet, dass der Reaktivverdünner aus (Meth)acryloyloxy-substituierten Benzoesäureestern der allgemeinen Formel (VII) ausgewählt ist: 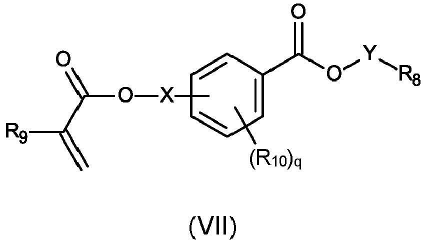 worin
   R₈ für C₃-C₁₀-Cycloalkyl oder C₆-C₁₀-Aryl steht, wobei das C₃-C₁₀-Cycloalkyl und C₆-C₁₀-Aryl unsubstituiert oder mit einem oder mehreren Substituenten, ausgewählt aus C₁-C₆-Alkyl und C₁-C₆-Alkoxy substituiert sind;
   R₉ für H oder CH₃ steht;
   die R₁₀ jeweils unabhängig für C₁-C₆-Alkyl oder C₁-C₆-Alkoxy stehen;
   q eine ganze Zahl von 0 bis 4 ist; und
   X und Y jeweils unabhängig fehlen oder C₁-C₃-Alkylen sind, mit der Maßgabe, dass, wenn R₈ für C₆-C₁₀-Aryl steht, Y C₁-C₃-Alkylen ist.
17. Zusammensetzung nach Ausführungsform 16, dadurch gekennzeichnet, dass in Formel (VII)
   R₈ für gegebenenfalls substituiertes C₅-C₁₀-Cycloalkyl oder gegebenenfalls substituiertes Phenyl steht; und/oder
   X und Y jeweils unabhängig fehlen oder C₁-C₂-Alkylen sind.
18. Zusammensetzung nach Ausführungsform 16 oder 17, dadurch gekennzeichnet, dass in Formel (VII)
   X fehlt; und/oder
   das C₃-C₁₀-Cycloalkyl und C₆-C₁₀-Aryl von R₁ jeweils unsubstituiert oder mit einem oder mehreren Substituenten, ausgewählt aus C₁-C₃-Alkyl und C₁-C₃-Alkoxy substituiert sind; und/oder
   die R₁₀ jeweils unabhängig für C₁-C₃-Alkyl oder C₁-C₃-Alkoxy stehen; und/oder q = 0 oder 1 ist.
19. Zusammensetzung nach einer der Ausführungsformen 16 bis 18, dadurch gekennzeichnet, dass in Formel (VII)
   R₈ aus der aus 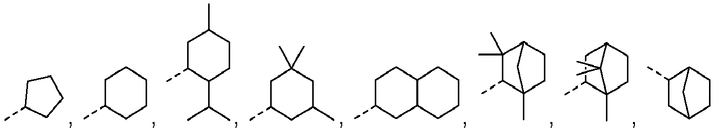 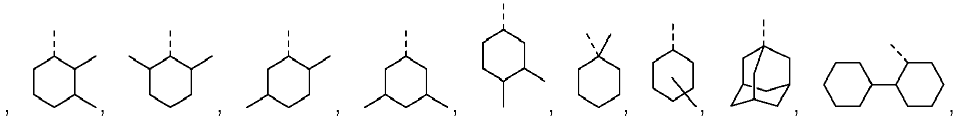 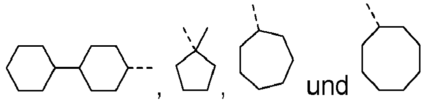 bestehenden Gruppe ausgewählt ist; oder aus der aus 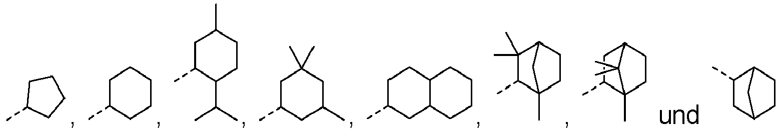 bestehenden Gruppe ausgewählt ist; wobei die gestrichelten Linien jeweils für die Stelle der Bindung an Y bzw. die Benzoat-Carboxylgruppe stehen; und/oder
   -Y-R₈ aus den folgenden Strukturen ausgewählt ist: 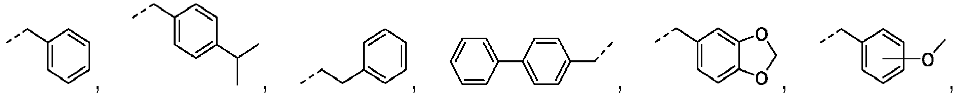 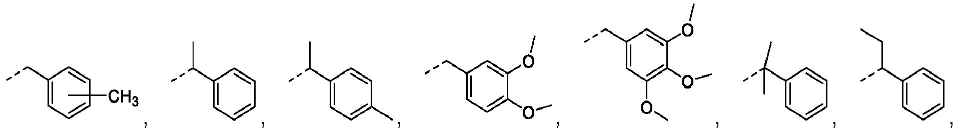 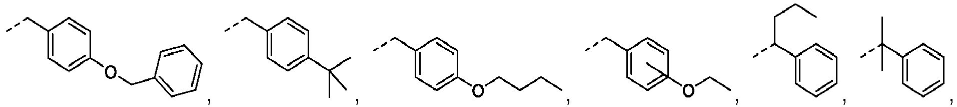 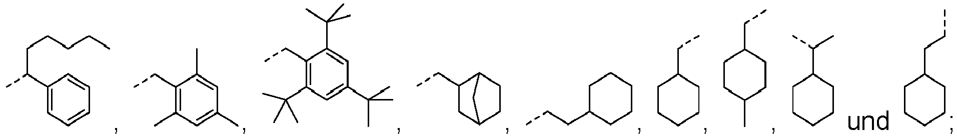
   wobei die gestrichelten Linien jeweils für die Stelle der Bindung an die Benzoat-Carboxylgruppe stehen.
20. Zusammensetzung nach einer der Ausführungsformen 16 bis 19, dadurch gekennzeichnet, dass der (Meth)acryloyloxy-substituierte Benzoesäureester der allgemeinen Formel (VII) aus den folgenden chemischen Verbindungen ausgewählt ist:
   2-(Methacryloyloxy)benzoesäurecyclopentylester (1);
   2-(Methacryloyloxy)benzoesäurecyclohexylester (2);
   2-(Methacryloyloxy)benzoesäure-2-isopropyl-5-methylcyclohexylester (3);
   3-(Methacryloyloxy)benzoesäure-2-isopropyl-5-methylcyclohexylester (4);
   4-(Methacryloyloxy)benzoesäure-2-isopropyl-5-methylcyclohexylester (5);
   2-(Methacryloyloxy)benzoesäure-3,3,5-trimethylcyclohexylester (6);
   2-(Acryloyloxy)benzoesäure-3,3,5-trimethylcyclohexylester (7);
   2-(Methacryloyloxy)benzoesäuredecahydronaphthalin-2-ylester (8);
   2-(Methacryloyloxy)benzoesäure-1,3,3-trimethyl-2-bicyclo[2.2.1]heptanylester (9);
   2-(Methacryloyloxy)benzoesäure-1,7,7-trimethyl-2-bicyclo[2.2.1]heptanylester (10);
   2-(Methacryloyloxy)benzoesäurebicyclo[2.2.1]heptan-2-ylmethylester (11);
   2-(Methacryloyloxy)benzoesäure-2-cyclohexylethylester (12);
   2-(Methacryloyloxy)benzoesäurebenzylester (13);
   4-(Methacryloyloxy)benzoesäurebenzester (14);
   3-(Methacryloyloxy)benzoesäure-4-isopropylbenzylester (15);
   2-(Acryloyloxy)benzoesäurebenzylester (16);
   2-(Methacryloyloxy)benzoesäurephenethylester (17);
   4-(Methacryloyloxy)-3-methoxybenzoesäure-3-methoxybenzylester (18);
   2-(Methacryloyloxy)benzoesäure-1-phenylethylester (19);
   4-((Methacryloyloxy)methyl)benzoesäurecycloheptylester (20);
   2-(Methacryloyloxy)benzoesäurecyclohexylmethylester (21).
21. Zusammensetzung nach einer der Ausführungsformen 16 bis 20, dadurch gekennzeichnet, dass der (Meth)acryloyloxy-substituierte Benzoesäureester der allgemeinen Formel (VII) zusätzlich einen oder mehrere weitere Substituenten, ausgewählt aus der aus C₁-C₆-Alkyl, C₁-C₆-Alkoxy, C₃-C₇-Cycloalkyl, C₆-C₁₀-Aryl, C₁-C₆-Alkoxy-C₆-C₁₀-aryl, -O(CO)-(C₁-C₆)-Alkyl, -COO-(C₁-C₆)-Alkyl, =O, -F, -Cl und -Br bestehenden Gruppe aufweist.
22. Zusammensetzung nach einer der Ausführungsformen 1 bis 21, dadurch gekennzeichnet, dass Komponente A ein zahlenmittleres Molekulargewicht von 1 bis 2 kDa aufweist; und/oder Komponente B ein zahlenmittleres Molekulargewicht von 5 bis 20 kDa aufweist.
23. Zusammensetzung nach einer der Ausführungsformen 1 bis 22, dadurch gekennzeichnet, dass sie im Gemisch mit den Komponenten A, B und C zusätzlich eine oder mehrere weitere Komponenten umfasst, die aus der aus Polymerisationsinitiatoren, Polymerisationsinhibitoren, Lösungsmitteln, Füllstoffen, Antioxidantien, Pigmenten, Färbemitteln, Oberflächenmodifikatoren, Core-Shell-Partikeln und Gemischen davon bestehenden Gruppe ausgewählt sind.
24. Zusammensetzung nach Ausführungsform 23, dadurch gekennzeichnet, dass sie zusätzlich einen oder mehrere Photoinitiatoren umfasst.
25. Verfahren zur Herstellung von vernetzten Polymeren, dadurch gekennzeichnet, dass es die folgenden Schritte umfasst: i) Bereitstellen einer härtbaren Zusammensetzung nach einem der Ausführungsformen 1 bis 24; und ii) Polymerisieren der härtbaren Zusammensetzung; wodurch die vernetzten Polymere gebildet werden.
26. Verfahren nach Ausführungsform 25, dadurch gekennzeichnet, dass Schritt ii) des Polymerisierens der härtbaren Zusammensetzung unter Anwendung eines Hochtemperatur-Photopolymerisationsverfahrens auf Lithographiebasis durchgeführt wird.
27. Verfahren nach Ausführungsform 25 oder 26, dadurch gekennzeichnet, dass es die Schritte a) Erhitzen einer härtbaren Zusammensetzung nach Anspruch 24, die zumindest einen Photoinitiator umfasst, auf eine vorbestimmte erhöhte Verarbeitungstemperatur und anschließend b) Bestrahlen der Zusammensetzung mit Licht mit einer geeigneten Wellenlänge, um von dem Photoinitiator absorbiert zu werden, wodurch die härtbare Zusammensetzung polymerisiert und vernetzt wird, um das vernetzte Polymer zu erhalten.
28. Verfahren nach Ausführungsform 27, dadurch gekennzeichnet, dass die erhöhte Verarbeitungstemperatur im Bereich von 50 °C bis 120 °C oder von 90 °C bis 120 °C liegt.
29. Verfahren nach einer der Ausführungsformen 25 bis 28, dadurch gekennzeichnet, dass das Photopolymerisationsverfahren ein direktes oder additives Fertigungsverfahren ist.
30. Verfahren nach Ausführungsform 29, dadurch gekennzeichnet, dass das Photopolymerisationsverfahren ein 3D-Druckverfahren ist.
31. Vernetztes Polymer, erhalten durch ein Verfahren nach einer der Ausführungsformen 25 bis 30.
32. Vernetztes Polymer nach Ausführungsform 31, dadurch gekennzeichnet, dass es eine oder mehrere oder alle der folgenden Eigenschaften aufweist:
   i) einen Zugmodul von 100 MPa oder mehr; eine Bruchdehnung von 5 % oder mehr; eine Spannungsrelaxation von 5 % oder mehr der Anfangslast; eine Glasübergangstemperatur von 90 °C oder mehr; oder
   ii) einen Zugmodul von 800 MPa oder mehr; eine Bruchdehnung von 20 % oder mehr; eine Spannungsrelaxation von 20 % oder mehr der Anfangslast; eine Glasübergangstemperatur von 90 °C oder mehr; oder
   iii) einen Zugmodul von 1.000 MPa oder mehr; eine Bruchdehnung von 30 % oder mehr; eine Spannungsrelaxation von 35 % oder mehr der Anfangslast; eine Glasübergangstemperatur von 100 °C oder mehr.
33. Vernetztes Polymer nach Ausführungsform 31 oder 32, dadurch gekennzeichnet, dass es biokompatibel ist.
34. Vernetztes Polymer nach Ausführungsform 33, dadurch gekennzeichnet, dass es Teil einer kieferorthopädischen Vorrichtung ist, wobei die kieferorthopädische Vorrichtung gegebenenfalls ein Aligner, ein Expander oder ein Spacer ist.

## Patentansprüche

1. Verfahren zur Herstellung einer kieferorthopädischen Vorrichtung, wobei das Verfahren umfasst:
Härten einer Zusammensetzung, um ein vernetztes Polymer zu bilden, wobei die Zusammensetzung umfasst:
einen Zähigkeitsmodifikator, wobei der Zähigkeitsmodifikator zumindest ein aliphatisches Dimethacrylat-Oligomer mit einem zahlenmittleren Molekulargewicht von mehr als 5 kD umfasst; und
einen Reaktivverdünner, wobei der Reaktivverdünner zumindest eine mono- oder multifunktionelle Methacrylatverbindung mit einem Molekulargewicht von 0,1 bis 1,0 kDa umfasst,
wobei die Zusammensetzung 20 bis 50 Gew.-%, bezogen auf das Gesamtgewicht der Zusammensetzung, des Zähigkeitsmodifikators und 5 bis 50 Gew.-%, bezogen auf das Gesamtgewicht der Zusammensetzung, des Reaktivverdünners umfasst,
wobei der Gehalt des Zähigkeitsmodifikators so ist, dass das vernetzte Polymer eine Bruchdehnung von mehr als oder gleich 5 % aufweist, wenn gemäß ISO 527-2 5B gemessen wird, gegebenenfalls mit einer Kreuzkopf-Geschwindigkeit von 5 mm/min, und
wobei der Gehalt des Reaktivverdünners so ist, dass die Viskosität der Zusammensetzung 1 bis 70 Pa s bei 110 °C beträgt; und
Herstellen der kieferorthopädischen Vorrichtung aus dem vernetzten Polymer.

2. Das Verfahren nach Anspruch 1, wobei das Härten der Zusammensetzung Bestrahlen der Zusammensetzung mit Licht umfasst.

3. Das Verfahren nach einem der Ansprüche 1 oder 2, wobei das Härten der Zusammensetzung ferner das Erhitzen der Zusammensetzung auf eine Verarbeitungstemperatur vor dem Bestrahlen der Zusammensetzung umfasst.

4. Das Verfahren nach Anspruch 3, wobei die Verarbeitungstemperatur im Bereich von 50 °C bis 120 °C liegt.

5. Das Verfahren nach einem der Ansprüche 1 bis 4, wobei der Zähigkeitsmodifikator eine Glasübergangstemperatur (T_{g}) von weniger als 0 °C aufweist.

6. Das Verfahren nach einem der Ansprüche 1 bis 5, wobei der Zähigkeitsmodifikator eine Verbindung nach Formel (II), (III), (IV) oder (V) ist: 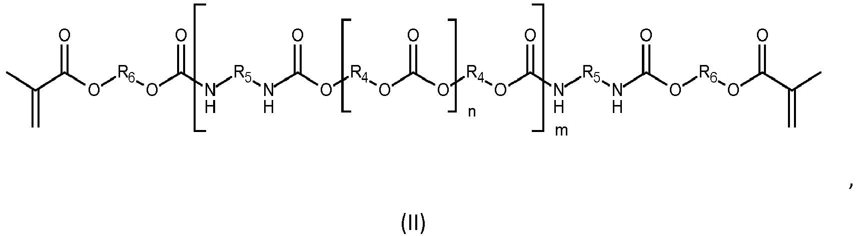 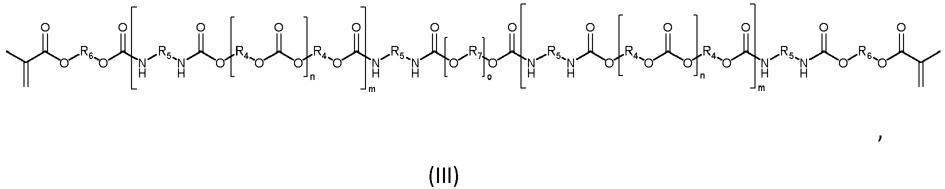 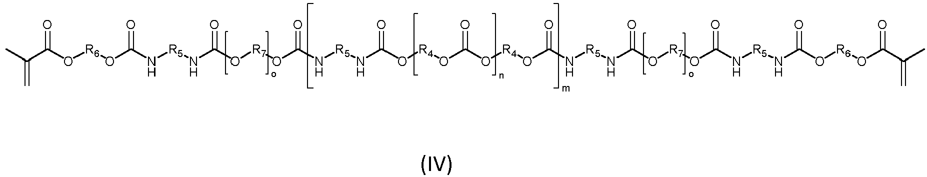 oder 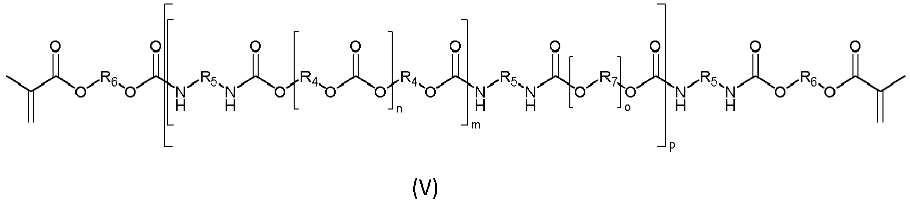 worin:
die R₄ und die R₅ jeweils unabhängig für einen zweiwertigen, unverzweigten oder verzweigten oder zyklischen aliphatischen C₅-C₁₅-Rest stehen,
die R₆ jeweils unabhängig für einen zweiwertigen, unverzweigten oder verzweigten C₂-C₄-Alkylrest stehen,
die R₇ jeweils unabhängig für einen zweiwertigen, unverzweigten oder verzweigten C₂-C₆-Alkylrest stehen,
die n jeweils unabhängig eine ganze Zahl von 1 bis 10 sind,
die m jeweils unabhängig eine ganze Zahl von 1 bis 20 sind,
die o jeweils unabhängig eine ganze Zahl von 5 bis 50 sind, und
p eine ganze Zahl von 1 bis 40 ist.

7. Das Verfahren nach Anspruch 6, wobei der Zähigkeitsmodifikator eine der folgenden Strukturen aufweist: 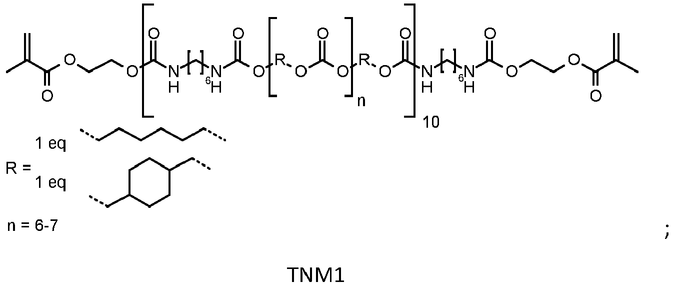 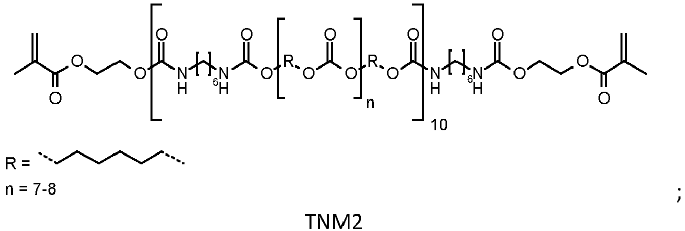 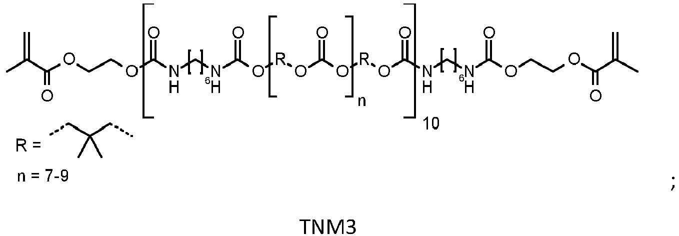 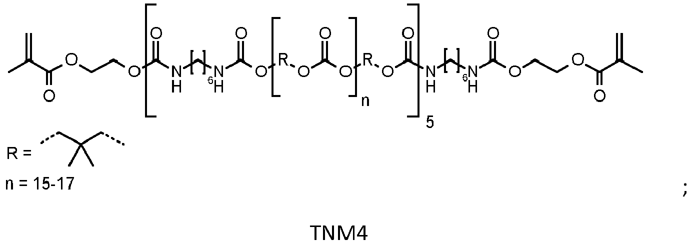 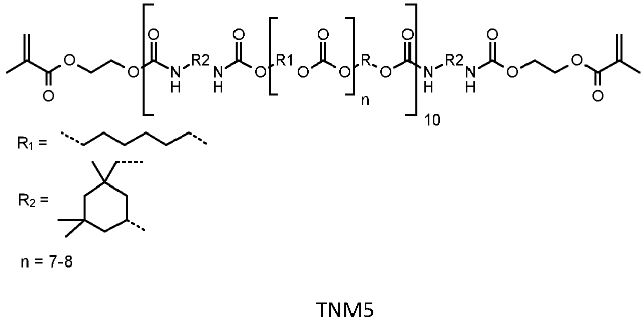 oder

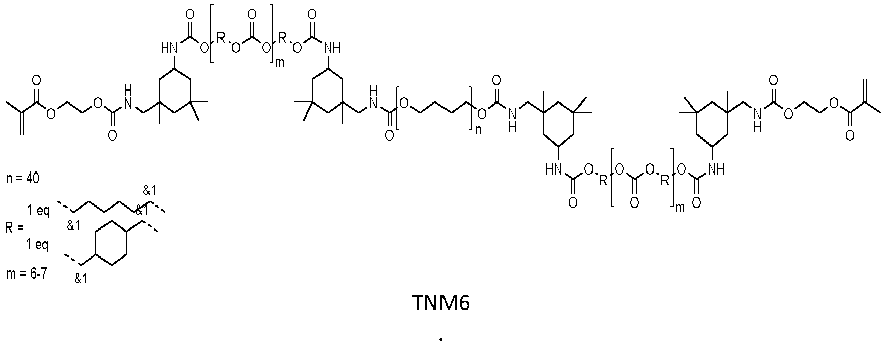

8. Das Verfahren nach einem der Ansprüche 1 bis 7, wobei:
A) Der Reaktivverdünner ausgewählt ist aus der Gruppe bestehend aus Dimethacrylaten von Polyglykolen, Hydroxybenzoesäureester-(meth)acrylaten und Gemischen davon;
B) Der Reaktivverdünner ein Cycloalkyl 2-, 3- oder 4-((Meth)acryloyloxy)benzoat ist; und/oder
C) Der Reaktivverdünner eine Verbindung der Formel (VII) ist: 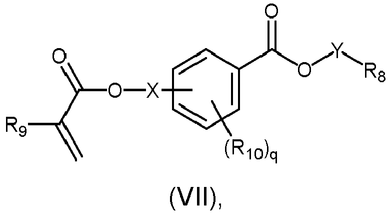 worin:
R₈ für gegebenenfalls substituiertes C₃-C₁₀-Cycloalkyl, gegebenenfalls substituiertes 3- bis 10-gliedriges Heterocycloalkyl oder gegebenenfalls substituiertes C₆-C₁₀-Aryl steht;
R₉ für H oder C₁-C₆-Alkyl steht;
die R₁₀ jeweils unabhängig für ein Halogen, C₁-C₃-Alkyl, C₁-C₃-Alkoxy, Si(R₁₁)₃, P(O)(OR₁₂)₂ oder N(R₁₃)₂ stehen;
die R₁₁ jeweils unabhängig für C₁-C₆-Alkyl oder C₁-C₆-Alkoxy stehen;
die R₁₂ jeweils unabhängig für C₁-C₆-Alkyl oder C₆-C1₀-Aryl stehen;
die R₁₃ jeweils unabhängig für H oder C₁-C₆-Alkyl stehen;
X fehlt oder für C₁-C₃-Alkylen, 1- bis 3-gliedriges Heteroalkylen oder (CH₂CH₂O)ᵣ steht;
Y fehlt oder für C₁-C₆-Alkylen steht;
q eine ganze Zahl von 0 bis 4 ist; und
r eine ganze Zahl von 1 bis 4 ist.

9. Das Verfahren nach Anspruch 8, wobei der Reaktivverdünner ausgewählt ist aus TEGDMA (Triethylenglykoldimethacrylat), D4MA (1,12-Dodecandioldimethacrylat), HSMA (3,3,5-Trimethylcyclohexyl-2-(methacryloyloxy)benzoat), und BSMA (Benzylsalicylatmethacrylat).

10. Das Verfahren nach einem der Ansprüche 1 bis 9, wobei die Zusammensetzung ferner einen Glasübergangstemperatur(Tg)-Modifikator umfasst, der eine höhere Glasübergangstemperatur als der Zähigkeitsmodifikator aufweist und der mindestens ein aliphatisches Dimethacrylat-Oligomer mit einem zahlenmittleren Molekulargewicht von 0,4 bis 5 kDa umfasst, wobei die Zusammensetzung 5 bis 50 Gew.-%, bezogen auf das Gesamtgewicht der Zusammensetzung, des T_{g}-Modifikators umfasst.

11. Das Verfahren nach Anspruch 11, wobei
A) Der T_{g}-Modifikator die folgende Struktur aufweist: 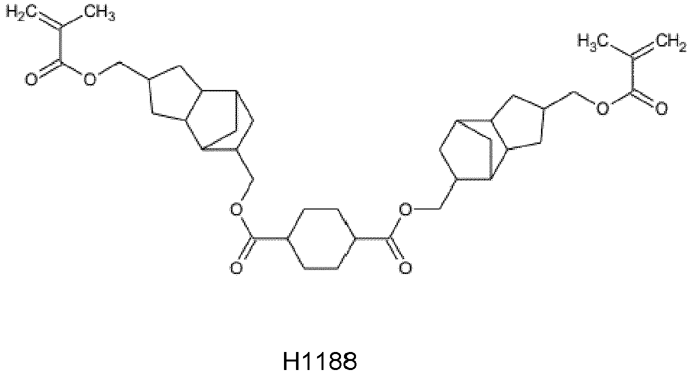 oder
B) Der T_{g}-Modifikator eine Verbindung gemäß Formel (I) ist: 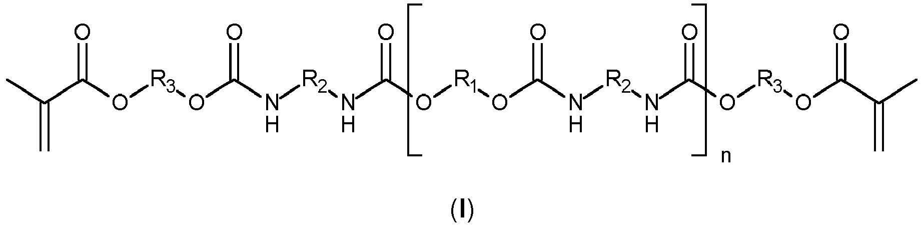 worin:
die R₁ und die R₂ jeweils unabhängig für einen zweiwertigen unverzweigten, verzweigten oder zyklischen aliphatischen C₅-C₁₅-Rest stehen, mit der Maßgabe, dass zumindest eines von R₁ und R₂ eine cycloaliphatische C₅-C₆-Struktur ist oder eine solche umfasst;
die R₃ jeweils unabhängig für einen zweiwertigen unverzweigten oder verzweigten C₂-C₄-Alkylrest stehen; und
n eine ganze Zahl von 1 bis 5 ist.

12. Das Verfahren nach Anspruch 11, wobei der T_{g}-Modifikator eine der folgenden Strukturen aufweist:

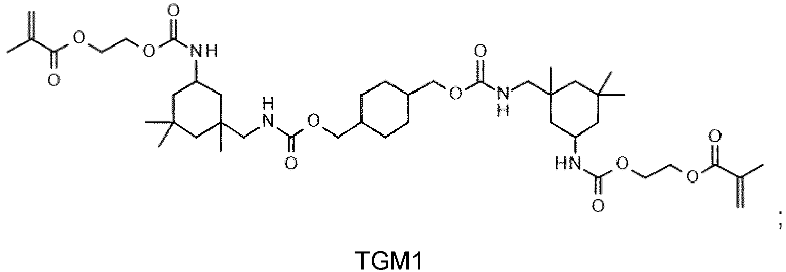

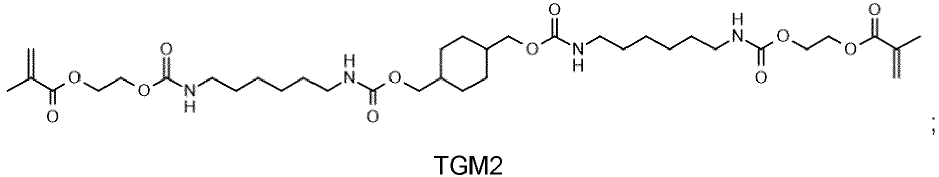

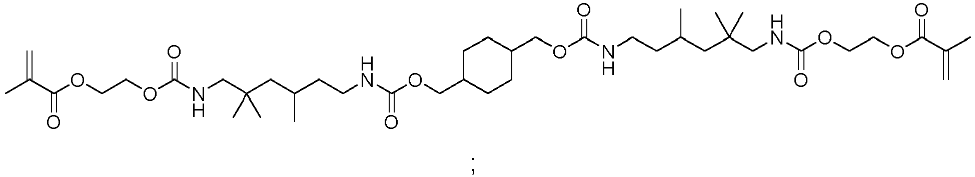

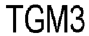

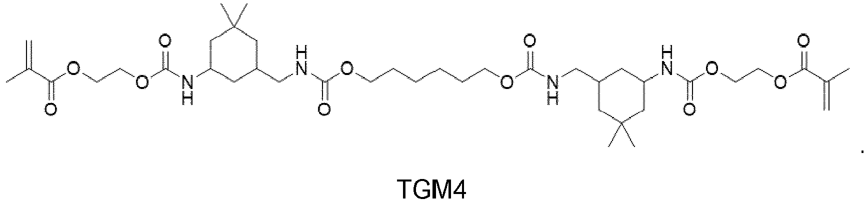

13. Das Verfahren nach einem der Ansprüche 1 bis 12, wobei die Zusammensetzung ferner umfasst:
A) 0,1 bis 5 Gew.-%, bezogen auf das Gesamtgewicht der Zusammensetzung, eines Photoinitiators; und
B) 0,1 bis 10 Gew.-%, bezogen auf das Gesamtgewicht der Zusammensetzung, eines Additivs; und/oder
C) 0,05 bis 1 Gew.-%, bezogen auf das Gesamtgewicht der Zusammensetzung, eines Photoblockers.

14. Das Verfahren nach Anspruch 13, wobei das Additiv aus einem Harz, einem Entschäumer und einem Tensid oder einer Kombination davon ausgewählt ist.

15. Das Verfahren nach einem der Ansprüche 1 bis 14, wobei das vernetzte Polymer durch eines oder mehrere der folgenden Merkmale gekennzeichnet ist:
eine Spannungsrelaxation von mehr als oder gleich 5 % der Anfangslast;
eine Glasübergangstemperatur von mehr als oder gleich 90°C;
einen Zugmodul von mehr als oder gleich 100 MPa;
eine Zugfestigkeit bei der Streckgrenze von 5 MPa oder mehr;
eine Streckgrenzendehnung von 4 % oder mehr;
eine Bruchdehnung von 5 % oder mehr;
einen Speichermodul von 300 MPa oder mehr; und
eine Spannungsrelaxation größer oder gleich 0,01 MPa.

16. Das Verfahren nach Anspruch 15, wobei
A) das vernetzte Polymer ist durch eine Spannungsrelaxation von 5 % bis 45 % der Ausgangslast gekennzeichnet ist;
B) das vernetzte Polymer durch eine Spannungsrelaxation von 20 % bis 45 % der Ausgangslast gekennzeichnet ist;
C) das vernetzte Polymer durch eine Glasübergangstemperatur von 90 °C bis 150 °C gekennzeichnet ist;
D) das vernetzte Polymer durch einen Zugmodul von 100 MPa bis 2000 MPa gekennzeichnet ist;
E) das vernetzte Polymer durch einen Zugmodul von 800 MPa bis 2000 MPa gekennzeichnet ist;
F) das vernetzte Polymer durch eine Zugfestigkeit bei der Streckgrenze von 5 MPa bis 85 MPa gekennzeichnet ist;
G) das vernetzte Polymer durch eine Zugfestigkeit bei der Streckgrenze von 20 MPa bis 55 MPa gekennzeichnet ist;
H) das vernetzte Polymer durch eine Zugfestigkeit bei der Streckgrenze von 25 MPa bis 55 MPa gekennzeichnet ist;
I) das vernetzte Polymer durch eine Streckgrenzendehnung von 4 % bis 10 % gekennzeichnet ist;
J) das vernetzte Polymer durch eine Streckgrenzendehnung von 5 % bis 10 % gekennzeichnet ist;
K) das vernetzte Polymer ist durch eine Bruchdehnung von 5% bis 250% gekennzeichnet;
L) das vernetzte Polymer durch eine Bruchdehnung von 20% bis 250% gekennzeichnet ist;
M) das vernetzte Polymer durch einen Speichermodul von 300 MPa bis 3000 MPa gekennzeichnet ist;
N) das vernetzte Polymer durch einen Speichermodul von 750 MPa bis 3000 MPa gekennzeichnet ist;
O) das vernetzte Polymer durch eine Spannungsrelaxation von 0,01 MPa bis 15 MPa gekennzeichnet ist; oder
P) das vernetzte Polymer durch eine Spannungsrelaxation von 2 MPa bis 15 MPa gekennzeichnet ist.

17. Das Verfahren nach Anspruch 15, wobei das vernetzte Polymer **gekennzeichnet ist durch**:
eine Spannungsrelaxation von mehr als oder gleich 20 % der ursprünglichen Belastung;
eine Glasübergangstemperatur von größer oder gleich 90°C;
einen Zugmodul von 800 MPa bis 2000 MPa; und
eine Bruchdehnung von mindestens 20 %.

18. Das Verfahren nach einem der Ansprüche 1 bis 17, wobei die kieferorthopädische Vorrichtung durch ein direktes Fertigungsverfahren hergestellt wird.

19. Das Verfahren nach Anspruch 18, wobei das direkte Fertigungsverfahren eines oder mehrere der Folgenden umfasst: Stereolithographie, Material Jetting, Binder Jetting, Fused Deposition Modeling, Pulverbettfusion, Folienlaminierung, und Direct Energy Deposition.

20. Eine kieferorthopädische Vorrichtung, hergestellt nach einem Verfahren nach einem der Ansprühe 1 bis 19.

21. Die kieferorthopädische Vorrichtung nach Anspruch 20, wobei die kieferorthopädische Vorrichtung ein Aligner, ein Expander oder ein Spacer ist.

22. Die kieferorthopädische Vorrichtung nach einem der Ansprüche 20 oder 21, wobei
A) die kieferorthopädische Vorrichtung eine Vielzahl von zahnaufnehmenden Ausnehmungen, die ausgebildet sind, um Zähne, ausgehend von einer ersten Anordnung in eine zweite Anordnung zu repositionieren, umfasst;
B) die kieferorthopädische Vorrichtung eine aus einer Vielzahl von kieferorthopädischen Vorrichtungen ist, die ausgebildet sind, um Zähne, ausgehend von einer Anfangsanordnung in eine Zielanordnung zu repositionieren; oder
C) die kieferorthopädische Vorrichtung eine aus einer Vielzahl von kieferorthopädischen Vorrichtungen ist, die ausgebildet sind, um Zähne, ausgehend von einer Anfangsanordnung, gemäß einem Behandlungsplan, in eine Zielanordnung zu repositionieren.
